(19) **Europäisches Patentamt**
**European Patent Office**
**Office européen des brevets**

(11) **EP 4 298 069 B1**

(12) **EUROPEAN PATENT SPECIFICATION**

(45) Date of publication and mention
of the grant of the patent:
**21.01.2026 Bulletin 2026/04**

(21) Application number: **22743983.3**

(22) Date of filing: **17.06.2022**

(51) International Patent Classification (IPC):
*C03C 3/091* (2006.01)    *C03C 3/093* (2006.01)
*C03C 3/095* (2006.01)    *C03C 3/097* (2006.01)
*C03C 3/11* (2006.01)     *C03C 3/118* (2006.01)
*C03C 4/02* (2006.01)     *C03C 21/00* (2006.01)

(52) Cooperative Patent Classification (CPC):
**C03C 3/091; C03C 3/093; C03C 3/095;**
**C03C 3/097; C03C 3/11; C03C 3/118; C03C 4/02;**
**C03C 21/002**

(86) International application number:
**PCT/US2022/033917**

(87) International publication number:
**WO 2022/266405 (22.12.2022 Gazette 2022/51)**

(54) **COLORED GLASS ARTICLES HAVING IMPROVED MECHANICAL DURABILITY**

GEFÄRBTE GLASARTIKEL MIT VERBESSERTER MECHANISCHER BESTÄNDIGKEIT

ARTICLES EN VERRE COLORÉ À DURABILITÉ MÉCANIQUE AMÉLIORÉE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **18.06.2021 US 202163212179 P**
**18.06.2021 US 202163212191 P**
**04.10.2021 US 202163251785 P**
**29.11.2021 US 202163283600 P**
**06.12.2021 US 202163286316 P**
**31.01.2022 US 202263304807 P**
**22.02.2022 US 202217677345**
**22.02.2022 US 202217677375**
**10.03.2022 US 202217691813**
**10.03.2022 US 202263318553 P**
**31.05.2022 US 202263347095 P**
**31.05.2022 US 202263347157 P**
**31.05.2022 US 202263347201 P**

(43) Date of publication of application:
**03.01.2024 Bulletin 2024/01**

(73) Proprietor: **Corning Incorporated**
**Corning, New York 14831 (US)**

(72) Inventors:
• **GUO, Xiaoju**
**Pittsford, New York 14534 (US)**
• **KOHL, Jesse**
**Horseheads, New York 14845 (US)**
• **WILES, Nicole Taylor**
**Horseheads, New York 14845 (US)**

(74) Representative: **Elkington and Fife LLP**
**Prospect House**
**8 Pembroke Road**
**Sevenoaks, Kent TN13 1XR (GB)**

(56) References cited:
RU-C1- 2 645 687       US-A1- 2015 166 400
US-A1- 2015 166 403    US-A1- 2019 177 206
US-A1- 2020 377 404    US-B2- 9 012 343
US-B2- 9 701 570

EP 4 298 069 B1

**Description**

*Field*

The present specification generally relates to glass compositions and glass articles and, in particular, to glass compositions and ion-exchangeable, colored glass articles formed therefrom.

*Technical Background*

Aluminosilicate glass articles may exhibit superior ion-exchangeability and drop performance. Various industries, including the consumer electronics industry, desire colored materials with the same or similar strength and fracture toughness properties as existing, non-colored, ion-exchange strengthened glasses. However, simply including colorants in conventional aluminosilicate glass compositions may not produce the desired color.
US 2019/0177206 A1 relates to polychromatic articles and methods of making the same. US 9,701,570 B2 relates to high CTE opal glass compositions and articles. US 2020/0377404 A1 relates to colored glass-ceramics having petalite and lithium disilicate structures. US 9,012,343 B2 relates to glasses for chemical strengthening. US 2015/0166403 A1 and US 2015/0166400 A1 relate to glasses for chemical strengthening and chemically strengthened glass articles.

Accordingly, a need exists for an alternative colored glass articles having high strength and fracture toughness.

**SUMMARY**

The present invention relates to a colored glass article comprising: greater than or equal to 50 mol% and less than or equal to 80 mol% $SiO_2$; greater than or equal to 7 mol% and less than or equal to 20 mol% $Al_2O_3$; greater than or equal to 1 mol% and less than or equal to 35 mol% $R_2O$, wherein $R_2O$ comprises at least one of $Li_2O$, $Na_2O$, and $K_2O$; greater than 1 x $10^{-6}$ mol% and less than or equal to 10 mol% of a colorant, wherein the colorant comprises at least one of $Cr_2O_3$, $CuO$, $NiO$, and $Co_3O_4$; and greater than or equal to 12 mol% and less than or equal to 24 mol% of $Al_2O_3$ + MgO + CaO + ZnO, wherein the colored glass article comprises: a transmittance color coordinate in the CIELAB color space comprising an L* value greater than or equal to 55 and less than or equal to 96.5 as measured under F2 illumination and a 10° standard observer angle; a compressive stress profile with a depth of compression greater than or equal to 0.15t where t is a thickness of the colored glass article, a compressive stress greater than or equal to 200 MPa, and a central tension greater than or equal to 60 MPa; a dielectric constant from 5.6 to 6.4 over a frequency range from 10 GHz to 60 GHz; and the thickness t is greater than or equal to 0.4 mm and less than or equal to 5 mm.

In embodiments the thickness t is greater than or equal to 0.5 mm and less than or equal to 5 mm.

In further embodiments of the above embodiments the colored glass article has a fracture toughness $K_{IC}$ greater than or equal to 0.7 MPa·m$^{1/2}$ as measured on a non-ion exchanged sample having the same composition and microstructure as the centre of the colored glass article.

In further embodiments of the above embodiments the colored glass article comprises an average transmittance of greater than or equal to 10% and less than or equal to 92% over the wavelength range of 380 nm to 750 nm.

In further embodiments of the above embodiments the colored glass article comprises at least one crystalline phase.

In further embodiments of the above embodiments the colored glass article comprises a crystallinity of less than 10 wt%.

In further embodiments of the above embodiments wherein the depth of compression is less than or equal to 0.3t.

In further embodiments of the above embodiments the surface compressive stress is greater than or equal to 400 MPa.

In further embodiments of the above embodiments the central tension is greater than or equal to 70 MPa.

The invention further relates to an electronic device comprising a housing, the housing comprising a colored glass article described above.

It is to be understood that both the foregoing general description and the following detailed description describe various embodiments and are intended to provide an overview or framework for understanding the nature and character of the claimed subject matter. The accompanying drawings are included to provide a further understanding of the various embodiments, and are incorporated into and constitute a part of this specification. The drawings illustrate the various embodiments described herein, and together with the description serve to explain the principles and operations of the claimed subject matter.

**BRIEF DESCRIPTION OF THE DRAWINGS**

FIG. 1 is a plan view of an electronic device incorporating any of the colored glass articles described herein;

FIG. 2 is a perspective view of the electronic device of FIG. 1;

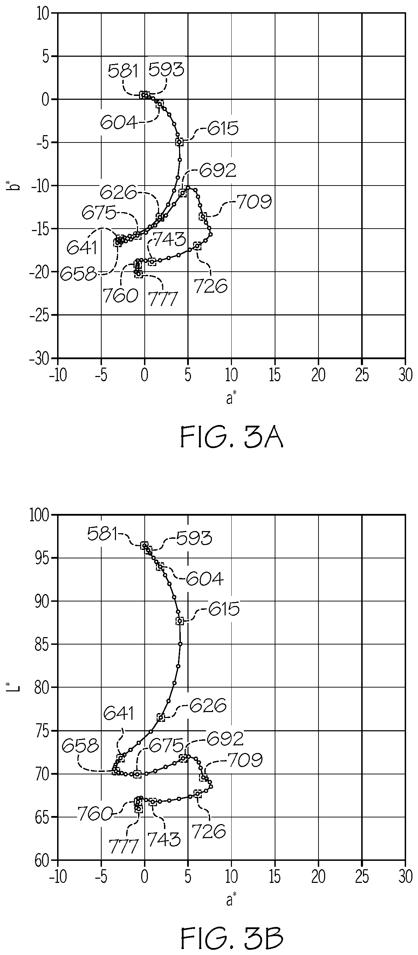

FIG. 3A is a plot of a* vs. b* CIELAB space (x-axis: a*; y-axis: b*) as a function of a heat treatment temperature of a colored glass article;

FIG. 3B is a plot of a projected a* vs. L* CIELAB space (x-axis: a*; y-axis: L*) of the colored glass article of FIG. 3A;

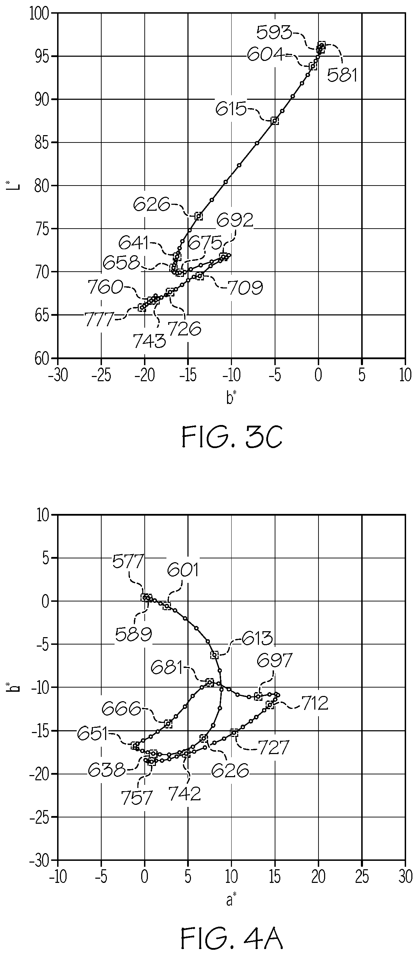

FIG. 3C is a plot of a projected b* vs. L* CIELAB space (x-axis: b*; y-axis: L*) of the colored glass article of FIG. 3A;

FIG. 4A is a plot of a* vs. b* CIELAB space (x-axis: a*; y-axis: b*) as a function of a heat treatment temperature of a colored glass article;

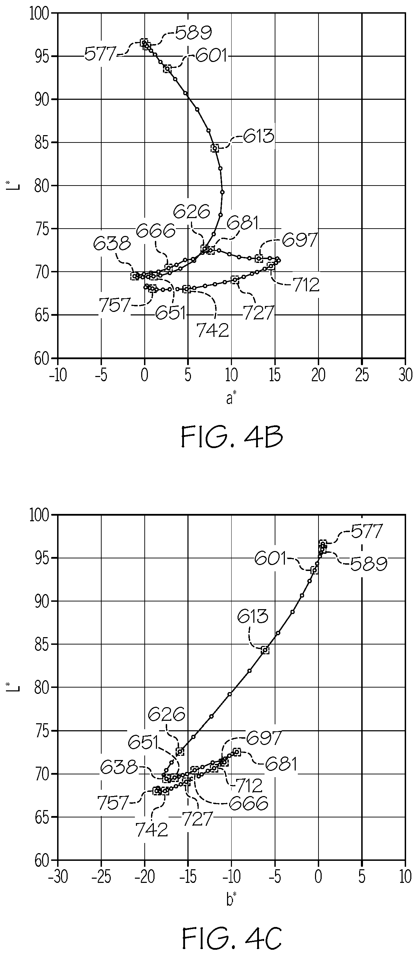

FIG. 4B is a plot of a projected a* vs. L* CIELAB space (x-axis: a*; y-axis: L*) of the colored glass article of FIG. 4A;

FIG. 4C is a plot of a projected b* vs. L* CIELAB space (x-axis: b*; y-axis: L*) of the colored glass article of FIG. 4A;

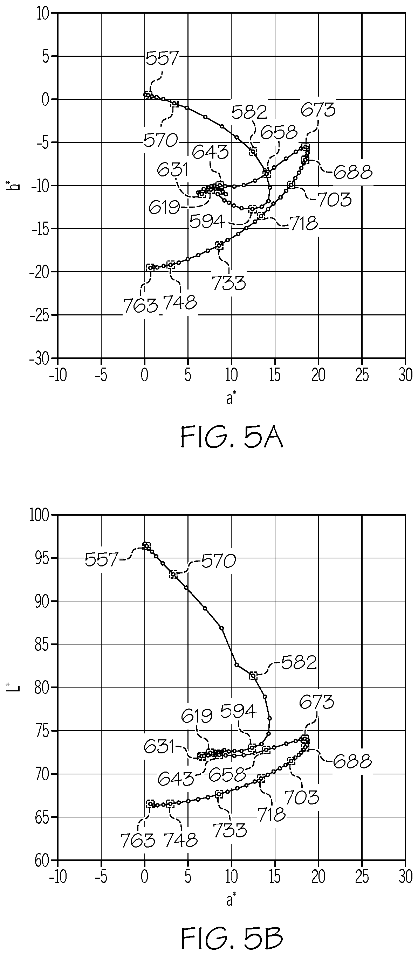

FIG. 5A is a plot of a* vs. b* CIELAB space (x-axis: a*; y-axis: b*) as a function of a heat treatment temperature of a colored glass article;

FIG. 5B is a plot of a projected a* vs. L* CIELAB space (x-axis: a*; y-axis: L*) of the colored glass article of FIG. 5A;

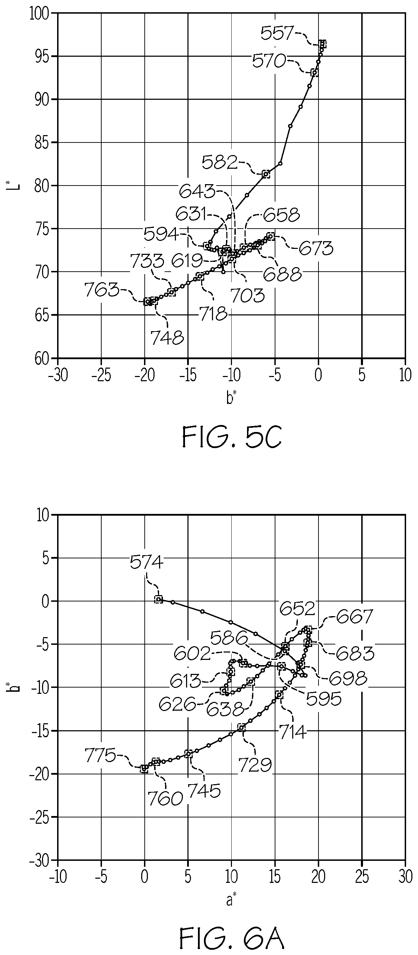

FIG. 5C is a plot of a projected b* vs. L* CIELAB space (x-axis: b*; y-axis: L*) of the colored glass article of FIG. 5A;

FIG. 6A is a plot of a* vs. b* CIELAB space (x-axis: a*; y-axis: b*) as a function of a heat treatment temperature of a colored glass article;

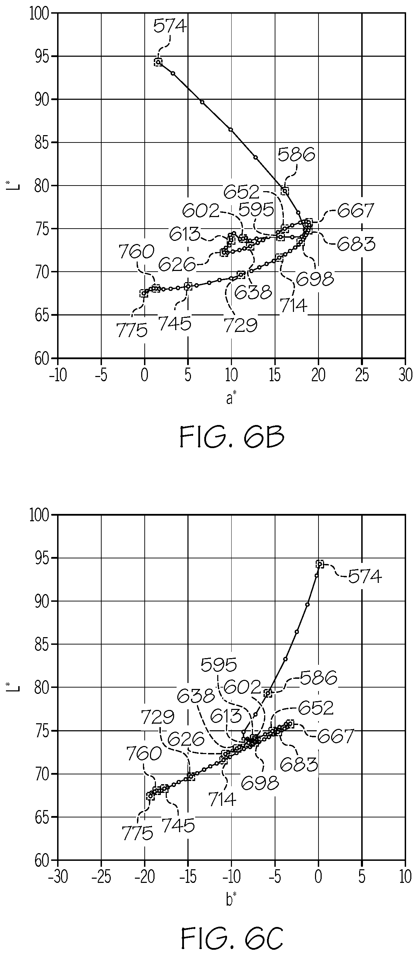

FIG. 6B is a plot of a projected a* vs. L* CIELAB space (x-axis: a*; y-axis: L*) of the colored glass article of FIG. 6A;

FIG. 6C is a plot of a projected b* vs. L* CIELAB space (x-axis: b*; y-axis: L*) of the colored glass article of FIG. 6A;

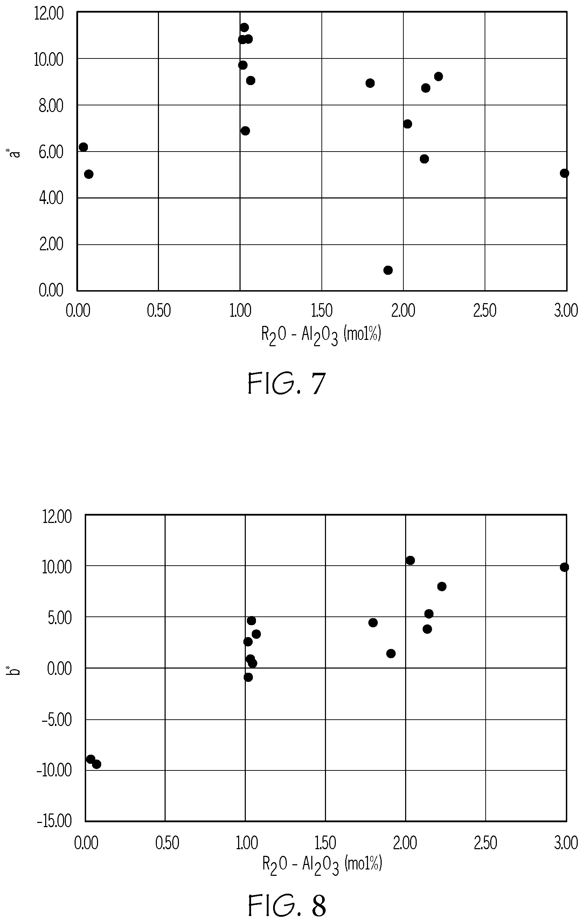

FIG. 7 is a plot of $R_2O$ - $Al_2O_3$ vs. a* CIELAB space (x-axis: $R_2O$ - $Al_2O_3$; y-axis: a*) of colored glass articles;

FIG. 8 is a plot of $R_2O$ - $Al_2O_3$ vs. b* CIELAB space (x-axis: $R_2O$ - $Al_2O_3$; y-axis: b*) of colored glass articles;

FIG. 9 is a plot of a projected a* vs. b* CIELAB space (x-axis: a*; y-axis: b*) of a colored glass article;

FIG. 10 is a plot of a projected a* vs. L* CIELAB space (x-axis: a*; y-axis: L*) of the colored glass article of FIG. 9;

FIG. 11 is a plot of a projected b* vs. L* CIELAB space (x-axis: b*; y-axis: L*) of the colored glass article of FIG. 9;

FIG. 12 is a plot of a projected a* vs. b* CIELAB space (x-axis: a*; y-axis: b*) of a colored glass article;

FIG. 13 is a plot of a projected a* vs. L* CIELAB space (x-axis: a*; y-axis: L*) of the colored glass article of FIG. 12;

FIG. 14 is a plot of a projected b* vs. L* CIELAB space (x-axis: b*; y-axis: L*) of the colored glass article of FIG. 12;

FIG. 15 is a plot of a projected a* vs. b* CIELAB space (x-axis: a*; y-axis: b*) of a colored glass article;

FIG. 16 is a plot of a projected a* vs. L* CIELAB space (x-axis: a*; y-axis: L*) of the colored glass article of FIG. 15;

FIG. 17 is a plot of a projected b* vs. L* CIELAB space (x-axis: b*; y-axis: L*) of the colored glass article of FIG. 15;

FIG. 18 is a plot of a projected a* vs. b* CIELAB space (x-axis: a*; y-axis: b*) of a colored glass article;

FIG. 19 is a plot of a projected a* vs. L* CIELAB space (x-axis: a*; y-axis: L*) of the colored glass article of FIG. 18;

FIG. 20 is a plot of a projected b* vs. L* CIELAB space (x-axis: b*; y-axis: L*) of the colored glass article of FIG. 18;

FIG. 21 is a plot of a projected a* vs. b* CIELAB space (x-axis: a*; y-axis: b*) of a colored glass article;

FIG. 22 is a plot of a projected a* vs. L* CIELAB space (x-axis: a*; y-axis: L*) of the colored glass article of FIG. 21;

FIG. 23 is a plot of a projected b* vs. L* CIELAB space (x-axis: b*; y-axis: L*) of the colored glass article of FIG. 21;

FIG. 24 is a plot of a projected a* vs. b* CIELAB space (x-axis: a*; y-axis: b*) of a colored glass article;

FIG. 25 is a plot of a projected a* vs. L* CIELAB space (x-axis: a*; y-axis: L*) of the colored glass article of FIG. 24;

FIG. 26 is a plot of a projected b* vs. L* CIELAB space (x-axis: b*; y-axis: L*) of the colored glass article of FIG. 24;

FIG. 27 is a plot of a projected a* vs. b* CIELAB space (x-axis: a*; y-axis: b*) of a colored glass article;

FIG. 28 is a plot of a projected a* vs. L* CIELAB space (x-axis: a*; y-axis: L*) of the colored glass article of FIG. 27;

FIG. 29 is a plot of a projected b* vs. L* CIELAB space (x-axis: b*; y-axis: L*) of the colored glass article of FIG. 27;

FIG. 30 is a plot of a projected a* vs. b* CIELAB space (x-axis: a*; y-axis: b*) of a colored glass article;

FIG. 31 is a plot of a projected a* vs. L* CIELAB space (x-axis: a*; y-axis: L*) of the colored glass article of FIG. 30;

FIG. 32 is a plot of a projected b* vs. L* CIELAB space (x-axis: b*; y-axis: L*) of the colored glass article of FIG. 30;

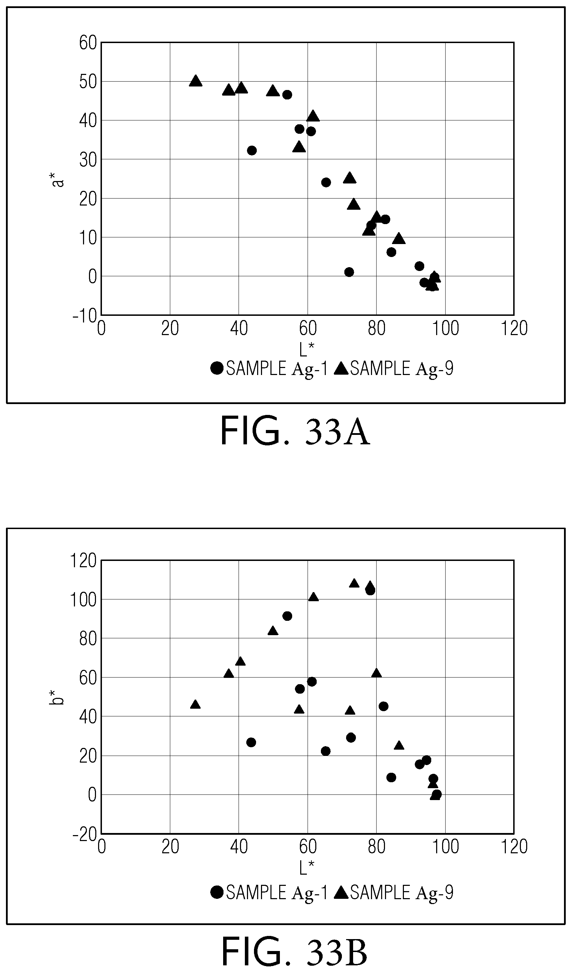

FIG. 33A graphically depicts a plot of projected a* vs. L* CIELAB spaces (y-axis: a*; x-axis: L*) of colored glass articles;

FIG. 33B graphically depicts a plot of projected b* vs. L* CIELAB spaces (y-axis: b*; x-axis: L*) of colored glass articles;

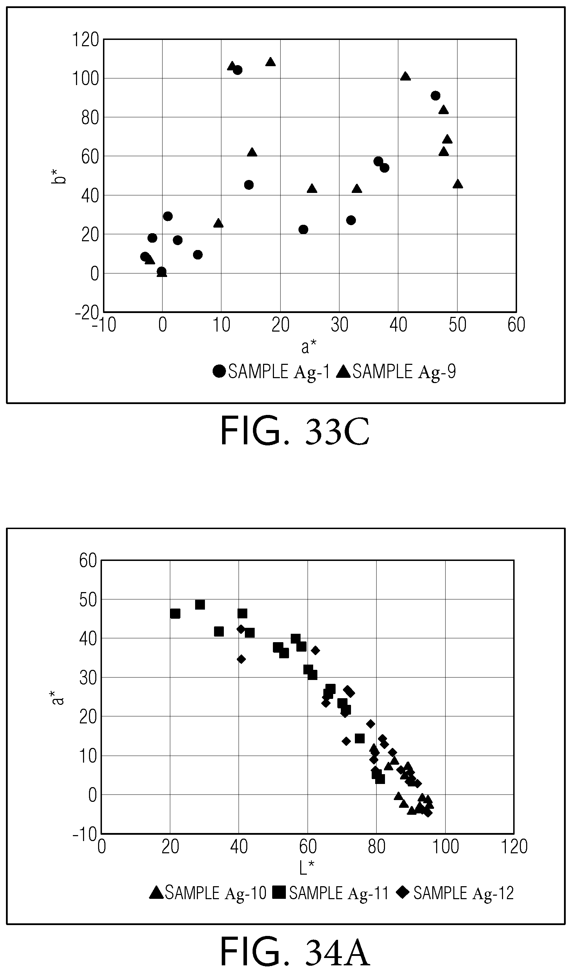

FIG. 33C graphically depicts a plot of projected a* vs. b* CIELAB spaces (y-axis: b*; x-axis: a*) of colored glass articles;

FIG. 34A graphically depicts a plot of projected a* vs. L* CIELAB spaces (y-axis: a*; x-axis: L*) of colored glass articles;

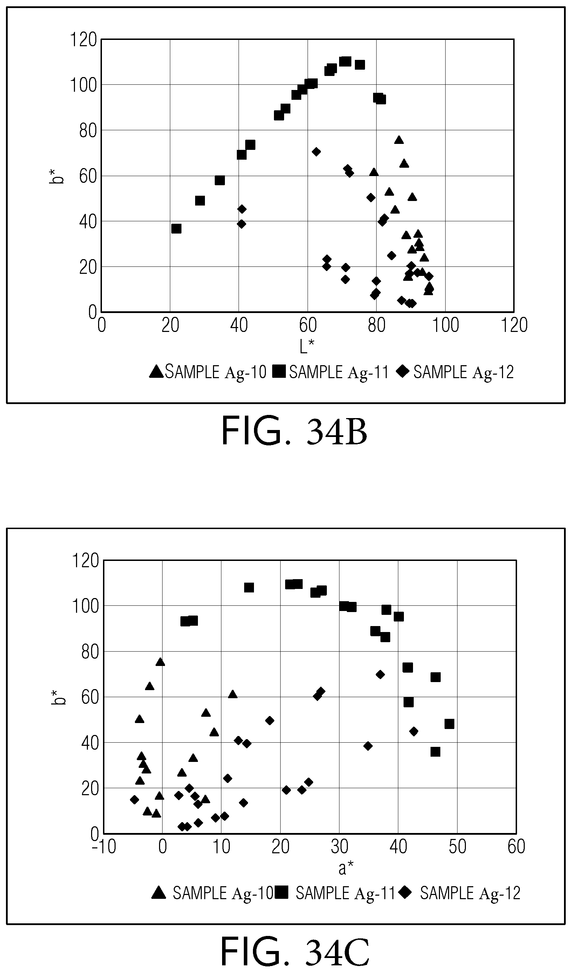

FIG. 34B graphically depicts a plot of projected b* vs. L* CIELAB spaces (y-axis: b*; x-axis: L*) of colored glass articles;

FIG. 34C graphically depicts a plot of projected a* vs. b* CIELAB spaces (y-axis: b*; x-axis: a*) of colored glass articles;

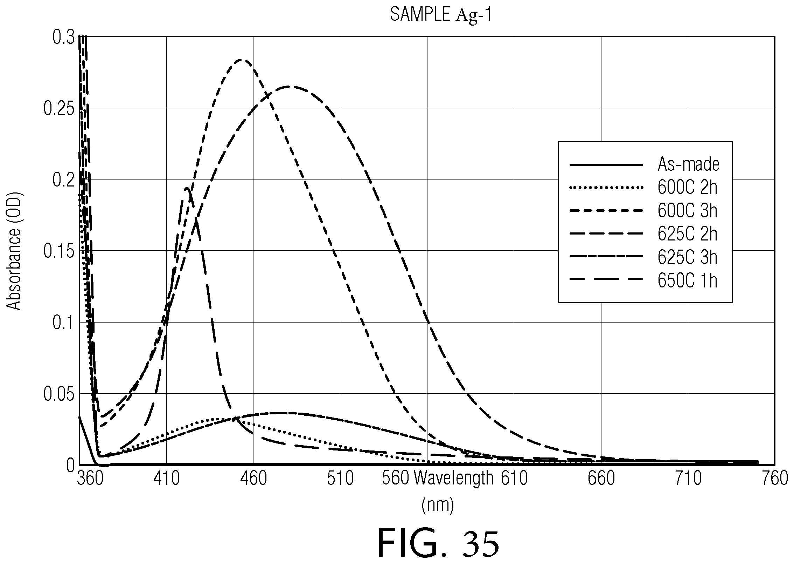

FIG. 35 graphically depicts absorbance spectra (y-axis) as a function of wavelength (x-axis) of colored glass articles;

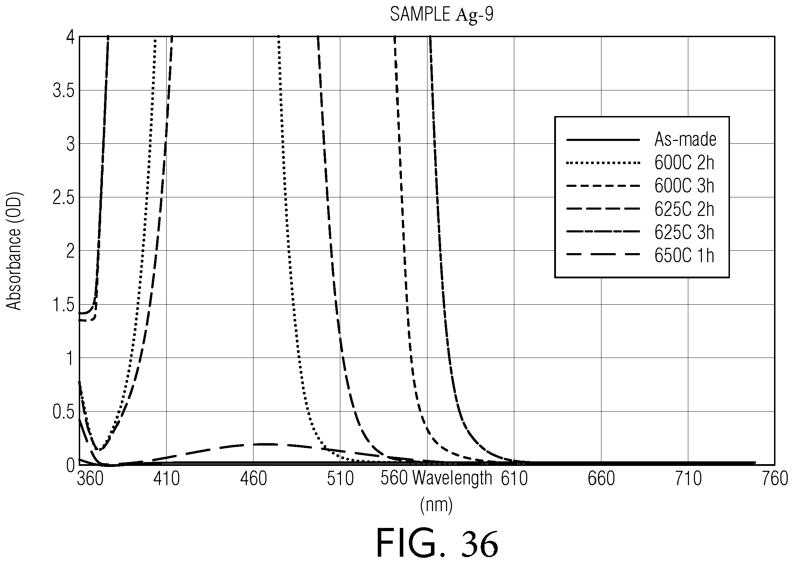

FIG. 36 graphically depicts absorbance spectra (y-axis) as a function of wavelength (x-axis) of colored glass articles;

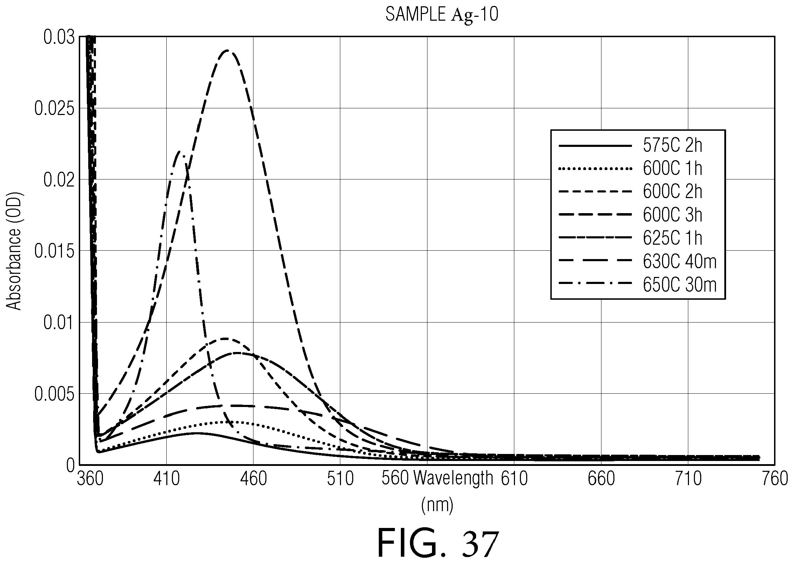

FIG. 37 graphically depicts absorbance spectra (y-axis) as a function of wavelength (x-axis) of colored glass articles;

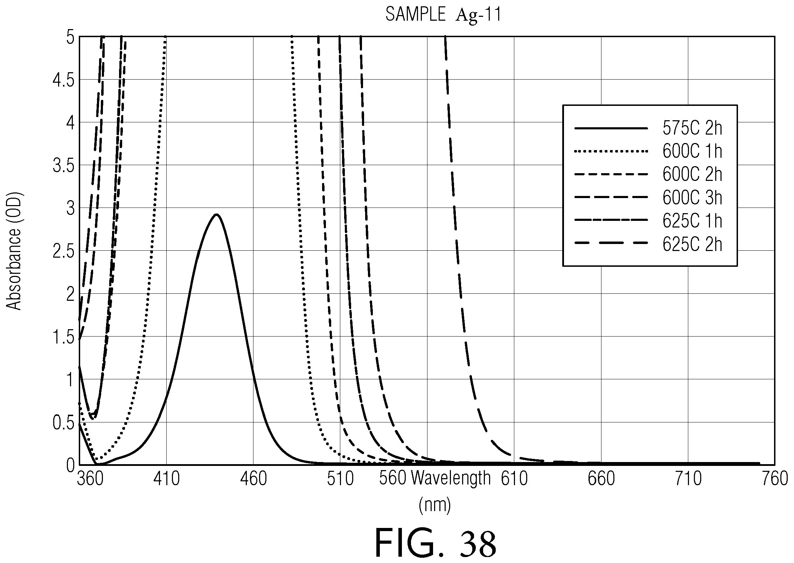

FIG. 38 graphically depicts absorbance spectra (y-axis) as a function of wavelength (x-axis) of colored glass articles;

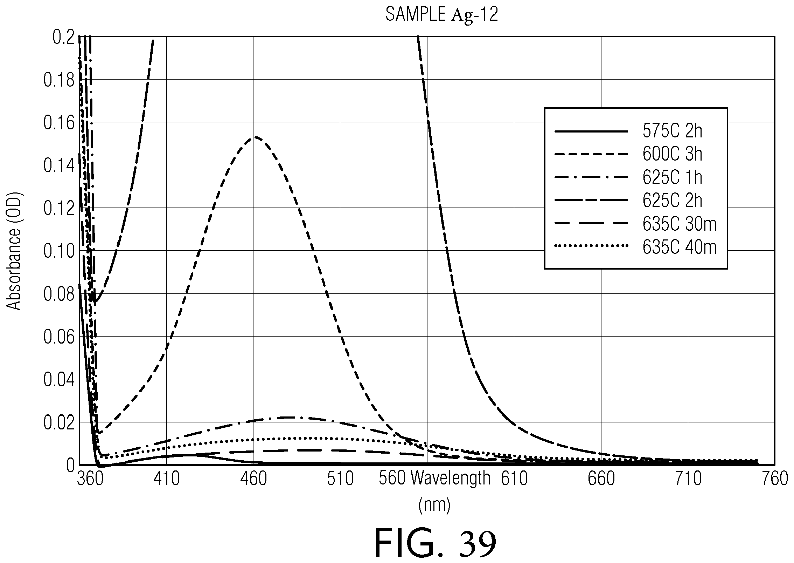

FIG. 39 graphically depicts absorbance (y-axis) as a function of wavelength (x-axis) spectra of colored glass articles;

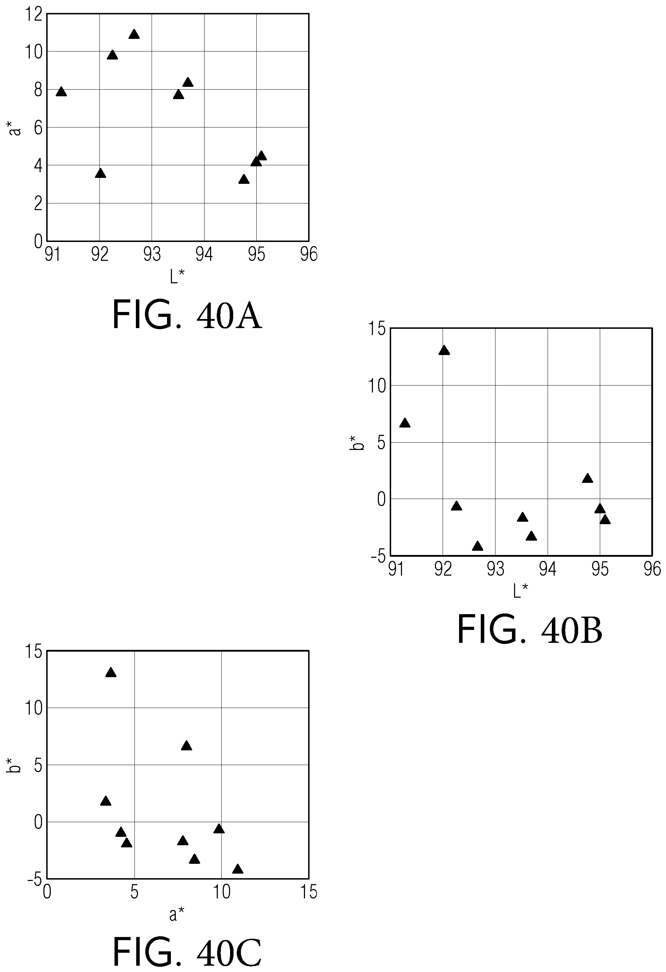

FIG. 40A graphically depicts a plot of a projected a* vs. L* CIELAB space (y-axis: a*; x-axis: L*) of a colored glass article;

FIG. 40B graphically depicts a plot of a projected b* vs. L* CIELAB space (y-axis: b*; x-axis: L*) of a colored glass article;

FIG. 40C graphically depicts a plot of a projected a* vs. b* CIELAB space (y-axis: b*; x-axis: a*) of a colored glass article;

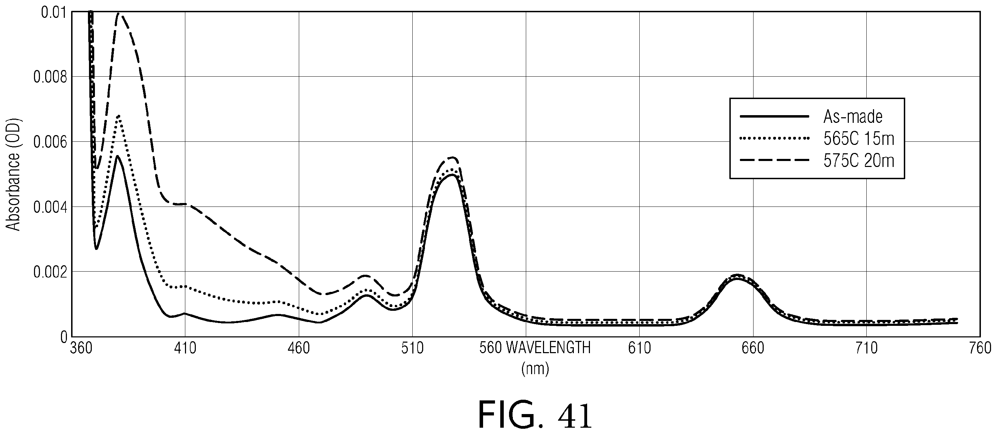

FIG. 41 graphically depicts an absorbance spectra (y-axis) as a function of wavelength (x-axis) of colored glass articles;

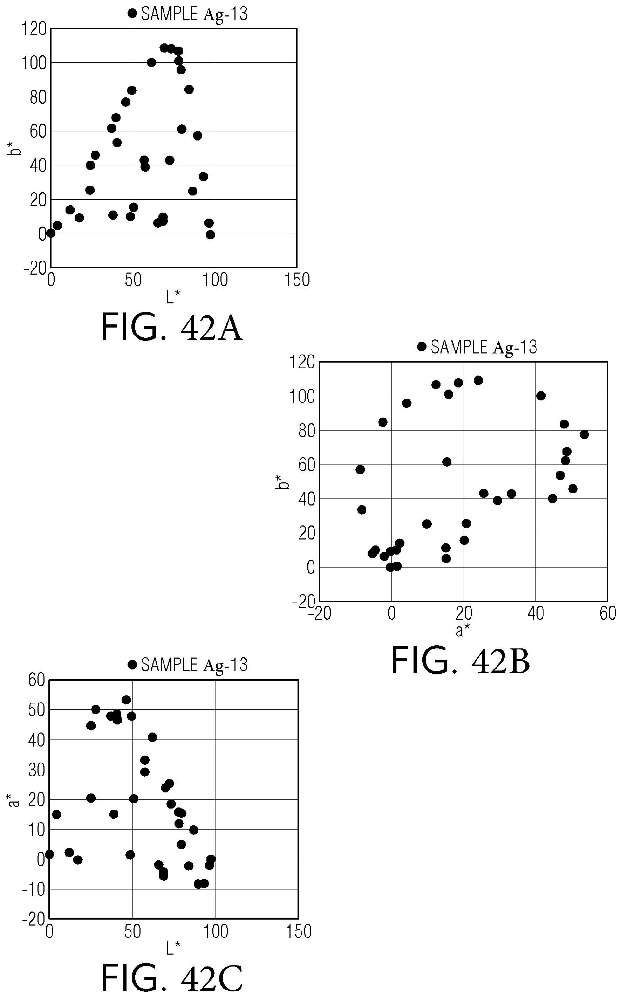

FIG. 42A graphically depicts a plot of a projected b* vs. L* CIELAB space (y-axis: b*; x-axis: L*) of a colored glass article;

FIG. 42B graphically depicts a plot of a projected a* vs. b* CIELAB space (y-axis: b*; x-axis: a*) of a colored glass article;

FIG. 42C graphically depicts a plot of a projected a* vs. L* CIELAB space (y-axis: a*; x-axis: L*) of a colored glass article;

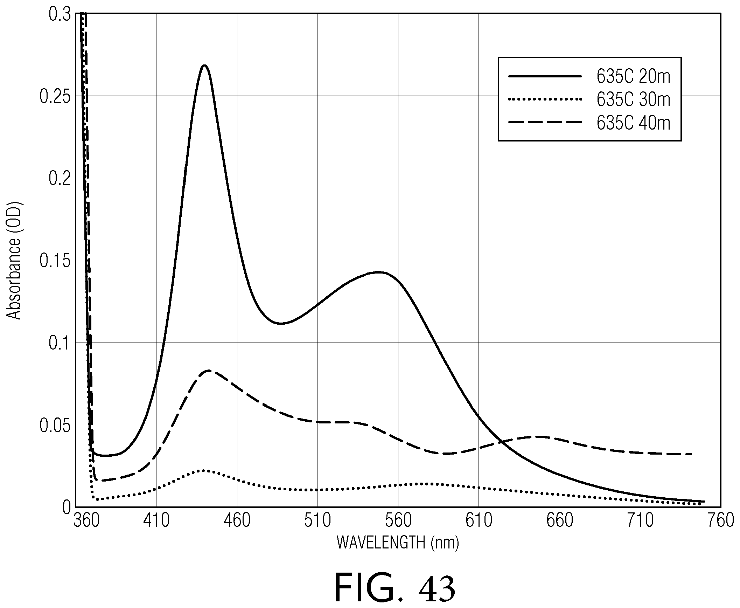

FIG. 43 graphically depicts an absorbance spectra (y-axis) as a function of wavelength (x-axis) of a colored glass article;

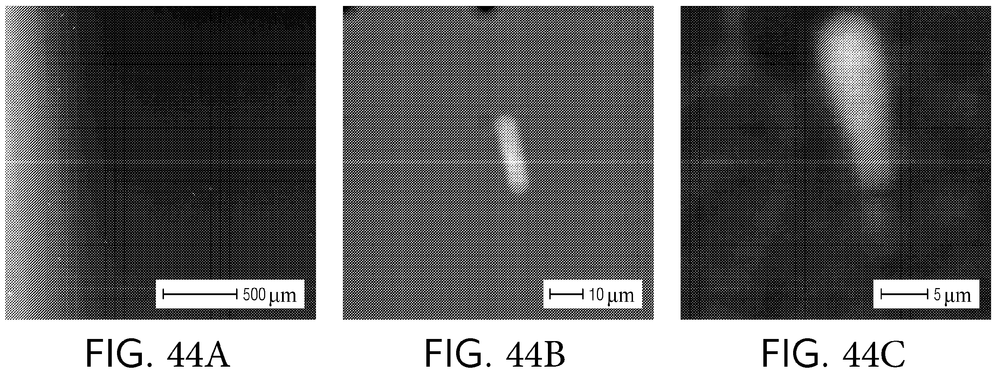

FIG. 44A is a transmission electron microscopy (TEM) micrograph of anisotropic silver particles in a colored glass article;

FIG. 44B is a magnified view of a portion of the TEM micrograph of FIG. 44A showing an anisotropic silver particle in a colored glass article;

FIG. 44C is a magnified view of a portion of the TEM micrograph of FIG. 44B showing an anisotropic silver particle in a colored glass article;

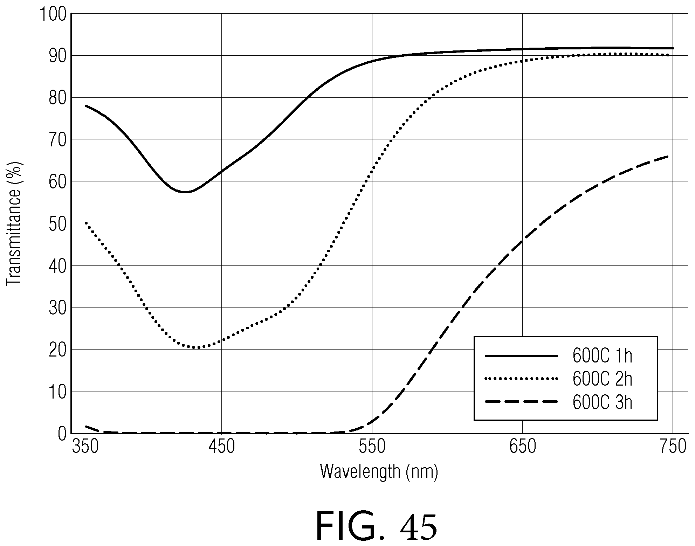

FIG. 45 graphically depicts a transmittance spectra (y-axis) as a function of wavelength (x-axis) of a colored glass article heat treated at the same temperature for different heat treatment times;

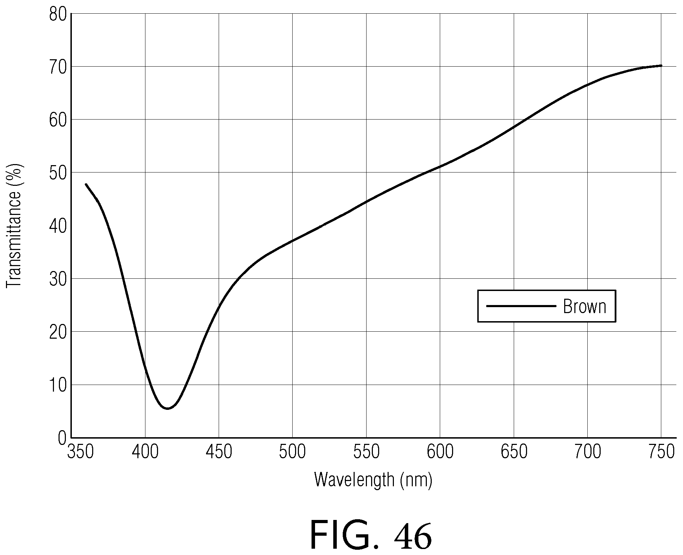

FIG. 46 graphically depicts a transmittance spectra (y-axis) as a function of wavelength (x-axis) of a colored glass article;

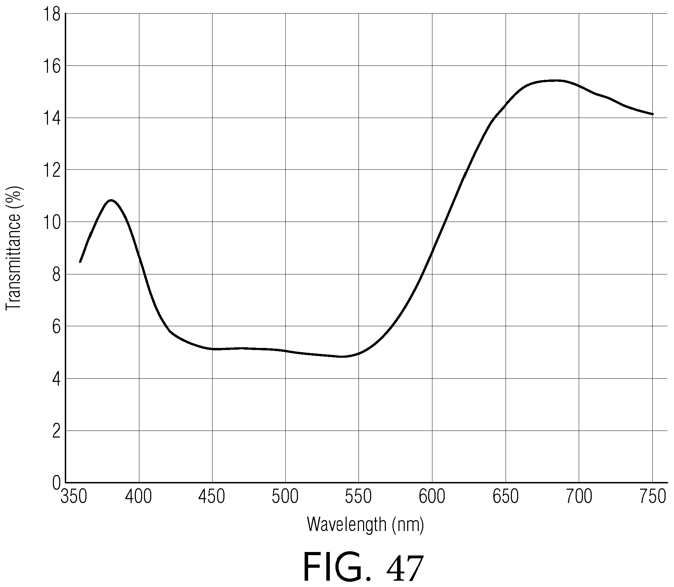

FIG. 47 graphically depicts a transmittance spectra (y-axis) as a function of wavelength (x-axis) of a colored glass article;

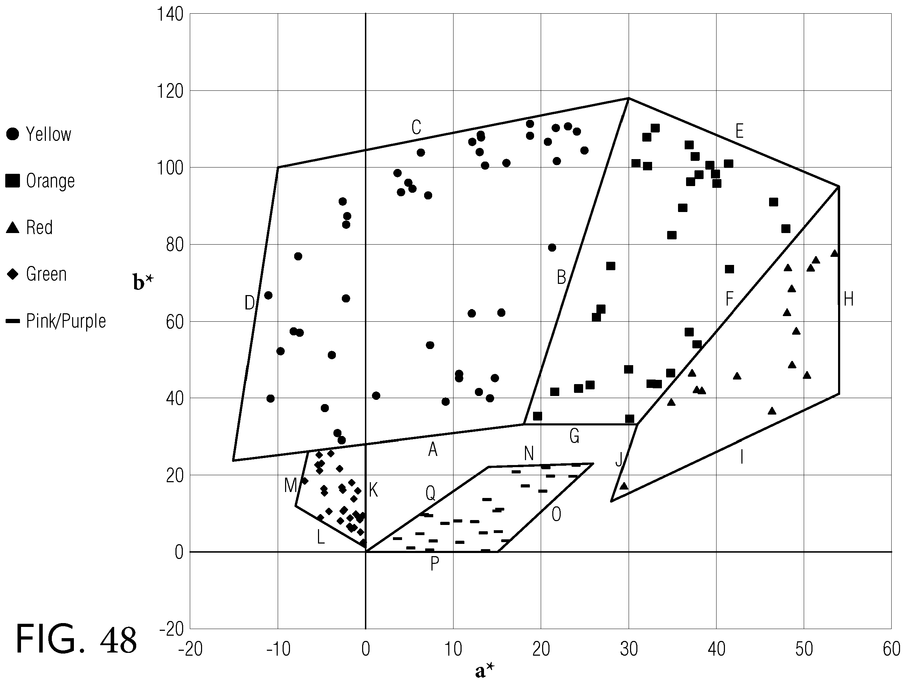

FIG. 48 is graphically depicts a plot of a projected a* vs. b* CIELAB space (y-axis: b*; x-axis: a*) of colored glass articles;

FIG. 49 is a schematic representation of a sample utilized in the double cantilever beam (DCB) procedure to determine the fracture toughness $K_{IC}$ and a cross-section thereof;

FIG. 50 graphically depicts the results of an incremental face drop on sandpaper (i.e., a "drop test") for select examples and a comparative example;

FIG. 51 schematically depicts a drop test conducted on ion exchange strengthened colored glass articles;

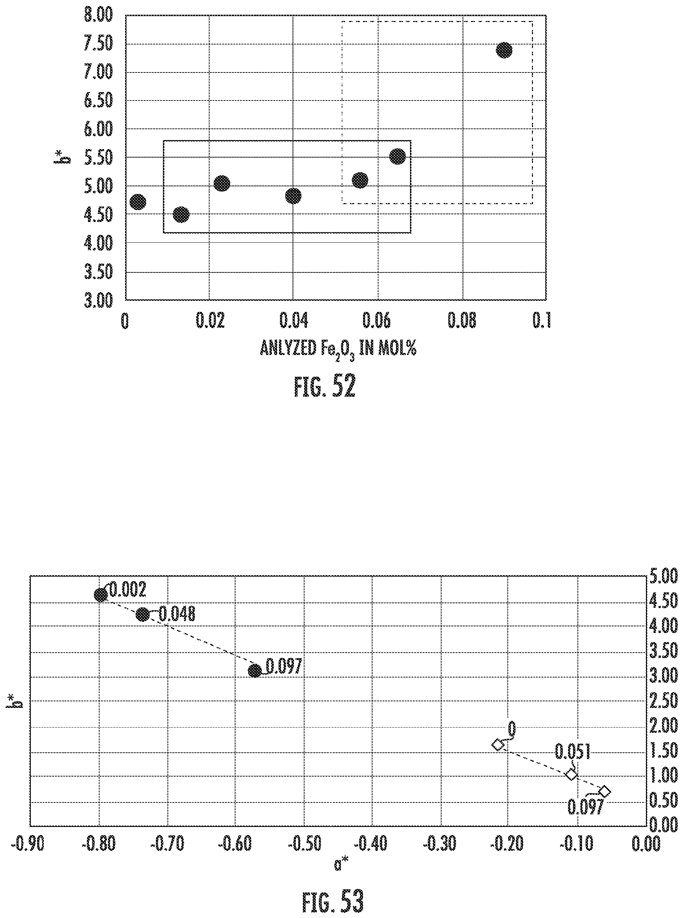

FIG. 52 is a plot of b* as a function of $Fe_2O_3$ content for a variety of glass compositions;

FIG. 53 is a plot of b* as a function of a* for glass compositions with various $SnO_2$ contents;

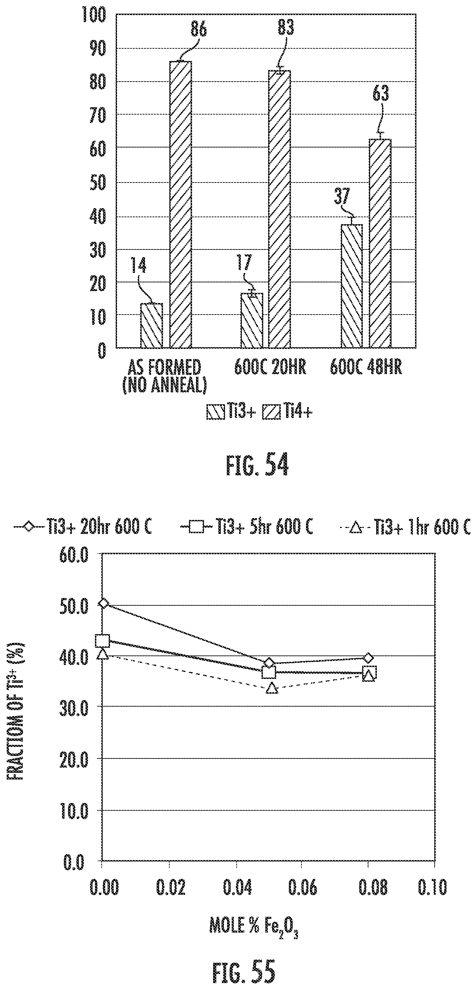

FIG. 54 is a plot of titanium oxidation state content as measured by XPS for glass articles subjected to various heat treatments; and

FIG. 55 is a plot of $Ti^{3+}$ oxidation state fraction as detected by XPS as a function of function of $Fe_2O_3$ content for a variety of glass compositions and annealing treatments.

## DETAILED DESCRIPTION

Reference will now be made in detail to various embodiments of glass compositions and colored glass articles formed therefrom having a desired color. According to the invention, a colored glass article includes: greater than or equal to 50 mol% and less than or equal to 80 mol% $SiO_2$; greater than or equal to 7 mol% and less than or equal to 20 mol%

$Al_2O_3$; greater than or equal to 1 mol% and less than or equal to 35 mol% $R_2O$, wherein $R_2O$ comprises at least one of $Li_2O$, $Na_2O$, and $K_2O$; greater than $1 \times 10^{-6}$ mol% and less than or equal to 10 mol% of a colorant, wherein the colorant comprises at least one of $Cr_2O_3$, $CuO$, $NiO$, and $Co_3O_4$; and greater than or equal to 12 mol% and less than or equal to 24 mol% of $Al_2O_3 + MgO + CaO + ZnO$. The colored glass article may further include a transmittance color coordinate in the CIELAB color space comprising an L* value greater than or equal to 55 and less than or equal to 96.5 as measured under F2 illumination and a 10° standard observer angle; a compressive stress profile with a depth of compression greater than or equal to 0.15t where t is a thickness of the colored glass article, a compressive stress greater than or equal to 200 MPa, and a central tension greater than or equal to 60 MPa; a dielectric constant from 5.6 to 6.4 over a frequency range from 10 GHz to 60 GHz; and the thickness t is greater than or equal to 0.4 mm and less than or equal to 5 mm. Various embodiments of colored glass articles will be described herein with specific reference to the appended drawings.

Ranges may be expressed herein as from "about" one particular value, and/or to "about" another particular value. When such a range is expressed, another embodiment includes from the one particular value and/or to the other particular value. Similarly, when values are expressed as approximations, by use of the antecedent "about," it will be understood that the particular value forms another embodiment. It will be further understood that the endpoints of each of the ranges are significant both in relation to the other endpoint, and independently of the other endpoint.

Directional terms as used herein - for example up, down, right, left, front, back, top, bottom - are made only with reference to the figures as drawn and are not intended to imply absolute orientation.

As used herein, the singular forms "a, " "an" and "the" include plural referents unless the context clearly dictates otherwise. Thus, for example, reference to "a" component includes aspects having two or more such components, unless the context clearly indicates otherwise.

In the embodiments of the glass compositions and the resultant colored glass articles described herein, the concentrations of constituent components in oxide form (e.g., $SiO_2$, $Al_2O_3$, and the like) are specified in mole percent (mol%) on an oxide basis, unless otherwise specified.

In embodiments of the glass compositions and the resultant colored glass articles described herein, the concentrations of Au and Cl are specified in mole percent (mol%), unless otherwise specified.

In embodiments of the glass compositions and the resultant colored glass articles described herein, the concentration of a cation "M" is specified in mole percent (mol%), unless otherwise specified.

The term "substantially free," when used to describe the concentration and/or absence of a particular constituent component in a glass composition and the resultant colored glass article, means that the constituent component is not intentionally added to the glass composition and the resultant colored glass article. However, the glass composition and the resultant colored glass article may contain traces of the constituent component as a contaminant or tramp in amounts of less than 200 ppm unless specified otherwise herein. It is noted that the definition of "substantially free" is exclusive of gold (Au) which may be intentionally added to the glass composition in relatively small amounts such as, for example and without limitation, amounts less than 200 ppm (or the equivalent in mol%) to achieve a desired color in the resultant colored glass article.

The terms "0 mol%" and "free," when used to describe the concentration and/or absence of a particular constituent component in a glass composition, means that the constituent component is not present in the glass composition.

Fracture toughness ($K_{IC}$) represents the ability of a glass composition to resist fracture. Fracture toughness is measured on a non-strengthened glass article, such as measuring the $K_{IC}$ value prior to ion exchange (IOX) treatment of the glass article, thereby representing a feature of a glass substrate prior to IOX. The fracture toughness test methods described herein are not suitable for glasses that have been exposed to IOX treatment. Accordingly, where the fracture toughness of an ion exchanged article is referred to, it means the fracture toughness of a non-ion exchanged article with the same composition and microstructure (when present) as the center (i.e., a point located at least 0.5t from every surface of the article or substrate where t is the thickness of the article or substrate) of the ion exchanged article (which corresponds to the portion of the ion exchanged article least affected by the ion exchange process and, hence, a composition and microstructure comparable to a non-ion exchanged glass). Fracture toughness is measured by the chevron notched short bar method. The chevron notched short bar (CNSB) method is disclosed in Reddy, K.P.R. et al, "Fracture Toughness Measurement of Glass and Ceramic Materials Using Chevron-Notched Specimens," J. Am. Ceram. Soc., 71 [6], C-310-C-313 (1988) except that $Y^*_m$ is calculated using equation 5 of Bubsey, R.T. et al., "Closed-Form Expressions for Crack-Mouth Displacement and Stress Intensity Factors for Chevron-Notched Short Bar and Short Rod Specimens Based on Experimental Compliance Measurements," NASA Technical Memorandum 83796, pp. 1-30 (October 1992). Unless otherwise specified, all fracture toughness values were measured by chevron notched short bar (CNSB) method.

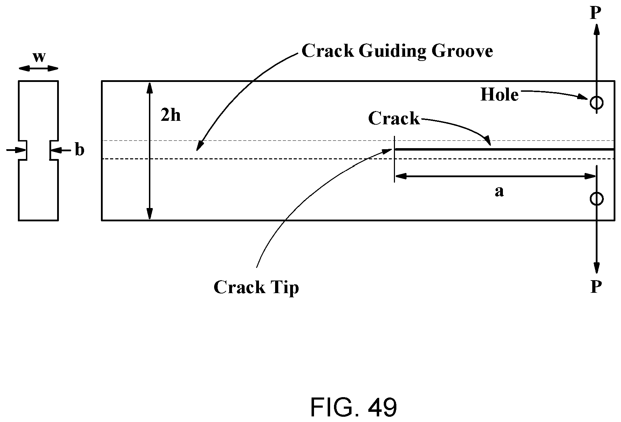

Alternative $K_{IC}$ fracture toughness measurements were performed on some samples with the double cantilever beam (DCB) procedure. The DCB specimen geometry is shown in FIG. 49 with parameters being the crack length *a*, applied load P, cross-sectional dimensions w and *2h,* and the thickness of the crack-guiding groove *b.* The samples were cut into rectangles of width 2h = 1.25 cm and a thickness ranging from, w = 0.3 mm to 1 mm, with the overall length of the sample, which is not a critical dimension, varying from 5 cm to 10 cm. A hole was drilled on both ends with a diamond drill to provide a means of attaching the sample to a sample holder and to the load. A crack "guiding groove" was cut down the length of the sample on both flat faces using a wafer dicing saw with a diamond blade, leaving a "web" of material, approximately half the total plate thickness (dimension *b* in FIG. 49), with a height of 180 $\mu$m corresponding to the blade thickness. The high precision dimensional tolerances of the dicing saw allow for minimal sample-to-sample variation. The dicing saw was also used to cut an initial crack where *a* = 15 mm. As a consequence of this final operation a very thin wedge of material was created near the crack tip (due to the blade curvature) allowing for easier crack initiation in the sample. The samples were mounted in a metal sample holder with a steel wire in the bottom hole of the sample. The samples were also supported on the opposite end to keep the samples level under low loading conditions. A spring in series with a load cell (FUTEK, LSB200) was hooked to the upper hole which was then extended, to gradually apply load, using rope and a high precision slide. The crack was monitored using a microscope having a 5 $\mu$m resolution attached to a digital camera and a computer. The applied stress intensity, $K_P$, was calculated using the following equation:

$$K_P = \left[\frac{P \cdot a}{(w \cdot b)^{0.5} h^{1.5}}\right]\left[3.47 + 2.32\frac{h}{a}\right]$$

For each sample, a crack was first initiated at the tip of the web, and then the starter crack was carefully sub-critically grown until the ratio of dimensions *a*/*h* was greater than 1.5 to accurately calculate stress intensity. At this point the crack length, *a*, was measured and recorded using a traveling microscope with 5 $\mu$m resolution. A drop of toluene was then placed into the crack groove and wicked along the length of the groove by capillary forces, pinning the crack from moving until the fracture toughness is reached. The load was then increased until sample fracture occurred, and the critical stress intensity $K_{IC}$ calculated from the failure load and sample dimensions, with $K_P$ being equivalent to $K_{IC}$ due to the measurement method.

The viscosity of the glass composition, as described herein, is measured according to ASTM C965-96.

The term "melting point," as used herein, refers to the temperature at which the viscosity of the glass composition is 20 Pa•s (200 poise).

The term "softening point," as used herein, refers to the temperature at which the viscosity of the glass composition is $1 \times 10^{6.6}$ Pa•s ($1 \times 10^{7.6}$ poise). The softening point is measured according to the parallel plate viscosity method which measures the viscosity of inorganic glass from $1 \times 10^6$ to $1 \times 10^8$ Pa•s ($10^7$ to $10^9$ poise) as a function of temperature, similar to ASTM C1351M.

The term "annealing point" as used herein, refer to the temperature at which the viscosity of the glass composition is $1 \times 10^{12.18}$ Pa•s ($1 \times 10^{13.18}$ poise).

The term "strain point," as used herein, refers to the temperature at which the viscosity of the glass composition is $1 \times 10^{13.68}$ Pa•s ($1 \times 10^{14.68}$ poise).

The term "coefficient of thermal expansion" and "CTE," as described herein, is measured in accordance with ASTM E228-85 over the temperature range of 25 °C to 300 °C and is expressed in terms of "x $10^{-7}$/°C" as an average over the temperature range.

The term "liquidus viscosity," as used herein, refers to the viscosity of the glass composition at the onset of devitrification (i.e., at the liquidus temperature as determined with the gradient furnace method according to ASTM C829-81).

The term "liquidus temperature," as used herein, refers to the temperature at which the glass composition begins to devitrify as determined with the gradient furnace method according to ASTM C829-81.

Surface compressive stress is measured with a surface stress meter (FSM) such as commercially available instruments such as the FSM-6000, manufactured by Orihara Industrial Co., Ltd. (Japan). Surface stress measurements rely upon the measurement of the stress optical coefficient (SOC), which is related to the birefringence of the glass article. SOC, in turn, is measured according to Procedure C (Glass Disc Method) described in ASTM standard C770-16, entitled "Standard Test Method for Measurement of Glass Stress-Optical Coefficient,". Depth of compression (DOC) is also measured with the FSM. The maximum central tension (CT) values are measured using a scattered light polariscope (SCALP) technique known in the art.

The term "depth of compression" (DOC), as used herein, refers to the position in the article where compressive stress transitions to tensile stress.

Transmittance data (total transmittance and diffuse transmittance) in the visible spectrum is measured with a Lambda 950 UV/Vis/NIR Spectrophotometer manufactured by PerkinElmer Inc. (Waltham, Massachusetts USA). The Lambda 950 apparatus was fitted with a 150 mm integrating sphere. Data was collected using an open beam baseline and a Spectralon® reference reflectance disk. For total transmittance (Total Tx), the sample is fixed at the integrating sphere entry point.

The term "average transmittance," as used herein with respect to the visible spectrum, refers to the average of transmittance measurements made within a given wavelength range with each whole numbered wavelength weighted equally. In embodiments described herein, the "average transmittance" with respect to the visible spectrum is reported over the wavelength range from 380 nm to 750 nm (inclusive of endpoints). Unless otherwise specified, the average transmittance is indicated for article thicknesses from 0.4 mm to 5 mm, inclusive of endpoints. Unless otherwise specified, when average transmittance is indicated, this means that each thickness within the range of thicknesses from 0.4 mm to 5 mm has an average transmittance as specified. For example, colored glass articles having average transmittances of 10% to 92% over the wavelength range from 380 nm to 750 nm means that each thickness within the range of 0.4 mm to 5 mm (e.g., 0.6 mm, 0.9 mm, 2 mm, etc.) has an average transmittance in the range of 10% to 92% for the wavelength range from 380 nm to 750 nm.

The term "CIELAB color space," as used herein, refers to a color space defined by the International Commission on Illumination (CIE) in 1976. It expresses color as three values: L* for the lightness from black (0) to white (100), a* from green (-) to red (+), and b* from blue (-) to yellow (+). Unless otherwise specified, the L*, a*, and b* values are indicated for article thicknesses of 0.4 mm to 5 mm (inclusive of endpoints) in the thickness direction of the sample under F2 illumination and a 10° standard observer angle. Unless otherwise specified, this means that each thickness within the range of thicknesses has L*, a*, and b* coordinates falling within the specified range(s) for L*, a*, and b* coordinates. For example, a colored glass article having an L* value within the range from 55 to 96.5 means that each thickness within the range of 0.4 mm to 5 mm (e.g., 0.6 mm, 0.9 mm, 2 mm, etc.) has an L* in the range of 55 to 96.5.

The term "color gamut," as used herein, refers to the pallet of colors that may be achieved by the colored glass articles within the CIELAB color space.

The "optical transmission spectra," described herein, were obtained using an Agilent Cary 60 spectrophotometer with a scan range of 250 nm to 800 nm, a scan step of 2 nm, a signal average of 0.5 s, and a spot size of 2 mm. The optical transmission data obtained were used to plot coordinates in the CIELAB color space as described in R.S. Berns, Billmeyer and Saltzman's Principles of Color Technology, 3rd. Ed., John Wiley & Sons, New York (2000).

The term "projected color gamut," as used herein, refers to the line, surface, volume, or overlapping volume occupied by the colored glass article within the three-dimensional CIELAB color space and represents the pallet of colors that may be achieved by the colored glass articles within the CIELAB color space based upon the concentration of colorant(s) present in the colored glass article. The projected color gamuts shown herein were produced using the plotting routine Gnuplot Version 5.4. Specifically, Gnuplot was used to display projections of the CIELAB color coordinates for the transmitted colors under F2 illumination for the CIE 1976 10° Standard Observer. The transmittance spectrum through a flat sheet of glass is given by the following expression:

$$T(\lambda) = \frac{[1 - R(\lambda)]^2 \times \exp[-\sum_i N_i \sigma_i(\lambda)t]}{1 - R(\lambda)^2 \times \exp[-2\sum_i N_i \sigma_i(\lambda)t]} \ ,$$

where R is the Fresnel intensity reflection coefficient of the glass, $N_i$ and $\sigma_i$ represent the number density and absorption cross section, respectively, for the individual dopants, $\lambda$ is the optical wavelength, and t is the thickness of the glass. The color coordinates were calculated from the transmittance spectra through 1.5 mm of the colored glass article. The expression for the transmittance was evaluated by varying the dopant concentrations ($N_i$) for the combinations of the colorants from 0 to a maximum value. As described herein, the maximum values for $Cr_2O_3$, NiO, CuO, and $Co_3O_4$ were set to 2 mol%, 4 mol%, 20 mol%, and 2 mol%, respectively for purposes of determining the projected color gamut.

The dielectric constant of the colored glass articles may be measured using a split post dielectric resonator (SPDR), as is known in the art, at a frequency of 10 GHz. The dielectric constant was measured on samples of the colored glass article having a length of 3 inches (76.2 mm), a width of 3 inches (76.2 mm), and a thickness of less than 0.9 mm.

The dielectric constant of the colored glass articles may also be measured over a range of frequencies from 10 GHz to 60 GHz using a double concave reflecting mirror Fabry-Perot open resonator, as is known in the art. The dielectric constant can be measured at different frequencies by adjusting the mirror spacing in the open resonator. The dielectric constant may be measured on samples of the colored glass article having a length of 120 mm, a width of 120 mm, and a thickness of 2 mm or less. While not wishing to be bound by theory, it is believed that the dielectric constant of the colored glass articles measured at 10 GHz approximates the dielectric constant at each frequency in the range from 10 GHz to 60 GHz.

The dielectric constant Dk of the colored glass article may be calculated according to the equation:

$$Dk = 3.802946 + 0.01747 * B_2O_3 \ (mol\%) + 0.058769 * Al_2O_3 \ (mol\%) + 0.080876 * Li_2O \ (mol\%)$$
$$+ 0.148433 * Na_2O \ (mol\%) + 0.153264 * K_2O \ (mol\%) + 0.045179 * MgO \ (mol\%) +$$
$$0.080113 * CaO \ (mol\%).$$

Colorants have been added to conventional aluminosilicate glass compositions to achieve glass articles having a desired color. However, such glass articles may not have the desired mechanical or electrical properties suitable for some end user applications. For example, glasses used in the housings of consumer electronic devices may require robust mechanical properties to withstand the rigors of day-to-day use and/or dielectric properties to allow for reception of wireless signals by the device.

Moreover, it may be desirable to have colored glass articles having mechanical and dielectric properties such that the glass article is suitable for use with consumer electronic devices while also providing the same colored glass articles in a range of different colors. However, simply including colorants in aluminosilicate glass compositions may not produce the desired color. For example, some colorants may have relatively low vaporization temperatures and may vaporize and diffuse out of the glass during manufacturing. The relatively low retention of the colorant limits the color gamut that may be achieved.

Disclosed herein are glass compositions and colored glass articles formed therefrom having superior ion-exchange performance. The colored glass articles also have dielectric properties, such as dielectric constants, such that the glass articles are suitable for use as enclosures for consumer electronic devices such as smart phones, tablets, and computers. The use of various colorants and combinations of colorants expands the color gamut that may be achieved in the resultant colored glass articles

The glass compositions and colored glass articles described herein may be described as aluminoborosilicate glass compositions and colored glass articles and comprise $SiO_2$, $Al_2O_3$, and $B_2O_3$. In addition to $SiO_2$, $Al_2O_3$, and $B_2O_3$, the glass compositions and colored glass articles described herein include one or more colorants in a colorant package to impart a desired color to the resultant colored glass article. The glass compositions and colored glass articles described herein also include alkali oxides, such as $Li_2O$ and $Na_2O$, to enable the ion-exchangeability of the colored glass articles. In embodiments, the glass compositions and colored glass articles described herein may further include other components to improve colorant retention and produce colored glass articles having the desired color. In embodiments, the difference between $R_2O$ and $Al_2O_3$ (i.e. $R_2O$ (mol%) - $Al_2O_3$ (mol%)) in the glass compositions and resultant colored glass articles described herein may be adjusted to produce a desired observable color (e.g., pink, purple, red, orange, or blue). In embodiments, the viscosity of the glass composition may be adjusted to prevent devitrification of the glass composition.

$SiO_2$ is the primary glass former in the glass compositions described herein and may function to stabilize the network structure of the colored glass articles. The concentration of $SiO_2$ in the glass compositions and resultant colored glass articles should be sufficiently high (e.g., greater than or equal to 40 mol%) to enhance the chemical durability of the glass composition and, in particular, the resistance of the glass composition to degradation upon exposure to acidic solutions, basic solutions, and in water. The amount of $SiO_2$ may be limited (e.g., to less than or equal to 80 mol%) to control the melting point of the glass composition, as the melting point of pure $SiO_2$ or high $SiO_2$ glasses is undesirably high. Thus, limiting the concentration of $SiO_2$ may aid in improving the meltability and the formability of the resultant colored glass article.

In embodiments, the glass composition and the resultant colored glass article comprises greater than or equal to 50 mol% and less than or equal to 80 mol% $SiO_2$. In embodiments, the glass composition and the resultant colored glass article may comprise greater than or equal to 53 mol% and less than or equal to 67 mol% $SiO_2$. In embodiments, the concentration of $SiO_2$ in the glass composition and the resultant colored glass article may be greater than or equal to 52 mol%, greater than or equal to 53 mol%, greater than or equal to 54 mol%, greater than or equal to 55 mol%, greater than or equal to 56 mol%, greater than or equal to 57 mol%, greater than or equal to 58 mol%, or even greater than or equal to 60 mol%. In embodiments, the concentration of $SiO_2$ in the glass composition and the colored resultant glass article may be less than or equal to 75 mol%, less than or equal to 73 mol%, less than or equal to 71 mol%, less than or equal to 70 mol%, less than or equal to 68 mol%, less than or equal to 67 mol%, less than or equal to 66 mol%, less than or equal to 65 mol%, less than or equal to 64 mol%, less than or equal to 63 mol%, less than or equal to 62 mol%, less than or equal to 61 mol%, less than or equal to 60 mol%, or even less than or equal to 59 mol%. In embodiments, the concentration of $SiO_2$ in the glass composition and the resultant colored glass article may be greater than or equal to 50 mol% and less than or equal to 70 mol%, greater than or equal to 50 mol% and less than or equal to 67 mol%, greater than or equal to 50 mol% and less than or equal to 65 mol%, greater than or equal to 50 mol% and less than or equal to 63 mol%, greater than or equal to 50 mol% and less than or equal to 62 mol%, greater than or equal to 50 mol% and less than or equal to 61 mol%, greater than or equal to 50 mol% and less than or equal to 60 mol%, greater than or equal to 50 mol% and less than or equal to 59 mol%, greater than or equal to 53 mol% and less than or equal to 70 mol%, greater than or equal to 53 mol% and less than or equal to 67 mol%, greater than or equal to 53 mol% and less than or equal to 65 mol% greater than or equal to 53 mol% and less than or equal to 63 mol%, greater than or equal to 53 mol% and less than or equal to 62 mol%, greater than or equal to 53 mol% and less than or equal to 61 mol%, greater than or equal to 53 mol% and less than or equal to 60 mol%, greater than or equal to 53 mol% and less than or equal to 59 mol%, greater than or equal to 55 mol% and less than or equal to 70 mol%, greater than or equal to 55 mol% and less than or equal to 67 mol%, greater than or equal to 55 mol% and less than or equal to 65 mol% greater than or equal to 55 mol% and less than or equal to 63 mol%, greater than or equal to 55 mol% and less than or equal to 62 mol%, greater than or equal to 55 mol% and less than or equal to 61 mol%, greater than or equal to 55 mol% and less than or equal to 60 mol%, greater than or equal to 55 mol% and less than or equal to 59 mol%, greater than or equal to 56 mol% and less than or equal to 70 mol%, greater than or equal to 56 mol% and less than or equal to 67 mol%, greater than or equal to 56 mol% and less than or equal to 65 mol% greater than or equal to 56 mol% and less than or equal to 63 mol%, greater than or equal to 56 mol% and less than or equal to 62 mol%, greater than or equal to 56 mol% and less than or equal to 61 mol%, greater than or equal to 56 mol% and less than or equal to 60 mol%, greater than or equal to 56 mol% and less than or equal to 59 mol%, greater than or equal to 57 mol% and less than or equal to 70 mol%, greater than or equal to 57 mol% and less than or equal to 67 mol%, greater than or equal to 57 mol% and less than or equal to 65 mol% greater than or equal to 57 mol% and less than or equal to 63 mol%, greater than or equal to 57 mol% and less than or equal to 62 mol%, greater than or equal to 57 mol% and less than or equal to 61 mol%, greater than or equal to 57 mol% and less than or equal to 60 mol%, or even greater than or equal to 57 mol% and less than or equal to 59 mol%. In embodiments, the concentration of $SiO_2$ in the glass composition and the resultant colored glass article may be greater than or equal to 50 mol% and less than or equal to 75 mol%, greater than or equal to 50 mol% and less than or equal to 73 mol%, greater than or equal to 50 mol% and less than or equal to 71 mol%, greater than or equal to 50 mol% and less than or equal to 69 mol%, greater than or equal to 52 mol% and less than or equal to 80 mol%, greater than or equal to 52 mol% and less than or equal to 75 mol%, greater than or equal to 52 mol% and less than or equal to 73 mol%, greater than or equal to 52 mol% and less than or equal to 71 mol%, greater than or equal to 52 mol% and less than or equal to 69 mol%, greater than or equal to 54 mol% and less than or equal to 80 mol%, greater than or equal to 54 mol% and less than or equal to 75 mol%, greater than or equal to 54 mol% and less than or equal to 73 mol%, greater than or equal to 54 mol% and less than or equal to 71 mol%, greater than or equal to 54 mol% and less than or equal to 69 mol%, greater than or equal to 56 mol% and less than or equal to 80 mol%, greater than or equal to 56 mol% and less than or equal to 75 mol%, greater than or equal to 56 mol% and less than or equal to 73 mol%, greater than or equal to 56 mol% and less than or equal to 71 mol%, greater than or equal to 56 mol% and less than or equal to 69 mol%, greater than or equal to 58 mol% and less than or equal to 80 mol%, greater than or equal to 58 mol% and less than or equal to 75 mol%, greater than or equal to 58 mol% and less than or equal to 73 mol%, greater than or equal to 58 mol% and less than or equal to 71 mol%, greater than or equal to 58 mol% and less than or equal to 69 mol%, greater than or equal to 50 mol% and less than or equal to 80 mol%, greater than or equal to 60 mol% and less than or equal to 75 mol%, greater than or equal to 60 mol% and less than or equal to 73 mol%, greater than or equal to 60 mol% and less than or equal to 71 mol%, or even greater than or equal to 60 mol% and less than or equal to 69 mol%. In embodiments, the concentration of $SiO_2$ in the glass composition and the resultant colored glass article may be greater than or equal to 52 mol% and less than or equal to 70 mol%, greater than or equal to 52 mol% and less than or equal to 68 mol%, greater than or equal to 52 mol% and less than or equal to 66 mol%, greater than or equal to 52 mol% and less than or equal to 65 mol%, greater than or equal to 52 mol% and less than or equal to 64 mol%, greater than or equal to 53 mol% and less than or equal to 70 mol%, greater than or equal to 53 mol% and less than or equal to 68 mol%, greater than or equal to 53 mol% and less than or equal to 66 mol%, greater than or equal to 53 mol% and less than or equal to 65 mol%, or greater than or equal to 53 mol% and less than or equal to 64 mol%, greater than or equal to 54 mol% and less than or equal to 70 mol%, greater than or equal to 54 mol% and less than or equal to 68 mol%, greater than or equal to 54 mol% and less than or equal to 66 mol%, greater than or equal to 54 mol% and less than or equal to 65 mol%, or greater than or equal to 54 mol%.

Like $SiO_2$, $Al_2O_3$ may also stabilize the glass network and additionally provides improved mechanical properties and chemical durability to the glass composition and the resultant colored glass article. The amount of $Al_2O_3$ may also be tailored to control the viscosity of the glass composition. $Al_2O_3$ may be included such that the resultant glass composition has the desired fracture toughness (e.g., greater than or equal to 0.7 MPa·m$^{1/2}$). However, if the amount of $Al_2O_3$ is too high (e.g., greater than 25 mol%), the viscosity of the glass melt may increase, thereby diminishing the formability of the colored glass article. In embodiments, if the amount of $Al_2O_3$ is too high, the solubility of one or more colorants of the colorant package in the glass melt may decrease, resulting in the formation of undesirable crystal phases in the glass. For example and without limitation, when the colorant package includes $Cr_2O_3$, the solubility of $Cr_2O_3$ in the glass melt may decrease with increasing $Al_2O_3$ concentrations (e.g., concentrations greater than or equal to 17.5 mol%), leading to the precipitation of undesirable crystal phases. Without wishing to be bound by theory, it is hypothesized that similar behavior may occur with colorants other than $Cr_2O_3$.

The glass composition and the resultant colored glass article comprise greater than or equal to 7 mol% and less than or equal to 20 mol%. In embodiments, the glass composition and the resultant colored glass article may comprise greater than or equal to 10 mol% and less than or equal to 20 mol% $Al_2O_3$, greater than or equal to 10 mol% and less than or equal to 17.5 mol% $Al_2O_3$, or even greater than or equal to 12 mol% and less than or equal to 17.25 mol% $Al_2O_3$. In embodiments, the glass composition and the resultant colored glass article may comprise greater than or equal to 11 mol% and less than or equal to 19 mol% $Al_2O_3$ or greater than or equal to 14 mol% and less than or equal to 17 mol% $Al_2O_3$. In embodiments, the concentration of $Al_2O_3$ in the glass composition and the resultant colored glass article may be greater than or equal to 7 mol%, greater than or equal to 8 mol%, greater than or equal to 9 mol%, greater than or equal to 10 mol%, greater than or equal to 11 mol%, greater than or equal to 12 mol%, greater than or equal to 12.5 mol%, greater than or equal to 13 mol%, greater than or equal to 13.5 mol%, greater than or equal to 14 mol%, greater than or equal to 14.5 mol%, greater than or equal to 15 mol%, greater than or equal to 15.5 mol%, or even greater than or equal to 16 mol%. In embodiments, the concentration of $Al_2O_3$ in the glass composition and the resultant colored glass article may be less than or equal to 25 mol%, less than or equal to 23 mol%, less than or equal to 20 mol%, less than or equal to 19 mol%, less than or equal to 18 mol%, less than or equal to 17.5 mol%, less than or equal to 17.25 mol%, less than or equal to 17 mol%, less than or equal to 16.75 mol%, or even less than or equal to 16 mol%. In embodiments, the concentration of $Al_2O_3$ in the glass composition and the resultant colored glass article may be greater than or equal to 8 mol% and less than or equal to 20 mol%, greater than or equal to 8 mol% and less than or equal to 18 mol% greater than or equal to 8 mol% and less than or equal to 17.5 mol%, greater than or equal to 8 mol% and less than or equal to 17 mol%, greater than or equal to 10 mol% and less than or equal to 20 mol%, greater than or equal to 10 mol% and less than or equal to 18 mol% greater than or equal to 10 mol% and less than or equal to 17.5 mol%, greater than or equal to 10 mol% and less than or equal to 17 mol%, greater than or equal to 12 mol% and less than or equal to 20 mol%, greater than or equal to 12 mol% and less than or equal to 18 mol% greater than or equal to 12 mol% and less than or equal to 17.5 mol%, greater than or equal to 12 mol% and less than or equal to 17 mol%, greater than or equal to 12.5 mol% and less than or equal to 20 mol%, greater than or equal to 12.5 mol% and less than or equal to 18 mol% greater than or equal to 12.5 mol% and less than or equal to 17.5 mol%, greater than or equal to 12.5 mol% and less than or equal to 17 mol%, greater than or equal to 13 mol% and less than or equal to 20 mol%, greater than or equal to 13 mol% and less than or equal to 18 mol% greater than or equal to 13 mol% and less than or equal to 17.5 mol%, greater than or equal to 13 mol% and less than or equal to 17 mol%, greater than or equal to 13.5 mol% and less than or equal to 20 mol%, greater than or equal to 13.5 mol% and less than or equal to 18 mol% greater than or equal to 13.5 mol% and less than or equal to 17.5 mol%, greater than or equal to 13.5 mol% and less than or equal to 17 mol%, greater than or equal to 14 mol% and less than or equal to 20 mol%, greater than or equal to 14 mol% and less than or equal to 18 mol% greater than or equal to 14 mol% and less than or equal to 17.5 mol%, or even greater than or equal to 14 mol% and less than or equal to 17 mol%. In embodiments, the concentration of $Al_2O_3$ in the glass composition and the resultant colored glass article may be greater than or equal to 9 mol% and less than or equal to 20 mol%, greater than or equal to 9 mol% and less than or equal to 17 mol%, greater than or equal to 11 mol% and less than or equal to 20 mol%, greater than or equal to 11 mol% and less than or equal to 17 mol%, greater than or equal to 13 mol% and less than or equal to 20 mol%, or greater than or equal to 13 mol% and less than or equal to 17 mol%. In embodiments, the concentration of $Al_2O_3$ in the glass composition and the resultant colored glass article may be greater than or equal to 10 mol% and less than or equal to 17.5 mol%, greater than or equal to 10 mol% and less than or equal to 17.25 mol%, greater than or equal to 10 mol% and less than or equal to 17 mol%, greater than or equal to 10 mol% and less than or equal to 16.75 mol%, greater than or equal to 12 mol% and less than or equal to 17.5 mol%, greater than or equal to 12 mol% and less than or equal to 17.25 mol%, greater than or equal to 12 mol% and less than or equal to 17 mol%, greater than or equal to 12 mol% and less than or equal to 16.75 mol%, greater than or equal to 14 mol% and less than or equal to 17.5 mol%, greater than or equal to 14 mol% and less than or equal to 17.25 mol%, greater than or equal to 14 mol% and less than or equal to 17 mol%, greater than or equal to 14 mol% and less than or equal to 16.75 mol%, greater than or equal to 14.5 mol% and less than or equal to 17.5 mol%, greater than or equal to 14.5 mol% and less than or equal to 17.25 mol%, greater than or equal to 14.5 mol% and less than or equal to 17 mol%, greater than or equal to 14.5 mol% and less than or equal to 16.75 mol%, greater than or equal to 15 mol% and less than or equal to 17.5 mol%, greater than or equal to 15 mol% and less than or equal to 17.25 mol%, greater than or equal to 15 mol% and less than or equal to 17 mol%, greater than or equal to 15 mol% and less than or equal to 16.75 mol%, greater than or equal to 15.5 mol% and less than or equal to 17.5 mol%, greater than or equal to 15.5 mol% and less than or equal to 17.25 mol%, greater than or equal to 15.5 mol% and less than or equal to 17 mol%, greater than or equal to 15.5 mol% and less than or equal to 16.75 mol%, greater than or equal to 16 mol% and less than or equal to 17.5 mol%, greater than or equal to 16 mol% and less than or equal to 17.25 mol%, greater than or equal to 16 mol% and less than or equal to 17 mol%, or even greater than or equal to 16 mol% and less than or equal to 16.75 mol%. In embodiments, the concentration of $Al_2O_3$ in the glass composition and the resultant colored glass article may be greater than or equal to 10 mol% and less than or equal to 20 mol%, greater than or equal to 10 mol% and less than or equal to 19 mol%, greater than or equal to 10 mol% and less than or equal to 18 mol%, greater than or equal to 10 mol% and less than or equal to 17 mol%, greater than or equal to 10 mol% and less than or equal to 16 mol%, greater than or equal to 11 mol% and less than or equal to 20 mol%, greater than or equal to 11 mol% and less than or equal to 19 mol%, greater than or equal to 11 mol% and less than or equal to 18 mol%, greater than or equal to 11 mol% and less than or equal to 17 mol%, greater than or equal to 11 mol% and less than or equal to 16 mol%, greater than or equal to 12 mol% and less than or equal to 20 mol%, greater than or equal to 12 mol% and less than or equal to 19 mol%, greater than or equal to 12 mol% and less than or equal to 18 mol%, greater than or equal to 12 mol% and less than or equal to 17 mol%, greater than or equal to 12 mol% and less than or equal to 16 mol%, greater than or equal to 13 mol% and less than or equal to 20 mol%, greater than or equal to 13 mol% and less than or equal to 19 mol%, greater than or equal to 13 mol% and less than or equal to 18 mol%, greater than or equal to 13 mol% and less than or equal to 17 mol%, greater than or equal to 13 mol% and less than or equal to 16 mol%, greater than or equal to 14 mol% and less than or equal to 20 mol%, greater than or equal to 14 mol% and less than or equal to 19 mol%, greater than or equal to 14 mol% and less than or equal to 18 mol%, greater than or equal to 14 mol% and less than or equal to 17 mol%, or greater than or equal to 14 mol% and less than or equal to 16 mol%.

$B_2O_3$ decreases the melting point of the glass composition, which may improve retention of certain colorants in the glass, such as, for example and without limitation, Au. Without wishing to be bound by theory, it is hypothesized that similar behavior may occur with colorants other than Au. $B_2O_3$ may also improve the damage resistance of the resultant colored glass article. In addition, $B_2O_3$ may be added to reduce the formation of non-bridging oxygen, the presence of which may reduce fracture toughness. The concentration of $B_2O_3$ should be sufficiently high (e.g., greater than or equal to 1 mol%) to reduce the melting point of the glass composition, improve the formability, and increase the fracture toughness of the colored glass article. However, if $B_2O_3$ is too high (e.g., greater than 15 mol%), the annealing point and strain point may decrease, which increases stress relaxation and reduces the overall strength of the colored glass article.

In embodiments, the glass composition and the resultant colored glass article may comprise greater than or equal to 1 mol% and less than or equal to 15 mol% $B_2O_3$, greater than or equal to 1 mol% and less than or equal to 10 mol% $B_2O_3$, greater than or equal to 3 mol% and less than or equal to 10 mol% $B_2O_3$, greater than or equal to 3.5 mol% and less than or equal to 9 mol% $B_2O_3$. In embodiments, the glass composition and the resultant colored glass article may comprise greater than or equal to 2 mol% and less than or equal to 12 mol% $B_2O_3$ or even greater than or equal to 2 mol% and less than or equal to 8 mol% $B_2O_3$. In embodiments, the concentration of $B_2O_3$ in the glass composition and the resultant colored glass article may be greater than or equal to 1 mol%, greater than or equal to 2 mol%, greater than or equal to 3 mol%, greater than or equal to 3.5 mol%, greater than or equal to 4 mol%, greater than or equal to 4.5 mol%, greater than or equal to 5 mol%, or even greater than or equal to 5.5 mol%. In embodiments, the concentration of $B_2O_3$ in the glass composition and the resultant colored glass article may be less than or equal to 15 mol%, less than or equal to 12 mol%, less than or equal to 10 mol%, less than or equal to 9 mol%, less than or equal to 8 mol%, less than or equal to 7.5 mol%, less than or equal to 7 mol%, less than or equal to 6.5 mol%, or even less than or equal to 6 mol%. In embodiments, the concentration of $B_2O_3$ in the glass composition and the resultant colored glass article may be greater than or equal to 1 mol% and less than or equal to 15 mol%, greater than or equal to 1 mol% and less than or equal to 12 mol%, greater than or equal to 1 mol% and less than or equal to 10 mol%, greater than or equal to 1 mol% and less than or equal to 9 mol%, greater than or equal to 1 mol% and less than or equal to 8 mol%, greater than or equal to 1 mol% and less than or equal to 7.5 mol%, greater than or equal to 1 mol% and less than or equal to 7 mol%, greater than or equal to 1 mol% and less than or equal to 6.5 mol%, greater than or equal to 1 mol% and less than or equal to 6 mol%, greater than or equal to 2 mol% and less than or equal to 15 mol%, greater than or equal to 2 mol% and less than or equal to 12 mol%, greater than or equal to 2 mol% and less than or equal to 10 mol%, greater than or equal to 2 mol% and less than or equal to 9 mol%, greater than or equal to 2 mol% and less than or equal to 8 mol%, greater than or equal to 2 mol% and less than or equal to 7.5 mol%, greater than or equal to 2 mol% and less than or equal to 7 mol%, greater than or equal to 2 mol% and less than or equal to 6.5 mol%, greater than or equal to 2 mol% and less than or equal to 6 mol%, greater than or equal to 3 mol% and less than or equal to 15 mol%, greater than or equal to 3 mol% and less than or equal to 12 mol%, greater than or equal to 3 mol% and less than or equal to 10 mol%, greater than or equal to 3 mol% and less than or equal to 9 mol%, greater than or equal to 3 mol% and less than or equal to 8 mol%, greater than or equal to 3 mol% and less than or equal to 7.5 mol%, greater than or equal to 3 mol% and less than or equal to 7 mol%, greater than or equal to 3 mol% and less than or equal to 6.5 mol%, greater than or equal to 3 mol% and less than or equal to 6 mol%, greater than or equal to 3.5 mol% and less than or equal to 15 mol%, greater than or equal to 3.5 mol% and less than or equal to 12 mol%, greater than or equal to 3.5 mol% and less than or equal to 10 mol%, greater than or equal to 3.5 mol% and less than or equal to 9 mol%, greater than or equal to 3.5 mol% and less than or equal to 8 mol%, greater than or equal to 3.5 mol% and less than or equal to 7.5 mol%, greater than or equal to 3.5 mol% and less than or equal to 7 mol%, greater than or equal to 3.5 mol% and less than or equal to 6.5 mol%, greater than or equal to 3.5 mol% and less than or equal to 6 mol%, greater than or equal to 4 mol% and less than or equal to 15 mol%, greater than or equal to 4 mol% and less than or equal to 12 mol%, greater than or equal to 4 mol% and less than or equal to 10 mol%, greater than or equal to 4 mol% and less than or equal to 9 mol%, greater than or equal to 4 mol% and less than or equal to 8 mol%, greater than or equal to 4 mol% and less than or equal to 7.5 mol%, greater than or equal to 4 mol% and less than or equal to 7 mol%, greater than or equal to 4 mol% and less than or equal to 6.5 mol%, greater than or equal to 4 mol% and less than or equal to 6 mol%, greater than or equal to 4.5 mol% and less than or equal to 10 mol%, greater than or equal to 4.5 mol% and less than or equal to 9 mol%, greater than or equal to 4.5 mol% and less than or equal to 8 mol%, greater than or equal to 4.5 mol% and less than or equal to 7.5 mol%, greater than or equal to 4.5 mol% and less than or equal to 7 mol%, greater than or equal to 4.5 mol% and less than or equal to 6.5 mol%, greater than or equal to 5 mol% and less than or equal to 10 mol%, greater than or equal to 5 mol% and less than or equal to 9 mol%, greater than or equal to 5 mol% and less than or equal to 8 mol%, greater than or equal to 5 mol% and less than or equal to 7.5 mol%, greater than or equal to 5 mol% and less than or equal to 7 mol%, greater than or equal to 5 mol% and less than or equal to 6.5 mol%, greater than or equal to 5.5 mol% and less than or equal to 10 mol%, greater than or equal to 5.5 mol% and less than or equal to 9 mol%, greater than or equal to 5.5 mol% and less than or equal to 8 mol%, greater than or equal to 5.5 mol% and less than or equal to 7.5 mol%, greater than or equal to 5.5 mol% and less than or equal to 7 mol%, or even greater than or equal to 5.5 mol% and less than or equal to 6.5 mol%.

As described hereinabove, the glass compositions and the resultant colored glass articles further contains alkali oxides, such as $Li_2O$, $Na_2O$, and $K_2O$, to enable the ion-exchangeability of the colored glass articles.

$Li_2O$ aids in the ion-exchangeability of the colored glass article and also reduces the softening point of the glass composition, thereby increasing the formability of the colored glass articles. The addition of $Li_2O$ facilitates the exchange of both Na$^+$ and K$^+$ cations into the glass for strengthening the glass and also facilitates producing a relatively high surface compressive stress and relatively deep depth of compression, improving the mechanical characteristics of the resultant colored glass article. In addition, Li$_2$O decreases the melting point of the glass composition, which may improve retention of colorants in the glass, such as, for example and without limitation, Au. Without wishing to be bound by theory, it is hypothesized that similar behavior may occur with colorants other than Au. The concentration of Li$_2$O in the glass compositions and resultant colored glass articles should be sufficiently high (e.g., greater than or equal to 1 mol%) to reduce the melting point of the glass composition and achieve the desired maximum central tension (e.g., greater than or equal to 40 MPa) following ion exchange. However, if the amount of Li$_2$O is too high (e.g., greater than 20 mol%), the liquidus temperature may increase, thereby diminishing the manufacturability of the colored glass article.

In embodiments, the glass composition and the resultant colored glass article may comprise greater than or equal to 1 mol% and less than or equal to 20 mol% Li$_2$O or even greater than or equal to 1 mol% and less than or equal to 18 mol% Li$_2$O. In embodiments, the glass composition and the resultant colored glass article may comprise greater than or equal to 3 mol% and less than or equal to 18 mol% Li$_2$O, greater than or equal to 7 mol% and less than or equal to 18 mol% Li$_2$O, greater than or equal to 8.8 mol% and less than or equal to 14 mol% Li$_2$O, or even greater than or equal to 9 mol% and less than or equal to 13.5 mol% Li$_2$O. In embodiments, the concentration of Li$_2$O in the glass composition and the resultant colored glass article may be greater than or equal to 1 mol%, greater than or equal to 3 mol%, greater than or equal to 5 mol%, greater than or equal to 7 mol%, greater than or equal to 7.5 mol%, greater than or equal to 8 mol%, greater than or equal to 8.5 mol%, greater than or equal to 8.8 mol%, greater than or equal to 9 mol%, greater than or equal to 9.2 mol%, greater than or equal to 9.4 mol%, greater than or equal to 9.6 mol%, greater than or equal to 9.8 mol%, greater than or equal to 10 mol%, greater than or equal to 11 mol%, greater than or equal to 11.5 mol%, or even greater than or equal to 12 mol%. In embodiments, the concentration of Li$_2$O in the glass composition and the resultant colored glass article may be less than or equal to 20 mol%, less than or equal to 18 mol%, less than or equal to 17 mol%, less than or equal to 16 mol%, less than or equal to 15 mol%, less than or equal to 14 mol%, less than or equal to 13.5 mol%, less than or equal to 13 mol%, less than or equal to 12.5 mol%, less than or equal to 12 mol%, less than or equal to 11.5 mol%, or even less than or equal to 11 mol%. In embodiments, the concentration of Li$_2$O in the glass composition and the resultant colored glass article may be greater than or equal to 1 mol% and less than or equal to 20 mol%, greater than or equal to 1 mol% and less than or equal to 18 mol%, greater than or equal to 1 mol% and less than or equal to 16 mol%, greater than or equal to 1 mol% and less than or equal to 14 mol%, greater than or equal to 1 mol% and less than or equal to 12.5 mol%, greater than or equal to 1 mol% and less than or equal to 12 mol%, greater than or equal to 1 mol% and less than or equal 11.5 mol%, greater than or equal to 1 mol% and less than or equal to 11 mol%, greater than or equal to 3 mol% and less than or equal to 20 mol%, greater than or equal to 3 mol% and less than or equal to 18 mol%, greater than or equal to 3 mol% and less than or equal to 16 mol%, greater than or equal to 3 mol% and less than or equal to 14 mol%, greater than or equal to 3 mol% and less than or equal to 12.5 mol%, greater than or equal to 3 mol% and less than or equal to 12 mol%, greater than or equal to 3 mol% and less than or equal 11.5 mol%, greater than or equal to 3 mol% and less than or equal to 11 mol%, greater than or equal to 5 mol% and less than or equal to 20 mol%, greater than or equal to 5 mol% and less than or equal to 18 mol%, greater than or equal to 5 mol% and less than or equal to 16 mol%, greater than or equal to 5 mol% and less than or equal to 14 mol%, greater than or equal to 5 mol% and less than or equal to 12.5 mol%, greater than or equal to 5 mol% and less than or equal to 12 mol%, greater than or equal to 5 mol% and less than or equal 11.5 mol%, greater than or equal to 5 mol% and less than or equal to 11 mol%, greater than or equal to 7 mol% and less than or equal to 20 mol%, greater than or equal to 7 mol% and less than or equal to 18 mol%, greater than or equal to 7 mol% and less than or equal to 16 mol%, greater than or equal to 7 mol% and less than or equal to 15 mol%, greater than or equal to 7 mol% and less than or equal to 14 mol%, greater than or equal to 7 mol% and less than or equal to 13 mol%, greater than or equal to 7 mol% and less than or equal to 12.5 mol%, greater than or equal to 7 mol% and less than or equal to 12 mol%, greater than or equal to 7 mol% and less than or equal 11.5 mol%, greater than or equal to 7 mol% and less than or equal to 11 mol%, greater than or equal to 7.5 mol% and less than or equal to 20 mol%, greater than or equal to 7.5 mol% and less than or equal to 18 mol%, greater than or equal to 7.5 mol% and less than or equal to 16 mol%, greater than or equal to 7.5 mol% and less than or equal to 14 mol%, greater than or equal to 7.5 mol% and less than or equal to 12.5 mol%, greater than or equal to 7.5 mol% and less than or equal to 12 mol%, greater than or equal to 7.5 mol% and less than or equal 11.5 mol%, greater than or equal to 7.5 mol% and less than or equal to 11 mol%, greater than or equal to 8 mol% and less than or equal to 20 mol%, greater than or equal to 8 mol% and less than or equal to 18 mol%, greater than or equal to 8 mol% and less than or equal to 16 mol%, greater than or equal to 8 mol% and less than or equal to 15 mol%, greater than or equal to 8 mol% and less than or equal to 14 mol%, greater than or equal to 8 mol% and less than or equal to 13 mol%, greater than or equal to 8 mol% and less than or equal to 12.5 mol%, greater than or equal to 8 mol% and less than or equal to 12 mol%, greater than or equal to 8 mol% and less than or equal 11.5 mol%, greater than or equal to 8 mol% and less than or equal to 11 mol%, greater than or equal to 8.5 mol% and less than or equal to 20 mol%, greater than or equal to 8.5 mol% and less than or equal to 18 mol%, greater than or equal to 8.5 mol% and less than or equal to 16 mol%, greater than or equal to 8.5 mol% and less than or equal to 14 mol%, greater than or equal to 8.5 mol% and less than or equal to 12.5 mol%, greater than or equal to 8.5 mol% and less than or equal to 12 mol%, greater than or equal to 8.5 mol% and less than or equal 11.5 mol%, greater than or equal to 8.5 mol% and less than or equal to 11 mol%, greater than or equal to 9 mol% and less than or equal to 20 mol%, greater than or equal to 9 mol% and less than or equal to 18 mol%, greater than or equal to 9 mol% and less than or equal to 16 mol%, greater than or equal to 9 mol% and less than or equal to 15 mol%, greater than or equal to 9 mol% and less than or equal to 14 mol%, greater than or equal to 9 mol% and less than or equal to 13 mol%, greater than or equal to 9 mol% and less than or equal to 12.5 mol%, greater than or equal to 9 mol% and less than or equal to 12 mol%, greater than or equal to 9 mol% and less than or equal 11.5 mol%, or even greater than or equal to 9 mol% and less than or equal to 11 mol%. In embodiments, the concentration of $Li_2O$ in the glass composition and the resultant colored glass article may be greater than or equal to 8.8 mol% and less than or equal to 14 mol%, greater than or equal to 8.8 mol% and less than or equal to 13.5 mol%, greater than or equal to 8.8 mol% and less than or equal to 13 mol%, greater than or equal to 8.8 mol% and less than or equal to 12.5 mol%, greater than or equal to 8.8 mol% and less than or equal to 12 mol%, greater than or equal to 8.8 mol% and less than or equal to 11.5 mol%, greater than or equal to 9 mol% and less than or equal to 14 mol%, greater than or equal to 9 mol% and less than or equal to 13.5 mol%, greater than or equal to 9 mol% and less than or equal to 13 mol%, greater than or equal to 9 mol% and less than or equal to 12.5 mol%, greater than or equal to 9 mol% and less than or equal to 12 mol%, greater than or equal to 9 mol% and less than or equal to 11.5 mol%, greater than or equal to 9.2 mol% and less than or equal to 14 mol%, greater than or equal to 9.2 mol% and less than or equal to 13.5 mol%, greater than or equal to 9.2 mol% and less than or equal to 13 mol%, greater than or equal to 9.2 mol% and less than or equal to 12.5 mol%, greater than or equal to 9.2 mol% and less than or equal to 12 mol%, greater than or equal to 9.2 mol% and less than or equal to 11.5 mol%, greater than or equal to 9.4 mol% and less than or equal to 14 mol%, greater than or equal to 9.4 mol% and less than or equal to 13.5 mol%, greater than or equal to 9.4 mol% and less than or equal to 13 mol%, greater than or equal to 9.4 mol% and less than or equal to 12.5 mol%, greater than or equal to 9.4 mol% and less than or equal to 12 mol%, greater than or equal to 9.4 mol% and less than or equal to 11.5 mol%, greater than or equal to 9.6 mol% and less than or equal to 14 mol%, greater than or equal to 9.6 mol% and less than or equal to 13.5 mol%, greater than or equal to 9.6 mol% and less than or equal to 13 mol%, greater than or equal to 9.6 mol% and less than or equal to 12.5 mol%, greater than or equal to 9.6 mol% and less than or equal to 12 mol%, greater than or equal to 9.6 mol% and less than or equal to 11.5 mol%, greater than or equal to 9.8 mol% and less than or equal to 14 mol%, greater than or equal to 9.8 mol% and less than or equal to 13.5 mol%, greater than or equal to 9.8 mol% and less than or equal to 13 mol%, greater than or equal to 9.8 mol% and less than or equal to 12.5 mol%, greater than or equal to 9.8 mol% and less than or equal to 12 mol%, greater than or equal to 9.8 mol% and less than or equal to 11.5 mol%, greater than or equal to 10 mol% and less than or equal to 14 mol%, greater than or equal to 10 mol% and less than or equal to 13.5 mol%, greater than or equal to 10 mol% and less than or equal to 13 mol%, greater than or equal to 10 mol% and less than or equal to 12.5 mol%, greater than or equal to 10 mol% and less than or equal to 12 mol%, or even greater than or equal to 10 mol% and less than or equal to 11.5 mol%. In embodiments, the concentration of $Li_2O$ in the glass composition and the resultant colored glass article may be greater than or equal to 10 mol% and less than or equal to 17 mol%, greater than or equal to 10 mol% and less than or equal to 16 mol%, greater than or equal to 10 mol% and less than or equal to 15 mol%, greater than or equal to 10 mol% and less than or equal to 14 mol%, greater than or equal to 10 mol% and less than or equal to 13 mol%, greater than or equal to 10 mol% and less than or equal to 12 mol%, greater than or equal to 11 mol% and less than or equal to 17 mol%, greater than or equal to 11 mol% and less than or equal to 16 mol%, greater than or equal to 11 mol% and less than or equal to 15 mol%, greater than or equal to 11 mol% and less than or equal to 14 mol%, greater than or equal to 11 mol% and less than or equal to 13 mol%, greater than or equal to 11 mol% and less than or equal to 12 mol%, greater than or equal to 11.1 mol% and less than or equal to 17 mol%, greater than or equal to 11.1 mol% and less than or equal to 16 mol%, greater than or equal to 11.1 mol% and less than or equal to 15 mol%, greater than or equal to 11.1 mol% and less than or equal to 14 mol%, greater than or equal to 11.1 mol% and less than or equal to 13 mol%, greater than or equal to 11.1 mol% and less than or equal to 12 mol%, greater than or equal to 11.5 mol% and less than or equal to 17 mol%, greater than or equal to 11.5 mol% and less than or equal to 16 mol%, greater than or equal to 11.5 mol% and less than or equal to 15 mol%, greater than or equal to 11.5 mol% and less than or equal to 14 mol%, greater than or equal to 11.5 mol% and less than or equal to 13 mol%, greater than or equal to 11.5 mol% and less than or equal to 12 mol%, greater than or equal to 12 mol% and less than or equal to 17 mol%, greater than or equal to 12 mol% and less than or equal to 16 mol%, greater than or equal to 12 mol% and less than or equal to 15 mol%, greater than or equal to 12 mol% and less than or equal to 14 mol%, greater than or equal to 12 mol% and less than or equal to 13 mol%, greater than or equal to 13 mol% and less than or equal to 17 mol%, greater than or equal to 13 mol% and less than or equal to 16 mol%, greater than or equal to 13 mol% and less than or equal to 15 mol%, or greater than or equal to 13 mol% and less than or equal to 14 mol%.

$Na_2O$ improves diffusivity of alkali ions in the glass and thereby reduces ion-exchange time and helps achieve the desired surface compressive stress (e.g., greater than or equal to 300 MPa). The addition of $Na_2O$ also facilitates the exchange of $K^+$ cations into the glass for strengthening and improving the mechanical characteristics of the resultant colored glass article. $Na_2O$ also improves the formability of the colored glass article. In addition, $Na_2O$ decreases the melting point of the glass composition, which may improve retention of certain colorants in the glass, such as, for example, Au. Without wishing to be bound by theory, it is hypothesized that similar behavior may occur with colorants other than Au. However, if too much $Na_2O$ is added to the glass composition, the melting point may be too low. In embodiments, the concentration of $Li_2O$ present in the glass composition and the resultant colored glass article may be greater than the

concentration of $Na_2O$ present in the glass composition and the resultant colored glass article.

In embodiments, the glass composition and the resultant colored glass article may comprise greater than 0 mol% or greater than or equal to 0.01 mol% and less than or equal to 15 mol% $Na_2O$, greater than or equal to 0.5 mol% and less than or equal to 15 mol% $Na_2O$ or even greater than or equal to 1 mol% and less than or equal to 15 mol% $Na_2O$. In embodiments, the glass composition and the resultant colored glass article may comprise greater than or equal to 1 mol% and less than or equal to 12 mol% $Na_2O$ or even greater than or equal to 2 mol% and less than or equal to 10 mol% $Na_2O$. In embodiments, the glass composition and the resultant colored glass article may comprise greater than or equal to 0.01 mol% and less than or equal to 4 mol% $Na_2O$. In embodiments, the glass composition and the resultant colored glass article may comprise greater than or equal to 1.5 mol% and less than or equal to 8 mol% $Na_2O$ or even greater than or equal to 2 mol% and less than or equal to 7.5 mol% $Na_2O$. In embodiments, the concentration of $Na_2O$ in the glass composition and the resultant colored glass article may be greater than 0 mol%, greater than or equal to 0.01 mol%, greater than or equal to 0.5 mol%, greater than or equal to 1 mol%, greater than or equal to 1.5 mol%, greater than or equal to 2 mol%, greater than or equal to 2.5 mol%, greater than or equal to 3 mol%, greater than or equal to 3.5 mol%, greater than or equal to 4 mol%, or even greater than or equal to 4.5 mol%. In embodiments, the concentration of $Na_2O$ in the glass composition and the resultant colored glass article may be less than or equal to 15 mol%, less than or equal to 12 mol%, less than or equal to 10 mol%, less than or equal to 9 mol%, less than or equal to 8.5 mol%, less than or equal to 8 mol%, less than or equal to 7.5 mol%, less than or equal to less than or equal to 7 mol%, less than or equal to 6.5 mol%, less than or equal to 6 mol%, less than or equal to less than or equal to 5.5 mol%, less than or equal to 5 mol%, less than or equal to 4.5 mol%, or even less than or equal to 4 mol%. In embodiments, the concentration of $Na_2O$ in the glass composition and the resultant colored glass article may be greater than 0 mol% and less than or equal to 15 mol%, greater than 0 mol% and less than or equal to 12 mol%, greater than 0 mol% and less than or equal to 10 mol%, greater than 0 mol% and less than or equal to 8 mol%, greater than 0 mol% and less than or equal to 6 mol%, greater than 0 mol% and less than or equal to 5.5 mol%, greater than 0 mol% and less than or equal to 5 mol%, greater than 0 mol% and less than or equal to 4.5 mol%, greater than 0 mol% and less than or equal to 4 mol%, greater than or equal to 0.01 mol% and less than or equal to 15 mol%, greater than or equal to 0.01 mol% and less than or equal to 12 mol%, greater than or equal to 0.01 mol% and less than or equal to 10 mol%, greater than or equal to 0.01 mol% and less than or equal to 8 mol%, greater than or equal to 0.01 mol% and less than or equal to 6 mol%, greater than or equal to 0.01 mol% and less than or equal to 5.5 mol%, greater than or equal to 0.01 mol% and less than or equal to 5 mol%, greater than or equal to 0.01 mol% and less than or equal to 4.5 mol%, greater than or equal to 0.01 mol% and less than or equal to 4 mol%, greater than or equal to 0.5 mol% and less than or equal to 15 mol%, greater than or equal to 0.5 mol% and less than or equal to 12 mol%, greater than or equal to 0.5 mol% and less than or equal to 10 mol%, greater than or equal to 0.5 mol% and less than or equal to 8 mol%, greater than or equal to 0.5 mol% and less than or equal to 6 mol%, greater than or equal to 1 mol% and less than or equal to 15 mol%, greater than or equal to 1 mol% and less than or equal to 12 mol%, greater than or equal to 1 and less than or equal to 10 mol%, greater than or equal to 1 and less than or equal to 9 mol%, greater than or equal to 1 mol% and less than or equal to 8 mol%, greater than or equal to 1 mol% and less than or equal to 7.5 mol%, greater than or equal to 1 mol% and less than or equal to 7 mol%, greater than or equal to 1 mol% and less than or equal to 6.5 mol%, greater than or equal to 1 mol% and less than or equal to 6 mol%, greater than or equal to 1 mol% and less than or equal to 5.5 mol%, greater than or equal to 1.5 mol% and less than or equal to 15 mol%, greater than or equal to 1.5 mol% and less than or equal to 12 mol%, greater than or equal to 1.5 and less than or equal to 10 mol%, greater than or equal to 1.5 and less than or equal to 9 mol%, greater than or equal to 1.5 mol% and less than or equal to 8 mol%, greater than or equal to 1.5 mol% and less than or equal to 7.5 mol%, greater than or equal to 1.5 mol% and less than or equal to 7 mol%, greater than or equal to 1.5 mol% and less than or equal to 6.5 mol%, greater than or equal to 1.5 mol% and less than or equal to 6 mol%, greater than or equal to 1.5 mol% and less than or equal to 5.5 mol%, greater than or equal to 2 mol% and less than or equal to 15 mol%, greater than or equal to 2 mol% and less than or equal to 12 mol%, greater than or equal to 2 and less than or equal to 10 mol%, greater than or equal to 2 and less than or equal to 9 mol%, greater than or equal to 2 mol% and less than or equal to 8 mol%, greater than or equal to 2 mol% and less than or equal to 7.5 mol%, greater than or equal to 2 mol% and less than or equal to 7 mol%, greater than or equal to 2 mol% and less than or equal to 6.5 mol%, greater than or equal to 2 mol% and less than or equal to 6 mol%, greater than or equal to 2 mol% and less than or equal to 5.5 mol%, greater than or equal to 2.5 mol% and less than or equal to 15 mol%, greater than or equal to 2.5 mol% and less than or equal to 12 mol%, greater than or equal to 2.5 and less than or equal to 10 mol%, greater than or equal to 2.5 and less than or equal to 9 mol%, greater than or equal to 2.5 mol% and less than or equal to 8 mol%, greater than or equal to 2.5 mol% and less than or equal to 7.5 mol%, greater than or equal to 2.5 mol% and less than or equal to 7 mol%, greater than or equal to 2.5 mol% and less than or equal to 6.5 mol%, greater than or equal to 2.5 mol% and less than or equal to 6 mol%, greater than or equal to 2.5 mol% and less than or equal to 5.5 mol%, greater than or equal to 3 mol% and less than or equal to 15 mol%, greater than or equal to 3 mol% and less than or equal to 12 mol%, greater than or equal to 3 and less than or equal to 10 mol%, greater than or equal to 3 and less than or equal to 9 mol%, greater than or equal to 3 and less than or equal to 8.5 mol%, greater than or equal to 3 mol% and less than or equal to 8 mol%, greater than or equal to 3 mol% and less than or equal to 7.5 mol%, greater than or equal to 3 mol% and less than or equal to 7 mol%, greater than or equal to 3 mol% and less than or equal to 6.5 mol%, greater than or equal to 3 mol% and less than or equal to 6 mol%, greater than or equal to 3 mol% and less than or equal to 5.5 mol%, greater than or equal to 3.5 mol% and less than or equal to 15 mol%, greater than or equal to 3.5 mol% and less than or equal to 12 mol%, greater than or equal to 3.5 and less than or equal to 10 mol%, greater than or equal to 3.5 and less than or equal to 9 mol%, greater than or equal to 3.5 mol% and less than or equal to 8 mol%, greater than or equal to 3.5 mol% and less than or equal to 7.5 mol%, greater than or equal to 3.5 mol% and less than or equal to 7 mol%, greater than or equal to 3.5 mol% and less than or equal to 6.5 mol%, greater than or equal to 3.5 mol% and less than or equal to 6 mol%, greater than or equal to 3.5 mol% and less than or equal to 5.5 mol%, greater than or equal to 4 mol% and less than or equal to 15 mol%, greater than or equal to 4 mol% and less than or equal to 12 mol%, greater than or equal to 4 and less than or equal to 10 mol%, greater than or equal to 4 and less than or equal to 9 mol%, greater than or equal to 4 mol% and less than or equal to 8 mol%, greater than or equal to 4 mol% and less than or equal to 7.5 mol%, greater than or equal to 4 mol% and less than or equal to 7 mol%, greater than or equal to 4 mol% and less than or equal to 6.5 mol%, greater than or equal to 4 mol% and less than or equal to 6 mol%, greater than or equal to 4 mol% and less than or equal to 5.5 mol%, greater than or equal to 4.5 mol% and less than or equal to 15 mol%, greater than or equal to 4.5 mol% and less than or equal to 12 mol%, greater than or equal to 4.5 and less than or equal to 10 mol%, greater than or equal to 4.5 mol% and less than or equal to 8 mol%, greater than or equal to 4.5 mol% and less than or equal to 7.5 mol%, greater than or equal to 4.5 mol% and less than or equal to 7 mol%, greater than or equal to 4.5 mol% and less than or equal to 6.5 mol%, greater than or equal to 4.5 mol% and less than or equal to 6 mol%, or even greater than or equal to 4.5 mol% and less than or equal to 5.5 mol%.

The concentration of $Li_2O+Na_2O$ in the glass composition and the resultant colored glass article may determine the ability of the glass composition and the colored glass article to be strengthened through an ion exchange process. Generally, the ion exchange process strengthens the glass by replacing alkali ions in the glass with larger alkali ions. For example, a glass containing $Li_2O$ and/or $Na_2O$ may be strengthened by ion exchange such that potassium ions ($K^+$) replace the $Li^+$ or $Na^+$ ions in the glass. In this manner, the ability of the colored glass article to be strengthened by an ion exchange process relates directly to the content of $Li_2O+Na_2O$, and if the $Li_2O+Na_2O$ content is too low (e.g., less than about 8 mol%) the resultant colored glass article may not be able to be sufficiently strengthened by ion exchange processes.

In embodiments, the concentration of $Li_2O+Na_2O$ in the glass composition and the resultant colored glass article may be greater than or equal to than or equal to 8 mol%, such as greater than or equal to 10 mol% and less than or equal to than or equal to 19 mol%. In embodiments, the concentration of $Li_2O+Na_2O$ in the glass composition and the resultant colored glass article may be greater than or equal to than or equal to 9 mol%, greater than or equal to 10 mol%, greater than or equal to 12 mol%, greater than or equal to 14 mol%, greater than or equal to 16 mol%, or more. In embodiments, the concentration of $Li_2O+Na_2O$ in the glass composition and the colored glass article is less than or equal to than or equal to 20 mol%, less than or equal to than or equal to 18 mol%, less than or equal to than or equal to 16 mol%, less than or equal to than or equal to 14 mol%, less than or equal to than or equal to 12 mol%, less than or equal to than or equal to 10 mol%, or less. In embodiments, the concentration of $Li_2O+Na_2O$ in the glass composition and the colored glass article may be greater than or equal to 8 mol% and less than or equal to than or equal to 20 mol%, greater than or equal to 9 mol% and less than or equal to than or equal to 19 mol%, greater than or equal to 10 mol% and less than or equal to than or equal to 18 mol%, greater than or equal to 11 mol% and less than or equal to than or equal to 17 mol%, greater than or equal to 12 mol% and less than or equal to than or equal to 16 mol%, greater than or equal to 13 mol% and less than or equal to than or equal to 15 mol%, or greater than or equal to 8 mol% and less than or equal to than or equal to 14 mol%.

$K_2O$, when included, promotes ion-exchange and may increase the depth of compression and decrease the melting point to improve the formability of the colored glass article. However, adding too much $K_2O$ may cause the surface compressive stress and melting point to be too low. Accordingly, in embodiments, the amount of $K_2O$ added to the glass composition may be limited.

In embodiments, the glass composition and the resultant colored glass article may optionally comprise greater than or equal to 0 mol% and less than or equal to 3 mol% $K_2O$, greater than or equal to 0 mol% and less than or equal to 1 mol% $K_2O$, greater than or equal to 0.01 mol% and less than or equal to 1 mol% $K_2O$ or even greater than or equal to 0.1 mol% and less than or equal to 1 mol% $K_2O$. In embodiments, the glass composition and the resultant colored glass article may optionally comprise greater than 0.1 mol% and less than or equal to 0.5 mol% $K_2O$. In embodiments, the concentration of $K_2O$ in the glass composition and the resultant colored glass article may be greater than or equal to 0 mol%, greater than or equal to 0.01 mol%, greater than or equal to 0.1 mol%, greater than or equal to 0.2 mol%, greater than or equal to 0.25 mol%, greater than or equal to 0.4 mol%, or even greater than or equal to 0.5 mol%. In embodiments, the concentration of $K_2O$ in the glass composition and the resultant colored glass article may be less than or equal to 3 mol%, less than or equal to 2.5 mol%, less than or equal to 2 mol%, less than or equal to 1.5 mol%, less than or equal to 1 mol%, less than or equal to 0.75 mol%, less than or equal to 0.5 mol%, or even less than or equal to 0.25 mol%. In embodiments, the concentration of $K_2O$ in the glass composition and the resultant colored glass article may be greater than or equal to 0 mol% and less than or equal to 3 mol%, greater than or equal to 0 mol% and less than or equal to 2.5 mol%, greater than or equal to 0 mol% and less than or equal to 2 mol%, greater than or equal to 0 mol% and less than or equal to 1.5 mol%, greater than or equal to 0 mol% and less than or equal to 1 mol%, greater than or equal to 0 mol% and less than or equal to 0.75 mol%, greater than or equal to 0 mol% and less than or equal to 0.7 mol%, greater than or equal to 0 mol% and less than or equal to 0.5 mol%, greater than or equal to 0 mol% and less than or equal to 0.25 mol%, greater than or equal to 0.01 mol% and less than or equal to 3 mol%, greater than or equal to 0.01 mol% and less than or equal to 2.5 mol%, greater than or equal to 0.01 mol% and less than or equal to 2 mol%, greater than or equal to 0.01 mol% and less than or equal to 1.5 mol%, greater than or equal to 0.01 mol% and less than or equal to 1 mol%, greater than or equal to 0.01 mol% and less than or equal to 0.75 mol%, greater than or equal to 0.01 mol% and less than or equal to 0.7 mol%, greater than or equal to 0.01 mol% and less than or equal to 0.5 mol%, greater than or equal to 0.1 mol% and less than or equal to 3 mol%, greater than or equal to 0.1 mol% and less than or equal to 2.5 mol%, greater than or equal to 0.1 mol% and less than or equal to 2 mol%, greater than or equal to 0.1 mol% and less than or equal to 1.5 mol%, greater than or equal to 0.1 mol% and less than or equal to 1 mol%, greater than or equal to 0.1 mol% and less than or equal to 0.75 mol%, greater than or equal to 0.1 mol% and less than or equal to 0.7 mol%, greater than or equal to 0.1 mol% and less than or equal to 0.5 mol%, greater than or equal to 0.2 mol% and less than or equal to 3 mol%, greater than or equal to 0.2 mol% and less than or equal to 2.5 mol%, greater than or equal to 0.2 mol% and less than or equal to 2 mol%, greater than or equal to 0.2 mol% and less than or equal to 1.5 mol%, greater than or equal to 0.2 mol% and less than or equal to 1 mol%, greater than or equal to 0.2 mol% and less than or equal to 0.75 mol%, greater than or equal to 0.2 mol% and less than or equal to 0.7 mol%, greater than or equal to 0.2 mol% and less than or equal to 0.5 mol%, greater than or equal to 0.25 mol% and less than or equal to 3 mol%, greater than or equal to 0.25 mol% and less than or equal to 2.5 mol%, greater than or equal to 0.25 mol% and less than or equal to 2 mol%, greater than or equal to 0.25 mol% and less than or equal to 1.5 mol%, greater than or equal to 0.25 mol% and less than or equal to 1 mol%, greater than or equal to 0.25 mol% and less than or equal to 0.75 mol%, greater than or equal to 0.25 mol% and less than or equal to 0.7 mol%, greater than or equal to 0.25 mol% and less than or equal to 0.5 mol%, greater than or equal to 0.3 mol% and less than or equal to 3 mol%, greater than or equal to 0.3 mol% and less than or equal to 2.5 mol%, greater than or equal to 0.3 mol% and less than or equal to 2 mol%, greater than or equal to 0.3 mol% and less than or equal to 1.5 mol%, greater than or equal to 0.3 mol% and less than or equal to 1 mol%, greater than or equal to 0.3 mol% and less than or equal to 0.75 mol%, greater than or equal to 0.3 mol% and less than or equal to 0.7 mol%, greater than or equal to 0.3 mol% and less than or equal to 0.5 mol%, greater than or equal to 0.4 mol% and less than or equal to 3 mol%, greater than or equal to 0.4 mol% and less than or equal to 2.5 mol%, greater than or equal to 0.4 mol% and less than or equal to 2 mol%, greater than or equal to 0.4 mol% and less than or equal to 1.5 mol%, greater than or equal to 0.4 mol% and less than or equal to 1 mol%, greater than or equal to 0.4 mol% and less than or equal to 0.75 mol%, greater than or equal to 0.4 mol% and less than or equal to 0.7 mol%, or even greater than or equal to 0.4 mol% and less than or equal to 0.5 mol%, or greater than or equal to 0.5 mol% and less than or equal to 1 mol%. In embodiments, the glass composition and the resultant colored glass article may be substantially free or free of $K_2O$.

In embodiments, the concentration of $K_2O$ in the glass composition and the resultant colored glass article may be greater than or equal to 0 mol%, greater than or equal to 0.01 mol%, greater than or equal to 0.1 mol%, greater than or equal to 0.2 mol%, greater than or equal to 0.25 mol%, greater than or equal to 0.4 mol%, or even greater than or equal to 0.5 mol%. In embodiments, the concentration of $K_2O$ in the glass composition and the resultant colored glass article may be less than or equal to 5 mol%, less than or equal to 4 mol%, less than or equal to 3 mol%, less than or equal to 2 mol%, or even less than or equal to 1 mol%. In embodiments, the concentration of $K_2O$ in the glass composition and the resultant colored glass article may be greater than or equal to 0 mol% and less than or equal to 5 mol%, greater than or equal to 0 mol% and less than or equal to 4 mol%, greater than or equal to 0 mol% and less than or equal to 3 mol%, greater than or equal to 0 mol% and less than or equal to 2 mol%, greater than or equal to 0 mol% and less than or equal to 1 mol%, greater than or equal to 0.01 mol% and less than or equal to 5 mol%, greater than or equal to 0.01 mol% and less than or equal to 4 mol%, greater than or equal to 0.01 mol% and less than or equal to 3 mol%, greater than or equal to 0.01 mol% and less than or equal to 2 mol%, greater than or equal to 0.01 mol% and less than or equal to 1 mol%, greater than or equal to 0.1 mol% and less than or equal to 5 mol%, greater than or equal to 0.1 mol% and less than or equal to 4 mol%, greater than or equal to 0.1 mol% and less than or equal to 3 mol%, greater than or equal to 0.1 mol% and less than or equal to 2 mol%, greater than or equal to 0.1 mol% and less than or equal to 1 mol%, greater than or equal to 0.2 mol% and less than or equal to 5 mol%, greater than or equal to 0.2 mol% and less than or equal to 4 mol%, greater than or equal to 0.2 mol% and less than or equal to 3 mol%, greater than or equal to 0.2 mol% and less than or equal to 2 mol%, greater than or equal to 0.2 mol% and less than or equal to 1 mol%, greater than or equal to 0.25 mol% and less than or equal to 5 mol%, greater than or equal to 0.25 mol% and less than or equal to 4 mol%, greater than or equal to 0.25 mol% and less than or equal to 3 mol%, greater than or equal to 0.25 mol% and less than or equal to 2 mol%, greater than or equal to 0.25 mol% and less than or equal to 1 mol%, greater than or equal to 0.3 mol% and less than or equal to 5 mol%, greater than or equal to 0.3 mol% and less than or equal to 5 mol%, greater than or equal to 0.3 mol% and less than or equal to 3 mol%, greater than or equal to 0.3 mol% and less than or equal to 2 mol%, greater than or equal to 0.3 mol% and less than or equal to 1 mol%, greater than or equal to 0.4 mol% and less than or equal to 5 mol%, greater than or equal to 0.4 mol% and less than or equal to 4 mol%, greater than or equal to 0.4 mol% and less than or equal to 3 mol%, greater than or equal to 0.4 mol% and less than or equal to 2 mol%, greater than or equal to 0.4 mol% and less than or equal to 1 mol%, greater than or equal to equal to 0.5 mol% and less than or equal to 5 mol%, greater than or equal to equal to 0.5 mol% and less than or equal to 4 mol%, greater than or equal to 0.5 mol% and less than or equal to 3 mol%, greater than or equal to equal to 0.5 mol% and less than or equal to 2 mol%, or even greater than or equal to equal to 0.5 mol% and less than or equal to 1 mol%.

$R_2O$, as used herein, is the sum (in mol%) of $Li_2O$, $Na_2O$, and $K_2O$ present in the glass composition and the resultant colored glass article (i.e., $R_2O = Li_2O$ (mol%) + $Na_2O$ (mol%) + $K_2O$ (mol%). Like $B_2O_3$, the alkali oxides aid in decreasing the softening point and molding temperature of the glass composition, thereby offsetting the increase in the softening point and molding temperature of the glass composition due to higher amounts of $SiO_2$ in the glass composition, for example. The softening point and molding temperature may be further reduced by including combinations of alkali oxides (e.g., two or more alkali oxides) in the glass composition, a phenomenon referred to as the "mixed alkali effect." However, it has been found that if the amount of alkali oxide is too high, the average coefficient of thermal expansion of the glass composition increases to greater than $100 \times 10^{-7}/°C$, which may be undesirable.

The concentration of $R_2O$ in the glass composition and the resultant colored glass article is greater than or equal to 1 mol% and less than or equal to 35 mol%. In embodiments, the concentration of $R_2O$ in the glass composition and the resultant colored glass article may be greater than or equal to 6 mol% and less than or equal to 25 mol% or even greater than or equal to 8 mol% and less than or equal to 23 mol%. In embodiments, the concentration of $R_2O$ in the glass composition and the resultant colored glass article may be greater than or equal to 2 mol%, greater than or equal to 4 mol%, greater than 6 mol%, greater than or equal to 8 mol%, greater than or equal to 10 mol%, greater than or equal to 10.3 mol%, greater than or equal to 11 mol%, greater than or equal to 12 mol%, greater than or equal to 13 mol%, greater than or equal to 12 mol%, or even greater than or equal to 14 mol%. In embodiments, the concentration of $R_2O$ in the glass composition and the resultant colored glass article may be less than or equal to 35 mol%, less than or equal to 30 mol%, less than or equal to 25 mol%, less than or equal to 23 mol%, less than or equal to 22 mol%, less than or equal to 21 mol%, less than or equal to 20 mol%, less than or equal to 19 mol%, less than or equal to 18 mol%, less than or equal to 17 mol%, or even less than or equal to 16 mol%. In embodiments, the concentration of $R_2O$ in the glass composition and the resultant colored glass article may be greater than or equal to 1 mol% and less than or equal to 35 mol%, greater than or equal to 1 mol% and less than or equal to 30 mol%, greater than or equal to 1 mol% and less than or equal to 25 mol%, greater than or equal to 1 mol% and less than or equal to 23 mol%, greater than or equal to 1 mol% and less than or equal to 22 mol%, greater than or equal to 1 mol% and less than or equal to 21 mol%, greater than or equal to 1 mol% and less than or equal to 20 mol%, greater than or equal to 1 mol% and less than or equal to 19 mol%, greater than or equal to 1 mol% and less than or equal to 18 mol%, greater than or equal to 1 mol% and less than or equal to 17 mol%, greater than or equal to 1 mol% and less than or equal to 16 mol%, greater than or equal to 2 mol% and less than or equal to 35 mol%, greater than or equal to 2 mol% and less than or equal to 30 mol%, greater than or equal to 2 mol% and less than or equal to 25 mol%, greater than or equal to 2 mol% and less than or equal to 23 mol%, greater than or equal to 2 mol% and less than or equal to 22 mol%, greater than or equal to 2 mol% and less than or equal to 21 mol%, greater than or equal to 2 mol% and less than or equal to 20 mol%, greater than or equal to 2 mol% and less than or equal to 19 mol%, greater than or equal to 2 mol% and less than or equal to 18 mol%, greater than or equal to 2 mol% and less than or equal to 17 mol%, greater than or equal to 2 mol% and less than or equal to 16 mol%, greater than or equal to 4 mol% and less than or equal to 35 mol%, greater than or equal to 4 mol% and less than or equal to 30 mol%, greater than or equal to 4 mol% and less than or equal to 25 mol%, greater than or equal to 4 mol% and less than or equal to 23 mol%, greater than or equal to 4 mol% and less than or equal to 22 mol%, greater than or equal to 4 mol% and less than or equal to 21 mol%, greater than or equal to 4 mol% and less than or equal to 20 mol%, greater than or equal to 4 mol% and less than or equal to 19 mol%, greater than or equal to 4 mol% and less than or equal to 18 mol%, greater than or equal to 4 mol% and less than or equal to 17 mol%, greater than or equal to 4 mol% and less than or equal to 16 mol%, greater than or equal to 6 mol% and less than or equal to 35 mol%, greater than or equal to 6 mol% and less than or equal to 30 mol%, greater than or equal to 6 mol% and less than or equal to 25 mol%, greater than or equal to 6 mol% and less than or equal to 23 mol%, greater than or equal to 6 mol% and less than or equal to 22 mol%, greater than or equal to 6 mol% and less than or equal to 21 mol%, greater than or equal to 6 mol% and less than or equal to 20 mol%, greater than or equal to 6 mol% and less than or equal to 19 mol%, greater than or equal to 6 mol% and less than or equal to 18 mol%, greater than or equal to 6 mol% and less than or equal to 17 mol%, greater than or equal to 6 mol% and less than or equal to 16 mol%, greater than or equal to 8 mol% and less than or equal to 35 mol%, greater than or equal to 8 mol% and less than or equal to 30 mol%, greater than or equal to 8 mol% and less than or equal to 25 mol%, greater than or equal to 8 mol% and less than or equal to 23 mol%, greater than or equal to 8 mol% and less than or equal to 22 mol%, greater than or equal to 8 mol% and less than or equal to 21 mol%, greater than or equal to 8 mol% and less than or equal to 20 mol%, greater than or equal to 8 mol% and less than or equal to 19 mol%, greater than or equal to 8 mol% and less than or equal to 18 mol%, greater than or equal to 8 mol% and less than or equal to 17 mol%, greater than or equal to 8 mol% and less than or equal to 16 mol%, greater than or equal to 10 mol% and less than or equal to 35 mol%, greater than or equal to 10 mol% and less than or equal to 30 mol%, greater than or equal to 10 mol% and less than or equal to 25 mol%, greater than or equal to 10 mol% and less than or equal to 23 mol%, greater than or equal to 10 mol% and less than or equal to 22 mol%, greater than or equal to 10 mol% and less than or equal to 21 mol%, greater than or equal to 10 mol% and less than or equal to 20 mol%, greater than or equal to 10 mol% and less than or equal to 19 mol%, greater than or equal to 10 mol% and less than or equal to 18 mol%, greater than or equal to 10 mol% and less than or equal to 17 mol%, greater than or equal to 10 mol% and less than or equal to 16 mol%, greater than or equal to 11 mol% and less than or equal to 35 mol%, greater than or equal to 11 mol% and less than or equal to 30 mol%, greater than or equal to 11 mol% and less than or equal to 25 mol%, greater than or equal to 11 mol% and less than or equal to 23 mol%, greater than or equal to 11 mol% and less than or equal to 22 mol%, greater than or equal to 11 mol% and less than or equal to 21 mol%, greater than or equal to 11 mol% and less than or equal to 20 mol%, greater than or equal to 11 mol% and less than or equal to 19 mol%, greater than or equal to 11 mol% and less than or equal to 18 mol%, greater than or equal to 11 mol% and less than or equal to 17 mol%, greater than or equal to 11 mol% and less than or equal to 16 mol%, greater than or equal to 12 mol% and less than or equal to 35 mol%, greater than or equal to 12 mol% and less than or equal to 30 mol%, greater than or equal to 12 mol% and less than or equal to 25 mol%, greater than or equal to 12 mol% and less than or equal to 23 mol%, greater than or equal to 12 mol% and less than or equal to 22 mol%, greater than or equal to 12 mol% and less than or equal to 21 mol%, greater than or equal to 12 mol% and less than or equal to 20 mol%, greater than or equal to 12 mol% and less than or equal to 19 mol%, greater than or equal to 12 mol% and less than or equal to 18 mol%, greater than or equal to 12 mol% and less than or equal to 17 mol%, greater than or equal to 12 mol% and less than or equal to 16 mol%, greater than or equal to 13 mol% and less than or equal to 35 mol%, greater than or equal to 13 mol% and less than or equal to 30 mol%, greater than or equal to 13 mol% and less than or equal to 25 mol%, greater than or equal to 13 mol% and less than or equal to 23 mol%, greater than or equal to 13 mol% and less than or equal to 22 mol%, greater than or equal to 13 mol% and less than or equal to 21 mol%, greater than or equal to 13 mol% and less than or equal to 20 mol%, greater than or equal to 13 mol% and less than or equal to 19 mol%, greater than or equal to 13 mol% and less than or equal to 18 mol%, greater than or equal to 13 mol% and less than or equal to 17 mol%, greater than or equal to 13 mol% and less than or equal to 16 mol%, greater than or equal to 14 mol% and less than or equal to 35 mol%, greater than or equal to 14 mol% and less than or equal to 30 mol%, greater than or equal to 14 mol% and less than or equal to 25 mol%, greater than or equal to 14 mol% and less than or equal to 23 mol%, greater than or equal to 14 mol% and less than or equal to 22 mol%, greater than or equal to 14 mol% and less than or equal to 21 mol%, greater than or equal to 14 mol% and less than or equal to 20 mol%, greater than or equal to 14 mol% and less than or equal to 19 mol%, greater than or equal to 14 mol% and less than or equal to 18 mol%, greater than or equal to 14 mol% and less than or equal to 17 mol%, or even greater than or equal to 14 mol% and less than or equal to 16 mol%.

In embodiments, the difference between $R_2O$ and $Al_2O_3$ (i.e. $R_2O$ (mol%) - $Al_2O_3$ (mol%)) in the glass composition may be adjusted to produce a desired observable color (e.g., pink, purple, red, orange, or blue). The analyzed $R_2O$ - $Al_2O_3$ of the resultant colored glass article, along with the added colorant package, may correlate with the observable color of the colored glass article after heat treatment, as discussed herein. In embodiments, $R_2O$ - $Al_2O_3$ in the glass composition and the resultant colored glass article may be greater than or equal to -5 mol% and less than or equal to 7 mol% or even greater than or equal to -3 mol% and less than or equal to 2 mol%. In embodiments, $R_2O$ - $Al_2O_3$ in the glass composition and the resultant colored glass article may be greater than or equal to -3 mol% and less than or equal to 6 mol%. In embodiments, $R_2O$ - $Al_2O_3$ in the glass composition and the resultant colored glass article may be greater than or equal to -1 mol% and less than or equal to 5 mol%. In embodiments, $R_2O$ - $Al_2O_3$ in the glass composition and the resultant colored glass article may be greater than or equal to -5 mol% and less than or equal to 1.5 mol%. In embodiments, $R_2O$ - $Al_2O_3$ in the glass composition and the resultant colored glass article may be greater than or equal to -3 mol% and less than or equal to 1.5 mol%. In embodiments, $R_2O$ - $Al_2O_3$ in the glass composition and the resultant colored glass article may be greater than or equal to 1.5 mol% and less than or equal to 7 mol%. In embodiments, $R_2O$ - $Al_2O_3$ in the glass composition and the resultant colored glass article may be greater than or equal to 1.5 mol% and less than or equal to 5 mol%. In embodiments, $R_2O$ - $Al_2O_3$ in the glass composition and the resultant colored glass article may be greater than or equal to -5 mol%, greater than or equal to -4 mol%, greater than or equal to -3 mol%, greater than or equal to -2.5 mol%, greater than or equal to - 2 mol%, greater than or equal to -1.5 mol%, greater than or equal to 0.2 mol%, greater than or equal to 0.5 mol%, greater than or equal to 1 mol%, greater than or equal to 1.5 mol%, or even greater than or equal to 2 mol%. In embodiments, $R_2O$ - $Al_2O_3$ in the glass composition and the resultant colored glass article may be less than or equal to 7 mol%, less than or equal to 6.5 mol%, less than or equal to 6 mol%, less than or equal to 5.5 mol%, less than or equal to 5 mol%, less than or equal to 4.5 mol%, less than or equal to 4 mol%, less than or equal to 3.5 mol%, less than or equal to 3 mol%, less than or equal to 2.5 mol%, less than or equal to 2 mol%, less than or equal to 1.5 mol%, less than or equal to 1 mol%, or even less than or equal to 0.5 mol%. In embodiments, $R_2O$ - $Al_2O_3$ in the glass composition and the resultant colored glass article may be greater than or equal to -5 mol% and less than or equal to 7 mol%, greater than or equal to -5 mol% and less than or equal to 5 mol%, greater than or equal to -5 mol% and less than or equal to 3 mol%, greater than or equal to -5 mol% and less than or equal to 1.5 mol%, greater than or equal to -3 mol% and less than or equal to 7 mol%, greater than or equal to -3 mol% and less than or equal to 5 mol%, greater than or equal to -3 mol% and less than or equal to 3 mol%, greater than or equal to -3 mol% and less than or equal to 1.5 mol%, greater than or equal to -1 mol% and less than or equal to 7 mol%, greater than or equal to -1 mol% and less than or equal to 5 mol%, greater than or equal to -1 mol% and less than or equal to 3 mol%, greater than or equal to -1 mol% and less than or equal to 1.5 mol%, greater than or equal to 0 mol% and less than or equal to 7 mol%, greater than or equal to 0 mol% and less than or equal to 5 mol%, greater than or equal to 0 mol% and less than or equal to 3 mol%, greater than or equal to 0 mol% and less than or equal to 1.5 mol%, greater than or equal to 1.5 mol% and less than or equal to 7 mol%, greater than or equal to 1.5 mol% and less than or equal to 5 mol%, or even greater than or equal to 1.5 mol% and less than or equal to 3 mol%, or any and all sub-ranges formed from any of these endpoints. In embodiments, $R_2O - Al_2O_3$ in the glass composition and the resultant colored glass article may be greater than or equal to -3 mol% and less than or equal to 2 mol%, greater than or equal to -3 mol% and less than or equal to 1.5 mol%, greater than or equal to -3 mol% and less than or equal to 1 mol%, greater than or equal to -3 mol% and less than or equal to 0.5 mol%, greater than or equal to -2.5 mol% and less than or equal to 2 mol%, greater than or equal to -2.5 mol% and less than or equal to 1.5 mol%, greater than or equal to -2.5 mol% and less than or equal to 1 mol%, greater than or equal to -2.5 mol% and less than or equal to 0.5 mol%, greater than or equal to -2 mol% and less than or equal to 2 mol%, greater than or equal to -2 mol% and less than or equal to 1.5 mol%, greater than or equal to -2 mol% and less than or equal to 1 mol%, greater than or equal to -2 mol% and less than or equal to 0.5 mol%, greater than or equal to -1.5 mol% and less than or equal to 2 mol%, greater than or equal to -1.5 mol% and less than or equal to 1.5 mol%, greater than or equal to -1.5 mol% and less than or equal to 1 mol%, or even greater than or equal to -1.5 mol% and less than or equal to 0.5 mol%. In embodiments, the difference between the concentrations of $R_2O$ and $Al_2O_3$ in the glass composition and the resultant colored glass article may be greater than or equal to 0.2 mol% and less than or equal to 5 mol%, greater than or equal to 0.2 mol% and less than or equal to 4.5 mol%, greater than or equal to 0.2 mol% and less than or equal to 4 mol%, greater than or equal to 0.2 mol% and less than or equal to 3.5 mol%, greater than or equal to 0.2 mol% and less than or equal to 3 mol%, greater than or equal to 0.5 mol% and less than or equal to 5 mol%, greater than or equal to 0.5 mol% and less than or equal to 4.5 mol%, greater than or equal to 0.5 mol% and less than or equal to 4 mol%, greater than or equal to 0.5 mol% and less than or equal to 3.5 mol%, greater than or equal to 0.5 mol% and less than or equal to 3 mol%, greater than or equal to 1 mol% and less than or equal to 5 mol%, greater than or equal to 1 mol% and less than or equal to 4.5 mol%, greater than or equal to 1 mol% and less than or equal to 4 mol%, greater than or equal to 1 mol% and less than or equal to 3.5 mol%, greater than or equal to 1 mol% and less than or equal to 3 mol%, greater than or equal to 1.5 mol% and less than or equal to 5 mol%, greater than or equal to 1.5 mol% and less than or equal to 4.5 mol%, greater than or equal to 1.5 mol% and less than or equal to 4 mol%, greater than or equal to 1.5 mol% and less than or equal to 3.5 mol%, greater than or equal to 1.5 mol% and less than or equal to 3 mol%, greater than or equal to 2 mol% and less than or equal to 5 mol%, greater than or equal to 2 mol% and less than or equal to 4.5 mol%, greater than or equal to 2 mol% and less than or equal to 4 mol%, greater than or equal to 2 mol% and less than or equal to 3.5 mol%, or greater than or equal to 2 mol% and less than or equal to 3 mol%.

In embodiments, the glass compositions and the resultant colored glass articles described herein further include MgO and/or ZnO to improve retention of colorants in the glass, such as Au or the like, by lowering the melting point of the glass composition. Decreasing the melting point of the glass composition may help improve colorant retention because the glass compositions may be melted at relatively lower temperatures and the evaporation of colorants from the glass, such as gold, may be reduced. While not wishing to be bound by theory, it is also believed that partially replacing $Li_2O$ and/or $Na_2O$ with MgO and/or ZnO may also help improve retention of the colorants. Specifically, $Li_2O$ and/or $Na_2O$ is included in the batch glass composition as lithium carbonate and sodium carbonate, respectively. Upon melting the glass composition, carbonate gas is released from the glass composition. Colorants such as Au escape from the glass composition within the carbonate gas. Therefore, the improved colorant retention may be due to the reduced amount of carbonate. Further, it is believed that MgO and/or ZnO may improve the solubility of some colorants in the glass (such as $Cr_2O_3$, for example), thereby avoiding the formation of undesirable crystal phases (such as Cr-spinel crystals) and expanding the color gamut that may be achieved by the resultant colored glass articles. For example, in embodiments where the colorant includes $Cr_2O_3$, the sum of MgO and ZnO present in the glass composition and the resultant colored glass article (i.e., MgO (mol%) + ZnO (mol%)) may be greater than or equal to 0 mol% and less than or equal to 6 mol% or even less than or equal to 4.5 mol%. Without wishing to be bound by theory, it is hypothesized that similar behavior may occur with colorants other than Au and $Cr_2O_3$.

In embodiments, the sum (in mol%) of MgO and ZnO present in the glass composition and the resultant colored glass article (i.e., MgO (mol%) + ZnO (mol%)) may be greater than or equal to 0 mol% and less than or equal to 8 mol%, greater than or equal to 0.1 mol% and less than or equal to 8 mol%, greater than or equal to 0 mol% and less than or equal to 6 mol%, greater than or equal to 0.1 mol% and less than or equal to 6 mol%, or even greater than or equal to 0 mol% and less than or equal to 4.5 mol%. In embodiments, the sum of MgO and ZnO in the glass composition and the resultant colored glass article may be greater than or equal to 0.5 mol% and less than or equal to 5.5 mol%. In embodiments, the sum of MgO and ZnO in the glass composition and the resultant colored glass article may be greater than or equal to 0 mol%, greater than or equal to 0.01 mol%, greater than or equal to 0.1 mol%, greater than or equal to 0.5 mol%, greater than or equal to 1 mol%, greater than or equal to 1.5 mol%, greater than or equal to 2 mol%, greater than or equal to 2.5 mol%, greater than or equal to 3 mol%, or even greater than or equal to 3.5 mol%. In embodiments, the sum of MgO and ZnO in the glass composition and the resultant colored glass article may be less than or equal to 8 mol%, less than or equal to 7 mol%, less than or equal to 6 mol%, less than or equal to 5.5 mol%, less than or equal to 5 mol%, less than or equal to 4.5 mol%, less than or equal to 4.25 mol%, or even less than or equal to 4 mol%. In embodiments, the sum of MgO and ZnO in the glass composition and the resultant colored glass article may be greater than or equal to 0 mol% and less than or equal to 8 mol%, greater than or equal to 0 mol% and less than or equal to 7 mol%, greater than or equal to 0 mol% and less than or equal to 6 mol%, greater than or equal to 0 mol% and less than or equal to 5.5 mol%, greater than or equal to 0 mol% and less than or equal to 5 mol%, greater than or equal to 0 mol% and less than or equal to 4.5 mol%, greater than or equal to 0 mol% and less than or equal to 4.25 mol%, greater than or equal to 0 mol% and less than or equal to 4 mol%, greater than or equal to 0.1 mol% and less than or equal to 8 mol%, greater than or equal to 0.1 mol% and less than or equal to 7 mol%, greater than or equal to 0.1 mol% and less than or equal to 6 mol%, greater than or equal to 0.1 mol% and less than or equal to 5.5 mol%, greater than or equal to 0.1 mol% and less than or equal to 5 mol%, greater than or equal to 0.1 mol% and less than or equal to 4.5 mol%, greater than or equal to 0.1 mol% and less than or equal to 4.25 mol%, greater than or equal to 0.1 mol% and less than or equal to 4 mol%, greater than or equal to 0.5 mol% and less than or equal to 8 mol%, greater than or equal to 0.5 mol% and less than or equal to 7 mol%, greater than or equal to 0.5 mol% and less than or equal to 6 mol%, greater than or equal to 0.5 mol% and less than or equal to 5.5 mol%, greater than or equal to 0.5 mol% and less than or equal to 5 mol%, greater than or equal to 0.5 mol% and less than or equal to 4.5 mol%, greater than or equal to 0.5 mol% and less than or equal to 4.25 mol%, greater than or equal to 0.5 mol% and less than or equal to 4 mol%, greater than or equal to 1 mol% and less than or equal to 8 mol%, greater than or equal to 1 mol% and less than or equal to 7 mol%, greater than or equal to 1 mol% and less than or equal to 6 mol%, greater than or equal to 1 mol% and less than or equal to 5.5 mol%, greater than or equal to 1 mol% and less than or equal to 5 mol%, greater than or equal to 1 mol% and less than or equal to 4.5 mol%, greater than or equal to 1 mol% and less than or equal to 4.25 mol%, greater than or equal to 1 mol% and less than or equal to 4 mol%, greater than or equal to 1.5 mol% and less than or equal to 8 mol%, greater than or equal to 1.5 mol% and less than or equal to 7 mol%, greater than or equal to 1.5 mol% and less than or equal to 6 mol%, greater than or equal to 1.5 mol% and less than or equal to 5.5 mol%, greater than or equal to 1.5 mol% and less than or equal to 5 mol%, greater than or equal to 1.5 mol% and less than or equal to 4.5 mol%, greater than or equal to 1.5 mol% and less than or equal to 4.25 mol%, greater than or equal to 1.5 mol% and less than or equal to 4 mol%, greater than or equal to 2 mol% and less than or equal to 8 mol%, greater than or equal to 2 mol% and less than or equal to 7 mol%, greater than or equal to 2 mol% and less than or equal to 6 mol%, greater than or equal to 2 mol% and less than or equal to 5.5 mol%, greater than or equal to 2 mol% and less than or equal to 5 mol%, greater than or equal to 2 mol% and less than or equal to 4.5 mol%, greater than or equal to 2 mol% and less than or equal to 4.25 mol%, greater than or equal to 2 mol% and less than or equal to 4 mol%, greater than or equal to 2.5 mol% and less than or equal to 8 mol%, greater than or equal to 2.5 mol% and less than or equal to 7 mol%, greater than or equal to 2.5 mol% and less than or equal to 6 mol%, greater than or equal to 2.5 mol% and less than or equal to 5.5 mol%, greater than or equal to 2.5 mol% and less than or equal to 5 mol%, greater than or equal to 2.5 mol% and less than or equal to 4.5 mol%, greater than or equal to 2.5 mol% and less than or equal to 4.25 mol%, greater than or equal to 2.5 mol% and less than or equal to 4 mol%, greater than or equal to 3 mol% and less than or equal to 8 mol%, greater than or equal to 3 mol% and less than or equal to 7 mol%, greater than or equal to 3 mol% and less than or equal to 6 mol%, greater than or equal to 3 mol% and less than or equal to 5.5 mol%, greater than or equal to 3 mol% and less than or equal to 5 mol%, greater than or equal to 3 mol% and less than or equal to 4.5 mol%, greater than or equal to 3 mol% and less than or equal to 4.25 mol%, greater than or equal to 3 mol% and less than or equal to 4 mol%, greater than or equal to 3 mol% and less than or equal to 8 mol%, greater than or equal to 3 mol% and less than or equal to 7 mol%, greater than or equal to 3.5 mol% and less than or equal to 6 mol%, greater than or equal to 3.5 mol% and less than or equal to 5.5 mol%, greater than or equal to 3.5 mol% and less than or equal to 5 mol%, or even greater than or equal to 3.5 mol% and less than or equal to 4.5 mol%, greater than or equal to 3.5 mol% and less than or equal to 4.25 mol%, greater than or equal to 3.5 mol% and less than or equal to 4 mol%.

In addition to improving colorant retention, MgO lowers the viscosity of the glass compositions, which enhances the formability, the strain point, and the Young's modulus, and may improve ion-exchangeability. However, when too much MgO is added to the glass composition, the diffusivity of sodium and potassium ions in the glass composition decreases which, in turn, adversely impacts the ion-exchange performance (i.e., the ability to ion-exchange) of the resultant colored glass article.

In embodiments, the glass composition and the resultant colored glass article may comprise greater than or equal to 0 mol% and less than or equal to 8 mol% MgO or even greater than or equal to 0 mol% and less than or equal to 4.5 mol% MgO. In embodiments, the glass composition and the resultant colored glass article may comprise greater than or equal to 0.5 mol% and less than or equal to 7 mol% MgO. In embodiments, the concentration of MgO in the glass composition may be greater than or equal to 0 mol%, greater than or equal to 0.5 mol%, greater than or equal to 1 mol%, greater than or equal to 1.5 mol%, greater than or equal to 2 mol%, or even greater than or equal to 2.5 mol%. In embodiments, the concentration of MgO in the glass composition may be less than or equal to 8 mol%, less than or equal to 7 mol%, less than or equal to 6 mol%, less than or equal to 5.5 mol%, less than or equal to 5 mol%, less than or equal to 4.5 mol%, less than or equal to 4 mol%, less than or equal to 3.5 mol%, less than or equal to 3 mol%, less than or equal to 2.5 mol%, less than or equal to 2 mol%, less than or equal to 1.5 mol%, or even less than or equal to 1 mol%. **In** embodiments, the concentration of MgO in the glass composition may be greater than or equal to 0 mol% and less than or equal to 8 mol%, greater than or equal to 0 mol% and less than or equal to 7 mol%, greater than or equal to 0 mol% and less than or equal to 6 mol%, greater than or equal to 0 mol% and less than or equal to 5.5 mol%, greater than or equal to 0 mol% and less than or equal to 5 mol%, greater than or equal to 0 mol% and less than or equal to 4.5 mol%, greater than or equal to 0 mol% and less than or equal to 4 mol%, greater than or equal to 0 mol% and less than or equal to 3.5 mol%, greater than or equal to 0 mol% and less than or equal to 3 mol%, greater than or equal to 0 mol% and less than or equal to 2.5 mol%, greater than or equal to 0 mol% and less than or equal to 2 mol%, greater than or equal to 0 mol% and less than or equal to 1.5 mol%, greater than or equal to 0 mol% and less than or equal to 1 mol%, greater than or equal to 0 mol% and less than or equal to 0.5 mol%, greater than or equal to 0.5 mol% and less than or equal to 8 mol%, greater than or equal to 0.5 mol% and less than or equal to 7 mol%, greater than or equal to 0.5 mol% and less than or equal to 6 mol%, greater than or equal to 0.5 mol% and less than or equal to 5.5 mol%, greater than or equal to 0.5 mol% and less than or equal to 5 mol%, greater than or equal to 0.5 mol% and less than or equal to 4.5 mol%, greater than or equal to 0.5 mol% and less than or equal to 4 mol%, greater than or equal to 0.5 mol% and less than or equal to 3.5 mol%, greater than or equal to 0.5 mol% and less than or equal to 3 mol%, greater than or equal to 0.5 mol% and less than or equal to 2.5 mol%, greater than or equal to 0.5 mol% and less than or equal to 2 mol%, greater than or equal to 0.5 mol% and less than or equal to 1.5 mol%, greater than or equal to 0.5 mol% and less than or equal to 1 mol%, greater than or equal to 1 mol% and less than or equal to 8 mol%, greater than or equal to 1 mol% and less than or equal to 7 mol%, greater than or equal to 1 mol% and less than or equal to 6 mol%, greater than or equal to 1 mol% and less than or equal to 5.5 mol%, greater than or equal to 1 mol% and less than or equal to 5 mol%, greater than or equal to 1 mol% and less than or equal to 4.5 mol%, greater than or equal to 1 mol% and less than or equal to 4 mol%, greater than or equal to 1 mol% and less than or equal to 3.5 mol%, greater than or equal to 1 mol% and less than or equal to 3 mol%, greater than or equal to 1 mol% and less than or equal to 2.5 mol%, greater than or equal to 1 mol% and less than or equal to 2 mol%, greater than or equal to 1 mol% and less than or equal to 1.5 mol%, greater than or equal to 1.5 mol% and less than or equal to 8 mol%, greater than or equal to 1.5 mol% and less than or equal to 7 mol%, greater than or equal to 1.5 mol% and less than or equal to 6 mol%, greater than or equal to 1.5 mol% and less than or equal to 5.5 mol%, greater than or equal to 1.5 mol% and less than or equal to 5 mol%, greater than or equal to 1.5 mol% and less than or equal to 4.5 mol%, greater than or equal to 1.5 mol% and less than or equal to 4 mol%, greater than or equal to 1.5 mol% and less than or equal to 3.5 mol%, greater than or equal to 1.5 mol% and less than or equal to 3 mol%, greater than or equal to 1.5 mol% and less than or equal to 2.5 mol%, greater than or equal to 1.5 mol% and less than or equal to 2 mol%, greater than or equal to 2 mol% and less than or equal to 8 mol%, greater than or equal to 2 mol% and less than or equal to 7 mol%, greater than or equal to 2 mol% and less than or equal to 6 mol%, greater than or equal to 2 mol% and less than or equal to 5.5 mol%, greater than or equal to 2 mol% and less than or equal to 5 mol%, greater than or equal to 2 mol% and less than or equal to 4.5 mol%, greater than or equal to 2 mol% and less than or equal to 4 mol%, greater than or equal to 2 mol% and less than or equal to 3.5 mol%, greater than or equal to 2 mol% and less than or equal to 3 mol%, greater than or equal to 2 mol% and less than or equal to 2.5 mol%, greater than or equal to 0 mol% and less than or equal to 8 mol%, greater than or equal to 2.5 mol% and less than or equal to 7 mol%, greater than or equal to 2.5 mol% and less than or equal to 6 mol%, greater than or equal to 2.5 mol% and less than or equal to 5.5 mol%, greater than or equal to 2.5 mol% and less than or equal to 5 mol%, greater than or equal to 2.5 mol% and less than or equal to 4.5 mol%, greater than or equal to 2.5 mol% and less than or equal to 4 mol%, greater than or equal to 2.5 mol% and less than or equal to 3.5 mol%, or even greater than or equal to 2.5 mol% and less than or equal to 3 mol%. In embodiments, the glass composition and the resultant colored glass article may be substantially free or free of MgO.

In embodiments, the glass composition and the resultant colored glass article may comprise greater than or equal to 0 mol% and less than or equal to 6 mol% MgO. In embodiments, the glass composition and the resultant colored glass article may comprise greater than or equal to 0.1 mol% and less than or equal to 5 mol% MgO. In embodiments, the concentration of MgO in the glass composition may be greater than or equal to 0 mol%, greater than or equal to 0.1 mol%, or even greater than or equal to 0.5 mol%. In embodiments, the concentration of MgO in the glass composition may be less than or equal to 6 mol%, less than or equal to 5 mol%, less than or equal to 4 mol%, less than or equal to 3 mol%, less than or equal to 2 mol%, or even less than or equal to 1 mol%. In embodiments, the concentration of MgO in the glass composition may be greater than or equal to 0 mol% and less than or equal to 6 mol%, greater than or equal to 0 mol% and less than or equal to 5 mol%, greater than or equal to 0 mol% and less than or equal to 4 mol%, greater than or equal to 0 mol% and less than or equal to 3 mol%, greater than or equal to 0 mol% and less than or equal to 2 mol%, greater than or equal to 0 mol% and less than or equal to 1 mol%, greater than or equal to 0.1 mol% and less than or equal to 6 mol%, greater than or equal to 0.1 mol% and less than or equal to 5 mol%, greater than or equal to 0.1 mol% and less than or equal to 4 mol%, greater than or equal to 0.1 mol% and less than or equal to 3 mol%, greater than or equal to 0.1 mol% and less than or equal to 2 mol%, greater than or equal to 0.1 mol% and less than or equal to 1 mol%, greater than or equal to 0.5 mol% and less than or equal to 6 mol%, greater than or equal to 0.5 mol% and less than or equal to 5 mol%, greater than or equal to 0.5 mol% and less than or equal to 4 mol%, greater than or equal to 0.5 mol% and less than or equal to 3 mol%, greater than or equal to 0.5 mol% and less than or equal to 2 mol%, or even greater than or equal to 0.5 mol% and less than or equal to 1 mol%. In embodiments, the glass composition and the resultant colored glass article may be substantially free or free of MgO.

In addition to improving colorant retention, ZnO lowers the viscosity of the glass compositions, which enhances the formability, the strain point, and the Young's modulus, and may improve ion-exchangeability. However, when too much ZnO is added to the glass composition, the diffusivity of sodium and potassium ions in the glass composition decreases which, in turn, adversely impacts the ion-exchange performance (i.e., the ability to ion-exchange) of the resultant colored glass article.

In embodiments, the glass composition and the resultant colored glass article may comprise greater than or equal to 0 mol% and less than or equal to 5 mol% ZnO or even greater than or equal to 0 mol% and less than or equal to 4.5 mol% ZnO. In embodiments, the glass composition and the resultant colored glass article may comprise greater than or equal to 0.1 mol% and less than or equal to 4 mol% ZnO. In embodiments, the concentration of ZnO in the glass composition may be greater than or equal to 0 mol%, greater than or equal to 0.1 mol%, greater than or equal to 0.25 mol%, greater than or equal to 0.5 mol%, greater than or equal to 0.75 mol%, greater than or equal to 1 mol%, greater than or equal to 1.5 mol%, or even greater than or equal to 2 mol%. In embodiments, the concentration of ZnO in the glass composition may be less than or equal to 5 mol%, less than or equal to 4.5 mol%, less than or equal to 4 mol%, less than or equal to 3.5 mol%, less than or equal to 3 mol%, less than or equal to 2.5 mol%, less than or equal to 2 mol%, less than or equal to 1.75 mol%, less than or equal to 1.5 mol%, less than or equal to 1.25 mol%, or even less than or equal to 1 mol%. In embodiments, the concentration of ZnO in the glass composition may be greater than or equal to 0 mol% and less than or equal to 5 mol%, greater than or equal to 0 mol% and less than or equal to 4.5 mol%, greater than or equal to 0 mol% and less than or equal to 4 mol%, greater than or equal to 0 mol% and less than or equal to 3.5 mol%, greater than or equal to 0 mol% and less than or equal to 3 mol%, greater than or equal to 0 mol% and less than or equal to 2.5 mol%, greater than or equal to 0 mol% and less than or equal to 2 mol%, greater than or equal to 0 mol% and less than or equal to 1.75 mol%, greater than or equal to 0 mol% and less than or equal to 1.5 mol%, greater than or equal to 0 mol% and less than or equal to 1.25 mol%, greater than or equal to 0 mol% and less than or equal to 1 mol%, greater than or equal to 0.1 mol% and less than or equal to 5 mol%, greater than or equal to 0.1 mol% and less than or equal to 4.5 mol%, greater than or equal to 0.1 mol% and less than or equal to 4 mol%, greater than or equal to 0.1 mol% and less than or equal to 3.5 mol%, greater than or equal to 0.1 mol% and less than or equal to 3 mol%, greater than or equal to 0.1 mol% and less than or equal to 2.5 mol%, greater than or equal to 0.1 mol% and less than or equal to 2 mol%, greater than or equal to 0.1 mol% and less than or equal to 1.75 mol%, greater than or equal to 0.1 mol% and less than or equal to 1.5 mol%, greater than or equal to 0.1 mol% and less than or equal to 1.25 mol%, greater than or equal to 0.1 mol% and less than or equal to 1 mol%, greater than or equal to 0.25 mol% and less than or equal to 5 mol%, greater than or equal to 0.25 mol% and less than or equal to 4.5 mol%, greater than or equal to 0.25 mol% and less than or equal to 4 mol%, greater than or equal to 0.25 mol% and less than or equal to 3.5 mol%, greater than or equal to 0.25 mol% and less than or equal to 3 mol%, greater than or equal to 0.25 mol% and less than or equal to 2.5 mol%, greater than or equal to 0.25 mol% and less than or equal to 2 mol%, greater than or equal to 0.25 mol% and less than or equal to 1.75 mol%, greater than or equal to 0.25 mol% and less than or equal to 1.5 mol%, greater than or equal to 0.25 mol% and less than or equal to 1.25 mol%, greater than or equal to 0.25 mol% and less than or equal to 1 mol%, greater than or equal to 0.5 mol% and less than or equal to 5 mol%, greater than or equal to 0.5 mol% and less than or equal to 4.5 mol%, greater than or equal to 0.5 mol% and less than or equal to 4 mol%, greater than or equal to 0.5 mol% and less than or equal to 3.5 mol%, greater than or equal to 0.5 mol% and less than or equal to 3 mol%, greater than or equal to 0.5 mol% and less than or equal to 2.5 mol%, greater than or equal to 0.5 mol% and less than or equal to 2 mol%, greater than or equal to 0.5 mol% and less than or equal to 1.75 mol%, greater than or equal to 0.5 mol% and less than or equal to 1.5 mol%, greater than or equal to 0.5 mol% and less than or equal to 1.25 mol%, greater than or equal to 0.5 mol% and less than or equal to 1 mol%, greater than or equal to 0.75 mol% and less than or equal to 5 mol%, greater than or equal to 0.75 mol% and less than or equal to 4 mol%, greater than or equal to 0.75 mol% and less than or equal to 3 mol%, greater than or equal to 0.75 mol% and less than or equal to 2.5 mol%, greater than or equal to 0.75 mol% and less than or equal to 2 mol%, greater than or equal to 0.75 mol% and less than or equal to 1.75 mol%, greater than or equal to 0.75 mol% and less than or equal to 1.5 mol%, greater than or equal to 0.75 mol% and less than or equal to 1.25 mol%, greater than or equal to 1 mol% and less than or equal to 1 mol%, greater than or equal to 1 mol% and less than or equal to 5 mol%, greater than or equal to 1 mol% and less than or equal to 4.5 mol%, greater than or equal to 1 mol% and less than or equal to 4 mol%, greater than or equal to 1 mol% and less than or equal to 3.5 mol%, greater than or equal to 1 mol% and less than or equal to 3 mol%, greater than or equal to 1 mol% and less than or equal to 2.5 mol%, greater than or equal to 1 mol% and less than or equal to 2 mol%, greater than or equal to 1 mol% and less than or equal to 1.75 mol%, greater than or equal to 1 mol% and less than or equal to 1.5 mol%, greater than or equal to 1 mol% and less than or equal to 1.25 mol%, greater than or equal to 1.5 mol% and less than or equal to 5 mol%, greater than or equal to 1.5 mol% and less than or equal to 4.5 mol%, greater than or equal to 1.5 mol% and less than or equal to 4 mol%, greater than or equal to 1.5 mol% and less than or equal to 3.5 mol%, greater than or equal to 1.5 mol% and less than or equal to 3 mol%, greater than or equal to 1.5 mol% and less than or equal to 2.5 mol%, greater than or equal to 1.5 mol% and less than or equal to 2 mol%, greater than or equal to 1.5 mol% and less than or equal to 1.75 mol%, greater than or equal to 2 mol% and less than or equal to 5 mol%, greater than or equal to 2 mol% and less than or equal to 4.5 mol%, greater than or equal to 2 mol% and less than or equal to 4 mol%, greater than or equal to 2 mol% and less than or equal to 3.5 mol%, greater than or equal to 2 mol% and less than or equal to 3 mol%, or even greater than or equal to 2 mol% and less than or equal to 2.5 mol%. In embodiments, the glass composition and the resultant colored glass article may be substantially free or free of ZnO.

Like ZnO and the alkaline earth oxide MgO, other alkaline earth oxides, such as CaO, SrO and BaO, decrease the melting point of the glass composition. Accordingly, CaO, SrO, and/or BaO may be included in the glass composition and the resultant colored glass articles to lower the melting point of the glass composition, which may help improve colorant retention.

In embodiments, the glass compositions and the resultant colored glass articles described herein may further comprise CaO. CaO lowers the viscosity of a glass composition, which enhances the formability, the strain point and the Young's modulus, and may improve the ion-exchangeability. However, when too much CaO is added to the glass composition, the diffusivity of sodium and potassium ions in the glass composition decreases which, in turn, adversely impacts the ion-exchange performance (i.e., the ability to ion-exchange) of the resultant glass.

In embodiments, the concentration of CaO in the glass composition and the resultant colored glass article may be greater than or equal to 0 mol%, greater than or equal to 0.25 mol%, greater than or equal to 0.5 mol%, or even greater than or equal to 0.75 mol%. In embodiments, the concentration of CaO in the glass composition and the resultant colored glass article may be less than or equal to 7 mol%, less than or equal to 6.5 mol%, less than or equal to 6 mol%, less than or equal to 5.5 mol%, less than or equal to 5 mol%, less than or equal to 4.5 mol%, less than or equal to 4 mol%, less than or equal to 3.5 mol%, less than or equal to 3 mol%, less than or equal to 2.5 mol%, less than or equal to 2 mol%, less than or equal to 1.75 mol%, less than or equal to 1.5 mol%, less than or equal to 1.25 mol%, or even less than or equal to 1 mol%. In embodiments, the concentration of CaO in the glass composition and the resultant colored glass article may be greater than or equal to 0 mol% and less than or equal to 7 mol%, greater than or equal to 0 mol% and less than or equal to 6.5 mol%, greater than or equal to 0 mol% and less than or equal to 6 mol%, greater than or equal to 0 mol% and less than or equal to 5.5 mol%, greater than or equal to 0 mol% and less than or equal to 5 mol%, greater than or equal to 0 mol% and less than or equal to 4.5 mol%, greater than or equal to 0 mol% and less than or equal to 4 mol%, greater than or equal to 0 mol% and less than or equal to 3.5 mol%, greater than or equal to 0 mol% and less than or equal to 3 mol%, greater than or equal to 0 mol% and less than or equal to 2.5 mol%, greater than or equal to 0 mol% and less than or equal to 2 mol%, greater than or equal to 0 mol% and less than or equal to 1.75 mol%, greater than or equal to 0 mol% and less than or equal to 1.5 mol%, greater than or equal to 0 mol% and less than or equal to 1.25 mol%, greater than or equal to 0 mol% and less than or equal to 1 mol%, greater than or equal to 0.25 mol% and less than or equal to 7 mol%, greater than or equal to 0.25 mol% and less than or equal to 6.5 mol%, greater than or equal to 0.25 mol% and less than or equal to 6 mol%, greater than or equal to 0.25 mol% and less than or equal to 5.5 mol%, greater than or equal to 0.25 mol% and less than or equal to 5 mol%, greater than or equal to 0.25 mol% and less than or equal to 4.5 mol%, greater than or equal to 0.25 mol% and less than or equal to 4 mol%, greater than or equal to 0.25 mol% and less than or equal to 3.5 mol%, greater than or equal to 0.25 mol% and less than or equal to 3 mol%, greater than or equal to 0.25 mol% and less than or equal to 2.5 mol%, greater than or equal to 0.25 mol% and less than or equal to 2 mol%, greater than or equal to 0.25 mol% and less than or equal to 1.75 mol%, greater than or equal to 0.25 mol% and less than or equal to 1.5 mol%, greater than or equal to 0.25 mol% and less than or equal to 1.25 mol%, greater than or equal to 0.25 mol% and less than or equal to 1 mol%, greater than or equal to 0.5 mol% and less than or equal to 7 mol%, greater than or equal to 0.5 mol% and less than or equal to 6.5 mol%, greater than or equal to 0.5 mol% and less than or equal to 6 mol%, greater than or equal to 0.5 mol% and less than or equal to 5.5 mol%, greater than or equal to 0.5 mol% and less than or equal to 5 mol%, greater than or equal to 0.5 mol% and less than or equal to 4.5 mol%, greater than or equal to 0.5 mol% and less than or equal to 4 mol%, greater than or equal to 0.5 mol% and less than or equal to 3.5 mol%, greater than or equal to 0.5 mol% and less than or equal to 3 mol%, greater than or equal to 0.5 mol% and less than or equal to 2.5 mol%, greater than or equal to 0.5 mol% and less than or equal to 2 mol%, greater than or equal to 0.5 mol% and less than or equal to 1.75 mol%, greater than or equal to 0.5 mol% and less than or equal to 1.5 mol%, greater than or equal to 0.5 mol% and less than or equal to 1.25 mol%, greater than or equal to 0.5 mol% and less than or equal to 1 mol%, greater than or equal to 0.75 mol% and less than or equal to 7 mol%, greater than or equal to 0.75 mol% and less than or equal to 6.5 mol%, greater than or equal to 0.75 mol% and less than or equal to 6 mol%, greater than or equal to 0.75 mol% and less than or equal to 5.5 mol%, greater than or equal to 0.75 mol% and less than or equal to 5 mol%, greater than or equal to 0.75 mol% and less than or equal to 4.5 mol%, greater than or equal to 0.75 mol% and less than or equal to 4 mol%, greater than or equal to 0.75 mol% and less than or equal to 3.5 mol%, greater than or equal to 0.75 mol% and less than or equal to 3 mol%, greater than or equal to 0.75 mol% and less than or equal to 2.5 mol%, greater than or equal to 0.75 mol% and less than or equal to 2 mol%, greater than or equal to 0.75 mol% and less than or equal to 1.75 mol%, greater than or equal to 0.75 mol% and less than or equal to 1.5 mol%, greater than or equal to 0.75 mol% and less than or equal to 1.25 mol%, or even greater than or equal to 0.75 mol% and less than or equal to 1 mol%. In embodiments, the glass composition and the resultant colored glass article may be substantially free or free of CaO.

In embodiments, the concentration of SrO in the glass composition and the resultant colored glass article may be greater than or equal to 0 mol%, greater than or equal to 0.25 mol%, greater than or equal to 0.5 mol%, or even greater than or equal to 0.75 mol%. In embodiments, the concentration of SrO in the glass composition and the resultant colored glass article may be less than or equal to 2 mol%, less than or equal to 1.75 mol%, less than or equal to 1.5 mol%, less than or equal to 1.25 mol%, or even less than or equal to 1 mol%. In embodiments, the concentration of SrO in the glass composition and the resultant colored glass article may be greater than or equal to 0 mol% and less than or equal to 2 mol%, greater than or equal to 0 mol% and less than or equal to 1.75 mol%, greater than or equal to 0 mol% and less than or equal to 1.5 mol%, greater than or equal to 0 mol% and less than or equal to 1.25 mol%, greater than or equal to 0 mol% and less than or equal to 1 mol%, greater than or equal to 0.25 mol% and less than or equal to 2 mol%, greater than or equal to 0.25 mol% and less than or equal to 1.75 mol%, greater than or equal to 0.25 mol% and less than or equal to 1.5 mol%, greater than or equal to 0.25 mol% and less than or equal to 1.25 mol%, greater than or equal to 0.25 mol% and less than or equal to 1 mol%, greater than or equal to 0.5 mol% and less than or equal to 2 mol%, greater than or equal to 0.5 mol% and less than or equal to 1.75 mol%, greater than or equal to 0.5 mol% and less than or equal to 1.5 mol%, greater than or equal to 0.5 mol% and less than or equal to 1.25 mol%, greater than or equal to 0.5 mol% and less than or equal to 1 mol%, greater than or equal to 0.75 mol% and less than or equal to 2 mol%, greater than or equal to 0.75 mol% and less than or equal to 1.75 mol%, greater than or equal to 0.75 mol% and less than or equal to 1.5 mol%, greater than or equal to 0.75 mol% and less than or equal to 1.25 mol%, or even greater than or equal to 0.75 mol% and less than or equal to 1 mol%. In embodiments, the glass composition and the resultant colored glass article may be substantially free or free of SrO.

In embodiments, the concentration of BaO in the glass composition and the resultant colored glass article may be greater than or equal to 0 mol%, greater than or equal to 0.25 mol%, greater than or equal to 0.5 mol%, or even greater than or equal to 0.75 mol%. In embodiments, the concentration of BaO in the glass composition and the resultant colored glass article may be less than or equal to 2 mol%, less than or equal to 1.75 mol%, less than or equal to 1.5 mol%, less than or equal to 1.25 mol%, or even less than or equal to 1 mol%. In embodiments, the concentration of BaO in the glass composition and the resultant colored glass article may be greater than or equal to 0 mol% and less than or equal to 2 mol%, greater than or equal to 0 mol% and less than or equal to 1.75 mol%, greater than or equal to 0 mol% and less than or equal to 1.5 mol%, greater than or equal to 0 mol% and less than or equal to 1.25 mol%, greater than or equal to 0 mol% and less than or equal to 1 mol%, greater than or equal to 0.25 mol% and less than or equal to 2 mol%, greater than or equal to 0.25 mol% and less than or equal to 1.75 mol%, greater than or equal to 0.25 mol% and less than or equal to 1.5 mol%, greater than or equal to 0.25 mol% and less than or equal to 1.25 mol%, greater than or equal to 0.25 mol% and less than or equal to 1 mol%, greater than or equal to 0.5 mol% and less than or equal to 2 mol%, greater than or equal to 0.5 mol% and less than or equal to 1.75 mol%, greater than or equal to 0.5 mol% and less than or equal to 1.5 mol%, greater than or equal to 0.5 mol% and less than or equal to 1.25 mol%, greater than or equal to 0.5 mol% and less than or equal to 1 mol%, greater than or equal to 0.75 mol% and less than or equal to 2 mol%, greater than or equal to 0.75 mol% and less than or equal to 1.75 mol%, greater than or equal to 0.75 mol% and less than or equal to 1.5 mol%, greater than or equal to 0.75 mol% and less than or equal to 1.25 mol%, or even greater than or equal to 0.75 mol% and less than or equal to 1 mol%. In embodiments, the glass composition and the resultant colored glass article may be substantially free or free of BaO.

R'O, as used herein, is the sum (in mol%) of MgO, ZnO, CaO, BaO, and SrO (i.e. R'O = MgO (mol%) + ZnO (mol%) + CaO (mol%) + BaO (mol%) + SrO (mol%)). In embodiments, the concentration of R'O in the glass composition and the resultant colored glass article may be greater than or equal to 0 mol%, greater than or equal to 0.5 mol%, greater than or equal to 1 mol%, greater than or equal to 1.5 mol%, greater than or equal to 2 mol%, or even greater than or equal to 2.5 mol%. In embodiments, the concentration of R'O in the glass composition and the resultant colored glass article may be less than or equal to 8 mol%, less than or equal to 7.5 mol%, less than or equal to 7 mol%, less than or equal to 6.5 mol%, less than or equal to 6 mol%, less than or equal to 5 mol%, less than or equal to 5 mol%, less than or equal to 4.5 mol%, less than or equal to 4 mol%, or even less than or equal to 3.5 mol%. In embodiments, the concentration of R'O in the glass composition and the resultant colored glass article may be greater than or equal to 0 mol% and less than or equal to 8 mol%, greater than or equal to 0 mol% and less than or equal to 7.5 mol%, greater than or equal to 0 mol% and less than or equal to 7 mol%, greater than or equal to 0 mol% and less than or equal to 6.5 mol%, greater than or equal to 0 mol% and less than or equal to 6 mol%, greater than or equal to 0 mol% and less than or equal to 5.5 mol%, greater than or equal to 0 mol% and less than or equal to 5 mol%, greater than or equal to 0 mol% and less than or equal to 4.5 mol%, greater than or equal to 0 mol% and less than or equal to 4 mol%, greater than or equal to 0 mol% and less than or equal to 3.5 mol%, greater than or equal to 0.5 mol% and less than or equal to 8 mol%, greater than or equal to 0.5 mol% and less than or equal to 7.5 mol%, greater than or equal to 0.5 mol% and less than or equal to 7 mol%, greater than or equal to 0.5 mol% and less than or equal to 6.5 mol%, greater than or equal to 0.5 mol% and less than or equal to 6 mol%, greater than or equal to 0.5 mol% and less than or equal to 5.5 mol%, greater than or equal to 0.5 mol% and less than or equal to 5 mol%, greater than or equal to 0.5 mol% and less than or equal to 4.5 mol%, greater than or equal to 0.5 mol% and less than or equal to 4 mol%, greater than or equal to 0.5 mol% and less than or equal to 3.5 mol%, greater than or equal to 0.5 mol% and less than or equal to 8 mol%, greater than or equal to 1 mol% and less than or equal to 7.5 mol%, greater than or equal to 0.5 mol% and less than or equal to 7 mol%, greater than or equal to 1 mol% and less than or equal to 6.5 mol%, greater than or equal to 0.5 mol% and less than or equal to 6 mol%, greater than or equal to 1 mol% and less than or equal to 5.5 mol%, greater than or equal to 1 mol% and less than or equal to 5 mol%, greater than or equal to 1 mol% and less than or equal to 4.5 mol%, greater than or equal to 1 mol% and less than or equal to 4 mol%, greater than or equal to 1 mol% and less than or equal to 3.5 mol%, greater than or equal to 1.5 mol% and less than or equal to 8 mol%, greater than or equal to 1.5 mol% and less than or equal to 7.5 mol%, greater than or equal to 1.5 mol% and less than or equal to 7 mol%, greater than or equal to 1.5 mol% and less than or equal to 6.5 mol%, greater than or equal to 1.5 mol% and less than or equal to 6 mol%, greater than or equal to 1.5 mol% and less than or equal to 5.5 mol%, greater than or equal to 1.5 mol% and less than or equal to 5 mol%, greater than or equal to 1.5 mol% and less than or equal to 4.5 mol%, greater than or equal to 1.5 mol% and less than or equal to 4 mol%, greater than or equal to 1.5 mol% and less than or equal to 3.5 mol%, greater than or equal to 2 mol% and less than or equal to 8 mol%, greater than or equal to 2 mol% and less than or equal to 7.5 mol%, greater than or equal to 2 mol% and less than or equal to 7 mol%, greater than or equal to 2 mol% and less than or equal to 6.5 mol%, greater than or equal to 2 mol% and less than or equal to 6 mol%, greater than or equal to 2 mol% and less than or equal to 5.5 mol%, greater than or equal to 2 mol% and less than or equal to 5 mol%, greater than or equal to 2 mol% and less than or equal to 4.5 mol%, greater than or equal to 2 mol% and less than or equal to 4 mol%, greater than or equal to 2 mol% and less than or equal to 3.5 mol%, greater than or equal to 2.5 mol% and less than or equal to 8 mol%, greater than or equal to 2.5 mol% and less than or equal to 7.5 mol%, greater than or equal to 2.5 mol% and less than or equal to 7 mol%, greater than or equal to 2.5 mol% and less than or equal to 6.5 mol%, greater than or equal to 2.5 mol% and less than or equal to 6 mol%, greater than or equal to 2.5 mol% and less than or equal to 5.5 mol%, greater than or equal to 2.5 mol% and less than or equal to 5 mol%, greater than or equal to 2.5 mol% and less than or equal to 4.5 mol%, greater than or equal to 2.5 mol% and less than or equal to 4 mol%, or even greater than or equal to 2.5 mol% and less than or equal to 3.5 mol%.

In embodiments, the sum of $R_2O$, CaO, MgO, and ZnO ($R_2O$ (mol%) + CaO (mol%) + MgO (mol%) + ZnO (mol%)) may be less than or equal to 35 mol%. While not wishing to be bound by theory, it is believed that minimizing the combination of $R_2O$, CaO, MgO, and ZnO in the glass composition may provide the resultant colored glass article with a desirable dielectric constant, such as when the colored glass article is used as a portion of a housing for an electronic device. In embodiments, $R_2O$ (mol%) + CaO (mol%) + MgO (mol%) + ZnO (mol%) may be greater than or equal to 1 mol% and less than or equal to 35 mol%, greater than or equal to 1 mol% and less than or equal to 30 mol%, greater than or equal to 1 mol% and less than or equal to 25 mol%, greater than or equal to 1 mol% and less than or equal to 20 mol%, greater than or equal to 1 mol% and less than or equal to 15 mol%, greater than or equal to 1 mol% and less than or equal to 10 mol%, greater than or equal to 2 mol% and less than or equal to 35 mol%, greater than or equal to 2 mol% and less than or equal to 30 mol%, greater than or equal to 2 mol% and less than or equal to 25 mol%, greater than or equal to 2 mol% and less than or equal to 20 mol%, greater than or equal to 2 mol% and less than or equal to 15 mol%, greater than or equal to 2 mol% and less than or equal to 10 mol%, greater than or equal to 3 mol% and less than or equal to 35 mol%, greater than or equal to 3 mol% and less than or equal to 30 mol%, greater than or equal to 3 mol% and less than or equal to 25 mol%, greater than or equal to 3 mol% and less than or equal to 20 mol%, greater than or equal to 3 mol% and less than or equal to 15 mol%, greater than or equal to 3 mol% and less than or equal to 10 mol%, greater than or equal to 4 mol% and less than or equal to 35 mol%, greater than or equal to 4 mol% and less than or equal to 30 mol%, greater than or equal to 4 mol% and less than or equal to 25 mol%, greater than or equal to 4 mol% and less than or equal to 20 mol%, greater than or equal to 4 mol% and less than or equal to 15 mol%, greater than or equal to 4 mol% and less than or equal to 10 mol%, greater than or equal to 4 mol% and less than or equal to 35 mol%, greater than or equal to 5 mol% and less than or equal to 30 mol%, greater than or equal to 5 mol% and less than or equal to 25 mol%, greater than or equal to 5 mol% and less than or equal to 20 mol%, greater than or equal to 5 mol% and less than or equal to 15 mol%, greater than or equal to 5 mol% and less than or equal to 10 mol%, greater than or equal to 6 mol% and less than or equal to 35 mol%, greater than or equal to 6 mol% and less than or equal to 30 mol%, greater than or equal to 6 mol% and less than or equal to 25 mol%, greater than or equal to 6 mol% and less than or equal to 20 mol%, greater than or equal to 6 mol% and less than or equal to 15 mol%, greater than or equal to 6 mol% and less than or equal to 10 mol%, greater than or equal to 7 mol% and less than or equal to 35 mol%, greater than or equal to 7 mol% and less than or equal to 30 mol%, greater than or equal to 7 mol% and less than or equal to 25 mol%, greater than or equal to 7 mol% and less than or equal to 20 mol%, greater than or equal to 7 mol% and less than or equal to 15 mol%, greater than or equal to 7 mol% and less than or equal to 10 mol%, greater than or equal to 8 mol% and less than or equal to 35 mol%, greater than or equal to 8 mol% and less than or equal to 30 mol%, greater than or equal to 8 mol% and less than or equal to 25 mol%, greater than or equal to 8 mol% and less than or equal to 20 mol%, greater than or equal to 8 mol% and less than or equal to 15 mol%, or even greater than or equal to 8 mol% and less than or equal to 10 mol%.

In embodiments, the sum of $Al_2O_3$, MgO, and ZnO present in the glass composition and the resultant colored glass article (i.e., $Al_2O_3$ (mol%) + MgO (mol%) + ZnO (mol%)) may be greater than or equal to 12 mol% and less than or equal to 22 mol%. While not wishing to be bound by theory, it is believed that combinations of $Al_2O_3$, MgO, and ZnO within this range may aid in avoiding the formation of undesired crystal phases in the resultant colored glass articles. For example and without limitation, when the colorant package in the glass composition and the resultant colored glass article includes $Cr_2O_3$, combinations of $Al_2O_3$, MgO, and ZnO within this range may avoid the formation of Cr-spinel crystals by increasing the solubility of the $Cr_2O_3$ colorant and thereby expanding the color gamut that may be achieved in the resultant colored glass articles. Without wishing to be bound by theory, it is hypothesized that similar behavior may occur with colorants other than $Cr_2O_3$.

In embodiments, the sum of $Al_2O_3$, MgO, and ZnO in the glass composition and the resultant colored glass article may be greater than or equal to 13 mol% and less than or equal to 21.5 mol%. In embodiments, the sum of $Al_2O_3$, MgO, and ZnO in the glass composition and the resultant colored glass article may be greater than or equal to 12 mol%, greater than or equal to 13 mol%, greater than or equal to 14 mol%, greater than or equal to 15 mol%, or even greater than or equal to 16 mol%. In embodiments, the sum of $Al_2O_3$, MgO, and ZnO in the glass composition and the resultant colored glass article may be less than or equal to 22 mol%, less than or equal to 21.5 mol%, less than or equal to 21 mol%, less than or equal to 20.5 mol%, or even less than or equal to 20 mol%. In embodiments, the sum of $Al_2O_3$, MgO, and ZnO in the glass composition and the resultant colored glass article may be greater than or equal to 12 mol% and less than or equal to 22 mol%, greater than or equal to 12 mol% and less than or equal to 21.5 mol%, greater than or equal to 12 mol% and less than or equal to 21 mol%, greater than or equal to 12 mol% and less than or equal to 20.5 mol%, greater than or equal to 12 mol% and less than or equal to 20 mol%, greater than or equal to 13 mol% and less than or equal to 22 mol%, greater than or equal to 13 mol% and less than or equal to 21.5 mol%, greater than or equal to 13 mol% and less than or equal to 21 mol%, greater than or equal to 13 mol% and less than or equal to 20.5 mol%, greater than or equal to 13 mol% and less than or equal to 20 mol%, greater than or equal to 14 mol% and less than or equal to 22 mol%, greater than or equal to 14 mol% and less than or equal to 21.5 mol%, greater than or equal to 14 mol% and less than or equal to 21 mol%, greater than or equal to 14 mol% and less than or equal to 20.5 mol%, greater than or equal to 15 mol% and less than or equal to 20 mol%, greater than or equal to 15 mol% and less than or equal to 22 mol%, greater than or equal to 15 mol% and less than or equal to 21.5 mol%, greater than or equal to 15 mol% and less than or equal to 21 mol%, greater than or equal to 15 mol% and less than or equal to 20.5 mol%, greater than or equal to 15 mol% and less than or equal to 20 mol%, greater than or equal to 16 mol% and less than or equal to 22 mol%, greater than or equal to 16 mol% and less than or equal to 21.5 mol%, greater than or equal to 16 mol% and less than or equal to 21 mol%, greater than or equal to 16 mol% and less than or equal to 20.5 mol%, or even greater than or equal to 16 mol% and less than or equal to 20 mol%.

The sum of $Al_2O_3$, MgO, CaO, and ZnO present in the glass composition and the resultant colored glass article (i.e., $Al_2O_3$ (mol%) + MgO (mol%) + CaO (mol%) + ZnO (mol%)) is greater than or equal to 12 mol% and less than or equal to 24 mol%. While not wishing to be bound by theory, it is believed that combinations of $Al_2O_3$, MgO, CaO and ZnO within this range may aid in avoiding the formation of undesired crystal phases in the resultant colored glass articles. In addition, a relatively high concentration of high field strength modifiers, such as Mg, Ca, and Zn cations, may also improve the mechanical properties, such as fracture toughness, elastic modulus and drop test performance, of the resultant colored glass article.

In embodiments, the sum of $Al_2O_3$, MgO, CaO and ZnO in the glass composition and the resultant colored glass article may be greater than or equal to 12 mol%, greater than or equal to 13 mol%, greater than or equal to 14 mol%, greater than or equal to 15 mol%, or even greater than or equal to 16 mol%. In embodiments, the sum of $Al_2O_3$, MgO, CaO and ZnO in the glass composition and the resultant colored glass article may be less than or equal to 24 mol%, less than or equal to 23 mol%, less than or equal to 22 mol%, less than or equal to 21.5 mol%, less than or equal to 21 mol%, less than or equal to 20.5 mol%, or even less than or equal to 20 mol%. In embodiments, the sum of $Al_2O_3$, MgO, CaO and ZnO in the glass composition and the resultant colored glass article may be greater than or equal to 12 mol% and less than or equal to 24 mol%, greater than or equal to 12 mol% and less than or equal to 23 mol%, greater than or equal to 12 mol% and less than or equal to 22 mol%, greater than or equal to 12 mol% and less than or equal to 21.5 mol%, greater than or equal to 12 mol% and less than or equal to 21 mol%, greater than or equal to 12 mol% and less than or equal to 20.5 mol%, greater than or equal to 12 mol% and less than or equal to 20 mol%, greater than or equal to 13 mol% and less than or equal to 24 mol%, greater than or equal to 13 mol% and less than or equal to 23 mol%, greater than or equal to 13 mol% and less than or equal to 22 mol%, greater than or equal to 13 mol% and less than or equal to 21.5 mol%, greater than or equal to 13 mol% and less than or equal to 21 mol%, greater than or equal to 13 mol% and less than or equal to 20.5 mol%, greater than or equal to 13 mol% and less than or equal to 20 mol%, greater than or equal to 14 mol% and less than or equal to 24 mol%, greater than or equal to 14 mol% and less than or equal to 23 mol%, greater than or equal to 14 mol% and less than or equal to 22 mol%, greater than or equal to 14 mol% and less than or equal to 21.5 mol%, greater than or equal to 14 mol% and less than or equal to 21 mol%, greater than or equal to 14 mol% and less than or equal to 20.5 mol%, greater than or equal to 15 mol% and less than or equal to 24 mol%, greater than or equal to 15 mol% and less than or equal to 23 mol%, greater than or equal to 15 mol% and less than or equal to 22 mol%, greater than or equal to 15 mol% and less than or equal to 21.5 mol%, greater than or equal to 15 mol% and less than or equal to 21 mol%, greater than or equal to 15 mol% and less than or equal to 20.5 mol%, greater than or equal to 15 mol% and less than or equal to 20 mol%, greater than or equal to 16 mol% and less than or equal to 24 mol%, greater than or equal to 16 mol% and less than or equal to 23 mol%, greater than or equal to 16 mol% and less than or equal to 22 mol%, greater than or equal to 16 mol% and less than or equal to 21.5 mol%, greater than or equal to 16 mol% and less than or equal to 21 mol%, greater than or equal to 16 mol% and less than or equal to 20.5 mol%, or even greater than or equal to 16 mol% and less than or equal to 20 mol%.

In embodiments, the glass composition and the resultant colored glass article may optionally include Cl, which may enable growth of particular crystal phases containing colorant. For example, when the colorant package included in the glass comprises Au, the inclusion of Cl may enable the growth of certain Au crystals. In embodiments, the concentration of Cl in the glass composition and the resultant colored glass article may be greater than or equal to 0 mol% or even greater than or equal to 0.1 mol%. In embodiments, the concentration of Cl in the glass composition and the resultant colored glass article may be less than or equal to 0.5 mol% or even less than or equal to 0.25 mol%. In embodiments, the concentration of Cl in the glass composition and the resultant colored glass article may be greater than or equal to 0 mol% and less than or equal to 0.5 mol%, greater than or equal to 0 mol% and less than or equal to 0.25 mol%, greater than or equal to 0.1 mol% and less than or equal to 0.5 mol%, or even greater than or equal to 0.1 mol% and less than or equal to 0.25 mol%, or any and all sub-ranges formed from any of these endpoints. In embodiments, the glass composition and the resultant colored glass article may be substantially free or free of Cl. In embodiments where the colorant package comprises Ag, the glass composition and resultant colored glass article include less than 100 ppm of halides, including Cl.

In embodiments, the glass compositions and the resultant colored glass articles described herein may further comprise $ZrO_2$. While not wishing to be bound by theory, it is believed that $ZrO_2$ may act as a multivalent species that serves as redox couples to supply oxygen to certain colorants, for example Au, during relatively low-temperature heat treatment, which helps improve retention of the colorant. Without wishing to be bound by theory, it is hypothesized that similar behavior may occur with colorants other than Au. $ZrO_2$ may also act as an additional colorant, producing colored glass articles that may be, for example, red in color. In embodiments, the glass composition and the resultant colored glass article may comprise greater than or equal to 0.01 mol% and less than or equal to 2 mol% $ZrO_2$. In embodiments, the glass composition and the resultant colored glass article may comprise greater than or equal to 0.01 mol% and less than or equal to 2 mol% $ZrO_2$. In embodiments, the glass composition and the resultant colored glass article may comprise greater than or equal to 0.1 mol% and less than or equal to 1.5 mol% $ZrO_2$. In embodiments, the glass composition and the resultant colored glass article may comprise greater than or equal to 0.25 mol% and less than or equal to 1.5 mol% $ZrO_2$. In embodiments, the concentration of $ZrO_2$ in the glass composition may be greater than or equal to 0 mol%, greater than or equal to 0.01 mol%, greater than or equal to 0.1 mol%, or even greater than or equal to 0.2 mol%. In embodiments, the concentration of $ZrO_2$ in the glass composition may be less than or equal to 2 mol%, less than or equal to 1.5 mol%, less than or equal to 1 mol%, less than or equal to 0.75 mol%, or even less than or equal to 0.5 mol%. In embodiments, the concentration of $ZrO_2$ in the glass composition may be greater than or equal to 0 mol% and less than or equal to 2 mol%, greater than or equal to 0 mol% and less than or equal to 1.5 mol%, greater than or equal to 0 mol% and less than or equal to 1 mol%, greater than or equal to 0 mol% and less than or equal to 0.75 mol%, greater than or equal to 0 mol% and less than or equal to 0.5 mol%, greater than or equal to 0.01 mol% and less than or equal to 2 mol%, greater than or equal to 0.01 mol% and less than or equal to 1.5 mol%, greater than or equal to 0.01 mol% and less than or equal to 1 mol%, greater than or equal to 0.01 mol% and less than or equal to 0.75 mol%, greater than or equal to 0.01 mol% and less than or equal to 0.5 mol%, greater than or equal to 0.1 mol% and less than or equal to 2 mol%, greater than or equal to 0.1 mol% and less than or equal to 1.5 mol%, greater than or equal to 0.1 mol% and less than or equal to 1 mol%, greater than or equal to 0.1 mol% and less than or equal to 0.75 mol%, greater than or equal to 0.1 mol% and less than or equal to 0.5 mol%, greater than or equal to 0.2 mol% and less than or equal to 2 mol%, greater than or equal to 0.2 mol% and less than or equal to 1.5 mol%, greater than or equal to 0.2 mol% and less than or equal to 1 mol%, greater than or equal to 0.2 mol% and less than or equal to 0.75 mol%, or even greater than or equal to 0.2 mol% and less than or equal to 0.5 mol% In embodiments, the glass composition and the resultant colored glass article may be substantially free or free of $ZrO_2$.

In embodiments, the glass compositions and the resultant colored glass articles described herein may further comprise $Fe_2O_3$, which may help improve colorant retention. $Fe_2O_3$ is a multivalent species that serves as redox couples to supply oxygen to certain colorants, for example Au, during relatively low-temperature heat treatment, which helps improve retention of the colorant. Without wishing to be bound by theory, it is hypothesized that similar behavior may occur with colorants other than Au. $Fe_2O_3$ may also act as a colorant, producing colored glass articles that may, for example, be pink or red in color. In embodiments, the glass composition and the resultant colored glass article may comprise greater than or equal to 0.01 mol% and less than or equal to 1 mol% $Fe_2O_3$ or even greater than or equal to 0.1 mol% and less than or equal to 1 mol% $Fe_2O_3$. In embodiments, the concentration of $Fe_2O_3$ in the glass composition may be greater than or equal to 0 mol%, greater than or equal to 0.01 mol%, or even greater than or equal to 0.1 mol%. In embodiments, the concentration of $Fe_2O_3$ in the glass composition may be less than or equal to 1 mol%, less than or equal to 0.75 mol%, less than or equal to 0.5 mol%, or even less than or equal to 0.25 mol%. In embodiments, the concentration of $Fe_2O_3$ in the glass composition may be greater than or equal to 0 mol% and less than or equal to 1 mol%, greater than or equal to 0 mol% and less than or equal to 0.75 mol%, greater than or equal to 0 mol% and less than or equal to 0.5 mol%, greater than or equal to 0 mol% and less than or equal to 0.25 mol%, greater than or equal to 0.01 mol% and less than or equal to 1 mol%, greater than or equal to 0.01 mol% and less than or equal to 0.75 mol%, greater than or equal to 0.01 mol% and less than or equal to 0.5 mol%, greater than or equal to 0.01 mol% and less than or equal to 0.25 mol%, greater than or equal to 0.05 mol% and less than or equal to 1 mol%, greater than or equal to 0.05 mol% and less than or equal to 0.75 mol%, greater than or equal to 0.05 mol% and less than or equal to 0.5 mol%, greater than or equal to 0.05 mol% and less than or equal to 0.25 mol%, greater than or equal to 0.1 mol% and less than or equal to 1 mol%, greater than or equal to 0.1 mol% and less than or equal to 0.75 mol%, greater than or equal to 0.1 mol% and less than or equal to 0.5 mol%, greater than or equal to 0.1 mol% and less than or equal to 0.25 mol%. In embodiments, the glass composition and the resultant colored glass article may be substantially free or free of $Fe_2O_3$.

In embodiments, the concentration of $Fe_2O_3$ in the glass composition and the resultant colored glass article may be greater than or equal to 0 mol%, greater than or equal to 0.001 mol%, or even greater than or equal to 0.005 mol%. In embodiment, the concentration of $Fe_2O_3$ in the glass composition and the resultant colored glass article may be less than or equal to 0.5 mol%, less than or equal to 0.1 mol%, less than or equal to 0.05 mol%, or even less than or equal to 0.01 mol%. In embodiments, the composition and the resultant colored glass article may be greater than or equal to 0 mol% and less than or equal to 0.5 mol%, greater than or equal to 0 mol% and less than or equal to 0.1 mol%, greater than or equal to 0 mol% and less than or equal to 0.05 mol%, greater than or equal to 0 mol% and less than or equal to 0.01 mol%, greater than or equal to 0.001 mol% and less than or equal to 0.5 mol%, greater than or equal to 0.001 mol% and less than or equal to 0.1 mol%, greater than or equal to 0.001 mol% and less than or equal to 0.05 mol%, greater than or equal to 0.001 mol% and less than or equal to 0.01 mol%, greater than or equal to 0.005 mol% and less than or equal to 0.5 mol%, greater than or equal to 0.005 mol% and less than or equal to 0.1 mol%, greater than or equal to 0.005 mol% and less than or equal to 0.05 mol%, or even greater than or equal to 0.005 mol% and less than or equal to 0.01 mol%.

In embodiments, the glass compositions and the resultant colored glass articles described herein may further comprise $SnO_2$, $Sb_2O_3$, and/or $Bi_2O_3$. Like MgO and ZnO, $SnO_2$, $Sb_2O_3$, and $Bi_2O_3$ may help lower the melting point of the glass composition. Accordingly, $SnO_2$, $Sb_2O_3$, and/or $Bi_2O_3$ may be included in the glass composition and the resultant colored glass articles to lower the melting point and improve colorant retention. In embodiments in which the colorant package includes Ag, $SnO_2$ also aids in the reduction of Ag in the glass leading to the formation of silver particles in the glass. While not wishing to be bound by theory, in embodiments where the colorant package includes Au, it is believed that additions of $SnO_2$ may also aid in the reduction of Au in the glass, leading to the formation of gold particles. In embodiments that include $SnO_2$ and/or $Sb_2O_3$, the $SnO_2$ and/or $Sb_2O_3$ may also function as a fining agent.

In embodiments, the glass composition and the resultant colored glass article may comprise greater than or equal to 0.01 mol% and less than or equal to 1 mol% $SnO_2$. In embodiments, the glass composition and the resultant colored glass article may comprise greater than or equal to 0.05 mol% and less than or equal to 0.75 mol% $SnO_2$, greater than or equal to 0.05 mol% and less than or equal to 0.5 mol% $SnO_2$, or even greater than or equal to 0.1 mol% and less than or equal to 0.25 mol% $SnO_2$. In embodiments, the concentration of $SnO_2$ in the glass composition and the resultant colored glass article may be greater than or equal to 0 mol%, greater than or equal to 0.01 mol%, greater than or equal to 0.05 mol%, or even greater than or equal to 0.1 mol%. In embodiments, the concentration of $SnO_2$ in the glass composition and the resultant colored glass article may be less than or equal to 1 mol%, less than or equal to 0.75 mol%, less than or equal to 0.5 mol%, or even less than or equal to 0.25 mol%. In embodiments, the concentration of $SnO_2$ in the glass composition and the resultant colored glass article may be greater than or equal to 0 mol% and less than or equal to 1 mol%, greater than or equal to 0 mol% and less than or equal to 0.75 mol%, greater than or equal to 0 mol% and less than or equal to 0.5 mol%, greater than or equal to 0 mol% and less than or equal to 0.25 mol%, greater than or equal to 0.01 mol% and less than or equal to 1 mol%, greater than or equal to 0.01 mol% and less than or equal to 0.75 mol%, greater than or equal to 0.01 mol% and less than or equal to 0.5 mol%, greater than or equal to 0.01 mol% and less than or equal to 0.25 mol%, greater than or equal to 0.05 mol% and less than or equal to 1 mol%, greater than or equal to 0.05 mol% and less than or equal to 0.75 mol%, greater than or equal to 0.05 mol% and less than or equal to 0.5 mol%, greater than or equal to 0.05 mol% and less than or equal to 0.25 mol%, greater than or equal to 0.1 mol% and less than or equal to 1 mol%, greater than or equal to 0.1 mol% and less than or equal to 0.75 mol%, greater than or equal to 0.1 mol% and less than or equal to 0.5 mol%, or even greater than or equal to 0.1 mol% and less than or equal to 0.25 mol%. In embodiments, the glass composition and the resultant colored glass article may be substantially free or free of $SnO_2$.

In embodiments, the concentration of $Sb_2O_3$ in the glass composition and the resultant colored glass article may be greater than or equal to 0 mol%, greater than or equal to 0.01 mol%, greater than or equal to 0.05 mol%, or even greater than or equal to 0.1 mol%. In embodiments, the concentration of $Sb_2O_3$ in the glass composition and the resultant colored glass article may be less than or equal to 1 mol%, less than or equal to 0.75 mol%, less than or equal to 0.5 mol%, or even less than or equal to 0.25 mol%. In embodiments, the concentration of $Sb_2O_3$ in the glass composition and the resultant colored glass article may be greater than or equal to 0 mol% and less than or equal to 1 mol%, greater than or equal to 0 mol% and less than or equal to 0.75 mol%, greater than or equal to 0 mol% and less than or equal to 0.5 mol%, greater than or equal to 0 mol% and less than or equal to 0.25 mol%, greater than or equal to 0.01 mol% and less than or equal to 1 mol%, greater than or equal to 0.01 mol% and less than or equal to 0.75 mol%, greater than or equal to 0.01 mol% and less than or equal to 0.5 mol%, greater than or equal to 0.01 mol% and less than or equal to 0.25 mol%, greater than or equal to 0.05 mol% and less than or equal to 1 mol%, greater than or equal to 0.05 mol% and less than or equal to 0.75 mol%, greater than or equal to 0.05 mol% and less than or equal to 0.5 mol%, greater than or equal to 0.05 mol% and less than or equal to 0.25 mol%, greater than or equal to 0.1 mol% and less than or equal to 1 mol%, greater than or equal to 0.1 mol% and less than or equal to 0.75 mol%, greater than or equal to 0.1 mol% and less than or equal to 0.5 mol%, or even greater than or equal to 0.1 mol% and less than or equal to 0.25 mol%. In embodiments, the glass composition and the resultant colored glass article may be substantially free or free of $Sb_2O_3$.

The glass composition and the resultant colored glass article may comprise $Bi_2O_3$ as an additional component in the color package for the purposes of achieving a desired color, such as a yellow color. In embodiments, the concentration of $Bi_2O_3$ in the glass composition and the resultant colored glass article may be greater than or equal to 0 mol%, greater than or equal to 0.01 mol%, greater than or equal to 0.05 mol%, or even greater than or equal to 0.1 mol%. In embodiments, the concentration of $Bi_2O_3$ in the glass composition and the resultant colored glass article may be less than or equal to 1 mol%, less than or equal to 0.75 mol%, less than or equal to 0.5 mol%, or even less than or equal to 0.25 mol%. In embodiments, the concentration of $Bi_2O_3$ in the glass composition and the resultant colored glass article may be greater than or equal to 0 mol% and less than or equal to 1 mol%, greater than or equal to 0 mol% and less than or equal to 0.75 mol%, greater than or equal to 0 mol% and less than or equal to 0.5 mol%, greater than or equal to 0 mol% and less than or equal to 0.25 mol%, greater than or equal to 0.01 mol% and less than or equal to 1 mol%, greater than or equal to 0.01 mol% and less than or equal to 0.75 mol%, greater than or equal to 0.01 mol% and less than or equal to 0.5 mol%, greater than or equal to 0.01 mol% and less than or equal to 0.25 mol%, greater than or equal to 0.05 mol% and less than or equal to 1 mol%, greater than or equal to 0.05 mol% and less than or equal to 0.75 mol%, greater than or equal to 0.05 mol% and less than or equal to 0.5 mol%, greater than or equal to 0.05 mol% and less than or equal to 0.25 mol%, greater than or equal to 0.1 mol% and less than or equal to 1 mol%, greater than or equal to 0.1 mol% and less than or equal to 0.75 mol%, greater than or equal to 0.1 mol% and less than or equal to 0.5 mol%, or even greater than or equal to 0.1 mol% and less than or equal to 0.25 mol%. In embodiments, the glass composition and the resultant colored glass article may be substantially free or free of $Bi_2O_3$.

The glass compositions and the resultant colored glass articles described herein may further comprise $SO_3$ as a fining agent. $SO_3$ may be utilized as a fining agent without impacting the color or color stability of the colored glass article. In embodiments, the concentration of $SO_3$ in the glass composition and the resultant colored glass article may be less than or equal to 0.1 mol%, less than or equal to 0.01 mol%, or even less than or equal to 0.001 mol%. In embodiments, the glass composition and the resultant colored glass article may be substantially free or free of $SO_3$. In embodiments, the glass composition and the resultant glass colored article may comprise greater than or equal to 0 mol% to less than or equal to 1 mol% $SO_3$.

The glass composition and the resultant colored glass article may comprise $WO_3$ as an additional component in the color package for the purposes of achieving a desired color, such as a yellow color. In embodiments, the concentration of $WO_3$ in the glass composition and the resultant colored glass article may be greater than or equal to 0 mol% and less than or equal to 1 mol%, such as greater than or equal to 0 mol% and less than or equal to 0.5 mol%, greater than 0 mol% and less than or equal to 0.1 mol%, greater than or equal to 0.001 mol% and less than or equal to 0.01 mol%, and all sub-ranges formed from any of these endpoints. In embodiments, the glass composition and the resultant colored glass article may be substantially free or free of $WO_3$.

The glass composition and the resultant colored glass article may comprise $Nb_2O_5$ as an additional component in the color package for the purposes of achieving a desired color, such as a yellow color. In embodiments, the concentration of $Nb_2O_5$ in the glass composition and the resultant colored glass article may be greater than or equal to 0 mol% and less than or equal to 1 mol%, such as greater than or equal to 0 mol% and less than or equal to 0.5 mol%, greater than 0 mol% and less than or equal to 0.1 mol%, greater than or equal to 0.001 mol% and less than or equal to 0.01 mol%, and all sub-ranges formed from any of these endpoints. In embodiments, the glass composition and the resultant colored glass article may be substantially free or free of $Nb_2O_5$.

The glass composition and the colored glass article may comprise $MoO_3$ as an additional component in the color package for the purposes of achieving a desired color, such as a yellow color. In embodiments, the concentration of $MoO_3$ in the glass composition and the resultant colored glass article may be greater than or equal to 0 mol% and less than or equal to 1 mol%, such as greater than or equal to 0 mol% and less than or equal to 0.5 mol%, greater than 0 mol% and less than or equal to 0.1 mol%, greater than or equal to 0.001 mol% and less than or equal to 0.01 mol%, and all sub-ranges formed from any of these endpoints. In embodiments, the glass composition and the resultant colored glass article may be substantially free or free of $MoO_3$.

The glass composition and the colored glass article may comprise $La_2O_3$ as an additional component in the color package for the purposes of achieving a desired color, such as a yellow color. In embodiments, the concentration of $La_2O_3$ in the glass composition and the resultant colored glass article may be greater than or equal to 0 mol% and less than or equal to 3 mol%, such as greater than or equal to 0 mol% and less than or equal to 2 mol%, greater than 0 mol% and less than or equal to 1 mol%, greater than or equal to 0.001 mol% and less than or equal to 0.1 mol%, and all sub-ranges formed from any of these endpoints. In embodiments, the glass composition and the colored glass article may be substantially free or free of $La_2O_3$.

In embodiments, the glass compositions and the resultant colored glass articles described herein may further comprise a reduced concentration or be substantially free or free of $P_2O_5$. In embodiments where $P_2O_5$ is included, the $P_2O_5$ may enhance the ion exchange characteristics of the resultant colored glass article. However, an increased concentration (i.e., greater than 1 mol%) of $P_2O_5$ may reduce the retention of one or more colorants in the colorant package. While not wishing to be bound by theory, it is believed that $P_2O_5$ may be more volatile than other glass network formers, such as $SiO_2$, which may contribute to reduced retention of colorants in the colorant package. In embodiments, the glass composition and the resultant colored glass article may comprise greater than or equal to 0.1 mol% and less than or equal to 1 mol% $P_2O_5$. In embodiments, the concentration of $P_2O_5$ in the glass composition and the resultant colored glass article may be greater than or equal to 0 mol%, greater than or equal to 0.1 mol%, greater than or equal to 0.25 mol%, or even greater than or equal to 0.5 mol%. In embodiments, the concentration of $P_2O_5$ in the glass composition and the resultant colored glass article may be less than or equal to 1 mol% or even less than or equal to 0.75 mol%. In embodiments, the concentration of $P_2O_5$ in the glass composition and the resultant colored glass article may be greater than or equal to 0 mol% and less than or equal to 1 mol%, greater than or equal to 0 mol% and less than or equal to 0.75 mol%, greater than or equal to 0.1 mol% and less than or equal to 1 mol%, greater than or equal to 0.1 mol% and less than or equal to 0.75 mol%, greater than or equal to 0.25 mol% and less than or equal to 1 mol%, greater than or equal to 0.25 mol% and less than or equal to 0.75 mol%, greater than or equal to 0.5 mol% and less than or equal to 1 mol%, or even greater than or equal to 0.5 mol% and less than or equal to 0.75 mol%. In embodiments, the glass composition and the resultant colored glass article may be substantially free or free of $P_2O_5$.

In embodiments, the glass composition and the resultant colored glass article may comprise greater than or equal to 0 mol% and less than or equal to 3 mol% $P_2O_5$. In embodiments, the concentration of $P_2O_5$ in the glass composition and the resultant colored glass article may be greater than or equal to 0 mol%, greater than or equal to 0.1 mol%, greater than or equal to 0.25 mol%, or even greater than or equal to 0.5 mol%. In embodiments, the concentration of $P_2O_5$ in the glass composition and the resultant colored glass article may be less than or equal to 3 mol%, less than or equal to 2, or even less than or equal to 1 mol%. In embodiments, the concentration of $P_2O_5$ in the glass composition and the resultant colored glass article may be greater than or equal to 0 mol% and less than or equal to 3 mol%, greater than or equal to 0 mol% and less than or equal to 2 mol%, greater than or equal to 0 mol% and less than or equal to 1 mol%, greater than or equal to 0.1 mol% and less than or equal to 3 mol%, greater than or equal to 0.1 mol% and less than or equal to 2 mol%, greater than or equal to 0.1 mol% and less than or equal to 1 mol%, greater than or equal to 0.25 mol% and less than or equal to 3 mol%, greater than or equal to 0.25 mol% and less than or equal to 2 mol%, greater than or equal to 0.25 mol% and less than or equal to 1 mol%, greater than or equal to 0.5 mol% and less than or equal to 3 mol%, greater than or equal to 0.5 mol% and less than or equal to 2 mol%, or even greater than or equal to 0.5 mol% and less than or equal to 1 mol%.

In the embodiments described herein, the glass compositions and resultant colored glass articles further comprise at least one colorant in a colorant package that functions to impart a desired color to the resultant colored glass article. The colorant package may comprise at least one of $Cr_2O_3$, $CuO$, $NiO$, and $Co_3O_4$, and/or combinations thereof as colorants in the colorant package. The glass compositions and resultant colored glass articles include greater than or equal to $1 \times 10^{-6}$ mol% and less than or equal to 10 mol% of colorant (i.e., the sum of all colorants in the colorant package). In embodiments, the concentration of the colorant package in the glass compositions and resultant colored glass articles may be greater than or equal to $1 \times 10^{-6}$ mol% and less than or equal to 9.5 mol%, greater than or equal to $1 \times 10^{-6}$ mol% and less than or equal to 9 mol%, greater than or equal to $1 \times 10^{-6}$ mol% and less than or equal to 8.5 mol%, greater than or equal to $1 \times 10^{-6}$ mol% and less than or equal to 8 mol%, greater than or equal to $1 \times 10^{-6}$ mol% and less than or equal to 7.5 mol%, greater than or equal to $1 \times 10^{-6}$ mol% and less than or equal to 7 mol%, greater than or equal to $1 \times 10^{-6}$ mol% and less than or equal to 6.5 mol%, greater than or equal to $1 \times 10^{-6}$ mol% and less than or equal to 6 mol%, greater than or equal to $1 \times 10^{-6}$ mol% and less than or equal to 5.5 mol%, greater than or equal to $1 \times 10^{-6}$ mol% and less than or equal to 5 mol%, greater than or equal to $1 \times 10^{-6}$ mol% and less than or equal to 4.5 mol%, greater than or equal to $1 \times 10^{-6}$ mol% and less than or equal to 4 mol%, greater than or equal to $1 \times 10^{-6}$ mol% and less than or equal to 3.5 mol%, greater than or equal to $1 \times 10^{-6}$ mol% and less than or equal to 3 mol%, greater than or equal to $1 \times 10^{-6}$ mol% and less than or equal to 2.5 mol%, greater than or equal to $1 \times 10^{-6}$ mol% and less than or equal to 2 mol%, greater than or equal to $1 \times 10^{-6}$ mol% and less than or equal to 1.5 mol%, greater than or equal to $1 \times 10^{-6}$ mol% and less than or equal to 1 mol%, greater than or equal to $1 \times 10^{-6}$ mol% and less than or equal to 0.5 mol%, greater than or equal to 0.0005 mol% and less than or equal to 10 mol%, greater than or equal to 0.0005 mol% and less than or equal to 9.5 mol%, greater than or equal to 0.0005 mol% and less than or equal to 9 mol%, greater than or equal to 0.0005 mol% and less than or equal to 8.5 mol%, greater than or equal to 0.0005 mol% and less than or equal to 8 mol%, greater than or equal to 0.0005 mol% and less than or equal to 7.5 mol%, greater than or equal to 0.0005 mol% and less than or equal to 7 mol%, greater than or equal to 0.0005 mol% and less than or equal to 6.5 mol%, greater than or equal to 0.0005 mol% and less than or equal to 6 mol%, greater than or equal to 0.0005 mol% and less than or equal to 5.5 mol%, greater than or equal to 0.0005 mol% and less than or equal to 5 mol%, greater than or equal to 0.0005 mol% and less than or equal to 4.5 mol%, greater than or equal to 0.0005 mol% and less than or equal to 4 mol%, greater than or equal to 0.0005 mol% and less than or equal to 3.5 mol%, greater than or equal to 0.0005 mol% and less than or equal to 3 mol%, greater than or equal to 0.0005 mol% and less than or equal to 2.5 mol%, greater than or equal to 0.0005 mol% and less than or equal to 2 mol%, greater than or equal to 0.0005 mol% and less than or equal to 1.5 mol%, greater than or equal to 0.0005 mol% and less than or equal to 1 mol%, greater than or equal to 0.0005 mol% and less than or equal to 0.5 mol%, greater than or equal to 0.001 mol% and less than or equal to 9.5 mol%, greater than or equal to 0.001 mol% and less than or equal to 9 mol%, greater than or equal to 0.001 mol% and less than or equal to 8.5 mol%, greater than or equal to 0.001 mol% and less than or equal to 8 mol%, greater than or equal to 0.001 mol% and less than or equal to 7.5 mol%, greater than or equal to 0.001 mol% and less than or equal to 7 mol%, greater than or equal to 0.001 mol% and less than or equal to 6.5 mol%, greater than or equal to 0.001 mol% and less than or equal to 6 mol%, greater than or equal to 0.001 mol% and less than or equal to 5.5 mol%, greater than or equal to 0.001 mol% and less than or equal to 5 mol%, greater than or equal to 0.001 mol% and less than or equal to 4.5 mol%, greater than or equal to 0.001 mol% and less than or equal to 4 mol%, greater than or equal to 0.001 mol% and less than or equal to 3.5 mol%, greater than or equal to 0.001 mol% and less than or equal to 3 mol%, greater than or equal to 0.001 mol% and less than or equal to 2.5 mol%, greater than or equal to 0.001 mol% and less than or equal to 2 mol%, greater than or equal to 0.001 mol% and less than or equal to 1.5 mol%, greater than or equal to 0.001 mol% and less than or equal to 1 mol%, greater than or equal to 0.001 mol% and less than or equal to 0.5 mol%, greater than or equal to 0.01 mol% and less than or equal to 9.5 mol%, greater than or equal to 0.01 mol% and less than or equal to 9 mol%, greater than or equal to 0.01 mol% and less than or equal to 8.5 mol%, greater than or equal to 0.01 mol% and less than or equal to 8 mol%, greater than or equal to 0.01 mol% and less than or equal to 7.5 mol%, greater than or equal to 0.01 mol% and less than or equal to 7 mol%, greater than or equal to 0.01 mol% and less than or equal to 6.5 mol%, greater than or equal to 0.01 mol% and less than or equal to 6 mol%, greater than or equal to 0.01 mol% and less than or equal to 5.5 mol%, greater than or equal to 0.01 mol% and less than or equal to 5 mol%, greater than or equal to 0.01 mol% and less than or equal to 4.5 mol%, greater than or equal to 0.01 mol% and less than or equal to 4 mol%, greater than or equal to 0.01 mol% and less than or equal to 3.5 mol%, greater than or equal to 0.01 mol% and less than or equal to 3 mol%, greater than or equal to 0.01 mol% and less than or equal to 2.5 mol%, greater than or equal to 0.01 mol% and less than or equal to 2 mol%, greater than or equal to 0.01 mol% and less than or equal to 1.5 mol%, greater than or equal to 0.01 mol% and less than or equal to 1 mol%, greater than or equal to 0.01 mol% and less than or equal to 0.5 mol%.

### Colorant: Transition Metal Oxides and/or Rare Earth Oxides

In embodiments, the colorant package in the glass compositions and the resultant colored glass articles may include colorants that comprise or consist of transition metal oxides, rare earth oxides, or combinations thereof, to achieve a desired color. In embodiments, transition metal oxides and/or rare earth oxides may be included in the glass compositions as the sole colorant or in combination with other colorants. Colorants based on transition metal oxides and/or rare earth oxides include $NiO$, $Co_3O_4$, $Cr_2O_3$, and $CuO$, and/or combinations thereof.

In embodiments, the glass composition and the resultant colored glass article may comprise greater than or equal to 0.001 mol%, such as greater than or equal to 0.001 mol% and less than or equal to 10 mol%, $NiO + Co_3O_4 + Cr_2O_3 + CuO$. In embodiments, the concentration of $NiO + Co_3O_4 + Cr_2O_3 + CuO$ in the glass composition and the resultant colored glass article may be greater than or equal to 0.001 mol% and less than or equal to 5 mol%, greater than or equal to 0.001 mol% and less than or equal to 4 mol%, greater than or equal to 0.001 mol% and less than or equal to 3 mol%, greater than or equal to 0.001 mol% and less than or equal to 2.5 mol%, greater than or equal to 0.001 mol% and less than or equal to 2 mol%, greater than or equal to 0.001 mol% and less than or equal to 1.5 mol%, greater than or equal to 0.01 mol% and less than or equal to 5 mol%, greater than or equal to 0.01 mol% and less than or equal to 4 mol%, greater than or equal to 0.01 mol% and less than or equal to 3 mol%, greater than or equal to 0.01 mol% and less than or equal to 2.5 mol%, greater than or equal to 0.01 mol% and less than or equal to 2 mol%, greater than or equal to 0.01 mol% and less than or equal to 1.5 mol%, greater than or equal to 0.02 mol% and less than or equal to 5 mol%, greater than or equal to 0.02 mol% and less than or equal to 4 mol%, greater than or equal to 0.02 mol% and less than or equal to 3 mol%, greater than or equal to 0.02 mol% and less than or equal to 2.5 mol%, greater than or equal to 0.02 mol% and less than or equal to 2 mol%, greater than or equal to 0.02 mol% and less than or equal to 1.5 mol%, greater than or equal to 0.1 mol% and less than or equal to 5 mol%, greater than or equal to 0.1 mol% and less than or equal to 4 mol%, greater than or equal to 0.1 mol% and less than or equal to 3 mol%, greater than or equal to 0.1 mol% and less than or equal to 2.5 mol%, greater than or equal to 0.1 mol% and less than or equal to 2 mol%, greater than or equal to 0.1 mol% and less than or equal to 1.5 mol%, greater than or equal to 0.5 mol% and less than or equal to 5 mol%, greater than or equal to 0.5 mol% and less than or equal to 4 mol%, greater than or equal to 0.5 mol% and less than or equal to 3 mol%, greater than or equal to 0.5 mol% and less than or equal to 2.5 mol%, greater than or equal to 0.5 mol% and less than or equal to 2 mol%, greater than or equal to 0.5 mol% and less than or equal to 1.5 mol%, greater than or equal to 0.7 mol% and less than or equal to 5 mol%, greater than or equal to 0.7 mol% and less than or equal to 4 mol%, greater than or equal to 0.7 mol% and less than or equal to 3 mol%, greater than or equal to 0.7 mol% and less than or equal to 2.5 mol%, greater than or equal to 0.7 mol% and less than or equal to 2 mol%, greater than or equal to 0.7 mol% and less than or equal to 1.5 mol%, greater than or equal to 0.9 mol% and less than or equal to 5 mol%, greater than or equal to 0.9 mol% and less than or equal to 4 mol%, greater than or equal to 0.9 mol% and less than or equal to 3 mol%, greater than or equal to 0.9 mol% and less than or equal to 2.5 mol%, greater than or equal to 0.9 mol% and less than or equal to 2 mol%, greater than or equal to 0.9 mol% and less than or equal to 1.5 mol%. In embodiments, the glass composition and resultant glass article may comprise 0 mol% of one or more of $NiO$, $Co_3O_4$, $Cr_2O_3$, and/or $CuO$.

In embodiments, the glass composition and the resultant colored glass article may comprise greater than or equal to 0.001 mol%, such as greater than or equal to 0.001 mol% and less than or equal to 3 mol%, $NiO + Co_3O_4 + Cr_2O_3 + CuO$. In embodiments, the concentration of $NiO + Co_3O_4 + Cr_2O_3 + CuO$ in the glass composition and the resultant colored glass article may be greater than or equal to 0.001 mol% and less than or equal to 2.5 mol%, greater than or equal to 0.001 mol% and less than or equal to 2 mol%, greater than or equal to 0.001 mol% and less than or equal to 1.5 mol%, greater than or equal to 0.001 mol% and less than or equal to 1 mol%, greater than or equal to 0.001 mol% and less than or equal to 0.5 mol%, greater than or equal to 0.001 mol% and less than or equal to 0.4 mol%, greater than or equal to 0.01 mol% and less than or equal to 2.5 mol%, greater than or equal to 0.01 mol% and less than or equal to 2 mol%, greater than or equal to 0.01 mol% and less than or equal to 1.5 mol%, greater than or equal to 0.01 mol% and less than or equal to 1 mol%, greater than or equal to 0.01 mol% and less than or equal to 0.5 mol%, greater than or equal to 0.01 mol% and less than or equal to 0.4 mol%, greater than or equal to 0.02 mol% and less than or equal to 2.5 mol%, greater than or equal to 0.02 mol% and less than or equal to 2 mol%, greater than or equal to 0.02 mol% and less than or equal to 1.5 mol%, greater than or equal to 0.02 mol% and less than or equal to 1 mol%, greater than or equal to 0.02 mol% and less than or equal to 0.5 mol%, greater than or equal to 0.02 mol% and less than or equal to 0.4 mol%, greater than or equal to 0.1 mol% and less than or equal to 2.5 mol%, greater than or equal to 0.1 mol% and less than or equal to 2 mol%, greater than or equal to 0.1 mol% and less than or equal to 1.5 mol%, greater than or equal to 0.1 mol% and less than or equal to 1 mol%, greater than or equal to 0.1 mol% and less than or equal to 0.5 mol%, greater than or equal to 0.1 mol% and less than or equal to 0.4 mol%, greater than or equal to 0.2 mol% and less than or equal to 2.5 mol%, greater than or equal to 0.2 mol% and less than or equal to 2 mol%, greater than or equal to 0.2 mol% and less than or equal to 1.5 mol%, greater than or equal to 0.2 mol% and less than or equal to 1 mol%, greater than or equal to 0.2 mol% and less than or equal to 0.5 mol%, or greater than or equal to 0.2 mol% and less than or equal to 0.4 mol%. In embodiments, the glass composition and resultant glass article may comprise 0 mol% of one or more of NiO, $Co_3O_4$, $Cr_2O_3$, and/or CuO.

In embodiments, the glass composition and the resultant colored glass article may comprise greater than or equal to 0 mol%, such as greater than or equal to 0.01 mol% and less than or equal to 0.05 mol%, NiO. In embodiments, the concentration of NiO in the glass composition and the resultant colored glass article may be greater than or equal to 0 mol% and less than or equal to 0.05 mol%, greater than or equal to 0 mol% and less than or equal to 0.04 mol%, greater than or equal to 0 mol% and less than or equal to 0.035 mol%, greater than or equal to 0 mol% and less than or equal to 0.03 mol%, greater than or equal to 0 mol% and less than or equal to 0.025 mol%, greater than or equal to 0 mol% and less than or equal to 0.02 mol%, greater than or equal to 0 mol% and less than or equal to 0.015 mol%, greater than or equal to 0.01 mol% and less than or equal to 0.05 mol%, greater than or equal to 0.01 mol% and less than or equal to 0.04 mol%, greater than or equal to 0.01 mol% and less than or equal to 0.035 mol%, greater than or equal to 0.01 mol% and less than or equal to 0.03 mol%, greater than or equal to 0.01 mol% and less than or equal to 0.025 mol%, greater than or equal to 0.01 mol% and less than or equal to 0.02 mol%, greater than or equal to 0.01 mol% and less than or equal to 0.015 mol%, greater than or equal to 0.015 mol% and less than or equal to 0.05 mol%, greater than or equal to 0.015 mol% and less than or equal to 0.04 mol%, greater than or equal to 0.015 mol% and less than or equal to 0.035 mol%, greater than or equal to 0.015 mol% and less than or equal to 0.03 mol%, greater than or equal to 0.015 mol% and less than or equal to 0.025 mol%, or even greater than or equal to 0.015 mol% and less than or equal to 0.02 mol%.

In embodiments, the glass composition and the resultant colored glass article may comprise greater than or equal to 0 mol%, such as greater than or equal to 0.1 mol% and less than or equal to 0.5 mol%, CuO. In embodiments, the concentration of CuO in the glass composition and the resultant colored glass article may be greater than or equal to 0.1 mol% and less than or equal to 0.5 mol%, greater than or equal to 0.1 mol% and less than or equal to 0.4 mol%, greater than or equal to 0.1 mol% and less than or equal to 0.35 mol%, greater than or equal to 0.1 mol% and less than or equal to 0.3 mol%, greater than or equal to 0.1 mol% and less than or equal to 0.25 mol%, greater than or equal to 0.1 mol% and less than or equal to 0.2 mol%, greater than or equal to 0.1 mol% and less than or equal to 0.15 mol%, greater than or equal to 0.15 mol% and less than or equal to 0.5 mol%, greater than or equal to 0.15 mol% and less than or equal to 0.4 mol%, greater than or equal to 0.15 mol% and less than or equal to 0.35 mol%, greater than or equal to 0.15 mol% and less than or equal to 0.3 mol%, greater than or equal to 0.15 mol% and less than or equal to 0.25 mol%, or even greater than or equal to 0.15 mol% and less than or equal to 0.2 mol%.

In embodiments, the glass composition and the resultant colored glass article may comprise greater than or equal to 0 mol%, such as greater than or equal to 0.0001 mol% and less than or equal to 0.01 mol%, $Co_3O_4$. In embodiments, the concentration of $Co_3O_4$ in the glass composition and the resultant colored glass article may be greater than or equal to 0 mol% and less than or equal to 0.01 mol%, greater than or equal to 0 mol% and less than or equal to 0.0095 mol%, greater than or equal to 0 mol% and less than or equal to 0.009 mol%, greater than or equal to 0 mol% and less than or equal to 0.0085 mol%, greater than or equal to 0 mol% and less than or equal to 0.0075 mol%, greater than or equal to 0 mol% and less than or equal to 0.007 mol%, greater than or equal to 0 mol% and less than or equal to 0.0065 mol%, greater than or equal to 0 mol% and less than or equal to 0.006 mol%, greater than or equal to 0 mol% and less than or equal to 0.0055 mol%, greater than or equal to 0 mol% and less than or equal to 0.005 mol%, greater than or equal to 0 mol% and less than or equal to 0.0045 mol%, greater than or equal to 0 mol% and less than or equal to 0.004 mol%, greater than or equal to 0 mol% and less than or equal to 0.0035 mol%, greater than or equal to 0 mol% and less than or equal to 0.003 mol%, greater than or equal to 0 mol% and less than or equal to 0.0025 mol%, greater than or equal to 0 mol% and less than or equal to 0.002 mol%, greater than or equal to 0.0001 mol% and less than or equal to 0.01 mol%, greater than or equal to 0.0001 mol% and less than or equal to 0.0095 mol%, greater than or equal to 0.0001 mol% and less than or equal to 0.009 mol%, greater than or equal to 0.0001 mol% and less than or equal to 0.0085 mol%, greater than or equal to 0.0001 mol% and less than or equal to 0.0075 mol%, greater than or equal to 0.0001 mol% and less than or equal to 0.007 mol%, greater than or equal to 0.0001 mol% and less than or equal to 0.0065 mol%, greater than or equal to 0.0001 mol% and less than or equal to 0.006 mol%, greater than or equal to 0.0001 mol% and less than or equal to 0.0055 mol%, greater than or equal to 0.0001 mol% and less than or equal to 0.005 mol%, greater than or equal to 0.0001 mol% and less than or equal to 0.0045 mol%, greater than or equal to 0.0001 mol% and less than or equal to 0.004 mol%, greater than or equal to 0.0001 mol% and less than or equal to 0.0035 mol%, greater than or equal to 0.0001 mol% and less than or equal to 0.003 mol%, greater than or equal to 0.0001 mol% and less than or equal to 0.0025 mol%, greater than or equal to 0.0001 mol% and less than or equal to 0.002 mol%, greater than or equal to 0.001 mol% and less than or equal to 0.01 mol%, greater than or equal to 0.001 mol% and less than or equal to 0.0095 mol%, greater than or equal to 0.001 mol% and less than or equal to 0.009 mol%, greater than or equal to 0.001 mol% and less than or equal to 0.0085 mol%, greater than or equal to 0.001 mol% and less than or equal to 0.0075 mol%, greater than or equal to 0.001 mol% and less than or equal to 0.007 mol%, greater than or equal to 0.001 mol% and less than or equal to 0.0065 mol%, greater than or equal to 0.001 mol% and less than or equal to 0.006 mol%, greater than or equal to 0.001 mol% and less than or equal to 0.0055 mol%, greater than or equal to 0.001 mol% and less than or equal to 0.005 mol%, greater than or equal to 0.001 mol% and less than or equal to 0.0045 mol%, greater than or equal to 0.001 mol% and less than or equal to 0.004 mol%, greater than or equal to 0.001 mol% and less than or equal to 0.0035 mol%, greater than or equal to 0.001 mol% and less than or equal to 0.003 mol%, greater than or equal to 0.001 mol% and less than or equal to 0.0025 mol%, greater than or equal to 0.001 mol% and less than or equal to 0.002 mol%.

In embodiments, the glass composition and the resultant colored glass article may comprise greater than or equal to 0 mol%, such as greater than or equal to 0.01 mol% and less than or equal to 0.05 mol%, $Cr_2O_3$. In embodiments, the concentration of $Cr_2O_3$ in the glass composition and the resultant colored glass article may be greater than or equal to 0 mol% and less than or equal to 0.05 mol%, greater than or equal to 0 mol% and less than or equal to 0.04 mol%, greater than or equal to 0 mol% and less than or equal to 0.035 mol%, greater than or equal to 0 mol% and less than or equal to 0.03 mol%, greater than or equal to 0 mol% and less than or equal to 0.025 mol%, greater than or equal to 0 mol% and less than or equal to 0.02 mol%, greater than or equal to 0 mol% and less than or equal to 0.015 mol%, greater than or equal to 0.01 mol% and less than or equal to 0.05 mol%, greater than or equal to 0.01 mol% and less than or equal to 0.04 mol%, greater than or equal to 0.01 mol% and less than or equal to 0.035 mol%, greater than or equal to 0.01 mol% and less than or equal to 0.03 mol%, greater than or equal to 0.01 mol% and less than or equal to 0.025 mol%, greater than or equal to 0.01 mol% and less than or equal to 0.02 mol%, greater than or equal to 0.01 mol% and less than or equal to 0.015 mol%, greater than or equal to 0.015 mol% and less than or equal to 0.05 mol%, greater than or equal to 0.015 mol% and less than or equal to 0.04 mol%, greater than or equal to 0.015 mol% and less than or equal to 0.035 mol%, greater than or equal to 0.015 mol% and less than or equal to 0.03 mol%, greater than or equal to 0.015 mol% and less than or equal to 0.025 mol%, or even greater than or equal to 0.015 mol% and less than or equal to 0.02 mol%.

In embodiments, the glass composition and the resultant colored glass article may comprise at least one of: greater than or equal to 0.001 mol% $NiO + Co_3O_4 + Cr_2O_3 + CuO$, such as greater than or equal to 0.001 mol% and less than or equal to 3 mol% $NiO + Co_3O_4 + Cr_2O_3 + CuO$ (or any of the ranges of $NiO + Co_3O_4 + Cr_2O_3 + CuO$ described herein).

## Colorant: $Cr_2O_3$

In embodiments, the colorant package used in the glass compositions and the resultant colored glass articles described herein may comprise or consist of $Cr_2O_3$ as a colorant to achieve a desired color. In embodiments, $Cr_2O_3$ may be included in the glass compositions as the sole colorant or in combination with other colorants. For example, in embodiments where $Cr_2O_3$ is utilized as a colorant, other transition metal oxides may be included in the glass composition to modify the color imparted to the glass, including, for example and without limitation, CuO, NiO, and/or $Co_3O_4$. As described herein, in embodiments, the glass compositions and the resultant colored glass articles may be formulated to improve the solubility of $Cr_2O_3$, thereby expanding the color gamut achievable in the resultant colored glass articles.

In embodiments, the glass composition and the resultant colored glass article may comprise greater than or equal to 0 mol% and less than or equal to 2 mol% $Cr_2O_3$. In embodiments, the glass composition and the resultant colored glass article may comprise greater than or equal to 0.001 mol% and less than or equal to 1.5 mol% $Cr_2O_3$. In embodiments, the concentration of $Cr_2O_3$ in the glass composition and the resultant colored glass article may be greater than or equal to 0 mol%, greater than or equal to 0.001 mol%, greater than or equal to 0.005 mol%, greater than or equal to 0.01 mol%, or even greater than or equal to 0.05 mol%. In embodiments, the concentration of $Cr_2O_3$ in the glass composition and the resultant colored glass article may be less than or equal to 2 mol%, less than or equal to 1.5 mol%, less than or equal to 1 mol%, less than or equal to 0.5 mol%, or even less than or equal to 0.1 mol%. In embodiments, the concentration of $Cr_2O_3$ in the glass composition and the resultant colored glass article may be greater than or equal to 0 mol% and less than or equal to 2 mol%, greater than or equal to 0 mol% and less than or equal to 1.5 mol%, greater than or equal to 0 mol% and less than or equal to 1 mol%, greater than or equal to 0 mol% and less than or equal to 0.5 mol%, greater than or equal to 0 mol% and less than or equal to 0.1 mol%, greater than or equal to 0.001 mol% and less than or equal to 2 mol%, greater than or equal to 0.001 mol% and less than or equal to 1.5 mol%, greater than or equal to 0.001 mol% and less than or equal to 1 mol%, greater than or equal to 0.001 mol% and less than or equal to 0.5 mol%, greater than or equal to 0.001 mol% and less than or equal to 0.1 mol%, greater than or equal to 0.005 mol% and less than or equal to 2 mol%, greater than or equal to 0.005 mol% and less than or equal to 1.5 mol%, greater than or equal to 0.005 mol% and less than or equal to 1 mol%, greater than or equal to 0.005 mol% and less than or equal to 0.5 mol%, greater than or equal to 0.005 mol% and less than or equal to 0.1 mol%, greater than or equal to 0.01 mol% and less than or equal to 2 mol%, greater than or equal to 0.01 mol% and less than or equal to 1.5 mol%, greater than or equal to 0.01 mol% and less than or equal to 1 mol%, greater than or equal to 0.01 mol% and less than or equal to 0.5 mol%, greater than or equal to 0.01 mol% and less than or equal to 0.1 mol%, greater than or equal to 0.05 mol% and less than or equal to 2 mol%, greater than or equal to 0.05 mol% and less than or equal to 1.5 mol%, greater than or equal to 0.05 mol% and less than or equal to 1 mol%, greater than or equal to 0.05 mol% and less than or equal to 0.5 mol%, or even greater than or equal to 0.05 mol% and less than or equal to 0.1 mol%.

In embodiments where the colorant package includes $Cr_2O_3$ as a colorant, the glass compositions and the resultant colored glass articles are per-alkali (i.e., $R_2O$ (mol%) + R'O (mol%) - $Al_2O_3$ (mol%) is greater than or equal to 0.5 mol%) to increase the solubility of $Cr_2O_3$ and avoid Cr-spinel crystal formation. However, when the glass composition has an excessive amount of alkali after charge balancing $Al_2O_3$, the alkali may form non-bridging oxygen around $SiO_2$, which degrades fracture toughness. Accordingly, in embodiments, $R_2O$ + R'O - $Al_2O_3$ in the glass composition and the resultant colored glass article may be limited (e.g., less than or equal to 6 mol%) to prevent a reduction in fracture toughness.

In embodiments, $R_2O$ + R'O - $Al_2O_3$ in the glass composition and the resultant colored glass article may be greater than or equal to 0.5 mol% and less than or equal to 6 mol%. In embodiments, $R_2O$ + R'O - $Al_2O_3$ in the glass composition and the resultant colored glass article may be greater than or equal to 1 mol% and less than or equal to 5.5 mol%. In embodiments, $R_2O$ + R'O - $Al_2O_3$ in the glass composition and the colored resultant glass article may be greater than or equal to 0.5 mol%, greater than or equal to 1 mol%, greater than or equal to 1.5 mol%, or even greater than or equal to 2 mol%. In embodiments, $R_2O$ + R'O - $Al_2O_3$ in the glass composition and the resultant colored glass article may be less than or equal to 6 mol%, less than or equal to 5.5 mol%, less than or equal to 5 mol%, less than or equal to 4.5 mol%, less than or equal to 4 mol%, less than or equal to 3.5 mol%, or even less than or equal to 3 mol%. In embodiments, $R_2O$ + R'O - $Al_2O_3$ in the glass composition and the resultant colored glass article may be greater than or equal to 0.5 mol% and less than or equal to 6 mol%, greater than or equal to 0.5 mol% and less than or equal to 5.5 mol%, greater than or equal to 0.5 mol% and less than or equal to 5 mol%, greater than or equal to 0.5 mol% and less than or equal to 4.5 mol%, greater than or equal to 0.5 mol% and less than or equal to 4 mol%, greater than or equal to 0.5 mol% and less than or equal to 3.5 mol%, greater than or equal to 0.5 mol% and less than or equal to 3 mol%, greater than or equal to 1 mol% and less than or equal to 6 mol%, greater than or equal to 1 mol% and less than or equal to 5.5 mol%, greater than or equal to 1 mol% and less than or equal to 5 mol%, greater than or equal to 1 mol% and less than or equal to 4.5 mol%, greater than or equal to 1 mol% and less than or equal to 4 mol%, greater than or equal to 1 mol% and less than or equal to 3.5 mol%, greater than or equal to 1 mol% and less than or equal to 3 mol%, greater than or equal to 1.5 mol% and less than or equal to 6 mol%, greater than or equal to 1.5 mol% and less than or equal to 5.5 mol%, greater than or equal to 1.5 mol% and less than or equal to 5 mol%, greater than or equal to 1.5 mol% and less than or equal to 4.5 mol%, greater than or equal to 1.5 mol% and less than or equal to 4 mol%, greater than or equal to 1.5 mol% and less than or equal to 3.5 mol%, greater than or equal to 1.5 mol% and less than or equal to 3 mol%, greater than or equal to 2 mol% and less than or equal to 6 mol%, greater than or equal to 2 mol% and less than or equal to 5.5 mol%, greater than or equal to 2 mol% and less than or equal to 5 mol%, greater than or equal to 2 mol% and less than or equal to 4.5 mol%, greater than or equal to 2 mol% and less than or equal to 4 mol%, greater than or equal to 2 mol% and less than or equal to 3.5 mol%, or even greater than or equal to 2 mol% and less than or equal to 3 mol%.

In embodiments where the colorant package comprises $Cr_2O_3$ as a colorant, the glass compositions and the resultant colored glass articles may satisfy at least one of the following conditions and achieve the desired color: (1) less than or equal to 17.5 mol% $Al_2O_3$ and/or $R_2O$ + R'O - $Al_2O_3$ greater than or equal to 0.5 mol%; (2) $Al_2O_3$ + MgO + ZnO less than or equal to 22 mol%; and (3) MgO + ZnO less than or equal to 4.5 mol%.

In embodiments where the colorant comprises $Cr_2O_3$, different color gamuts may be achieved by including other colorants in addition to $Cr_2O_3$. For example, in embodiments, the glass composition and resultant colored glass article may comprise NiO, $Co_3O_4$, CuO, or combinations thereof in addition to $Cr_2O_3$.

In embodiments, the glass composition and the resultant colored glass article may comprise greater than or equal to 0 mol% and less than or equal to 4 mol% NiO as a colorant in addition to $Cr_2O_3$. In embodiments, the concentration of NiO in the glass composition and the resultant colored glass article may be greater than or equal to 0 mol%, greater than or equal to 0.01 mol%, or even greater than or equal to 0.05 mol%. In embodiments, the concentration of NiO in the glass composition and the resultant colored glass article may be less than or equal to 4 mol%, less than or equal to 3 mol%, less than or equal to 2 mol%, less than or equal to 1 mol%, less than or equal to 0.5 mol%, less than or equal to 0.25 mol%, or even less than or equal to 0.1 mol%. In embodiments, the concentration of NiO in the glass composition and the resultant colored glass article may be greater than or equal to 0 mol% and less than or equal to 4 mol%, greater than or equal to 0 mol% and less than or equal to 3 mol%, greater than or equal to 0 mol% and less than or equal to 2 mol%, greater than or equal to 0 mol% and less than or equal to 1 mol%, greater than or equal to 0 mol% and less than or equal to 0.5 mol%, greater than or equal to 0 mol% and less than or equal to 0.25 mol%, greater than or equal to 0 mol% and less than or equal to 0.1 mol%, greater than or equal to 0.01 mol% and less than or equal to 4 mol%, greater than or equal to 0.01 mol% and less than or equal to 3 mol%, greater than or equal to 0.01 mol% and less than or equal to 2 mol%, greater than or equal to 0.01 mol% and less than or equal to 1 mol%, greater than or equal to 0.01 mol% and less than or equal to 0.5 mol%, greater than or equal to 0.01 mol% and less than or equal to 0.25 mol%, greater than or equal to 0.01 mol% and less than or equal to 0.1 mol%, greater than or equal to 0.05 mol% and less than or equal to 4 mol%, greater than or equal to 0.05 mol% and less than or equal to 3 mol%, greater than or equal to 0.05 mol% and less than or equal to 2 mol%, greater than or equal to 0.05 mol% and less than or equal to 1 mol%, greater than or equal to 0.05 mol% and less than or equal to 0.5 mol%, greater than or equal to 0.05 mol% and less than or equal to 0.25 mol%, or even greater than or equal to 0.05 mol% and less than or equal to 0.1 mol%.

In embodiments, the glass composition and the resultant colored glass article may comprise greater than or equal to 0 mol% and less than or equal to 2 mol% $Co_3O_4$ as a colorant in addition to $Cr_2O_3$. In embodiments, the concentration of $Co_3O_4$ in the glass composition and the resultant colored glass article may be greater than or equal to 0 mol%, greater than or equal to 0.001 mol%, greater than or equal to 0.005 mol%, or even greater than or equal to 0.01 mol%. In embodiments, the concentration of $Co_3O_4$ in the glass composition and the resultant colored glass article may be less than or equal to 2 mol%, less than or equal to 1.5 mol%, less than or equal to 1 mol%, less than or equal to 0.5 mol%, less than or equal to 0.1 mol%, or even less than or equal to 0.05 mol%. In embodiments, the concentration of $Co_3O_4$ in the glass composition and the resultant colored glass article may greater than or equal to 0 mol% and less than or equal to 2 mol%, greater than or equal to 0 mol% and less than or equal to 1.5 mol%, greater than or equal to 0 mol% and less than or equal to 1 mol%, greater than or equal to 0 mol% and less than or equal to 0.5 mol%, greater than or equal to 0 mol% and less than or equal to 0.1 mol%, greater than or equal to 0 mol% and less than or equal to 0.05 mol%, greater than or equal to 0.001 mol% and less than or equal to 2 mol%, greater than or equal to 0.001 mol% and less than or equal to 1.5 mol%, greater than or equal to 0.001 mol% and less than or equal to 1 mol%, greater than or equal to 0.001 mol% and less than or equal to 0.5 mol%, greater than or equal to 0.001 mol% and less than or equal to 0.1 mol%, greater than or equal to 0.001 mol% and less than or equal to 0.05 mol%, greater than or equal to 0.005 mol% and less than or equal to 2 mol%, greater than or equal to 0.005 mol% and less than or equal to 1.5 mol%, greater than or equal to 0.005 mol% and less than or equal to 1 mol%, greater than or equal to 0.005 mol% and less than or equal to 0.5 mol%, greater than or equal to 0.005 mol% and less than or equal to 0.1 mol%, greater than or equal to 0.005 mol% and less than or equal to 0.05 mol%, greater than or equal to 0.01 mol% and less than or equal to 2 mol%, greater than or equal to 0.01 mol% and less than or equal to 1.5 mol%, greater than or equal to 0.01 mol% and less than or equal to 1 mol%, greater than or equal to 0.01 mol% and less than or equal to 0.5 mol%, greater than or equal to 0.01 mol% and less than or equal to 0.1 mol%, or even greater than or equal to 0.01 mol% and less than or equal to 0.05 mol%.

In embodiments, the glass composition and the resultant colored glass article may comprise greater than or 0 mol% and less than or equal to 5 mol% CuO as a colorant in addition to $Cr_2O_3$. In embodiments, the concentration of CuO in the glass composition and the resultant colored glass article may be greater than or equal 0 mol%, greater than or equal to 0.05 mol%, greater than or equal to 0.1 mol%, greater than or equal to 0.5 mol%, or even greater than or equal to 1 mol%. In embodiments, the concentration of CuO in the glass composition and the resultant colored glass article may be less than or equal to 5 mol%, less than or equal to 4 mol%, less than or equal to 3 mol%, or even less than or equal to 2 mol%. In embodiments, the concentration of CuO in the glass composition and the resultant colored glass article may be greater than or equal to 0 mol% and less than or equal to 5 mol%, greater than or equal to 0 mol% and less than or equal to 4 mol%, greater than or equal to 0 mol% and less than or equal to 3 mol%, greater than or equal to 0 mol% and less than or equal to 2 mol, greater than or equal to 0.05 mol% and less than or equal to 5 mol%, greater than or equal to 0.05 mol% and less than or equal to 4 mol%, greater than or equal to 0.05 mol% and less than or equal to 3 mol%, greater than or equal to 0.05 mol% and less than or equal to 2 mol%, greater than or equal to 0.1 mol% and less than or equal to 5 mol%, greater than or equal to 0.1 mol% and less than or equal to 4 mol%, greater than or equal to 0.1 mol% and less than or equal to 3 mol%, greater than or equal to 0.1 mol% and less than or equal to 2 mol%, greater than or equal to 0.5 mol% and less than or equal to 5 mol%, greater than or equal to 0.5 mol% and less than or equal to 4 mol%, greater than or equal to 0.5 mol% and less than or equal to 3 mol%, greater than or equal to 0.5 mol% and less than or equal to 2 mol%, greater than or equal to 1 mol% and less than or equal to 5 mol%, greater than or equal to 1 mol% and less than or equal to 4 mol%, greater than or equal to 1 mol% and less than or equal to 3 mol%, or even greater than or equal to 1 mol% and less than or equal to 2 mol%.

In embodiments, the glass compositions and the resultant colored glass articles described herein may further include tramp materials such as $TiO_2$, MnO, $MoO_3$, $WO_3$, $Y_2O_3$, CdO, $As_2O_3$, sulfur-based compounds, such as sulfates, halogens, or combinations thereof. In embodiments, the glass composition and the resultant colored glass article may be substantially free or free of tramp materials such as $TiO_2$, MnO, $MoO_3$, $WO_3$, $Y_2O_3$, CdO, $As_2O_3$, sulfur-based compounds, such as sulfates, halogens, or combinations thereof.

In embodiments described herein, decreasing the melting point of the glass composition may help improve colorant retention because the glass compositions may be melted at relatively lower temperatures and colorant evaporation may be reduced. Accordingly, the glass compositions and the resultant colored glass articles described herein may optionally include MgO and/or ZnO, which help lower the melting point of the glass composition. $B_2O_3$, $Li_2O$,

and $Na_2O$ also decrease the melting point of the glass composition. As described herein, other components may be added to the glass composition to lower the melting point thereof, such as $SnO_2$, $Sb_2O_3$, and $Bi_2O_3$. In embodiments, the glass composition may have a melting point less than or equal to 1550 °C. In embodiments, the glass composition may have a melting point greater than or equal to 1300 °C, greater than or equal to 1325 °C, greater than or equal to 1350 °C, greater than or equal to 1375 °C, or even greater than or 1400 °C. In embodiments, the glass composition may have a melting point less than or equal to 1550 °C, less than or equal to 1525 °C, less than or equal 1500 °C, less than or equal to 1475 °C, or even less than or equal to 1450 °C. In embodiments, the melting point of the glass composition may be greater than or equal to 1300 °C and less than or equal to 1550 °C, greater than or equal to 1300 °C and less than or equal to 1525 °C, greater than or equal to 1300 °C and less than or equal to 1500 °C, greater than or equal to 1300 °C and less than or equal to 1475 °C, greater than or equal to 1300 °C and less than or equal to 1450 °C, greater than or equal to 1325 °C and less than or equal to 1550 °C, greater than or equal to 1325 °C and less than or equal to 1525 °C, greater than or equal to 1325 °C and less than or equal to 1500 °C, greater than or equal to 1325 °C and less than or equal to 1475 °C, greater than or equal to 1325 °C and less than or equal to 1450 °C, greater than or equal to 1350 °C and less than or equal to 1550 °C, greater than or equal to 1350 °C and less than or equal to 1525 °C, greater than or equal to 1350 °C and less than or equal to 1500 °C, greater than or equal to 1350 °C and less than or equal to 1475 °C, greater than or equal to 1350 °C and less than or equal to 1450 °C, greater than or equal to 1375 °C and less than or equal to 1550 °C, greater than or equal to 1375 °C and less than or equal to 1525 °C, greater than or equal to 1375 °C and less than or equal to 1500 °C, greater than or equal to 1375 °C and less than or equal to 1475 °C, greater than or equal to 1375 °C and less than or equal to 1450 °C, greater than or equal to 1400 °C and less than or equal to 1550 °C, greater than or equal to 1400 °C and less than or equal to 1525 °C, greater than or equal to 1400 °C and less than or equal to 1500 °C, greater than or equal to 1400 °C and less than or equal to 1475 °C, or even greater than or equal to 1400 °C and less than or equal to 1450 °C.

In embodiments, a liquidus temperature of the glass composition may be greater than or equal to 1000 °C, greater than or equal to 1050 °C, or even greater than or equal to 1100 °C. In embodiments, a liquidus temperature of the precursor glass composition may be less than or equal to 1400 °C, less than or equal to 1350 °C or even less than or equal to 1300 °C. In embodiments, a liquidus temperature of the glass composition may be greater than or equal to 1000 °C and less than or equal to 1400 °C, greater than or equal to 1000 °C and less than or equal to 1350 °C, greater than or equal to 1000 °C and less than or equal to 1300 °C, greater than or equal to 1050 °C and less than or equal to 1400 °C, greater than or equal to 1050 °C and less than or equal to 1350 °C, greater than or equal to 1000 °C and less than or equal to 1300 °C, greater than or equal to 1100 °C and less than or equal to 1400 °C, greater than or equal to 1100 °C and less than or equal to 1350 °C, or even greater than or equal to 1100 °C and less than or equal to 1300 °C.

In embodiments, the viscosity of the glass composition may be adjusted to prevent devitrification of the glass composition and formation of colorant particles during melting and forming. Formation of colorant particles during melting and forming may limit the color gamut that may be achieved by heat treatment. In embodiments, to achieve the desired viscosity and thereby prevent formation of colorant particles before melting, the glass compositions and the resultant glass articles described herein may satisfy the relationship $5.72*Al_2O_3$ (mol%) - $21.4*ZnO$ (mol%) - $2.5*P_2O_5$ (mol%) - $35*Li_2O$ (mol%) - $16.6*B_2O_3$ (mol%) - $20.5*MgO$ (mol%) - $23.3*Na_2O$ (mol%) - $27.9*SrO$ (mol%) - $18.5*K_2O$ (mol%) - $26.3*CaO$ (mol%) is greater than -609 mol%. While not wishing to be bound by theory, it is believe that this relationship may also hold true for glass compositions containing colorants other than Au. In embodiments, the glass compositions and the resultant glass articles described herein may satisfy the relationship $5.72*Al_2O_3$ (mol%) - $21.4*ZnO$ (mol%) - $2.5*P_2O_5$ (mol%) - $35*Li_2O$ (mol%) - $16.6*B_2O_3$ (mol%) - $20.5*MgO$ (mol%) - $23.3*Na_2O$ (mol%) - $27.9*SrO$ (mol%) - $18.5*K_2O$ (mol%) - $26.3*CaO$ (mol%) is greater than -609 mol%, greater than or equal to -575 mol%, greater than or equal to -550 mol%, or even greater than or equal to -525 mol%. In embodiments, the glass compositions and the resultant glass articles described herein may satisfy the relationship $5.72*Al_2O_3$ (mol%) - $21.4*ZnO$ (mol%) - $2.5*P_2O_5$ (mol%) - $35*Li_2O$ (mol%) - $16.6*B_2O_3$ (mol%) - $20.5*MgO$ (mol%) - $23.3*Na_2O$ (mol%) - $27.9*SrO$ (mol%) - $18.5*K_2O$ (mol%) - $26.3*CaO$ (mol%) is less than or equal to -400 mol%, less than or equal to -425 mol%, or even less than or equal to -450 mol%. In embodiments, the glass compositions and the resultant glass articles described herein may satisfy the relationship $5.72*Al_2O_3$ (mol%) - $21.4*ZnO$ (mol%) - $2.5*P_2O_5$ (mol%) - $35*Li_2O$ (mol%) - $16.6*B_2O_3$ (mol%) - $20.5*MgO$ (mol%) - $23.3*Na_2O$ (mol%) - $27.9*SrO$ (mol%) - $18.5*K_2O$ (mol%) - $26.3*CaO$ (mol%) is greater than -609 mol% and less than or equal to -400 mol%, greater than -609 mol% and less than or equal to -425 mol%, greater than -609 mol% and less than or equal to -450 mol%, greater than or equal to -575 mol% and less than or equal to -400 mol%, greater than or equal to -575 mol% and less than or equal to -425 mol%, greater than or equal to -575 mol% and less than or equal to -450 mol%, greater than or equal to -550 mol% and less than or equal to -400 mol%, greater than or equal to -550 mol% and less than or equal to -425 mol%, greater than or equal to -550 mol% and less than or equal to -450 mol%, greater than or equal to -525 mol% and less than or equal to -400 mol%, greater than or equal to -525 mol% and less than or equal to -425 mol%, or even greater than or equal to -525 mol% and less than or equal to -450 mol%.

In embodiments, the colored glass articles may be formed by first melting a glass composition comprising a combination of constituent glass components as described herein and one or more colorants in a colorant package. Thereafter, the molten glass is formed into a precursor glass article using conventional forming techniques and, thereafter, cooled. The precursor glass article may take on any number of forms including, without limitation, sheets, tubes, rods, containers (e.g., vials, bottles, jars, etc.) or the like. In embodiments, the precursor glass article may be exposed to a heat treatment to produce color in the glass. For example and without limitation, the heat treatment may induce the formation of colorant particles in the glass which, in turn, cause the glass to become colored. In some embodiments, the glass may appear clear (i.e., colorless) prior to heat treatment. The time and/or temperature of the heat treatment may be specifically selected to produce a colored glass article having a desired color. Without wishing to be bound by theory, it is believed that a desired color is a result of the morphology of the particles precipitated in the glass which, in turn, is dependent on the time and/or temperature of the heat treatment. Accordingly, it should be understood that a single glass composition can be used to form colored glass articles having different colors based on the time and/or temperature of the applied heat treatment in addition to the composition of the colorant package included in the glass.

Specifically, different color coordinates within the color gamut may be achieved by altering the heat treatment cycle of the glass composition used to produce the resultant colored glass articles. The heat treatment cycle is characterized by the temperature of the environment (i.e., the oven) and the duration of the cycle (i.e., the time exposed to the heated environment). As used herein, the phrase "temperature of the heat treatment cycle" refers to the temperature of the environment (i.e., the oven). In embodiments, glass articles formed from the glass compositions described herein are heat treated in an isothermal oven to produce the resultant colored glass articles.

In embodiments, the temperature of the heat treatment cycle is greater than or equal to 500 °C, greater than or equal to 550 °C, greater than or equal to 575 °C, greater than or equal to 600 °C, greater than or equal to 625 °C, or even greater than or equal to 650 °C. In embodiments, the temperature of the heat treatment cycle is less than or equal to 800 °C, less than or equal to 775 °C, less than or equal to 750 °C, less than or equal to 725 °C, or even less than or equal to 700 °C. In embodiments, the temperature of the heat treatment cycle is greater than or equal to 500 °C and less than or equal to 800 °C, greater than or equal to 500 °C and less than or equal to 775 °C, greater than or equal to 500 °C and less than or equal to 750 °C, greater than or equal to 500 °C and less than or equal to 725 °C, greater than or equal to 550 °C and less than or equal to 700 °C, greater than or equal to 550 °C and less than or equal to 800 °C, greater than or equal to 550 °C and less than or equal to 775 °C, greater than or equal to 550 °C and less than or equal to 750 °C, greater than or equal to 550 °C and less than or equal to 725 °C, greater than or equal to 550 °C and less than or equal to 700 °C, greater than or equal to 575 °C and less than or equal to 800 °C, greater than or equal to 575 °C and less than or equal to 775 °C, greater than or equal to 575 °C and less than or equal to 750 °C, greater than or equal to 575 °C and less than or equal to 725 °C, greater than or equal to 575 °C and less than or equal to 700 °C, greater than or equal to 600 °C and less than or equal to 800 °C, greater than or equal to 600 °C and less than or equal to 775 °C, greater than or equal to 600 °C and less than or equal to 750 °C, greater than or equal to 600 °C and less than or equal to 725 °C, greater than or equal to 600 °C and less than or equal to 700 °C, greater than or equal to 625 °C and less than or equal to 800 °C, greater than or equal to 625 °C and less than or equal to 775 °C, greater than or equal to 625 °C and less than or equal to 750 °C, greater than or equal to 625 °C and less than or equal to 725 °C, greater than or equal to 625 °C and less than or equal to 700 °C, greater than or equal to 650 °C and less than or equal to 800 °C, greater than or equal to 650 °C and less than or equal to 775 °C, greater than or equal to 650 °C and less than or equal to 750 °C, greater than or equal to 650 °C and less than or equal to 725 °C, or even greater than or equal to 650 °C and less than or equal to 700 °C.

In embodiments, the duration of the heat treatment cycle is greater than or equal to 0.15 hour, greater than or equal to 0.25 hour, greater than or equal to 0.5 hour, greater than or equal 1 hour, or even greater than or equal to 2 hours. In embodiments, the durations of the heat treatment cycle is less than or equal to 24 hours, less than or equal to 16 hours, less than or equal to 8 hours, less than or equal to 6 hours, less than or equal to 4 hours, or even less than or equal to 3 hours. In embodiments, the duration of the heat treatment cycle is greater than or equal to 0.25 hour and less than or equal to 24 hours, greater than or equal to 0.25 hour and less than or equal to 16 hours, greater than or equal to 0.25 hour and less than or equal to 8 hours, greater than or equal to 0.25 hour and less than or equal to 4 hours, greater than or equal to 0.5 hour and less than or equal to 24 hours, greater than or equal to 0.5 hour and less than or equal to 16 hours, greater than or equal to 0.5 hour and less than or equal to 8 hours, greater than or equal to 0.5 hour and less than or equal to 4 hours, greater than or equal to 1 hour and less than or equal to 24 hours, greater than or equal to 1 hour and less than or equal to 16 hours, greater than or equal to 1 hour and less than or equal to 8 hours, greater than or equal to 1 hour and less than or equal to 4 hours, greater than or equal to 2 hours and less than or equal to 24 hours, greater than or equal to 2 hours and less than or equal to 16 hours, greater than or equal to 2 hours and less than or equal to 8 hours, or even greater than or equal to 2 hours and less than or equal to 4 hours.

In embodiments, the heat treatment may comprise ramping up to a heat treatment temperature at a heating rate and cooling down from the heat treatment temperature at a cooling rate. In embodiments, the selected heating rate and cooling rate may effect the color coordinates of the resultant colored glass articles.

In embodiments, the heating rate of the heat treatment may be greater than or equal to 2 °C/min or even greater than or equal to 3 °C/min. In embodiments, the heating rate of the heat treatment may be less than equal to 10 °C/min, less than or equal to 7 °C/min, or even less than or equal to 5 °C/min. In embodiments, the heating rate of the heat treatment may be greater than or equal to 2 °C/min and less than or equal to 10 °C/min, greater than or equal to 2 °C/min and less than or

**EP 4 298 069 B1**

equal to 7 °C/min, greater than or equal to 2 °C/min and less than or equal to 5 °C/min, greater than or equal to 3 °C/min and less than or equal to 10 °C/min, greater than or equal to 3 °C/min and less than or equal to 7 °C/min, or even greater than or equal to 3 °C/min and less than or equal to 5 °C/min.

In embodiments, the cooling rate of the heat treatment may be greater than or equal to 1 °C/min or even greater than or equal to 2 °C/min. In embodiments, the cooling rate of the heat treatment may be less than or equal to 10 °C/min, less than or equal to 8 °C/min, less than or equal to 6 °C/min, or even less than or equal to 4 °C/min. In embodiments, the cooling rate of the heat treatment may be greater than or equal to 1 °C/min and less than or equal to 10 °C/min, greater than or equal to 1 °C/min and less than or equal to 8 °C/min, greater than or equal to 1 °C/min and less than or equal to 6 °C/min, greater than or equal to 1 °C/min and less than or equal to 4 °C/min, greater than or equal to 2 °C/min and less than or equal to 10 °C/min, greater than or equal to 2 °C/min and less than or equal to 8 °C/min, greater than or equal to 2 °C/min and less than or equal to 6 °C/min, or even greater than or equal to 2 °C/min and less than or equal to 4 °C/min.

While some embodiments of the glasses described herein require a heat treatment to impart color to the glass, it is noted that other embodiments of glasses described herein do not require a heat treatment to impart color to the glass. For example, some glasses containing transition metal oxides and/or rare earth oxides may not require a heat treatment to impart color to the glass. As such, it should be understood that the heat treatment is optional.

Following heat treatment (if required), the glasses described herein are colored and, as such, are referred to as colored glass articles. In embodiments, the colored glass articles are predominantly glass (i.e., predominantly non-crystalline), but may include particles (such as colorant particles) that have crystalline morphology. As such, the colored glass articles may include at least one crystalline phase. In embodiments, the crystallinity of the colored glass article is less than or equal to 10 wt.%, less than or equal to 9 wt.%, less than or equal to 8 wt.%, less than or equal to 7 wt.%, less than or equal to 6 wt.%, less than or equal to 5 wt.%, less than or equal to 4 wt.%, less than or equal to 3 wt.%, less than or equal to 2 wt.%, or even less than or equal to 1 wt.% by weight of the glass article.

The colored glass articles have a transmittance color coordinate in the CIELAB color space of L* greater than or equal to 55 and less than or equal to 96.5. In embodiments, the colored glass articles may have a transmittance color coordinate in the CIELAB color space of absolute value of a* (i.e., |a*|) greater than or equal to 0.3. In embodiments, the colored glass articles may have a transmittance color coordinate in the CIELAB color space of absolute value of b* (i.e., |b*|) greater than or equal to 0.5. As noted herein, unless otherwise specified, the transmittance color coordinates in the CIELAB color space are specified for article thicknesses of 0.4 to 5 mm (inclusive of endpoints) under F2 illumination and a 10° standard observer angle.

Without wishing to be bound by theory, it is believed that glasses having CIELAB color coordinates within the range of L* greater than or equal to 55 and less than or equal to 96.5 are transparent to wavelengths of visible light (i.e., wavelengths of light from 380 nm to 750 nm, inclusive of endpoints) rather than opaque. However, as the value of L* decreases, the color of the colored glass articles becomes more saturated and the glasses become more opaque (i.e., less transparent). As the value for L* increases, the color of the colored glass articles becomes less saturated and, when the L* value exceeds 96.5, the colored glass article may appear colorless.

In embodiments, the colored glass articles may have a transmittance color coordinate in the CIELAB color space of L* greater than or equal to 55 and less than or equal to 96.5, a* greater than or equal to -5 and less than or equal to 25 (exclusive of a* greater than -0.3 and less than 0.3), and b* greater than or equal to -20 and less than or equal to 5 (exclusive of b* greater than -0.5 and less than 0.5).

In embodiments, the colored glass articles may have a transmittance color coordinate in the CIELAB color space of L* greater than or equal to 55 and less than or equal to 96.5, a* greater than or equal to -10 and less than or equal to 25 (exclusive of a* greater than -0.3 and less than 0.3), and b* greater than or equal to -20 and less than or equal to 5 (exclusive of b* greater than -0.5 and less than 0.5).

In embodiments, the colored glass articles may have a transmittance color coordinate in the CIELAB color space of L* greater than or equal to 55 and less than or equal to 96.5, a* greater than or equal to -18 and less than or equal to 0.3, and b* greater than or equal to 0.5 and less than or equal to 82.

In embodiments, the colored glass articles may have a transmittance color coordinate in the CIELAB color space of L* greater than or equal to 55 and less than or equal to 96.5, a* greater than or equal to -18 and less than or equal to 18 (exclusive of a* greater than -0.3 and less than 0.3), and b* greater than or equal to 0.5 and less than or equal to 82.

In embodiments, the colored glass articles may have a transmittance color coordinate in the CIELAB color space of L* greater than or equal to 55 and less than or equal to 96.5, a* greater than or equal to -20 and less than or equal to 60 (exclusive of a* greater than -0.3 and less than 0.3), and b* greater than or equal to -90 and less than or equal to 85 (exclusive of b* greater than -0.5 and less than 0.5).

In embodiments, the colored glass articles may have a transmittance color coordinate in the CIELAB color space of L* greater than or equal to 55 and less than or equal to 96.5, a* greater than or equal to -35 and less than or equal to -0.3, and b* greater than or equal to 0.5 and less than or equal to 82.

In embodiments, the colored glass articles may have a transmittance color coordinate in the CIELAB color space of L* greater than or equal to 55 and less than or equal to 96.5, a* greater than or equal to -35 and less than or equal to 20 (exclusive of a* greater than -0.3 and less than 0.3), and b* greater than or equal to 0.5 and less than or equal to 75.

In embodiments, the colored glass articles may have a transmittance color coordinate in the CIELAB color space of L* greater than or equal to 55 and less than or equal to 96.5, a* greater than or equal to -15 and less than or equal to 65 (exclusive of a* greater than -0.3 and less than 0.3), and b* greater than or equal to -90 and less than or equal to 80 (exclusive of b* greater than -0.5 and less than 0.5).

In embodiments, the colored glass articles may have a transmittance color coordinate in the CIELAB color space of L* greater than or equal to 55 and less than or equal to 96.5, a* greater than or equal to -35 and less than or equal to 60 (exclusive of a* greater than -0.3 and less than 0.3), and b* greater than or equal to -90 and less than or equal to 80 (exclusive of b* greater than -0.5 and less than 0.5).

In embodiments, the colored glass articles may have a transmittance color coordinate in the CIELAB color space of L* greater than or equal to 55 and less than or equal to 96.5, a* greater than or equal to -35 and less than or equal to 60 (exclusive of a* greater than -0.3 and less than 0.3), and b* greater than or equal to -90 and less than or equal to 80 (exclusive of b* greater than -0.5 and less than 0.5).

In embodiments, the colored glass articles may have a transmitted color coordinate in the CIELAB color space of L* greater than or equal to 55 and less than or equal to 96.5, a* greater than or equal to -11.12 and less than or equal to 60 (exclusive of a* greater than -0.3 and less than 0.3), and b* greater than or equal to -20 and less than or equal to 120 (exclusive of b* greater than -0.5 and less than 0.5).

In embodiments, the transmitted color coordinates of the CIELAB color space may be described in terms of a range of L* values and a region of the a* (horizontal axis or x-axis) and b* (vertical axis or y-axis) color space. The region of the a* vs. b* color space may be defined by the intersection of a plurality of lines defined by a* and b*.

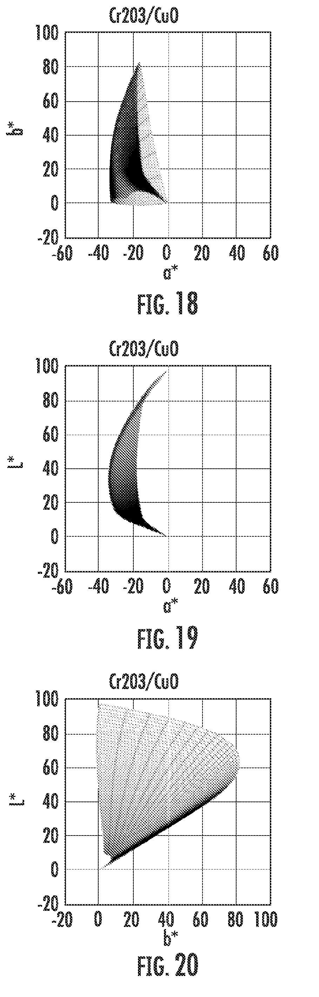

Colored glass articles that appear yellow in color may have a transmitted color coordinate in the CIELAB color space of L* greater than or equal to 20 and less than or equal to 90 and a* and b* values within a region of the a* vs. b* color space bound by the intersection of the lines: $b* = 0.2879 \cdot a* + 27.818$; $b* = 7.0833 \cdot a* - 94.5$; $b* = 0.45 \cdot a* + 104.5$; and $b* = 15.3 \cdot a* + 253$. This region is graphically depicted in FIG. 20 as the region being bound by lines A, B, C, and D.

Colored glass articles that appear orange in color may have a transmitted color coordinate in the CIELAB color space of L* greater than or equal to 20 and less than or equal to 90 and a* and b* values within a region of the a* vs. b* color space bound by the intersection of the lines: $b* = 7.0833 \cdot a* - 94.5$; $b* = -0.9583 \cdot a* + 146.75$; $b* = 2.6957 \cdot a* - 50.565$; and $b* = 33$. This region is graphically depicted in FIG. 20 as the region being bound by lines B, E, F and G.

Colored glass articles that appear red in color may have a transmitted color coordinate in the CIELAB color space of L* greater than or equal to 20 and less than or equal to 90 and a* and b* values within a region of the a* vs. b* color space bound by the intersection of the lines: $b* = 2.6957 \cdot a* - 50.565$; $a* = 54$; $b* = 1.0769 \cdot a* - 17.154$; and $b* = 6.6667 \cdot a* - 173.67$. This region is graphically depicted in FIG. 20 as the region being bound by lines F, H, I and J.

Colored glass articles that appear green in color may have a transmitted color coordinate in the CIELAB color space of L* greater than or equal to 4 and less than or equal to 80 and a* and b* values within a region of the a* vs. b* color space bound by the intersection of the lines: $b* = 0.2879 \cdot a* + 27.818$; $a* = 0$; $b* = -1.375 \cdot a* + 1$; and $b* = 9.333 \cdot a* + 86.667$, exclusive of a* greater than -0.3 and less than 0.3 and exclusive of b* greater than -0.5 and less than 0.5. This region is graphically depicted in FIG. 20 as the region being bound by lines A, K, L, and M.

Colored glass articles that appear pink/purple in color may have a transmitted color coordinate in the CIELAB color space of L* greater than or equal to 10 and less than or equal to 80 and a* and b* values within a region of the a* vs. b* color space bound by the intersection of the lines: $b* = 0.0833 \cdot a* + 20.833$; $b* = 2.1182 \cdot a* - 32.073$; $b* = -0.3$; and $b* = 1.5929 \cdot a* - 0.3$, exclusive of a* greater than -0.3 and less than 0.3 and exclusive of b* greater than -0.5 and less than 0.5. This region is graphically depicted in FIG. 20 as the region being bound by lines N, O, P and Q.

Colored glass articles may have a transmittance color coordinate in the CIELAB color space of L* greater than or equal to 55 and less than or equal to 96.5, a* greater than or equal to -15 and less than or equal to -0.3, and b* greater than or equal to -10 and less than or equal to 10 (exclusive of b* greater than -0.5 and less than 0.5).

Colored glass articles may have a transmittance color coordinate in the CIELAB color space of L* greater than or equal to 85 and less than or equal to 96.5, a* greater than or equal to -10 and less than -0.3, and b* greater than or equal to -5 and less than or equal to 5 (exclusive of b* greater than -0.5 and less than 0.5).

In embodiments, the colored glass articles including $Cr_2O_3$ as a colorant may have a transmittance color coordinate in the CIELAB color space of L* greater than or equal to 55 and less than or equal to 96.5, a* greater than or equal to -18 and less than or equal to 0.3, and b* greater than or equal to 0.5 and less than or equal to 82.

In embodiments, the colored glass articles including $Cr_2O_3$ and NiO as a colorant may have a transmittance color coordinate in the CIELAB color space of L* greater than or equal to 55 and less than or equal to 96.5, a* greater than or equal to -18 and less than or equal to 18 (exclusive of a* greater than -0.3 and less than 0.3), and b* greater than or equal to 0.5 and less than or equal to 82.

In embodiments, the colored glass articles including $Cr_2O_3$ and $Co_3O_4$ as a colorant may have a transmittance color coordinate in the CIELAB color space of L* greater than or equal to 55 and less than or equal to 96.5, a* greater than or equal to -20 and less than or equal to 60 (exclusive of a* greater than -0.3 and less than 0.3), and b* greater than or equal to -90 and less than or equal to 85 (exclusive of b* greater than -0.5 and less than 0.5).

In embodiments, the colored glass articles including $Cr_2O_3$ and CuO as a colorant may have a transmittance color coordinate in the CIELAB color space of L* greater than or equal to 55 and less than or equal to 96.5, a* greater than or equal to -35 and less than or equal to -0.3, and b* greater than or equal to 0.5 and less than or equal to 82.

In embodiments, the colored glass articles including $Cr_2O_3$, NiO, and CuO as a colorant may have a transmittance color coordinate in the CIELAB color space of L* greater than or equal to 55 and less than or equal to 96.5, a* greater than or equal to -35 and less than or equal to 20 (exclusive of a* greater than -0.3 and less than 0.3), and b* greater than or equal to 0.5 and less than or equal to 75.

In embodiments, the colored glass articles including $Cr_2O_3$, NiO, and $Co_3O_4$ as a colorant may have a transmittance color coordinate in the CIELAB color space of L* greater than or equal to 55 and less than or equal to 96.5, a* greater than or equal to -15 and less than or equal to 65 (exclusive of a* greater than -0.3 and less than 0.3), and b* greater than or equal to -90 and less than or equal to 80 (exclusive of b* greater than -0.5 and less than 0.5).

In embodiments, the colored glass articles including $Cr_2O_3$, CuO, and $Co_3O_4$ as a colorant may have a transmittance color coordinate in the CIELAB color space of L* greater than or equal to 55 and less than or equal to 96.5, a* greater than or equal to -35 and less than or equal to 60 (exclusive of a* greater than -0.3 and less than 0.3), and b* greater than or equal to -90 and less than or equal to 80 (exclusive of b* greater than -0.5 and less than 0.5).

In embodiments, the colored glass articles including $Cr_2O_3$, NiO, CuO, and $Co_3O_4$ as a colorant may have a transmittance color coordinate in the CIELAB color space of L* greater than or equal to 55 and less than or equal to 96.5, a* greater than or equal to -35 and less than or equal to 60 (exclusive of a* greater than -0.3 and less than 0.3), and b* greater than or equal to -90 and less than or equal to 80 (exclusive of b* greater than -0.5 and less than 0.5).

In embodiments, the transmitted color coordinates of the CIELAB color space may be described in terms of a range of L* values and a region of the a* (horizontal axis or x-axis) and b* (vertical axis or y-axis) color space. The region of the a* vs. b* color space may be defined by the intersection of a plurality of lines defined by a* and b*.

In embodiments, colored glass articles that include a transition metal oxides and/or rare earth metal oxides as a colorant (such as NiO, CuO, $Co_3O_4$, and/or $Cr_2O_3$) may have a transmittance color coordinate in the CIELAB color space of L* greater than or equal to 55 and less than or equal to 96.5, a* greater than or equal to -15 and less than or equal to -0.3, and b* greater than or equal to -10 and less than or equal to 10 (exclusive of b* greater than -0.5 and less than 0.5).

In embodiments, colored glass articles that include a transition metal oxides and/or rare earth metal oxides as a colorant (such as NiO, CuO, $Co_3O_4$, and/or $Cr_2O_3$) may have a transmittance color coordinate in the CIELAB color space of L* greater than or equal to 85 and less than or equal to 96.5, a* greater than or equal to -10 and less than -0.3, and b* greater than or equal to -5 and less than or equal to 5 (exclusive of b* greater than -0.5 and less than 0.5).

In some embodiments, the colored glass articles have an average transmittance of greater than or equal to 10% and less than or equal to 92% of light over the wavelength range from 380 nm to 750 nm. As noted herein, unless otherwise specified, the average transmittance is indicated for article thicknesses of 0.4 to 5 mm, inclusive of endpoints. In embodiments, the colored glass articles have an average transmittance greater than or equal to 15 % and less than or equal to 92% over the wavelength range of 380 nm to 750 nm. In embodiments, the colored glass articles have an average transmittance greater than or equal to 20% and less than or equal to 92% for light over the wavelength range of 380 nm to 750 nm. In embodiments, the colored glass articles have an average transmittance greater than or equal to 25% and less than or equal to 92% for light over the wavelength range of 380 nm to 750 nm. In embodiments, the colored glass articles have an average transmittance greater than or equal to 30% and less than or equal to 92% for light over the wavelength range of 380 nm to 750 nm. In embodiments, the colored glass articles have an average transmittance greater than or equal to 19 % and less than or equal to 88% over the wavelength range of 380 nm to 750 nm. In embodiments, the colored glass articles have an average transmittance greater than or equal to 15 % and less than or equal to 88% over the wavelength range of 380 nm to 750 nm. In embodiments, the colored glass articles have an average transmittance greater than or equal to 20% and less than or equal to 88% for light over the wavelength range of 380 nm to 750 nm. In embodiments, the colored glass articles have an average transmittance greater than or equal to 25% and less than or equal to 88% for light over the wavelength range of 380 nm to 750 nm. In embodiments, the colored glass articles have an average transmittance greater than or equal to 30% and less than or equal to 88% for light over the wavelength range of 380 nm to 750 nm.

The colored glass articles have a dielectric constant Dk at 10 GHz of less than or equal to 6.4 and greater than or equal to 5.6. In embodiments, the dielectric constant of the colored glass article may be less than or equal to 6.4 and greater than or equal to 5.7, less than or equal to 6.4 and greater than or equal to 5.8, less than or equal to 6.4 and greater than or equal to 5.9, less than or equal to 6.4 and greater than or equal to 6.0, less than or equal to 6.4 and greater than or equal to 6.2, less than or equal to 6.3 and greater than or equal to 5.6, less than or equal to 6.3 and greater than or equal to 5.7, less than or equal to 6.3 and greater than or equal to 5.8, less than or equal to 6.3 and greater than or equal to 5.9, less than or equal to 6.3 and greater than or equal to 6.0, less than or equal to 6.3 and greater than or equal to 6.2, less than or equal to 6.2 and greater than or equal to 5.7, less than or equal to 6.2 and greater than or equal to 5.8, less than or equal to 6.2 and greater than or equal to 5.9, less than or equal to 6.2 and greater than or equal to 6.0, or even less than or equal to 6.2 and greater than or equal to 6.1. As noted herein, while not wishing to be bound by theory, it is believed that the dielectric constant of the colored glass articles measured at 10 GHz approximates the dielectric constant at each frequency in the range from 10 GHz to 60 GHz. Accordingly, a dielectric constant reported for a colored glass article at a frequency of 10 GHz approximates the dielectric constant of the colored glass article at each frequency over the frequency range of 10 GHz to 60 GHz, inclusive of endpoints.

The colored glass articles formed from the glass compositions described herein may be any suitable thickness, which may vary depending on the particular application of the colored glass article. The colored glass articles have a thickness greater than or equal to 400 $\mu$m and less than or equal to 5 mm, such as greater than or equal to 400 $\mu$m and less than or equal to 4 mm, greater than or equal to 400 $\mu$m and less than or equal to 2 mm, greater than or equal to 400 $\mu$m and less than or equal to 1 mm, greater than or equal to 400 $\mu$m and less than or equal to 750 $\mu$m, greater than or equal to 400 $\mu$m and less than or equal to 650 $\mu$m, greater than or equal to 400 $\mu$m and less than or equal to 600 $\mu$m, greater than or equal to 400 $\mu$m and less than or equal to 550 $\mu$m, greater than or equal to 400 $\mu$m and less than or equal to 500 $\mu$m, greater than or equal to 450 $\mu$m and less than or equal to 4 mm, greater than or equal to 450 $\mu$m and less than or equal to 2 mm, greater than or equal to 450 $\mu$m and less than or equal to 1 mm, greater than or equal to 450 $\mu$m and less than or equal to 750 $\mu$m, greater than or equal to 450 $\mu$m and less than or equal to 650 $\mu$m, greater than or equal to 450 $\mu$m and less than or equal to 600 $\mu$m, greater than or equal to 450 $\mu$m and less than or equal to 550 $\mu$m, greater than or equal to 450 $\mu$m and less than or equal to 500 $\mu$m, greater than or equal to 500 $\mu$m and less than or equal to 4 mm, greater than or equal to 500 $\mu$m and less than or equal to 2 mm, greater than or equal to 500 $\mu$m and less than or equal to 1 mm, greater than or equal to 500 $\mu$m and less than or equal to 750 $\mu$m, greater than or equal to 750 $\mu$m and less than or equal to 4 mm, greater than or equal to 750 $\mu$m and less than or equal to 2 mm, greater than or equal to 750 $\mu$m and less than or equal to 1 mm, greater than or equal to 1 mm and less than or equal to 6 mm, greater than or equal to 1 mm and less than or equal to 4 mm, greater than or equal to 1 mm and less than or equal to 2 mm, or greater than or equal to 2 mm and less than or equal to 4 mm.

As discussed hereinabove, colored glass articles formed from the glass compositions described herein may have an increased fracture toughness such that the colored glass articles are more resistant to damage. In embodiments, the colored glass article may have a $K_{IC}$ fracture toughness as measured by a CNSB method, prior to ion exchange, greater than or equal to 0.7 MPa·m$^{1/2}$. In embodiments, the colored glass article may have a $K_{IC}$ fracture toughness, prior to ion exchange as measured by a CNSB method greater than or equal to 0.7 MPa·m$^{1/2}$, greater than or equal to 0.8 MPa·m$^{1/2}$, greater than or equal to 0.9 MPa·m$^{1/2}$, or even greater than or equal to 1.0 MPa·m$^{1/2}$.

As discussed hereinabove, colored glass articles formed from the glass compositions described herein may have an increased fracture toughness such that the colored glass articles are more resistant to damage. In embodiments, the colored glass article may have a $K_{IC}$ fracture toughness as measured by a DCB method, prior to ion exchange, greater than or equal to 0.7 MPa·m$^{1/2}$. In embodiments, the colored glass article may have a $K_{IC}$ fracture toughness, prior to ion exchange as measured by a DCB method greater than or equal to 0.7 MPa·m$^{1/2}$, greater than or equal to 0.8 MPa·m$^{1/2}$, greater than or equal to 0.9 MPa·m$^{1/2}$, or even greater than or equal to 1.0 MPa·m$^{1/2}$.

The glass compositions described herein are ion-exchangeable to facilitate strengthening the colored glass articles made from the glass compositions. In typical ion-exchange processes, smaller metal ions in the glass compositions are replaced or "exchanged" with larger metal ions of the same valence within a layer that is close to the outer surface of the colored glass article made from the glass composition. The replacement of smaller ions with larger ions creates a compressive stress within the layer of the colored glass article made from the glass composition. In embodiments, the metal ions are monovalent metal ions (e.g., Li$^+$, Na$^+$, K$^+$, and the like), and ion-exchange is accomplished by immersing the glass article made from the glass composition in a bath comprising at least one molten salt of the larger metal ion that is to replace the smaller metal ion in the colored glass article. Alternatively, other monovalent ions such as Ag$^+$, Tl$^+$, Cu$^+$, and the like may be exchanged for monovalent ions. The ion-exchange process or processes that are used to strengthen the colored glass article made from the glass composition may include contacting the colored glass article with an ion-exchange medium. In embodiments, the ion-exchange medium may be a molten salt bath. For example, the ion-exchange process may include, but is not limited to, immersion in a single bath or multiple baths of like or different compositions with optional washing and/or annealing steps between immersions.

Upon exposure to the colored glass article, the ion-exchange solution (e.g., KNO$_3$ and/or NaNO$_3$ molten salt bath) may, according to embodiments, be at a temperature greater than or equal to 350 °C and less than or equal to 500 °C, greater than or equal to 360 °C and less than or equal to 450 °C, greater than or equal to 370 °C and less than or equal to 440 °C, greater than or equal to 360 °C and less than or equal to 420 °C, greater than or equal to 370 °C and less than or equal to 400 °C, greater than or equal to 375 °C and less than or equal to 475 °C, greater than or equal to 400 °C and less than or equal to 500 °C, greater than or equal to 410 °C and less than or equal to 490 °C, greater than or equal to 420 °C and less than or equal to 480 °C, greater than or equal to 430 °C and less than or equal to 470 °C, or even greater than or equal to 440 °C and less than or equal to 460 °C. In embodiments, the colored glass article may be exposed to the ion-exchange solution for a duration greater than or equal to 2 hours and less than or equal to 24 hours, greater than or equal to 2 hours and less than or equal to 12 hours, greater than or equal to 2 hours and less than or equal to 6 hours, greater than or equal to 8 hours and less than or equal to 24 hours, greater than or equal to 6 hours and less than or equal to 24 hours, greater than or equal to 6 hours and less than or equal to 12 hours, greater than or equal to 8 hours and less than or equal to 24 hours, or even greater than or equal to 8 hours and less than or equal to 12 hours.

In embodiments, a colored glass article made from a glass composition may be ion-exchanged to achieve a depth of compression of 10 $\mu$m or greater, 20 $\mu$m or greater, 30 $\mu$m or greater, 40 $\mu$m or greater, 50 $\mu$m or greater, 60 $\mu$m or greater, 70 $\mu$m or greater, 80 $\mu$m or greater, 90 $\mu$m or greater, or 100 $\mu$m or greater. The colored glass article made from the glass composition have a thickness "t" and are ion-exchanged to achieve a depth of compression greater than or equal to 0.15t, such as greater than or equal to 0.17t, or even greater than or equal to 0.2t. In embodiments, the colored glass article made from the glass composition may be ion-exchanged to achieve a depth of compression less than or equal to 0.3t, less than or equal to 0.27t, or even less than or equal to 0.25t. In embodiments, the colored glass article made from the glass composition described herein may be ion-exchanged to achieve a depth of compression greater than or equal to 0.15t and less than or equal to 0.3t, greater than or equal to 0.15t and less than or equal to 0.27t, greater than or equal to 0.15t and less than or equal to 0.25t, greater than or equal to 0.17t and less than or equal to 0.3t, greater than or equal to 0.17t and less than or equal to 0.27t, greater than or equal to 0.17t and less than or equal to 0.25t, greater than or equal to 0.2t and less than or equal to 0.3t, greater than or equal to 0.2t and less than or equal to 0.27t, or even greater than or equal to 0.2t and less than or equal to 0.25t.

The development of this surface compression layer is beneficial for achieving a better crack resistance and higher flexural strength compared to non-ion-exchanged materials. The surface compression layer has a higher concentration of the ions exchanged into the colored glass article in comparison to the concentration of the ions exchanged into the colored glass article for the body (i.e., the area not including the surface compression) of the colored glass article. The colored glass article made from the glass composition have a surface compressive stress after ion-exchange strengthening greater than or equal to 200 MPa, such as greater than or equal to 300 MPa, greater than or equal to 400 MPa, greater than or equal to 500 MPa, or even greater than or equal to 600 MPa. In embodiments, the colored glass article made from the glass composition may have a surface compressive stress after ion-exchange strengthening less than or equal to 1 GPa, less than or equal to 900 MPa, or even less than or equal to 800 MPa. In embodiments, the colored glass article made from the glass composition may have a surface compressive stress after ion-exchange strengthening greater than or equal to 300 MPa and less than or equal to 1 GPa, greater than or equal to 300 MPa and less than or equal to 900 MPa, greater than or equal to 300 MPa and less than or equal to 800 MPa, greater than or equal to 400 MPa and less than or equal to 1 GPa, greater than or equal to 400 MPa and less than or equal to 900 MPa, greater than or equal to 400 MPa and less than or equal to 800 MPa, greater than or equal to 500 MPa and less than or equal to 1 GPa, greater than or equal to 500 MPa and less than or equal to 900 MPa, greater than or equal to 500 MPa and less than or equal to 800 MPa, greater than or equal to 600 MPa and less than or equal to 1 GPa, greater than or equal to 600 MPa and less than or equal to 900 MPa, greater than or equal to 600 MPa and less than or equal to 800 MPa.

The colored glass articles made from the glass composition have a maximum central tension after ion-exchange strengthening greater than or equal to 60 MPa, such as greater than or equal to 80 MPa, or even greater than or equal to 100 MPa. In embodiments, the colored glass article made from the glass composition may have a maximum central tension after ion-exchange strengthening less than or equal to 250 MPa, less than or equal to 200 MPa, or even less than or equal to 150 MPa. In embodiments, the colored glass article made from the glass composition may have a maximum central tension after ion-exchange strengthening greater than or equal to 60 MPa and less than or equal to 250 MPa, greater than or equal to 60 MPa and less than or equal to 200 MPa, greater than or equal to 60 MPa and less than or equal to 150 MPa, greater than or equal to 80 MPa and less than or equal to 250 MPa, greater than or equal to 80 MPa and less than or equal to 200 MPa, greater than or equal to 80 MPa and less than or equal to 150 MPa, greater than or equal to 100 MPa and less than or equal to 250 MPa, greater than or equal to 100 MPa and less than or equal to 200 MPa, or even greater than or equal to 100 MPa and less than or equal to 150 MPa. As utilized herein, central tension refers to a maximum central tension value unless otherwise indicated.

In embodiments, the colored glass articles may have an average CTE of less than about $85 \times 10^{-7}$C$^{-1}$, less than about $80 \times 10^{-7}$C$^{-1}$, less than about $75 \times 10^{-7}$C$^{-1}$, less than about $70 \times 10^{-7}$C$^{-1}$, less than about $65 \times 10^{-7}$C$^{-1}$, or even less than about $60 \times 10^{-7}$C$^{-1}$ . These relatively low CTE values improve the survivability of the glass to thermal cycling or thermal stress conditions relative to articles with higher CTEs.

In embodiments, the colored glass articles described herein may generally have a strain point greater than or equal to about 400°C and less than or equal to about 550°C.

In embodiments, the colored glass articles described herein may generally have an anneal point greater than or equal to about 450°C and less than or equal to about 650°C.

In embodiments, the colored glass articles described herein may generally have a softening point greater than or equal to about 700°C and less than or equal to about 900°C.

The colored glass articles described herein may be used for a variety of applications including, for example, for housings for consumer electronic devices; for architectural glass applications; for automotive or vehicular glass applications; or for commercial or household appliance applications. In embodiments, a consumer electronic device (e.g., smartphones, tablet computers, watches, personal computers, ultrabooks, televisions, and cameras), an architectural glass, and/or an automotive glass may comprise a colored glass article as described herein.

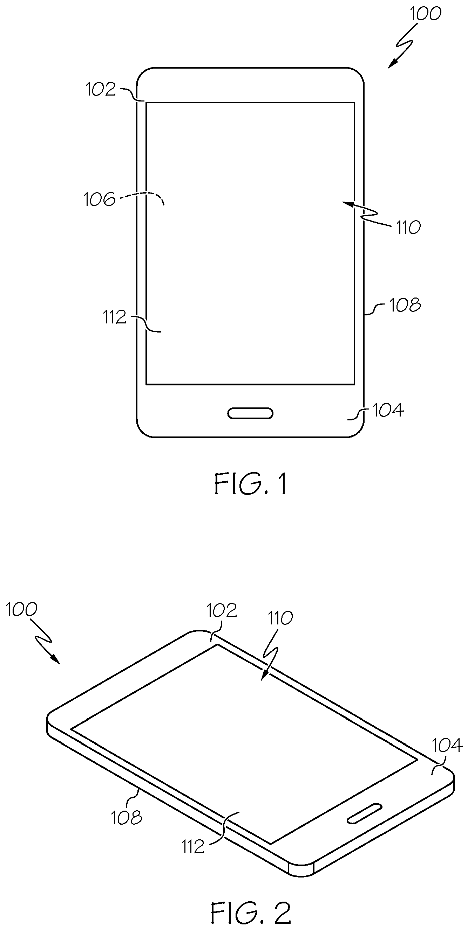

An example article incorporating any of the colored glass articles disclosed herein is shown in FIGS. 1 and 2. Specifically, FIGS. 1 and 2 show a consumer electronic device 100 including a housing 102 having front 104, back 106, and side surfaces 108; electrical components (not shown) that are at least partially inside or entirely within the housing and including at least a controller, a memory, and a display 110 at or adjacent to the front surface of the housing; and a cover substrate 112 at or over the front surface of the housing such that it is over the display. In embodiments, at least a portion of housing 102, such as the back 106, may include any of the colored glass articles disclosed herein.

### Examples

In order that various embodiments be more readily understood, reference is made to the following examples, which illustrate various embodiments of the colored glass articles described herein.

<u>Heat Treatment</u> - The heat treatment of the Examples below included placing the glass articles between a SiC setter, placing the glass articles in an oven and heating the oven to the indicated heat treatment temperature at a rate of 4 °C/min, and cooling from the heat treatment temperature after the heat treatment time had lapsed at a cooling rate of 3 °C/min.

Table 14 shows example glass compositions (in terms of mol%) containing $Cr_2O_3$ as a colorant and the transmittance color coordinate in the CIELAB color space, as measured at an article thickness of 1.5 mm under F2 illumination and a 10° standard observer angle, of the resultant colored glass articles.

**Table 14**

| Example | Cr-1 | Cr-2 | Cr-3 | Cr-4 | Cr-5 | Cr-6 |
|---|---|---|---|---|---|---|
| $SiO_2$ | 58.78 | 58.30 | 58.52 | 58.97 | 58.26 | 58.52 |
| $Al_2O_3$ | 16.68 | 16.35 | 16.50 | 16.41 | 16.38 | 16.56 |
| $B_2O_3$ | 5.93 | 5.93 | 6.01 | 5.98 | 5.93 | 6.04 |
| $Li_2O$ | 11.74 | 9.86 | 9.93 | 9.89 | 9.85 | 9.89 |
| $Na_2O$ | 6.26 | 4.25 | 4.27 | 4.27 | 4.26 | 4.30 |
| $K_2O$ | 0.48 | 0.48 | 0.48 | 0.49 | 0.48 | 0.49 |
| $MgO$ | 0.02 | 2.91 | 2.95 | 2.91 | 2.94 | 2.93 |
| $CaO$ | 0.01 | 0.01 | 0.01 | 0.01 | 0.01 | 0.02 |
| $ZnO$ | - | 1 | 1.01 | 1 | 1 | 1.05 |
| $TiO_2$ | 0.01 | 0.01 | 0.01 | 0.01 | 0.01 | 0.01 |
| $NiO$ | - | - | 0.023 | 0.012 | 0.043 | 0.089 |
| $Co_3O_4$ | - | 0.001 | 0.002 | 0.002 | 0.03 | 0.048 |
| $CuO$ | - | 0.83 | 0.233 | 0.037 | 0.785 | 0.044 |
| $Cr_2O_3$ | 0.098 | 0.068 | 0.038 | 0.002 | 0.016 | 0.008 |
| $R_2O$ | 18.48 | 14.59 | 14.68 | 14.65 | 14.59 | 14.68 |
| $R'O$ | 0.03 | 3.92 | 3.97 | 3.92 | 3.95 | 4 |
| $R_2O + R'O - Al_2O_3$ | 1.83 | 2.16 | 2.15 | 2.16 | 2.16 | 2.12 |
| $MgO + ZnO$ | 0.02 | 3.91 | 3.96 | 3.91 | 3.94 | 3.98 |
| $Al_2O_3 + MgO + ZnO$ | 16.7 | 20.26 | 20.46 | 20.32 | 20.32 | 20.54 |
| **Transmittance Color Coordinate** | | | | | | |
| $L^*$ | 83.78 | 77.06 | 85.88 | 94.99 | 66.99 | 62.17 |
| $a^*$ | -12.60 | -26.24 | -9.49 | -0.45 | -10.12 | -2.12 |
| $b^*$ | 62.26 | 8.74 | 6.26 | 0.17 | -14.19 | -20.39 |

**Table 14 cont.**

| Example | Cr-7 | Cr-8 | Cr-9 | Cr-10 | Cr-11 | Cr-12 |
|---|---|---|---|---|---|---|
| $SiO_2$ | 57.09 | 59.21 | 58.44 | 58.12 | 59.20 | 58.36 |
| $Al_2O_3$ | 16.10 | 16.64 | 16.21 | 16.56 | 16.58 | 16.11 |
| $B_2O_3$ | 5.90 | 5.62 | 5.70 | 6.07 | 5.67 | 5.69 |
| $Li_2O$ | 9.68 | 11.75 | 11.56 | 11.83 | 11.82 | 11.6 |

(continued)

| Example | Cr-7 | Cr-8 | Cr-9 | Cr-10 | Cr-11 | Cr-12 |
|---|---|---|---|---|---|---|
| $Na_2O$ | 4.21 | 6.18 | 6.09 | 6.21 | 6.16 | 6.07 |
| $K_2O$ | 0.47 | 0.47 | 0.47 | 0.48 | 0.45 | 0.46 |
| $MgO$ | 2.86 | 0.02 | 0.02 | 0.02 | 0.02 | 0.02 |
| $CaO$ | 0.02 | 0.01 | 0.01 | 0.01 | 0.01 | 0.01 |
| $ZnO$ | 0.98 | - | - | - | - | - |
| $TiO_2$ | - | 0.01 | - | 0.01 | 0.01 | - |
| $NiO$ | 0.014 | 0.078 | 0.039 | 0.071 | - | - |
| $Co_3O_4$ | 0.058 | 0.001 | 0.001 | 0.002 | 0.002 | 0.038 |
| $CuO$ | 2.598 | 0.002 | 1.351 | 0.563 | 0.086 | 1.583 |
| $Cr_2O_3$ | 0.006 | 0.009 | 0.102 | 0.051 | 0.002 | 0.051 |
| $R_2O$ | 14.36 | 18.4 | 18.12 | 18.52 | 18.43 | 18.13 |
| $R'O$ | 3.86 | 0.03 | 0.03 | 0.03 | 0.03 | 0.03 |
| $R_2O + R'O - Al_2O_3$ | 2.12 | 1.79 | 1.94 | 1.99 | 1.88 | 2.05 |
| $MgO + ZnO$ | 3.84 | 0.02 | 0.02 | 0.02 | 0.02 | 0.02 |
| $Al_2O_3 + MgO + ZnO$ | 19.94 | 16.66 | 16.23 | 16.58 | 16.6 | 16.13 |
| **Transmittance Color Coordinate** | | | | | | |
| $L^*$ | 38.41 | 89.31 | 89.27 | 76.84 | 94.52 | 41.28 |
| $a^*$ | -14.36 | -0.65 | -0.77 | -14.83 | -1.14 | -18.17 |
| $b^*$ | -13.36 | 17.15 | 17.45 | 11.73 | -2.04 | -13.89 |

**Table 14 cont.**

| Example | Cr-13 | Cr-14 | Cr-15 | Cr-16 | Cr-17 | Cr-18 |
|---|---|---|---|---|---|---|
| $SiO_2$ | 58.03 | 58.39 | 58.48 | 58.45 | 58.58 | 58.71 |
| $Al_2O_3$ | 16.57 | 16.49 | 16.53 | 16.49 | 16.42 | 16.54 |
| $B_2O_3$ | 6.03 | 6.01 | 6.09 | 6.04 | 5.97 | 5.99 |
| $Li_2O$ | 11.93 | 10.02 | 10.08 | 10.04 | 10.5 | 10.48 |
| $Na_2O$ | 6.23 | 4.28 | 4.26 | 4.25 | 4.71 | 4.76 |
| $K_2O$ | 0.48 | 0.48 | 0.49 | 0.48 | 0.48 | 0.49 |
| $MgO$ | 0.02 | 2.95 | 2.94 | 2.94 | 0.96 | 0.97 |
| $CaO$ | 0.01 | 0.02 | 0.01 | 0.02 | 0.98 | 0.98 |
| $ZnO$ | - | 1.01 | 1.01 | 1.01 | 0.99 | 1.02 |
| $TiO_2$ | 0.01 | 0.01 | 0.01 | 0.01 | 0.01 | 0.01 |
| $NiO$ | 0.093 | 0.021 | - | 0.082 | 0.019 | - |
| $Co_3O_4$ | 0.072 | 0.002 | 0.002 | 0.048 | 0.002 | 0.002 |
| $CuO$ | 0.516 | 0.278 | 0.091 | 0.137 | 0.339 | 0.054 |
| $Cr_2O_3$ | 0.012 | 0.036 | 0.001 | 0.006 | 0.039 | 0.001 |
| $R_2O$ | 18.64 | 14.78 | 14.83 | 14.77 | 15.69 | 15.73 |
| $R'O$ | 0.03 | 3.98 | 3.96 | 3.97 | 2.93 | 2.97 |
| $R_2O + R'O - Al_2O_3$ | 2.1 | 2.27 | 2.26 | 2.25 | 2.2 | 2.16 |
| $MgO + ZnO$ | 0.02 | 3.96 | 3.95 | 3.95 | 1.95 | 1.99 |
| $Al_2O_3 + MgO + ZnO$ | 16.59 | 20.45 | 20.48 | 20.44 | 18.37 | 18.53 |
| **Transmittance Color Coordinate** | | | | | | |
| $L^*$ | 38.93 | 85.89 | 95.05 | 62.68 | 85.25 | 95.29 |
| $a^*$ | 1.10 | -9.54 | -0.84 | -2.13 | -10.39 | -0.68 |
| $b^*$ | -44.38 | 5.68 | -0.62 | -20.72 | 6.20 | -0.90 |

**Table 14 cont.**

| Example | Cr-19 |
|---|---|
| $SiO_2$ | 58.51 |
| $Al_2O_3$ | 16.49 |
| $B_2O_3$ | 6.06 |
| $Li_2O$ | 10.47 |
| $Na_2O$ | 4.76 |
| $K_2O$ | 0.49 |
| $MgO$ | 0.97 |
| $CaO$ | 0.99 |
| $ZnO$ | 1.01 |
| $TiO_2$ | 0.01 |
| $NiO$ | 0.085 |
| $Co_3O_4$ | 0.048 |
| $CuO$ | 0.111 |
| $Cr_2O_3$ | 0.005 |
| $R_2O$ | 15.72 |
| $R'O$ | 2.97 |
| $R_2O + R'O - Al_2O_3$ | 2.2 |
| $MgO + ZnO$ | 1.98 |
| $Al_2O_3 + MgO + ZnO$ | 18.47 |
| **Transmittance Color Coordinate** | |
| $L*$ | 61.08 |
| $a*$ | -2.34 |
| $b*$ | -22.51 |

As indicated by the example glass compositions and colored glass articles in Table 14, the glass compositions described herein improve $Cr_2O_3$ solubility to form colored glass articles having the desired color. For example, example glass composition Cr-1 including 0.098 mol% $Cr_2O_3$ formed a colored glass article having a transmittance color coordinate in the CIELAB color space of $L* = 83.78$, $a* = -12.60$, and $b* = 62.26$.

As further indicated by the example glass compositions and colored glass articles in Table 14, adding other colorants in addition to $Cr_2O_3$ as described herein allows different color gamuts to be achieved. For example, example glass composition Cr-2 including 0.068 mol% $Cr_2O_3$, 0.001 mol% $Co_3O_4$, and 0.83 mol% $CuO$ formed a colored glass article have a transmittance color coordinate in the CIELAB color space of $L* = 77.06$, $a* = -26.24$, and $b*=8.74$. Example glass composition Cr-3, including 0.038 mol% $Cr_2O_3$, 0.023 mol% $NiO$, 0.002 mol% $Co_3O_4$, and 0.233 mol% $CuO$ formed a colored glass article have a transmittance color coordinate in the CIELAB color space of $L* = 85.88$, $a* = -9.40$, and $b* = 6.26$.

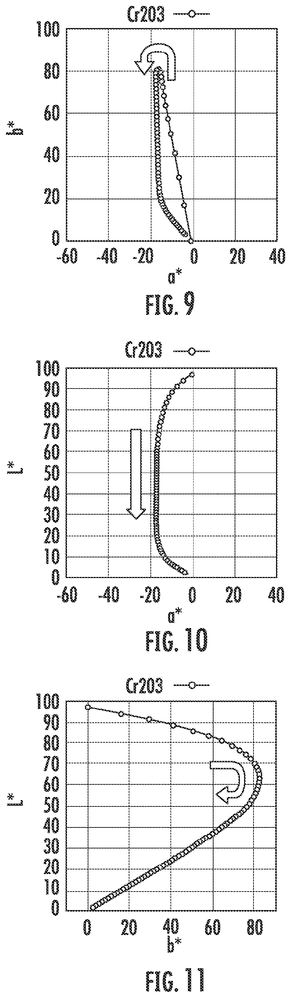

Referring now to FIGS. 9-32, projected color gamuts were modeled for glass compositions containing $Cr_2O_3$ as a colorant. The modeled compositions included $Cr_2O_3$ as the sole colorant as well as $Cr_2O_3$ in combination with $NiO$, $Co_3O_4$, $CuO$, and various combinations thereof.

Referring now to FIGS. 9-11, a projected color gamut for a glass composition including only $Cr_2O_3$ as a colorant is shown. As illustrated, a single colorant generates a line in the CIELAB color space. The points along the line correspond to different levels of $Cr_2O_3$ concentration from 0 mol% to 2 mol%. The arrows indicate the directions of increasing concentration. The $Cr_2O_3$ color gamut projects that a colored glass article having greater than or equal to 0 mol% and less than or equal to 2 mol% $Cr_2O_3$ may have a transmittance color coordinate in the CIELAB color space, as measured at an article thickness of 1.5 mm under F2 illumination and a 10° standard observer angle, of $L*$ greater than or equal to 0 and less than or equal to 100, $a*$ greater than or equal to -18 and less than or equal to 0, and $b*$ greater than or equal to 0 and less than or equal to 82.

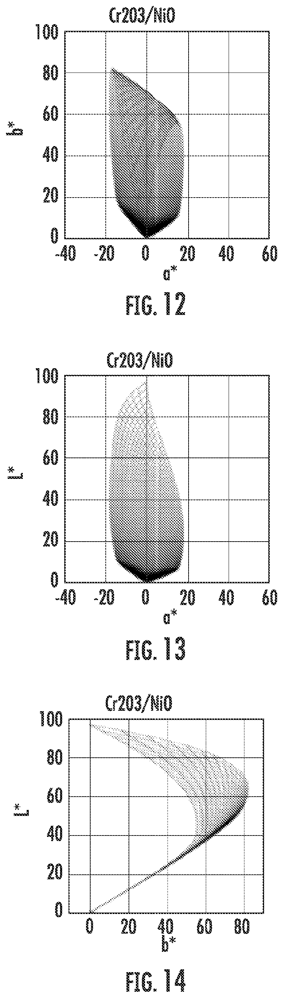

Different color gamuts may be achieved by including other colorants in addition to $Cr_2O_3$. Referring now to FIGS. 12-14, a projected color gamut for a glass composition including $Cr_2O_3$ and $NiO$ as colorants is shown. As illustrated, two colorants generate a surface in the CIELAB color space. The $Cr_2O_3/NiO$ color gamut projects that a colored glass article having greater than or equal to 0 mol% and less than or equal to 2 mol% $Cr_2O_3$ and greater than or equal to 0 mol% and less than or equal to 4 mol% $NiO$ may have a transmittance color coordinate in the CIELAB color space, as measured at an article thickness of 1.5 mm under F2 illumination and a 10° standard observer angle, of L* greater than or equal to 0 and less than or equal to 100, a* greater than or equal to -18 and less than or equal to 18, and b* greater than or equal to 0 and less than or equal to 82.

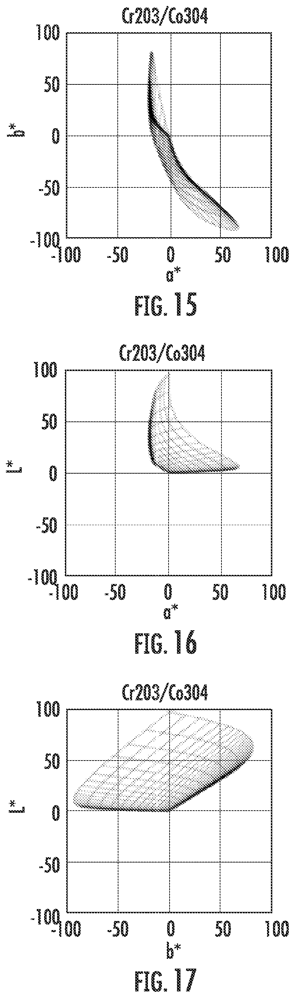

Referring now to FIGS. 15-17, a projected color gamut for a glass composition including $Cr_2O_3$ and $Co_3O_4$ as colorants is shown. As illustrated, two colorants generate a surface in the CIELAB color space. The $Cr_2O_3/Co_3O_4$ color gamut projects that a colored glass article having greater than or equal to 0 mol% and less than or equal to 2 mol% $Cr_2O_3$ and greater than or equal to 0 mol% and less than or equal to 2 mol% $Co_3O_4$ may have a transmittance color coordinate in the CIELAB color space, as measured at an article thickness of 1.5 mm under F2 illumination and a 10° standard observer angle, of L* greater than or equal to 0 and less than or equal to 100, a* greater than or equal to -20 and less than or equal to 60, and b* greater than or equal to -90 and less than or equal to 85.

Referring now to FIGS. 18-20, a projected color gamut for a glass composition including $Cr_2O_3$ and CuO as colorants is shown. As illustrated, two colorants generate a surface in the CIELAB color space. The $Cr_2O_3/CuO$ color gamut projects that a colored glass article having greater than or equal to 0 mol% and less than or equal to 2 mol% $Cr_2O_3$ and greater than or equal to 0 mol% and less than or equal to 20 mol% CuO may have a transmittance color coordinate in the CIELAB color space, as measured at an article thickness of 1.5 mm under F2 illumination and a 10° standard observer angle, of L* greater than or equal to 0 and less than or equal to 100, a* greater than or equal to -35 and less than or equal to 0, and b* greater than or equal to 0 and less than or equal to 82.

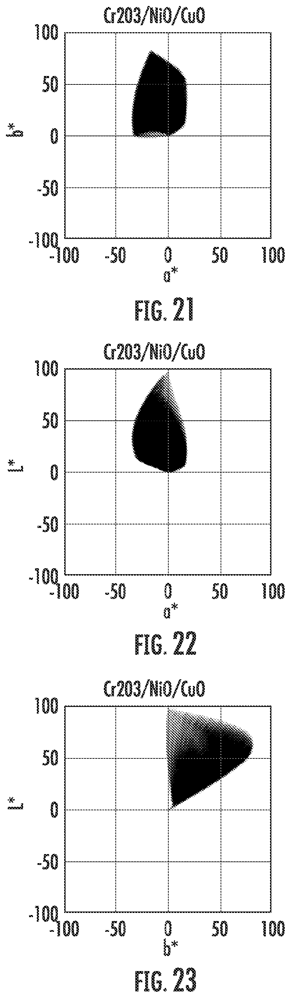

Referring now to FIGS. 21-23, a projected color gamut for a glass composition including $Cr_2O_3$, NiO, and CuO as colorants is shown. As illustrated, three colorants create a volume in the CIELAB color space. The $Cr_2O_3/NiO/CuO$ color gamut projects that a colored glass article having greater than or equal to 0 mol% and less than or equal to 2 mol% $Cr_2O_3$, greater than or equal to 0 mol% and less than or equal to 4 mol% NiO, and greater than or equal to 0 mol% and less than or equal to 20 mol% CuO may have a transmittance color coordinate in the CIELAB color space, as measured at an article thickness of 1.5 mm under F2 illumination and a 10° standard observer angle, of L* greater than or equal to 0 and less than or equal to 100, a* greater than or equal to -35 and less than or equal to 20, and b* greater than or equal to 0 and less than or equal to 75.

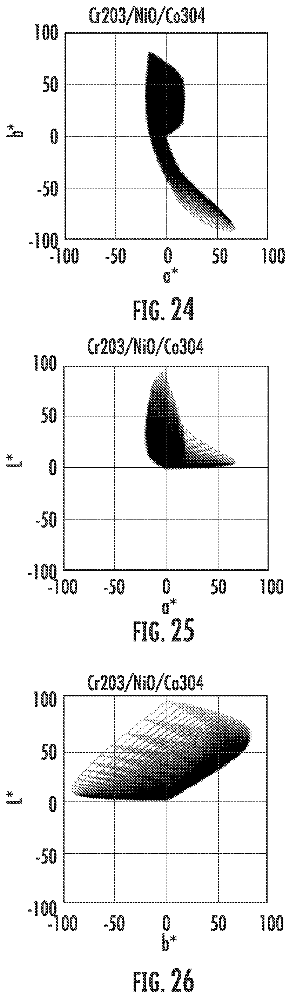

Referring now to FIGS. 24-26, a projected color gamut for a glass composition including $Cr_2O_3$, NiO, and $Co_3O_4$ as colorants is shown. As illustrated, three colorants create a volume in the CIELAB color space. The $Cr_2O_3/NiO/Co_3O_4$ color gamut projects that a colored glass article having greater than or equal to 0 mol% and less than or equal to 2 mol% $Cr_2O_3$, greater than or equal to 0 mol% and less than or equal to 4 mol% NiO, and greater than or equal to 0 mol% and less than or equal to 2 mol% $Co_3O_4$ may have a transmittance color coordinate in the CIELAB color space, as measured at an article thickness of 1.5 mm under F2 illumination and a 10° standard observer angle, of L* greater than or equal to 0 and less than or equal to 100, a* greater than or equal to -15 and less than or equal to 65, and b* greater than or equal to -90 and less than or equal to 80.

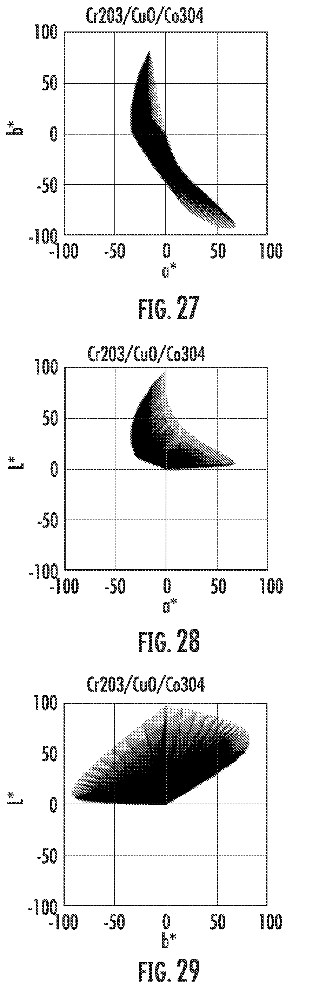

Referring now to FIGS. 27-29, a projected color gamut for a glass composition including $Cr_2O_3$, CuO, and $Co_3O_4$ as colorants is shown. As illustrated, three colorants create a volume in the CIELAB color space. The $Cr_2O_3/CuO/Co_3O_4$ color gamut projects that a colored glass article having greater than or equal to 0 mol% and less than or equal to 2 mol% $Cr_2O_3$, greater than or equal to 0 mol% and less than or equal to 20 mol% CuO, and greater than or equal to 0 mol% and less than or equal to 2 mol% $Co_3O_4$ may have a transmittance color coordinate in the CIELAB color space, as measured at an article thickness of 1.5 mm under F2 illumination and a 10° standard observer angle, of L* greater than or equal to 0 and less than or equal to 100, a* greater than or equal to -35 and less than or equal to 60, and b* greater than or equal to -90 and less than or equal to 80.

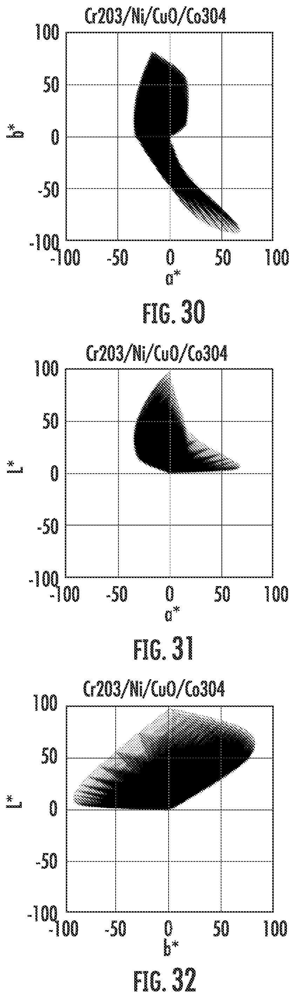

Referring now to FIGS. 30-32, a projected color gamut for a glass composition including $Cr_2O_3$, NiO, CuO, and $Co_3O_4$ as colorants is shown. As illustrated, four colorants create an overlapping volume in the CIELAB color space. The $Cr_2O_3/NiO/CuO/Co_3O_4$ color gamut projects that a colored glass article having greater than or equal to 0 mol% and less than or equal to 2 mol% $Cr_2O_3$, greater than or equal to 0 mol% and less than or equal to 4 mol% NiO, greater than or equal to 0 mol% and less than or equal to 20 mol% CuO, and greater than or equal to 0 mol% and less than or equal to 2 mol% $Co_3O_4$ may have a transmittance color coordinate in the CIELAB color space, as measured at an article thickness of 1.5 mm under F2 illumination and a 10° standard observer angle, of L* greater than or equal to 0 and less than or equal to 100, a* greater than or equal to -35 and less than or equal to 60, and b* greater than or equal to -90 and less than or equal to 80.

Tables 20A-20E show example glass compositions (in terms of mol%) containing transition metal oxides and/or rare earth oxides as colorant(s), including the total amount of transition metal oxides and/or rare earth oxides present (i.e., Sum "TM+RE"). Examples TM-14 to TM-16 and TM-19 to TM-23 in the following tables do not fall within the scope of the claims and are provided for reference purposes only.

Table 20A

| Example (mol%) | TM-1 | TM-2 | TM-3 | TM-4 | TM-5 | TM-6 | TM-7 | TM-8 | TM-9 | TM-10 |
|---|---|---|---|---|---|---|---|---|---|---|
| $SiO_2$ | 61.74 | 60.04 | 61.06 | 61.24 | 61.20 | 60.38 | 59.54 | 61.59 | 61.62 | 61.34 |

(continued)

| Example (mol%) | TM-1 | TM-2 | TM-3 | TM-4 | TM-5 | TM-6 | TM-7 | TM-8 | TM-9 | TM-10 |
|---|---|---|---|---|---|---|---|---|---|---|
| $Al_2O_3$ | 15.04 | 15.86 | 15.39 | 15.39 | 15.42 | 15.51 | 15.98 | 15.28 | 15.09 | 15.32 |
| $B_2O_3$ | 6.06 | 6.19 | 6.05 | 5.95 | 5.9 | 5.93 | 5.9 | 6.01 | 5.94 | 5.94 |
| $Li_2O$ | 9.03 | 8.93 | 8.94 | 9.93 | 9.95 | 8.65 | 8.69 | 9.28 | 9.3 | 9.39 |
| $Na_2O$ | 1.41 | 1.4 | 1.4 | 1.5 | 1.5 | 1.41 | 1.52 | 1.38 | 1.47 | 1.46 |
| $K_2O$ | 0.2 | 0.2 | 0.2 | 0.2 | 0.2 | 0.2 | 0.19 | 0.2 | 0.2 | 0.2 |
| CaO | 5.25 | 6.12 | 3.84 | 1.32 | 2.53 | 3.83 | 1.88 | 4.16 | 4.19 | 4.25 |
| MgO | 0.99 | 1 | 2.88 | 4.24 | 3.08 | 2.88 | 5.05 | 1.89 | 1.9 | 1.93 |
| NiO | 0.0154 | 0.0178 | 0.0170 | 0.0161 | 0.0154 | 0.0000 | 0.0000 | 0.0163 | 0.0000 | 0.0234 |
| $Co_3O_4$ | 0.0001 | 0.0001 | 0.0001 | 0.0000 | 0.0000 | 0.0000 | 0.0000 | 0.0000 | 0.0023 | 0.0094 |
| $Cr_2O_3$ | 0.0297 | 0.0287 | 0.0272 | 0.0280 | 0.0266 | 0.0008 | 0.0008 | 0.0256 | 0.0000 | 0.0000 |
| CuO | 0.2207 | 0.1959 | 0.1906 | 0.1750 | 0.1758 | 0.0008 | 0.0000 | 0.1638 | 0.2810 | 0.1165 |
| $CeO_2$ | 0.0000 | 0.0000 | 0.0000 | 0.0000 | 0.0000 | 0.2100 | 0.2100 | 0.0000 | 0.0000 | 0.0000 |
| $TiO_2$ | 0.01 | 0.01 | 0.01 | 0.01 | 0.01 | 0.99 | 1.02 | 0.01 | 0.01 | 0.01 |
| Sum TM+RE | 0.2759 | 0.2525 | 0.2449 | 0.2291 | 0.2278 | 1.2016 | 1.2308 | 0.2157 | 0.2933 | 0.1593 |

Table 20B

| Example (mol%) | TM-11 | TM-12 | TM-13 | TM-14 | TM-15 | TM-16 | TM-17 | TM-18 | TM-19 | TM-20 |
|---|---|---|---|---|---|---|---|---|---|---|
| $SiO_2$ | 61.06 | 61.24 | 61.14 | 61.48 | 61.47 | 61.13 | 61.11 | 61.32 | 61.1 | 61.18 |
| Al2O3 | 15.39 | 15.39 | 15.41 | 15.58 | 14.54 | 14.65 | 15.75 | 15.29 | 14.87 | 14.65 |
| $B_2O_3$ | 6.05 | 5.95 | 5.91 | 6.03 | 5.92 | 5.9 | 5.79 | 5.84 | 5.95 | 6.14 |
| $Li_2O$ | 8.94 | 9.93 | 9.96 | 9.69 | 9.92 | 10 | 9.24 | 9.35 | 9.96 | 10.05 |
| $Na_2O$ | 1.4 | 1.5 | 1.49 | 1.48 | 1.83 | 1.83 | 1.36 | 1.47 | 1.86 | 1.86 |
| $K_2O$ | 0.2 | 0.2 | 0.2 | 0.2 | 0.19 | 0.19 | 0.17 | 0.2 | 0.2 | 0.19 |
| CaO | 3.84 | 1.32 | 3.74 | 1.31 | 1.99 | 2.03 | 4.31 | 4.23 | 2.06 | 2.02 |
| MgO | 2.88 | 4.24 | 1.92 | 4.22 | 1.92 | 1.94 | 2.01 | 1.99 | 1.98 | 1.94 |
| NiO | 0.0170 | 0.0161 | 0.0164 | 0.0000 | 0.0000 | 0.0000 | 0.0215 | 0.0000 | 0.0000 | 0.0000 |
| $Co_3O_4$ | 0.0001 | 0.0000 | 0.0000 | 0.0000 | 0.0000 | 0.0000 | 0.0000 | 0.0025 | 0.0000 | 0.0000 |
| $Cr_2O_3$ | 0.0272 | 0.0280 | 0.0269 | 0.0000 | 0.0000 | 0.0000 | 0.0270 | 0.0000 | 0.0000 | 0.0000 |
| CuO | 0.1906 | 0.1750 | 0.1693 | 0.0000 | 0.0000 | 0.0000 | 0.1761 | 0.2642 | 0.0000 | 0.0000 |
| $CeO_2$ | 0.0000 | 0.0000 | 0.0000 | 0.0000 | 0.2000 | 0.2100 | 0.0000 | 0.0000 | 0.4200 | 0.4100 |
| $TiO_2$ | 0.01 | 0.01 | 0.01 | 0.01 | 0.99 | 0.99 | 0.01 | 0.05 | 1.01 | 1 |
| Sum TM+RE | 0.2449 | 0.2291 | 0.2226 | 0.0100 | 1.1900 | 1.2000 | 0.2346 | 0.3167 | 1.4300 | 1.4100 |

Table 20C

| Example | TM-21 | TM-22 | TM-23 |
|---|---|---|---|
| $SiO_2$ | 61.42 | 61.39 | 61.04 |
| $Al_2O_3$ | 14.92 | 14.87 | 14.73 |
| $B_2O_3$ | 5.62 | 5.78 | 5.8 |
| $Li_2O$ | 9.91 | 9.85 | 9.94 |
| $Na_2O$ | 1.87 | 1.86 | 1.84 |

(continued)

| Example | TM-21 | TM-22 | TM-23 |
|---|---|---|---|
| $K_2O$ | 0.2 | 0.2 | 0.19 |
| CaO | 2.06 | 2.06 | 2.03 |
| MgO | 1.99 | 1.97 | 1.95 |
| NiO | 0.0000 | 0.0000 | 0.0000 |
| $Co_3O_4$ | 0.0000 | 0.0000 | 0.0000 |
| $Cr_2O_3$ | 0.0000 | 0.0000 | 0.0000 |
| CuO | 0.0000 | 0.0000 | 0.0000 |
| $CeO_2$ | 0.4200 | 0.4200 | 0.4200 |
| $TiO_2$ | 1.02 | 1.02 | 1.01 |
| Sum TM+RE | 1.4400 | 1.4400 | 1.4300 |

Table 20D

| Example (mol%) | TM-24 | TM-25 | TM-26 | TM-27 | TM-28 | TM-29 | TM-30 | TM-31 | TM-32 | TM-33 |
|---|---|---|---|---|---|---|---|---|---|---|
| $SiO_2$ | 58.63 | 59.17 | 58.78 | 58.51 | 58.74 | 59.71 | 60.28 | 60.15 | 59.03 | 61.64 |
| $Al_2O_3$ | 16.38 | 16.61 | 16.52 | 16.52 | 16.30 | 16.46 | 16.48 | 15.79 | 16.35 | 15.05 |
| $B_2O_3$ | 6.05 | 5.71 | 5.95 | 6.06 | 6.09 | 5.95 | 6.08 | 6.14 | 5.85 | 5.87 |
| $Li_2O$ | 9.95 | 11.13 | 10.91 | 10.50 | 10.05 | 10.45 | 10.24 | 8.95 | 11.86 | 12.03 |
| $Na_2O$ | 4.28 | 5.76 | 5.23 | 4.77 | 4.27 | 4.78 | 4.29 | 1.41 | 6.32 | 3.93 |
| $K_2O$ | 0.20 | 0.19 | 0.19 | 0.20 | 0.19 | 0.20 | 0.20 | 0.20 | 0.19 | 0.39 |
| MgO | 0.04 | 0.02 | 0.03 | 0.04 | 0.05 | 0.03 | 0.03 | 1.98 | 0.08 | 0.02 |
| ZnO | 3.96 | 0.99 | 2.00 | 3.01 | 3.92 | 1.99 | 2.00 | 5.01 | 0.00 | 0.75 |
| $SnO_2$ | 0.01 | 0.01 | 0.01 | 0.01 | 0.01 | 0.01 | 0.01 | 0.01 | 0.00 | 0.01 |
| $Fe_2O_3$ | 0.0044 | 0.0040 | 0.0044 | 0.0044 | 0.0044 | 0.0040 | 0.0044 | 0.0052 | 0.0132 | 0.0040 |
| NiO | 0.00 | 0.0138 | 0.0147 | 0.0147 | 0.0146 | 0.0147 | 0.0147 | 0.0176 | 0.0112 | 0.0116 |
| $Co_3O_4$ | 0.0027 | 0.0024 | 0.0021 | 0.0024 | 0.0021 | 0.0021 | 0.0021 | 0.0001 | 0.0027 | 0.0118 |
| $Cr_2O_3$ | 0.0004 | 0.0258 | 0.0267 | 0.0267 | 0.0262 | 0.0263 | 0.0268 | 0.0291 | 0.0274 | 0.0240 |
| CuO | 0.3340 | 0.2222 | 0.1944 | 0.2130 | 0.2046 | 0.2305 | 0.2183 | 0.1987 | 0.1659 | 0.1673 |
| Sum TM+RE | 0.3371 | 0.2653 | 0.2380 | 0.2568 | 0.2476 | 0.2736 | 0.2619 | 0.2455 | 0.2072 | 0.2047 |

Table 20E

| Example | TM-34 | TM-35 | TM-36 |
|---|---|---|---|
| $SiO_2$ | 60.95 | 61.66 | 60.89 |
| $Al_2O_3$ | 15.44 | 15.11 | 15.61 |
| $B_2O_3$ | 5.80 | 5.94 | 6.12 |
| $Li_2O$ | 9.78 | 11.97 | 9.49 |
| $Na_2O$ | 1.56 | 3.94 | 1.52 |
| $K_2O$ | 0.20 | 0.39 | 0.19 |
| CaO | 4.28 | 0.76 | 4.17 |
| MgO | 1.97 | 0.03 | 1.99 |
| NiO | 0.0000 | 0.0173 | 0.0000 |

(continued)

| Example | TM-34 | TM-35 | TM-36 |
|---|---|---|---|
| $Co_3O_4$ | 0.0017 | 0.0025 | 0.0010 |
| $Cr_2O_3$ | 0.0034 | 0.0277 | 0.0000 |
| CuO | 0.0000 | 0.1380 | 0.0000 |
| $CeO_2$ | 0.00 | 0.00 | 0.00 |
| $TiO_2$ | 0.01 | 0.01 | 0.01 |
| Sum TM+RE | 0.0052 | 0.1855 | 0.0010 |

Tables 21A-21C show the dielectric constant (calculated) and dielectric constant (as measured at 10 GHz) for select examples from Tables 20A-20E. When calculated, the dielectric constant was calculated according to the formula: Dk = 3.802946 + 0.01747*$B_2O_3$ (mol%) + 0.058769*$Al_2O_3$ (mol%)+ 0.080876*$Li_2O$ (mol%) + 0.148433*$Na_2O$ (mol%) + 0.153264*$K_2O$ (mol%) + 0.045179*MgO (mol%) + 0.080113*CaO (mol%). Where measured, the dielectric constant was measured using a split post dielectric resonator (SPDR at a frequency of 10 GHz. Tables 21A-21C also show the CIELAB L*, a*, and b* coordinates for select examples from Tables 20A-2E at the indicated thickness.

Table 21A

| Example | TM-1 | TM-2 | TM-3 | TM-4 | TM-5 | TM-6 | TM-7 | TM-8 | TM-9 | TM-10 |
|---|---|---|---|---|---|---|---|---|---|---|
| Dk Relationship (calculated) | 6.2283 | 6.3393 | 6.2123 | 6.1651 | 6.2121 | 6.1945 | 6.1815 | 6.2106 | 6.2161 | 6.2415 |
| Dk (measured at 10 GHz) | 6.13 | 6.23 | 6.18 | 6.15 | 6.19 | 6.29 | 6.21 | 6.22 | | |
| L* | | | | | | | | 90.61 | 92.48 | 88.24 |
| a* | | | | | | | | -8.02 | -4.39 | -1.61 |
| b* | | | | | | | | 4.61 | -3.85 | -4.42 |
| Thickness (mm) | | | | | | | | 1.32 | 1.38 | 1.36 |

Table 21B

| Example | TM-11 | TM-12 | TM-13 | TM-14 | TM-15 | TM-16 | TM-17 | TM-18 | TM-19 | TM-20 |
|---|---|---|---|---|---|---|---|---|---|---|
| Dk Relationship (calculated) | 6.2123 | 6.1651 | 6.2555 | 6.1535 | 6.1101 | 6.1268 | 6.2410 | 6.2374 | 6.1475 | 6.1387 |
| Dk (measured at 10 GHz) | | | | | | | | | | |
| L* | 90.14 | 90.81 | 90.81 | 96.81 | 96.68 | 96.63 | 89.23 | 92.76 | 96.11 | 96.11 |
| a* | -8.48 | -7.43 | -7.6 | -0.02 | -0.4 | -0.39 | -7.87 | -4.26 | -1.36 | -1.36 |
| b* | 4.91 | 4.98 | 4.79 | 0.2 | 1.28 | 1.47 | 3.88 | -3.53 | 4.76 | 4.76 |
| Thickness (mm) | 1.38 | 1.34 | 1.34 | 1.32 | 1.34 | 1.34 | 1.32 | 1.37 | 1.34 | 1.34 |

Table 21C

| Example | TM-21 | TM-22 | TM-23 | TM-24 | TM-28 | TM-34 | TM-35 | TM-36 |
|---|---|---|---|---|---|---|---|---|
| Dk Relationship (calculated) | 6.1426 | 6.1352 | 6.1268 | | | 5.95 | 6.41 | 5.94 |

(continued)

| Example | TM-21 | TM-22 | TM-23 | TM-24 | TM-28 | TM-34 | TM-35 | TM-36 |
|---|---|---|---|---|---|---|---|---|
| Dk (measured at 10 GHz) | | | | 6.42 | 6.52 | 6.23 | 6.41 | 6.24 |
| L* | 96.11 | 96.11 | 96.22 | | | | | |
| a* | -1.36 | -1.36 | -1.3 | | | | | |
| b* | 4.76 | 4.76 | 4.44 | | | | | |
| Thickness (mm) | 1.34 | 1.34 | 1.36 | | | | | |

Tables 22A and 22B show the ion exchange characteristic (CS, DOL, and CT) for select glass articles from Tables 20A-20D at different thicknesses and ion exchange conditions (temperature, time, and ion exchange bath compositions).

Table 22A

| Example | Thickness (mm) | Temp (°C) | Time (hrs.) | $KNO_3$ (wt.%) | $NaNO_3$ (wt.%) | $LiNO_3$ (wt.%) | CS (MPa) | DOL ($\mu$m) | CT (MPa) |
|---|---|---|---|---|---|---|---|---|---|
| TM-24 | 0.6 | 440 | 6.5 | 79.2 | 19.4 | 1.4 | 599 | 5.62 | 104.67 |
| TM-25 | 0.6 | 430 | 4 | 79 | 19.4 | 1.6 | 633 | 6.02 | 129.51 |
| TM-26 | 0.6 | 430 | 4 | 79 | 19.4 | 1.6 | 661 | 5.03 | 124.41 |
| TM-27 | 0.6 | 430 | 4 | 79 | 19.4 | 1.6 | 700 | 3.83 | 119.67 |
| TM-28 | 0.6 | 430 | 4 | 79 | 19.4 | 1.6 | 684 | 3.97 | 117.14 |
| TM-28 | 0.6 | 430 | 8 | 79 | 19.4 | 1.6 | 615 | 4.79 | 131.67 |
| TM-28 | 0.6 | 430 | 16 | 79 | 19.4 | 1.6 | 559 | 6.82 | 97.64 |
| TM-28 | 0.6 | 440 | 6 | 79 | 19.4 | 1.6 | 600 | 5.29 | 109.95 |
| TM-28 | 0.6 | 440 | 6 | 79.2 | 19.4 | 1.4 | 651 | 4.67 | 108.80 |
| TM-28 | 0.6 | 440 | 7 | 79.2 | 19.4 | 1.4 | 600 | 5.40 | 110.20 |
| TM-28 | 0.6 | 440 | 6.5 | 79.2 | 19.4 | 1.4 | 589 | 5.56 | 105.80 |
| TM-29 | 0.6 | 430 | 4 | 79 | 19.4 | 1.6 | 643 | 5.56 | 142.52 |
| TM-30 | 0.6 | 430 | 4 | 79 | 19.4 | 1.6 | 681 | 5.24 | 127.46 |
| TM-31 | 0.6 | 450 | 4 | 90 | 10 | 0 | 902 | 3.52 | 110 |
| TM-31 | 0.6 | 450 | 8 | 90 | 10 | 0 | 832 | 4.52 | 160 |
| TM-31 | 0.6 | 450 | 12 | 90 | 10 | 0 | 758 | 5.62 | 191 |
| TM-31 | 0.6 | 450 | 8 | 89 | 10 | 1 | 773 | 3.54 | 110 |
| TM-31 | 0.6 | 450 | 12 | 89 | 10 | 1 | 673 | 4.65 | 138 |
| TM-31 | 0.6 | 450 | 8 | 88.5 | 10 | 1.5 | 695 | 3.64 | 96 |
| TM-31 | 0.6 | 450 | 12 | 88.5 | 10 | 1.5 | 639 | 4.17 | 109 |
| TM-13 | 0.6 | 450 | 4 | 90 | 10 | 0 | 900 | 3.99 | 133 |
| TM-13 | 0.6 | 450 | 8 | 90 | 10 | 0 | 786 | 5.61 | 187 |
| TM-13 | 0.6 | 450 | 12 | 90 | 10 | 0 | 721 | 7.55 | 174 |
| TM-13 | 0.6 | 450 | 8 | 89 | 10 | 1 | 721 | 4.89 | 139 |
| TM-13 | 0.6 | 450 | 12 | 89 | 10 | 1 | 661 | 5.76 | 143 |
| TM-13 | 0.6 | 450 | 8 | 88.5 | 10 | 1.5 | 704 | 4.39 | 114 |
| TM-13 | 0.6 | 450 | 12 | 88.5 | 10 | 1.5 | 636 | 5.69 | 113 |

Table 22B

| Example | Thickness (mm) | Temp (°C) | Time (hrs.) | $KNO_3$ (wt.%) | $NaNO_3$ (wt.%) | $LiNO_3$ (wt.%) | CS (MPa) | DOL (μm) | CT (MPa) |
|---|---|---|---|---|---|---|---|---|---|
| TM-32 | 1.33 | 400 | 16 | 89 | 10 | 1 | 672 | 9.1 | 72 |
| TM-32 | 1.33 | 400 | 24 | 89 | 10 | 1 | 627 | 11.2 | 78 |
| TM-32 | 1.33 | 430 | 8 | 80 | 20 | 0 | 518 | 11.6 | 97 |
| TM-32 | 0.6 | 380 | 8 | 79 | 18.7 | 2.3 | 641 | 4.1 | 100 |
| TM-32 | 0.6 | 380 | 10 | 79 | 18.7 | 2.3 | 612 | 4.7 | 102 |
| TM-32 | 0.6 | 380 | 12 | 79 | 18.7 | 2.3 | 599 | 5.2 | 100 |
| TM-32 | 0.6 | 410 | 4 | 79 | 19.5 | 1.5 | 633 | 5.3 | 109 |
| TM-32 | 0.6 | 410 | 5 | 79 | 19.5 | 1.5 | 612 | 5.9 | 108 |
| TM-32 | 0.6 | 410 | 6 | 79 | 19.5 | 1.5 | 601 | 6.1 | 107 |
| TM-32 | 0.6 | 400 | 5 | 79 | 19.8 | 1.2 | 695 | 5.0 | 112 |
| TM-32 | 0.6 | 400 | 5 | 79 | 20.1 | 0.9 | 671 | 5.3 | 116 |
| TM-32 | 0.6 | 400 | 5 | 79 | 19.4 | 1.6 | 645 | 5.0 | 107 |
| TM-32 | 0.6 | 430 | 2.5 | 79 | 19.4 | 1.6 | 591 | 6.0 | 101 |
| TM-32 | 0.6 | 430 | 3 | 79 | 19.4 | 1.6 | 569 | 6.1 | 98 |
| TM-32 | 0.6 | 430 | 3.5 | 79 | 19.4 | 1.6 | 557 | 6.8 | 96 |
| TM-32 | 0.6 | 430 | 2.5 | 75.6 | 24 | 0.4 | 609 | 6.41 | 126 |
| TM-32 | 0.6 | 430 | 2.5 | 76 | 24 | 0 | 602 | 7.57 | 129 |
| TM-32 | 0.55 | 400 | 3 | 79 | 19.8 | 1.2 | 749 | 3.69 | 108 |
| TM-8 | 0.6 | 450 | 4 | 89.8 | 10 | 0.2 | 693 | 5.54 | 139 |
| TM-8 | 0.6 | 450 | 4 | 89.8 | 10 | 0.2 | 637 | 7.54 | 134 |
| TM-8 | 0.6 | 450 | 8 | 89.5 | 10 | 0.5 | 664 | 5.56 | 134 |
| TM-8 | 0.6 | 450 | 8 | 88.5 | 11 | 0.5 | 661 | 5.59 | 138 |
| TM-8 | 0.6 | 450 | 8 | 87.5 | 12 | 0.5 | 645 | 5.69 | 142 |
| TM-8 | 0.6 | 450 | 8 | 86.5 | 13 | 0.5 | 636 | 5.74 | 145 |
| TM-8 | 0.6 | 450 | 8 | 89.5 | 10 | 0.5 | 667 | 5.52 | 136 |
| TM-8 | 0.55 | 450 | 6.75 | 87.3 | 12.5 | 0.2 | 668 | 5.64 | 140 |
| TM-8 | 0.55 | 450 | 6.75 | 87.5 | 12.5 | 0 | 686 | 5.63 | 157 |
| TM-8 | 0.6 | 440 | 8 | 88 | 11 | 1 | 667 | 4.32 | 121 |
| TM-8 | 0.6 | 440 | 10 | 88 | 11 | 1 | 638 | 5.10 | 127 |
| TM-8 | 0.6 | 440 | 12 | 88 | 11 | 1 | 614 | 5.64 | 129 |

Table 23 shows the fracture toughness ($K_{IC}$) for select examples from Tables 20A-20D and a comparative example of a non-colored glass article comprising 58.41 mol% $SiO_2$, 6.07 mol% $B_2O_3$, 17.84 mol% $Al_2O_3$, 1.73 mol% $Na_2O$, 0.20 mol% $K_2O$, 4.43 mol% MgO, 0.57 mol% CaO, 0.01 mol% $SnO_2$, and 10.71 mol% $Li_2O$. The fracture toughness was measured using the chevron notch short bar method and the dual cantilever beam method.

Table 23

| Example | $K_{IC}$ CNSB (MPa·m$^{1/2}$) | $K_{IC}$ DCB (MPa·m$^{1/2}$) |
|---|---|---|
| TM-32 | 0.774 | 0.816 |
| TM-8 | 0.8 | 0.839 |

(continued)

| Example | $K_{IC}$ CNSB (MPa·m$^{1/2}$) | $K_{IC}$ DCB (MPa·m$^{1/2}$) |
|---|---|---|
| TM-33 | 0.794 | 0.813 |
| Comparative Example | 0.786 | 0.877 |

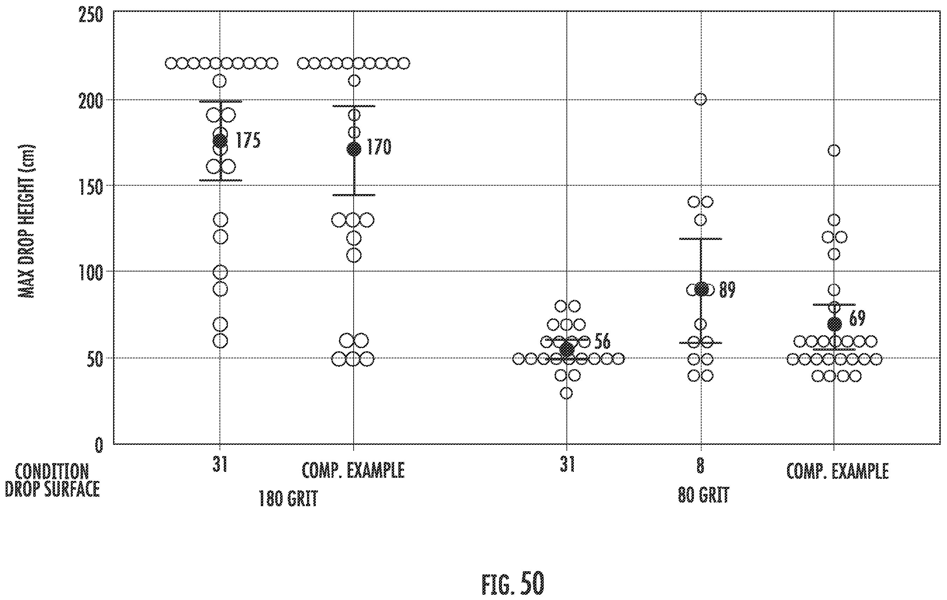

FIG. 50 shows the results of an incremental face drop on sandpaper (i.e., a "drop test") for two different sandpaper conditions (180 grit) and (80 grit) for select examples from Tables 20A-20D and a comparative example of a non-colored glass article comprising 58.41 mol% $SiO_2$, 6.07 mol% $B_2O_3$, 17.84 mol% $Al_2O_3$, 1.73 mol% $Na_2O$, 0.20 mol% $K_2O$, 4.43 mol% MgO, 0.57 mol% CaO, 0.01 mol% $SnO_2$, and 10.71 mol% $Li_2O$. Prior to performing the drop test, the TM-33 samples were ion exchanged in a molten salt batch comprising 89.3 wt% $KNO_3$, 10 wt.% $NaNO_3$, and 0.7 wt.% $LiNO_3$ at 440°C for 9 hours. The TM-8 samples were ion exchanged in a molten salt batch comprising 79 wt% $KNO_3$, 19.9 wt.% $NaNO_3$, and 1.6 wt.% $LiNO_3$ at 400°C for 5 hours. The comparative examples were ion exchanged in a molten salt batch comprising 90.3 wt% $KNO_3$, 9 wt.% $NaNO_3$, and 0.7 wt.% $LiNO_3$ at 450°C for 5 hours.

The circles in FIG. 50 indicate at what height the sample fractured. The diamonds represent samples that were dropped incrementally all the way to 220 cm and did not fracture. As exemplified by FIG. 50, Examples 8 and 32, colored glass articles exhibited similar drop performance as compared to a comparative example of a non-colored glass article.

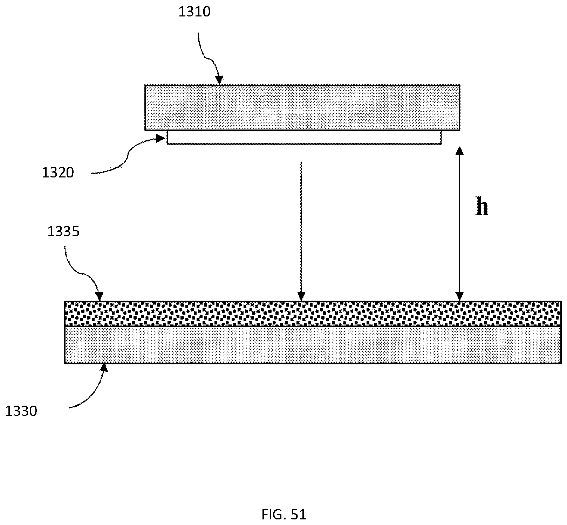

A typical drop test is schematically shown in FIG. 51. Each sample 1310 was affixed to a standard test vehicle 1320, which approximates the size, mass, and balance of a generic "smart" phone, and dropped from a drop height h onto a sheet of sandpaper 1330 having an abrasive surface 1335. The drop height h ranged from about 0.2 meter to 2.2 meters in incremental heights of 0.1 meter. Drop testing was carried out using a 180-grit silicon carbide sandpaper surface and an 80 grit silicon carbide sandpaper surface. The drop performance is reported in terms of the maximum drop height in cm before failure of the colored glass article.

Tables 24A and 24B show example glass compositions (in terms of mol%) containing transition metal oxides and/or rare earth oxides as colorant(s). Tables 24A and 24B also show the dielectric constant (Dk, as measured at 10 GHz) for the example compositions. Example TM-37 in the following table does not fall within the scope of the claims and is provided for reference purposes only.

Table 24A

| Example (mol%) | TM-37 | TM-38 | TM-39 | TM-40 | TM-41 | TM-42 | TM-42 | TM-44 | TM-45 |
|---|---|---|---|---|---|---|---|---|---|
| $SiO_2$ | 58.5 | 59.5 | 59.6 | 59.2 | 59.1 | 61.1 | 61.5 | 59.1 | 59.3 |
| $Al_2O_3$ | 16.4 | 16.4 | 16.3 | 16.4 | 16.5 | 15.6 | 15.2 | 16.4 | 16.5 |
| $B_2O_3$ | 5.8 | 5.8 | 5.6 | 5.9 | 5.9 | 5.8 | 6.0 | 6.0 | 5.7 |
| $P_2O_5$ | 0.0 | 0.0 | 0.0 | 0.0 | 0.0 | 0.0 | 0.0 | 0.0 | 0.0 |
| $Li_2O$ | 11.8 | 9.2 | 8.7 | 9.4 | 9.0 | 9.3 | 8.2 | 9.4 | 8.8 |
| $Na_2O$ | 6.1 | 3.8 | 3.3 | 3.8 | 3.3 | 3.8 | 1.2 | 3.7 | 3.3 |
| $K_2O$ | 0.2 | 0.2 | 0.2 | 0.2 | 0.2 | 0.2 | 0.2 | 0.2 | 0.2 |
| MgO | 0.0 | 0.0 | 0.1 | 0.9 | 1.9 | 0.0 | 0.1 | 0.1 | 0.1 |
| CaO | 0.0 | 4.9 | 5.9 | 3.9 | 4.0 | 4.0 | 7.4 | 4.9 | 6.0 |
| $TiO_2$ | 1.0 | 0.0 | 0.0 | 0.0 | 0.0 | 0.0 | 0.0 | 0.0 | 0.0 |
| $Fe_2O_3$ | 0.00 | 0.00 | 0.00 | 0.00 | 0.00 | 0.00 | 0.01 | 0.00 | 0.00 |
| $CeO_2$ | 0.20 | 0.00 | 0.00 | 0.00 | 0.00 | 0.00 | 0.00 | 0.00 | 0.00 |
| NiO | 0.00 | 0.02 | 0.01 | 0.02 | 0.02 | 0.02 | 0.02 | 0.03 | 0.03 |
| $Co_3O_4$ | 0.00 | 0.00 | 0.00 | 0.00 | 0.00 | 0.00 | 0.00 | 0.01 | 0.01 |
| $Cr_2O_3$ | 0.00 | 0.03 | 0.03 | 0.03 | 0.03 | 0.03 | 0.03 | 0.00 | 0.00 |
| CuO | 0.00 | 0.16 | 0.16 | 0.16 | 0.16 | 0.16 | 0.16 | 0.12 | 0.13 |
| Cl | 0.01 | 0.01 | 0.01 | 0.01 | 0.01 | 0.01 | 0.01 | 0.01 | 0.01 |
| Dk (measured at 10GHz) | 6.7 | 6.44 | 6.44 | 6.43 | 6.39 | 6.37 | 6.23 | 6.47 | 6.46 |

Table 24B

| Example (mol%) | TM-46 | TM-47 | TM-48 | TM-49 | TM-50 | TM-51 | TM-52 | TM-52 | TM-54 |
|---|---|---|---|---|---|---|---|---|---|
| $SiO_2$ | 59.7 | 58.9 | 61.1 | 61.8 | 62.5 | 62.5 | 62.5 | 62.1 | 60.2 |
| $Al_2O_3$ | 16.3 | 16.7 | 15.5 | 15.2 | 14.8 | 14.7 | 14.8 | 15.2 | 15.9 |
| $B_2O_3$ | 5.8 | 5.9 | 5.9 | 5.6 | 6.0 | 6.0 | 6.0 | 5.9 | 6.0 |
| $P_2O_5$ | 0.0 | 0.0 | 0.0 | 0.0 | 0.0 | 0.0 | 0.0 | 0.0 | 0.0 |
| $Li_2O$ | 9.3 | 8.9 | 9.4 | 8.3 | 8.9 | 8.9 | 9.0 | 8.9 | 8.8 |
| $Na_2O$ | 3.7 | 3.3 | 3.8 | 1.2 | 1.4 | 1.4 | 1.4 | 1.4 | 1.4 |
| $K_2O$ | 0.2 | 0.2 | 0.2 | 0.2 | 0.2 | 0.2 | 0.2 | 0.2 | 0.2 |
| MgO | 0.9 | 1.9 | 0.0 | 0.1 | 1.9 | 2.9 | 3.9 | 5.1 | 0.1 |
| CaO | 3.9 | 4.0 | 3.9 | 7.5 | 4.1 | 3.1 | 2.1 | 1.1 | 7.2 |
| $TiO_2$ | 0.0 | 0.0 | 0.0 | 0.0 | 0.0 | 0.0 | 0.0 | 0.0 | 0.0 |
| $Fe_2O_3$ | 0.00 | 0.00 | 0.00 | 0.01 | 0.00 | 0.00 | 0.01 | 0.00 | 0.01 |
| $CeO_2$ | 0.00 | 0.00 | 0.00 | 0.00 | 0.00 | 0.00 | 0.00 | 0.00 | 0.00 |
| NiO | 0.03 | 0.03 | 0.03 | 0.03 | 0.02 | 0.02 | 0.02 | 0.02 | 0.02 |
| $Co_3O_4$ | 0.01 | 0.01 | 0.01 | 0.01 | 0.00 | 0.00 | 0.00 | 0.00 | 0.00 |
| $Cr_2O_3$ | 0.00 | 0.00 | 0.00 | 0.00 | 0.03 | 0.03 | 0.03 | 0.03 | 0.03 |
| CuO | 0.12 | 0.12 | 0.12 | 0.13 | 0.18 | 0.17 | 0.18 | 0.20 | 0.19 |
| Cl | 0.01 | 0.01 | 0.01 | 0.01 | 0.00 | 0.00 | 0.00 | 0.00 | 0.00 |
| Dk (measured at 10GHz) | 6.44 | 6.38 | 6.34 | 6.18 | 6.44 | 6.44 | 6.43 | 6.39 | 6.37 |

Tables 27T-27Z show example colored glass articles (in terms of mol%) containing transition metal oxides and/or rare earth oxides as colorant(s). The density, thickness, and transmittance color coordinates in the CIELAB color space, as measured under F2 illumination and a 10° standard observer angle are also reported in Tables 27T-27Z. Examples TM-839 to TM-846, TM-857, TM-858, TM-867 to TM-870, TM-884, TM-885 and TM-889 to TM-891 in the following tables do not fall within the scope of the claims and are provided for reference purposes only.

Table 27T

| Example | TM-839 | TM-840 | TM-841 | TM-842 | TM-843 | TM-844 | TM-845 | TM-846 | TM-847 |
|---|---|---|---|---|---|---|---|---|---|
| $SiO_2$ | 61.581 | 61.581 | 61.318 | 61.318 | 60.750 | 60.750 | 60.692 | 60.692 | 60.865 |
| $Al_2O_3$ | 14.700 | 14.700 | 14.700 | 14.700 | 15.437 | 15.437 | 15.420 | 15.420 | 15.465 |
| $B_2O_3$ | 6.000 | 6.000 | 6.000 | 6.000 | 5.979 | 5.979 | 5.972 | 5.972 | 5.991 |
| $Li_2O$ | 9.000 | 9.000 | 9.000 | 9.000 | 9.462 | 9.462 | 9.452 | 9.452 | 9.471 |
| $Na_2O$ | 2.000 | 2.000 | 2.000 | 2.000 | 1.535 | 1.535 | 1.540 | 1.540 | 1.539 |
| $K_2O$ | 0.200 | 0.200 | 0.200 | 0.200 | 0.201 | 0.201 | 0.201 | 0.201 | 0.198 |
| MgO | 1.500 | 1.500 | 1.500 | 1.500 | 1.988 | 1.988 | 1.995 | 1.995 | 1.999 |
| CaO | 4.500 | 4.500 | 4.500 | 4.500 | 4.229 | 4.229 | 4.232 | 4.232 | 4.242 |
| ZnO | | | | | | | | | |
| $SnO_2$ | | | | | | | | | |
| $Fe_2O_3$ | | | | | | | | | |
| $ZrO_2$ | | | | | | | | | |
| $TiO_2$ | 0.100 | 0.100 | 0.372 | 0.372 | | | | | |
| $CeO_2$ | 0.010 | 0.010 | 0.001 | 0.001 | | | | | |

(continued)

| Example | TM-839 | TM-840 | TM-841 | TM-842 | TM-843 | TM-844 | TM-845 | TM-846 | TM-847 |
|---|---|---|---|---|---|---|---|---|---|
| $Er_2O_3$ | 0.409 | 0.409 | 0.409 | 0.409 | 0.420 | 0.420 | 0.496 | 0.496 | 0.204 |
| $Nd_2O_3$ | | | | | | | | | |
| NiO | | | | | | | | | 0.026 |
| $Co_3O_4$ | | | | | | | | | |
| $Cr_2O_3$ | | | | | | | | | |
| CuO | | | | | | | | | |
| Density (g/cc) | 2.462 | | 2.465 | | | | | | |
| Thickness (mm) | 0.541 | 2.399 | 0.537 | 2.405 | 0.546 | 2.418 | 0.527 | 2.354 | 0.573 |
| L* | 96.34 | 95.16 | 96.30 | 95.11 | 96.24 | 95.11 | 96.23 | 94.80 | 96.10 |
| a* | 1.16 | 4.24 | 1.19 | 4.30 | 1.17 | 4.33 | 1.32 | 4.79 | 0.56 |
| b* | -0.20 | -1.06 | -0.18 | -0.95 | -0.17 | -0.95 | -0.13 | -0.63 | 1.43 |
| Liquidus (°C) | 1125 | | 1125 | | | | | | |

Table 27U

| Example | TM-848 | TM-849 | TM-850 | TM-851 | TM-852 | TM-853 | TM-854 | TM-855 | TM-856 |
|---|---|---|---|---|---|---|---|---|---|
| $SiO_2$ | 60.865 | 60.865 | 60.865 | 60.883 | 60.883 | 60.478 | 60.478 | 60.599 | 60.599 |
| $Al_2O_3$ | 15.465 | 15.465 | 15.465 | 15.473 | 15.473 | 15.366 | 15.366 | 15.396 | 15.396 |
| $B_2O_3$ | 5.991 | 5.991 | 5.991 | 5.986 | 5.986 | 5.946 | 5.946 | 5.963 | 5.963 |
| $Li_2O$ | 9.471 | 9.471 | 9.471 | 9.492 | 9.492 | 9.428 | 9.428 | 9.446 | 9.446 |
| $Na_2O$ | 1.539 | 1.539 | 1.539 | 1.546 | 1.546 | 1.533 | 1.533 | 1.539 | 1.539 |
| $K_2O$ | 0.198 | 0.198 | 0.198 | 0.198 | 0.198 | 0.205 | 0.205 | 0.203 | 0.203 |
| MgO | 1.999 | 1.999 | 1.999 | 1.995 | 1.995 | 1.978 | 1.978 | 1.992 | 1.992 |
| CaO | 4.242 | 4.242 | 4.242 | 4.243 | 4.243 | 4.218 | 4.218 | 4.224 | 4.224 |
| ZnO | | | | | | | | | |
| $SnO_2$ | | | | | | | | | |
| $Fe_2O_3$ | | | | | | | | | |
| $ZrO_2$ | | | | | | | | | |
| $TiO_2$ | | | | | | | | | |
| $CeO_2$ | | | | | | | | | |
| $Er_2O_3$ | 0.204 | 0.204 | 0.204 | 0.160 | 0.160 | 0.828 | 0.828 | 0.626 | 0.626 |
| $Nd_2O_3$ | | | | | | | | | |
| NiO | 0.026 | 0.026 | 0.026 | 0.024 | 0.024 | 0.020 | 0.020 | 0.012 | 0.012 |
| $Co_3O_4$ | | | | | | | | | |
| $Cr_2O_3$ | | | | | | | | | |
| CuO | | | | | | | | | |
| Density (g/cc) | | | | | | | | | |
| Thickness (mm) | 2.354 | 0.541 | 2.370 | 0.589 | 2.415 | 0.549 | 2.448 | 0.550 | 2.386 |
| L* | 93.89 | 96.12 | 93.98 | 96.13 | 94.08 | 95.61 | 92.62 | 95.91 | 93.67 |
| a* | 2.29 | 0.58 | 2.24 | 0.44 | 1.87 | 2.13 | 6.69 | 1.69 | 5.60 |

(continued)

| Example | TM-848 | TM-849 | TM-850 | TM-851 | TM-852 | TM-853 | TM-854 | TM-855 | TM-856 |
|---|---|---|---|---|---|---|---|---|---|
| b* | 6.03 | 1.47 | 6.13 | 1.45 | 5.99 | 0.65 | 3.68 | 0.37 | 1.87 |
| Liquidus (°C) | | | | | | | | | |

Table 27V

| Example | TM-857 | TM-858 | TM-859 | TM-860 | TM-861 | TM-862 | TM-863 | TM-864 | TM-865 |
|---|---|---|---|---|---|---|---|---|---|
| $SiO_2$ | 60.750 | 60.692 | 60.865 | 60.883 | 60.478 | 60.599 | 58.500 | 58.500 | 58.500 |
| $Al_2O_3$ | 15.437 | 15.420 | 15.465 | 15.473 | 15.366 | 15.396 | 16.420 | 16.420 | 16.420 |
| $B_2O_3$ | 5.979 | 5.972 | 5.991 | 5.986 | 5.946 | 5.963 | 5.970 | 5.970 | 5.970 |
| $Li_2O$ | 9.462 | 9.452 | 9.471 | 9.492 | 9.428 | 9.446 | 11.940 | 11.940 | 11.940 |
| $Na_2O$ | 1.535 | 1.540 | 1.539 | 1.546 | 1.533 | 1.539 | 6.470 | 6.470 | 6.470 |
| $K_2O$ | 0.201 | 0.201 | 0.198 | 0.198 | 0.205 | 0.203 | 0.200 | 0.200 | 0.200 |
| MgO | 1.988 | 1.995 | 1.999 | 1.995 | 1.978 | 1.992 | | | |
| CaO | 4.229 | 4.232 | 4.242 | 4.243 | 4.218 | 4.224 | | | |
| ZnO | | | | | | | | | |
| $SnO_2$ | | | | | | | | | |
| $Fe_2O_3$ | | | | | | | | | |
| $ZrO_2$ | | | | | | | | | |
| $TiO_2$ | | | | | | | | | |
| $CeO_2$ | | | | | | | | | |
| $Er_2O_3$ | 0.420 | 0.496 | 0.204 | 0.160 | 0.828 | 0.626 | 0.500 | 0.500 | 0.500 |
| $Nd_2O_3$ | | | | | | | | | |
| NiO | | | 0.026 | 0.024 | 0.020 | 0.012 | 0.025 | 0.025 | 0.025 |
| $Co_3O_4$ | | | | | | | | | |
| $Cr_2O_3$ | | | | | | | | | |
| CuO | | | | | | | | | |
| Density (g/cc) | | | | | | | | | |
| Thickness (mm) | 2.384 | 2.412 | 2.410 | 2.403 | 2.391 | 2.423 | 0.540 | 0.549 | 2.415 |
| L* | 95.08 | 94.81 | 93.75 | 93.98 | 92.61 | 93.57 | 95.38 | 95.68 | 92.56 |
| a* | 4.26 | 4.89 | 2.31 | 1.90 | 6.58 | 5.62 | 1.29 | 1.30 | 4.63 |
| b* | -0.95 | -0.97 | 6.25 | 6.01 | 3.77 | 1.94 | 2.40 | 1.55 | 6.03 |
| Liquidus (°C) | | | | | | | | | |

Table 27W

| Example | TM-866 | TM-867 | TM-868 | TM-869 | TM-870 | TM-871 | TM-872 | TM-873 | TM-874 |
|---|---|---|---|---|---|---|---|---|---|
| $SiO_2$ | 58.500 | 58.500 | 58.500 | 58.500 | 58.500 | 59.180 | 58.830 | 59.120 | 58.950 |
| $Al_2O_3$ | 16.420 | 16.420 | 16.420 | 16.420 | 16.420 | 15.950 | 14.570 | 15.930 | 15.900 |
| $B_2O_3$ | 5.970 | 5.970 | 5.970 | 5.970 | 5.970 | 5.890 | 5.970 | 5.830 | 6.030 |
| $Li_2O$ | 11.940 | 11.940 | 11.940 | 11.940 | 11.940 | 12.010 | 12.200 | 12.100 | 12.160 |
| $Na_2O$ | 6.470 | 6.470 | 6.470 | 6.470 | 6.470 | 6.270 | 6.310 | 6.230 | 6.220 |
| $K_2O$ | 0.200 | 0.200 | 0.200 | 0.200 | 0.200 | 0.200 | 0.200 | 0.190 | 0.200 |

(continued)

| Example | TM-866 | TM-867 | TM-868 | TM-869 | TM-870 | TM-871 | TM-872 | TM-873 | TM-874 |
|---|---|---|---|---|---|---|---|---|---|
| MgO | | | | | | 0.020 | 0.020 | 0.020 | 0.020 |
| CaO | | | | | | 0.010 | 0.010 | 0.010 | 0.010 |
| ZnO | | | | | | | | | |
| $SnO_2$ | | | | | | | | | |
| $Fe_2O_3$ | | | | | | 0.004 | 0.005 | 0.004 | 0.004 |
| $ZrO_2$ | | | | | | | | | |
| $TiO_2$ | | | | | | | | | |
| $CeO_2$ | | | | | | | | | |
| $Er_2O_3$ | 0.500 | 0.500 | 0.500 | 0.500 | 0.500 | 0.450 | 1.850 | 0.450 | 0.450 |
| $Nd_2O_3$ | | | | | | | | | |
| NiO | 0.025 | | | | | 0.001 | 0.010 | 0.086 | 0.040 |
| $Co_3O_4$ | | | | | | | | 0.009 | 0.003 |
| $Cr_2O_3$ | | | | | | 0.001 | 0.003 | 0.001 | 0.001 |
| CuO | | | | | | 0.002 | 0.015 | 0.002 | 0.001 |
| Density (g/cc) | | | | | | | | | |
| Thickness (mm) | 2.386 | 0.567 | 0.562 | 2.415 | 2.427 | 1.348 | 1.349 | 1.350 | 1.350 |
| L* | 92.64 | 96.29 | 96.29 | 95.04 | 95.03 | 95.76 | 93.70 | 91.72 | 93.92 |
| a* | 4.59 | 1.32 | 1.31 | 4.77 | 4.78 | 3.04 | 7.94 | 3.05 | 3.00 |
| b* | 5.86 | -0.23 | -0.22 | -1.28 | -1.28 | -0.87 | -1.71 | 10.60 | 4.49 |
| Liquidus (°C) | | 1100 | | | | | | | |

Table 27X

| Example | TM-875 | TM-876 | TM-877 | TM-878 | TM-879 | TM-880 | TM-881 | TM-882 | TM-883 |
|---|---|---|---|---|---|---|---|---|---|
| $SiO_2$ | 58.940 | 59.090 | 60.890 | 60.890 | 61.410 | 60.940 | 61.950 | 60.940 | 58.670 |
| $Al_2O_3$ | 15.160 | 15.910 | 14.880 | 14.930 | 15.340 | 15.430 | 14.760 | 15.300 | 16.520 |
| $B_2O_3$ | 5.960 | 5.950 | 5.950 | 5.620 | 5.720 | 5.820 | 5.610 | 5.710 | 5.920 |
| $Li_2O$ | 12.160 | 12.020 | 9.610 | 9.490 | 9.440 | 9.550 | 9.390 | 9.490 | 11.850 |
| $Na_2O$ | 6.280 | 6.270 | 1.510 | 1.530 | 1.480 | 1.480 | 1.500 | 1.500 | 6.240 |
| $K_2O$ | 0.200 | 0.200 | 0.200 | 0.210 | 0.200 | 0.200 | 0.200 | 0.200 | 0.190 |
| MgO | 0.020 | 0.020 | 2.010 | 2.040 | 1.960 | 2.010 | 1.920 | 2.040 | 0.010 |
| CaO | 0.010 | 0.010 | 4.300 | 4.420 | 4.260 | 4.340 | 4.170 | 4.390 | 0.020 |
| ZnO | | | | | | | | | 0.040 |
| $SnO_2$ | | | | | | | | | |
| $Fe_2O_3$ | 0.004 | 0.004 | 0.006 | 0.006 | 0.006 | 0.006 | 0.006 | 0.006 | 0.005 |
| $ZrO_2$ | | | | | | | | | |
| $TiO_2$ | | | | | | | | | |
| $CeO_2$ | | | | | | | | | |
| $Er_2O_3$ | 1.170 | 0.460 | 0.620 | 0.830 | 0.160 | 0.200 | 0.480 | 0.420 | |
| $Nd_2O_3$ | | | | | | | | | 0.520 |

(continued)

| Example | TM-875 | TM-876 | TM-877 | TM-878 | TM-879 | TM-880 | TM-881 | TM-882 | TM-883 |
|---|---|---|---|---|---|---|---|---|---|
| NiO | 0.053 | 0.003 | 0.012 | 0.020 | 0.023 | 0.025 | 0.001 | | |
| Co$_3$O$_4$ | | 0.012 | 0.002 | 0.002 | 0.001 | 0.001 | 0.002 | 0.002 | |
| Cr$_2$O$_3$ | 0.002 | 0.001 | | | | | | | |
| CuO | 0.009 | 0.025 | | | | | | | |
| Density (g/cc) | | | | | | | | | |
| Thickness (mm) | 1.336 | 1.348 | 2.423 | 2.391 | 2.403 | 2.410 | 2.412 | 2.384 | 1.230 |
| L* | 93.39 | 87.55 | 93.57 | 92.61 | 93.98 | 93.75 | 94.81 | 95.08 | 90.96 |
| a* | 5.72 | 2.01 | 5.62 | 6.58 | 1.90 | 2.31 | 4.89 | 4.26 | -2.23 |
| b* | 3.16 | -11.44 | 1.94 | 3.77 | 6.01 | 6.25 | -0.97 | -0.95 | -8.98 |
| Liquidus (°C) | | | | | | | | | |

Table 27Y

| Example | TM-884 | TM-885 | TM-886 | TM-887 | TM-888 | TM-889 | TM-890 | TM-891 | TM-892 |
|---|---|---|---|---|---|---|---|---|---|
| SiO$_2$ | 58.510 | 57.810 | 58.000 | 57.880 | 57.740 | 57.520 | 57.600 | 57.570 | 59.130 |
| Al$_2$O$_3$ | 16.390 | 16.210 | 16.250 | 16.110 | 16.080 | 16.330 | 16.370 | 16.070 | 16.500 |
| B$_2$O$_3$ | 5.840 | 5.810 | 5.600 | 5.690 | 5.760 | 5.830 | 5.740 | 5.990 | 5.890 |
| Li$_2$O | 11.760 | 11.720 | 11.620 | 11.740 | 11.790 | 11.780 | 11.760 | 10.970 | 11.890 |
| Na$_2$O | 6.210 | 6.110 | 6.080 | 6.050 | 6.040 | 5.190 | 4.270 | 4.230 | 6.200 |
| K$_2$O | 0.190 | 0.190 | 0.180 | 0.190 | 0.180 | 0.190 | 0.190 | 0.190 | 0.190 |
| MgO | | | | | | | 0.930 | 1.850 | 0.010 |
| CaO | 0.020 | 0.020 | 0.020 | 0.020 | 0.020 | 0.020 | 0.020 | 0.020 | 0.010 |
| ZnO | 0.010 | | | | | 1.010 | 1.030 | 1.000 | |
| SnO$_2$ | | | | | | | | | |
| Fe$_2$O$_3$ | 0.006 | 0.009 | 0.009 | 0.009 | 0.009 | 0.009 | 0.009 | 0.009 | 0.004 |
| ZrO$_2$ | | | | | | | | | |
| TiO$_2$ | | | | | | | | | |
| CeO$_2$ | | | | | | | | | |
| Er$_2$O$_3$ | | | | | | | | | |
| Nd$_2$O$_3$ | 1.040 | 2.090 | 2.110 | 2.080 | 2.060 | 2.100 | 2.070 | 2.090 | 0.160 |
| NiO | | | 0.112 | 0.214 | 0.307 | | | | 0.003 |
| Co$_3$O$_4$ | | | | | | | | | 0.001 |
| Cr$_2$O$_3$ | | | | | | | | | 0.001 |
| CuO | | | | | | | | | |
| Density (g/cc) | | | | | | | | | |
| Thickness (mm) | 1.260 | 1.270 | 1.290 | 1.300 | 1.280 | 1.310 | 1.310 | 1.250 | 1.361 |
| L* | 87.17 | 82.21 | 79.65 | 77.99 | 76.39 | 81.84 | 81.50 | 81.59 | 94.46 |
| a* | -2.88 | -2.53 | -3.97 | -4.64 | -5.20 | -2.50 | -2.50 | -2.62 | -0.94 |
| b* | -14.35 | -20.64 | -10.21 | -0.58 | 6.85 | -21.17 | -21.72 | -21.75 | -3.02 |
| Liquidus (°C) | | | | | | | | | |

Table 27Z

| Example | TM-893 | TM-894 | TM-895 |
|---|---|---|---|
| $SiO_2$ | 58.920 | 58.640 | 58.970 |
| $Al_2O_3$ | 16.400 | 16.470 | 16.540 |
| $B_2O_3$ | 5.900 | 5.960 | 5.910 |
| $Li_2O$ | 12.050 | 12.050 | 11.780 |
| $Na_2O$ | 6.160 | 6.200 | 6.160 |
| $K_2O$ | 0.190 | 0.190 | 0.190 |
| MgO | 0.010 | 0.010 | 0.010 |
| CaO | 0.010 | 0.010 | 0.010 |
| ZnO | | | |
| $SnO_2$ | | | |
| $Fe_2O_3$ | 0.004 | 0.005 | 0.005 |
| $ZrO_2$ | | | |
| $TiO_2$ | | | |
| $CeO_2$ | | | |
| $Er_2O_3$ | | | |
| $Nd_2O_3$ | 0.320 | 0.410 | 0.390 |
| NiO | 0.006 | 0.013 | 0.004 |
| $Co_3O_4$ | 0.001 | 0.002 | 0.002 |
| $Cr_2O_3$ | 0.001 | 0.001 | 0.001 |
| CuO | 0.011 | 0.024 | 0.011 |
| Density (g/cc) | | | |
| Thickness (mm) | 1.373 | 1.368 | 1.381 |
| L* | 92.34 | 91.24 | 91.58 |
| a* | -1.73 | -2.11 | -2.05 |
| b* | -5.70 | -7.32 | -7.47 |
| Liquidus (°C) | | | |

Tables 28A-28C show example glass compositions (in terms of mol%) containing gold (Au) as a colorant. Examples SPR-1 to SPR-5 and SPR-9 to SPR 22 in Tables 28A to 28C do not fall within the scope of the claims and are provided for reference purposes only.

Table 28A

| Ex. (mol%) | SPR-1 | SPR-2 | SPR-3 | SPR-4 | SPR-5 | SPR-6 | SPR-7 | SPR-8 | SPR-9 |
|---|---|---|---|---|---|---|---|---|---|
| $SiO_2$ | 60.610 | 60.886 | 60.779 | 60.735 | 60.801 | 59.984 | 59.847 | 60.214 | 60.910 |
| $Al_2O_3$ | 14.400 | 14.464 | 14.443 | 14.430 | 14.427 | 14.765 | 14.715 | 14.608 | 14.544 |
| $B_2O_3$ | 5.896 | 5.974 | 5.969 | 5.829 | 5.899 | 6.133 | 6.082 | 6.027 | 5.850 |
| $P_2O_5$ | 0.031 | 0.027 | 0.027 | 0.031 | 0.031 | 0.000 | 0.000 | 0.000 | 0.000 |
| $Li_2O$ | 10.074 | 9.955 | 9.947 | 10.047 | 10.037 | 10.424 | 10.479 | 10.415 | 9.760 |
| $Na_2O$ | 4.254 | 4.283 | 4.315 | 4.259 | 4.249 | 4.239 | 4.235 | 4.224 | 4.274 |
| $K_2O$ | 0.189 | 0.188 | 0.190 | 0.188 | 0.454 | 0.197 | 0.199 | 0.195 | 0.204 |
| $MgO$ | 2.872 | 2.881 | 2.891 | 2.874 | 2.890 | 2.959 | 2.975 | 2.917 | 3.006 |
| $CaO$ | 0.034 | 0.034 | 0.033 | 0.034 | 0.031 | 0.016 | 0.017 | 0.016 | 0.014 |
| $ZnO$ | 0.985 | 0.999 | 0.993 | 0.985 | 0.994 | 1.045 | 1.020 | 1.012 | 1.015 |
| $TiO_2$ | 0.006 | 0.006 | 0.006 | 0.006 | 0.004 | 0.007 | 0.007 | 0.007 | 0.006 |
| $ZrO_2$ | 0.501 | 0.223 | 0.300 | 0.448 | 0.027 | 0.000 | 0.000 | 0.000 | 0.000 |
| $SnO_2$ | 0.071 | 0.016 | 0.035 | 0.054 | 0.105 | 0.053 | 0.052 | 0.052 | 0.050 |
| $Fe_2O_3$ | 0.024 | 0.024 | 0.024 | 0.024 | 0.025 | 0.146 | 0.096 | 0.047 | 0.048 |
| $NiO$ | 0.000 | 0.000 | 0.000 | 0.000 | 0.000 | 0.000 | 0.233 | 0.229 | 0.000 |
| $Co_3O_4$ | 0.000 | 0.000 | 0.000 | 0.000 | 0.000 | 0.001 | 0.002 | 0.002 | 0.000 |
| $HfO_2$ | 0.006 | 0.003 | 0.006 | 0.006 | 0.000 | 0.000 | 0.000 | 0.000 | 0.000 |
| $MnO_2$ | 0.019 | 0.000 | 0.000 | 0.021 | 0.000 | 0.000 | 0.000 | 0.000 | 0.000 |
| $As_2O_3$ | 0.002 | 0.001 | 0.001 | 0.002 | 0.001 | 0.000 | 0.000 | 0.000 | 0.001 |
| $Au$ | 0.000000 | 0.004966 | 0.004973 | 0.000000 | 0.000000 | 0.001997 | 0.001770 | 0.001802 | 0.000677 |
| $SO_3$ | 0.000 | 0.003 | 0.008 | 0.000 | 0.000 | 0.000 | 0.010 | 0.005 | 0.005 |
| $Cl$ | 0.025 | 0.027 | 0.029 | 0.027 | 0.025 | 0.029 | 0.030 | 0.029 | 0.314 |

Table 28B

| Ex. (mol%) | SPR-10 | SPR-11 | SPR-12 | SPR-13 | SPR-14 | SPR-15 | SPR-16 | SPR-17 | SPR-18 |
|---|---|---|---|---|---|---|---|---|---|
| $SiO_2$ | 60.874 | 61.382 | 60.006 | 61.945 | 62.849 | 61.812 | 61.880 | 61.363 | 61.235 |
| $Al_2O_3$ | 14.545 | 14.424 | 14.896 | 14.480 | 14.514 | 15.558 | 15.478 | 15.755 | 15.656 |
| $B_2O_3$ | 5.794 | 5.826 | 5.882 | 5.946 | 5.984 | 5.879 | 5.985 | 5.914 | 5.887 |
| $P_2O_5$ | 0.000 | 0.000 | 0.000 | 0.000 | 0.000 | 0.000 | 0.000 | 0.000 | 0.000 |
| $Li_2O$ | 8.957 | 9.890 | 10.033 | 10.946 | 10.972 | 11.048 | 10.969 | 11.170 | 11.146 |
| $Na_2O$ | 4.264 | 4.299 | 4.326 | 6.323 | 5.323 | 5.337 | 5.379 | 5.421 | 5.382 |
| $K_2O$ | 0.200 | 0.193 | 0.194 | 0.191 | 0.196 | 0.193 | 0.196 | 0.194 | 0.194 |
| $MgO$ | 2.941 | 2.862 | 3.102 | 0.016 | 0.011 | 0.018 | 0.016 | 0.018 | 0.014 |
| $CaO$ | 0.014 | 0.015 | 0.016 | 0.007 | 0.007 | 0.006 | 0.008 | 0.006 | 0.006 |
| $ZnO$ | 1.990 | 1.011 | 1.074 | 0.000 | 0.000 | 0.000 | 0.000 | 0.000 | 0.000 |
| $TiO_2$ | 0.007 | 0.007 | 0.008 | 0.007 | 0.006 | 0.006 | 0.006 | 0.006 | 0.008 |
| $ZrO_2$ | 0.000 | 0.000 | 0.316 | 0.001 | 0.000 | 0.001 | 0.001 | 0.001 | 0.320 |
| $SnO_2$ | 0.051 | 0.057 | 0.052 | 0.109 | 0.110 | 0.108 | 0.056 | 0.055 | 0.054 |
| $Fe_2O_3$ | 0.048 | 0.004 | 0.068 | 0.003 | 0.004 | 0.003 | 0.004 | 0.069 | 0.069 |
| $NiO$ | 0.000 | 0.000 | 0.000 | 0.000 | 0.000 | 0.000 | 0.000 | 0.000 | 0.000 |
| $Co_3O_4$ | 0.000 | 0.000 | 0.000 | 0.000 | 0.000 | 0.000 | 0.000 | 0.000 | 0.000 |
| $HfO_2$ | 0.000 | 0.000 | 0.000 | 0.000 | 0.000 | 0.000 | 0.000 | 0.000 | 0.003 |
| $MnO_2$ | 0.000 | 0.000 | 0.000 | 0.000 | 0.000 | 0.000 | 0.000 | 0.000 | 0.000 |
| $As_2O_3$ | 0.001 | 0.001 | 0.001 | 0.000 | 0.001 | 0.001 | 0.001 | 0.000 | 0.001 |
| $Au$ | 0.000488 | 0.000357 | 0.000000 | 0.001297 | 0.000261 | 0.001960 | 0.000000 | 0.000327 | 0.000655 |
| $SO_3$ | 0.000 | 0.009 | 0.000 | 0.000 | 0.000 | 0.002 | 0.000 | 0.007 | 0.003 |
| $Cl$ | 0.312 | 0.020 | 0.025 | 0.025 | 0.022 | 0.025 | 0.022 | 0.022 | 0.020 |

Table 28C

| Ex. (mol%) | SPR-19 | SPR-20 | SPR-21 | SPR-22 |
|---|---|---|---|---|
| $SiO_2$ | 60.872 | 60.616 | 62.173 | 61.281 |
| $Al_2O_3$ | 16.544 | 16.474 | 14.974 | 14.343 |
| $B_2O_3$ | 5.853 | 5.964 | 5.722 | 5.820 |
| $P_2O_5$ | 0.000 | 0.000 | 0.000 | 0.018 |
| $Li_2O$ | 11.078 | 10.927 | 9.237 | 6.759 |
| $Na_2O$ | 5.336 | 5.358 | 2.332 | 7.465 |
| $K_2O$ | 0.193 | 0.195 | 0.182 | 0.589 |
| $MgO$ | 0.019 | 0.016 | 2.433 | 2.027 |
| $CaO$ | 0.007 | 0.008 | 1.555 | 0.542 |
| $ZnO$ | 0.000 | 0.000 | 0.976 | 0.973 |
| $TiO_2$ | 0.007 | 0.007 | 0.010 | 0.006 |
| $ZrO_2$ | 0.001 | 0.309 | 0.302 | 0.000 |
| $SnO_2$ | 0.055 | 0.054 | 0.042 | 0.104 |
| $Fe_2O_3$ | 0.003 | 0.047 | 0.043 | 0.044 |
| $NiO$ | 0.000 | 0.000 | 0.000 | 0.000 |
| $Co_3O_4$ | 0.000 | 0.000 | 0.000 | 0.000 |
| $HfO_2$ | 0.000 | 0.000 | 0.000 | 0.000 |
| $MnO_2$ | 0.000 | 0.000 | 0.000 | 0.000 |
| $As_2O_3$ | 0.000 | 0.001 | 0.000 | 0.000 |
| Au | 0.000987 | 0.000157 | 0.000563 | 0.002166 |
| $SO_3$ | 0.006 | 0.002 | 0.006 | 0.005 |
| Cl | 0.024 | 0.022 | 0.011 | 0.020 |

Referring now to Table 29, colored glass articles in the form of glass coupons were produced from the glass compositions of Tables 28A-28C. The glass coupons had the indicated thicknesses and were heat treated at various times and temperatures (as indicated) to produce colored glass articles with different color hues. The CIELAB L*, a*, and b* coordinates of each colored glass article were determined. The average transmittance (%) for each sample over the wavelength range from 380 nm to 750 nm was also determined. The results are reported in Table 29. In Table 29 Examples SPR-1 to SPr-5 and SPR-9 to SPR-22 do not fall within the scope of the claims and are provided for reference purposes only.

Table 29

| Example | Thickness (mm) | Temp (°C) | Time (Hr.) | L* | a* | b* | Average transmittance (380 nm - 750 nm) |
|---|---|---|---|---|---|---|---|
| SPR-1 | 1.32 | 620 | 10 | 80.8 | 15 | 10.88 | 62.083 |
| SPR-2 | 1.31 | 632 | 0.25 | 69.7 | 1.33 | -15.5 | 53.986 |
| SPR-2 | 1.35 | 545 | 2 | 88 | 8.84 | -1.45 | 77.737 |
| SPR-2 | 1.36 | 553 | 1.5 | 88.9 | 7.79 | -1.3 | 79.081 |
| SPR-2 | 1.36 | 630 | 6 | 77.1 | 19.7 | 2.28 | 61.052 |
| SPR-2 | 1.42 | 603 | 1.5 | 69.1 | 9.07 | -12.3 | 54.353 |
| SPR-2 | 1.39 | 632 | 0.5 | 69.7 | 6.74 | -12.2 | 54.045 |
| SPR-2 | 1.29 | 705 | 0.25 | 73.7 | 20 | -5.76 | 60.047 |

(continued)

| Example | Thickness (mm) | Temp (°C) | Time (Hr.) | L* | a* | b* | Average transmittance (380 nm - 750 nm) |
|---|---|---|---|---|---|---|---|
| SPR-2 | 1.35 | 655 | 1.5 | 75.2 | 20.5 | -1.62 | 60.186 |
| SPR-2 | 1.38 | 630 | 6 | 76.9 | 20.1 | 2.43 | 60.776 |
| SPR-2 | 1.34 | 545 | 1 | 88.3 | 8.75 | -1.28 | 78.270 |
| SPR-2 | 1.36 | 553 | 2 | 89.2 | 7.76 | -1.14 | 79.523 |
| SPR-2 | 1.36 | 630 | 1.5 | 77.2 | 20 | 2.26 | 61.288 |
| SPR-2 | 1.4 | 632 | 6 | 69.5 | 7.02 | -12.4 | 54.092 |
| SPR-2 | 1.43 | 603 | 0.5 | 69 | 9.22 | -12.6 | 54.475 |
| SPR-2 | 1.32 | 632 | 0.25 | 69.4 | 1.26 | -15.9 | 53.842 |
| SPR-2 | 1.29 | 705 | 0.25 | 73.9 | 20 | -5.92 | 60.530 |
| SPR-2 | 1.35 | 655 | 1.5 | 75.2 | 20.6 | -1.95 | 60.438 |
| SPR-2 | 1.37 | 630 | 6 | 77 | 20.2 | 2.07 | 61.092 |
| SPR-2 | 1.29 | 560 | 0.25 | 91.9 | 4.36 | -0.78 | 83.484 |
| SPR-2 | 1.29 | 580 | 0.25 | 92 | 4.2 | -0.87 | 83.677 |
| SPR-2 | 1.22 | 600 | 0.25 | 76.4 | 8.13 | -12.5 | 65.670 |
| SPR-2 | 1.22 | 560 | 0.50 | 91.4 | 5 | -0.94 | 82.705 |
| SPR-2 | 1.21 | 580 | 0.50 | 75.5 | 11.5 | -12.3 | 64.875 |
| SPR-2 | 1.2 | 600 | 0.50 | 70.9 | 2.8 | -15.7 | 57.149 |
| SPR-2 | 1.26 | 560 | 0.75 | 87.3 | 9 | -2.33 | 77.093 |
| SPR-2 | 1.28 | 580 | 0.75 | 70.3 | 10.9 | -14.8 | 58.437 |
| SPR-2 | 1.3 | 600 | 0.75 | 70.3 | 4.83 | -13.4 | 55.255 |
| SPR-2 | 1.27 | 560 | 2 | 75.2 | 15.9 | -4.84 | 61.011 |
| SPR-2 | 1.47 | 620 | 0.25 | 66.7 | -1.17 | -19 | 51.231 |
| SPR-2 | 1.45 | 630 | 0.25 | 66.6 | -1.27 | -18.7 | 50.691 |
| SPR-2 | 1.45 | 640 | 0.25 | 66.3 | -0.3 | -18.2 | 50.110 |
| SPR-2 | 1.48 | 650 | 0.25 | 66.3 | 1.82 | -16.9 | 49.961 |
| SPR-2 | 1.48 | 660 | 0.25 | 67.4 | 4.84 | -14.3 | 51.179 |
| SPR-2 | 1.49 | 670 | 0.25 | 67.9 | 6.81 | -13 | 51.865 |
| SPR-2 | 1.33 | 680 | 0.25 | 70.7 | 8.42 | -11.5 | 55.644 |
| SPR-2 | 1.3 | 690 | 0.25 | 72.3 | 13.3 | -9.69 | 58.346 |
| SPR-2 | 1.3 | 700 | 0.25 | 72.7 | 14.9 | -8.33 | 58.842 |
| SPR-2 | 1.32 | 710 | 0.25 | 74.9 | 18 | -3.59 | 60.103 |
| SPR-2 | 1.29 | 620 | 0.50 | 70.7 | 4.6 | -12.7 | 55.193 |
| SPR-2 | 1.31 | 640 | 0.50 | 70.7 | 10.4 | -11.8 | 56.589 |
| SPR-2 | 0.9 | 660 | 0.50 | 81.5 | 13.6 | -2.27 | 68.459 |
| SPR-2 | 0.87 | 680 | 0.50 | 83 | 14.2 | 0 | 69.595 |
| SPR-2 | 0.86 | 700 | 0.50 | 83.3 | 13.9 | 0.36 | 69.916 |
| SPR-2 | 0.81 | 620 | 0.75 | 79.8 | 5.56 | -7.92 | 67.047 |
| SPR-2 | 0.69 | 640 | 0.75 | 83.7 | 9.69 | -3.81 | 72.165 |
| SPR-2 | 0.72 | 660 | 0.75 | 85.4 | 11.4 | -0.42 | 73.325 |

(continued)

| Example | Thickness (mm) | Temp (°C) | Time (Hr.) | L* | a* | b* | Average transmittance (380 nm - 750 nm) |
|---|---|---|---|---|---|---|---|
| SPR-2 | 1.28 | 680 | 0.75 | 78.3 | 17.9 | 0.24 | 62.902 |
| SPR-2 | 1.29 | 700 | 0.75 | 78.4 | 17.6 | 0.44 | 62.728 |
| SPR-2 | 1.29 | 620 | 2.00 | 75.3 | 17.7 | -3.72 | 60.833 |
| SPR-2 | 1.42 | 580 | 2 | 89.9 | 5.08 | -1.36 | 80.246 |
| SPR-2 | 1.3 | 600 | 2 | 70.6 | 11.1 | -12 | 56.982 |
| SPR-2 | 1.34 | 640 | 2 | 76.3 | 20.2 | 0.48 | 60.676 |
| SPR-2 | 1.35 | 660 | 2 | 76.6 | 19.3 | 0.15 | 60.827 |
| SPR-2 | 1.18 | 680 | 2 | 79.4 | 17.7 | 1.36 | 64.066 |
| SPR-2 | 1.35 | 550 | 1 | 85.4 | 11.2 | -2.58 | 74.328 |
| SPR-2 | 1.34 | 550 | 1.25 | 80 | 16.2 | -4.65 | 67.893 |
| SPR-2 | 1.27 | 540 | 1.25 | 92.1 | 4.47 | -0.39 | 83.614 |
| SPR-2 | 1.27 | 710 | 2.5 | 78.8 | 19.2 | 3.29 | 62.662 |
| SPR-2 | 1.34 | 625 | 1.25 | 72.1 | 15.3 | -8.48 | 58.196 |
| SPR-2 | 1.39 | 540 | 1.5 | 87 | 9.82 | -1.71 | 76.314 |
| SPR-2 | 1.35 | 590 | 0.917 | 70.8 | 8.23 | -10.7 | 55.681 |
| SPR-2 | 1.34 | 555 | 1 | 92.7 | 4.09 | -0.34 | 84.664 |
| SPR-2 | 1.335 | 635 | 1 | 70 | 11.7 | -12.7 | 56.278 |
| SPR-2 | 1.365 | 595 | 1 | 70.9 | 9.62 | -10.6 | 56.159 |
| SPR-2 | 1.279 | 615 | 1 | 70.9 | 6.71 | -12.2 | 55.936 |
| SPR-2 | 1.331 | 580 | 0.5 | 68.7 | 3.09 | -17.4 | 55.139 |
| SPR-2 | 0.641 | 525 | 2 | 94.3 | 2.41 | -0.16 | 87.417 |
| SPR-2 | 2.077 | 525 | 2 | 89 | 7.39 | -0.62 | 78.548 |
| SPR-2 | 0.64 | 545 | 2 | 94.5 | 2.23 | -0.11 | 87.779 |
| SPR-2 | 2.06 | 545 | 2 | 89.7 | 6.76 | -0.51 | 79.648 |
| SPR-3 | 1.3 | 630 | 6 | 77.6 | 18.6 | 1.33 | 61.990 |
| SPR-3 | 1.31 | 575 | 1 | 74 | 16.2 | -7.99 | 61.103 |
| SPR-3 | 1.29 | 632 | 0.5 | 72.7 | 7.67 | -9.49 | 57.240 |
| SPR-3 | 1.25 | 603 | 1.5 | 73.2 | 8.79 | -9.7 | 58.809 |
| SPR-3 | 1.26 | 655 | 1.5 | 77.1 | 18.5 | -0.67 | 62.079 |
| SPR-3 | 1.37 | 575 | 1 | 73.3 | 17.7 | -8.38 | 60.550 |
| SPR-3 | 1.33 | 635 | 1 | 72.5 | 13.9 | -8.58 | 58.373 |
| SPR-3 | 1.37 | 615 | 1 | 70.7 | 8.26 | -11.1 | 55.575 |
| SPR-3 | 1.34 | 595 | 1 | 72.6 | 9.35 | -8.15 | 57.204 |
| SPR-3 | 1.27 | 555 | 1 | 93.2 | 3.16 | -0.23 | 85.431 |
| SPR-3 | 1.367 | 575 | 1 | 73 | 17.5 | -8.56 | 60.095 |
| SPR-3 | 1.33 | 635 | 1 | 72.7 | 14.9 | -7.76 | 58.572 |
| SPR-3 | 1.336 | 595 | 1 | 72.6 | 9.13 | -8.28 | 57.195 |
| SPR-3 | 1.242 | 603 | 1.5 | 73.1 | 8.86 | -9.73 | 58.626 |
| SPR-3 | 1.293 | 632 | 0.5 | 72.7 | 7.74 | -9.49 | 57.192 |

(continued)

| Example | Thickness (mm) | Temp (°C) | Time (Hr.) | L* | a* | b* | Average transmittance (380 nm - 750 nm) |
|---|---|---|---|---|---|---|---|
| SPR-3 | 1.356 | 615 | 1 | 70.8 | 8.14 | -11.1 | 55.630 |
| SPR-3 | 0.565 | 632 | 0.5 | 85.6 | 4.05 | -4.57 | 74.432 |
| SPR-3 | 1.512 | 632 | 0.5 | 69.3 | 8.38 | -10.7 | 53.145 |
| SPR-4 | 1.33 | 580 | 0.25 | 91.1 | 4.08 | -1.11 | 82.311 |
| SPR-4 | 1.34 | 600 | 0.25 | 73.9 | 9.69 | -11.7 | 61.448 |
| SPR-4 | 1.32 | 560 | 0.50 | 91.9 | 3.7 | -0.66 | 83.379 |
| SPR-4 | 1.34 | 580 | 0.50 | 73.1 | 12.9 | -10.7 | 60.597 |
| SPR-4 | 1.23 | 600 | 0.50 | 73.6 | 3.67 | -11.4 | 58.393 |
| SPR-4 | 1.23 | 560 | 0.75 | 88.4 | 6.93 | -1.86 | 78.551 |
| SPR-4 | 1.24 | 580 | 0.75 | 74.3 | 9.95 | -8.94 | 60.566 |
| SPR-4 | 1.23 | 600 | 0.75 | 74.4 | 5.31 | -8.99 | 58.880 |
| SPR-4 | 1.3 | 560 | 2.00 | 77.7 | 13.3 | -0.84 | 62.143 |
| SPR-4 | 1.3 | 580 | 2.00 | 74.4 | 10.8 | -6.76 | 59.556 |
| SPR-4 | 1.32 | 600 | 2.00 | 74.7 | 13.4 | -5.8 | 60.238 |
| SPR-4 | 1.28 | 560 | 0.25 | 72.4 | 10.6 | -9.29 | 57.846 |
| SPR-4 | 1.28 | 620 | 2 | 78.8 | 17.2 | 1.61 | 63.224 |
| SPR-4 | 1.32 | 640 | 2 | 78.8 | 17.6 | 4.07 | 62.054 |
| SPR-4 | 1.32 | 660 | 2 | 78.7 | 17.7 | 3.8 | 62.119 |
| SPR-4 | 1.2 | 680 | 2 | 80.6 | 16.3 | 4.42 | 64.227 |
| SPR-4 | 1.342 | 660 | 6 | 76.9 | 18.6 | 1.38 | 60.789 |
| SPR-4 | 1.389 | 600 | 1 | 72.8 | 9.91 | -6.88 | 56.945 |
| SPR-4 | 1.285 | 600 | 10 | 79.1 | 17.3 | 3.94 | 62.620 |
| SPR-4 | 1.289 | 620 | 10 | 78.7 | 17.7 | 3.31 | 62.257 |
| SPR-4 | 1.295 | 640 | 10 | 78.3 | 17.9 | 2.64 | 62.079 |
| SPR-4 | 1.308 | 660 | 2 | 77.6 | 18.3 | 1.83 | 61.500 |
| SPR-4 | 0.528 | 710 | 2.5 | 89.7 | 7.57 | 2.52 | 78.250 |
| SPR-4 | 2.043 | 710 | 2.5 | 73.1 | 22.9 | 9.92 | 53.254 |
| SPR-5 | 1.348 | 660 | 6 | 83.1 | 9.17 | 10.21 | 64.324 |
| SPR-5 | 1.32 | 600 | 10 | 82.4 | 9.71 | 9.07 | 63.785 |
| SPR-5 | 1.293 | 620 | 10 | 82.8 | 9.49 | 8.88 | 64.444 |
| SPR-5 | 1.35 | 640 | 10 | 82.6 | 9.48 | 9.53 | 63.931 |
| SPR-5 | 1.315 | 660 | 2 | 82.8 | 9.65 | 9.27 | 64.280 |
| SPR-6 | 1.31 | 600 | 1 | 64.6 | 24.8 | -4.62 | 48.155 |
| SPR-7 | 1.36 | 600 | 1 | 64.1 | 23.1 | 23.31 | 44.240 |
| SPR-8 | 1.27 | 600 | 1 | 69.2 | 13.3 | 34.5 | 45.285 |
| SPR-9 | 1.33 | 600 | 1 | 87.3 | 10.2 | -3.02 | 77.166 |
| SPR-10 | 1.303 | 600 | 1 | 88.1 | 6.56 | -4.17 | 78.834 |
| SPR-11 | 1.302 | 625 | 2 | 81.4 | 15.7 | 6.6 | 65.169 |
| SPR-12 | 1.307 | 600 | 2 | 84.2 | 12.7 | 1.32 | 69.833 |

(continued)

| Example | Thickness (mm) | Temp (°C) | Time (Hr.) | L* | a* | b* | Average transmittance (380 nm - 750 nm) |
|---|---|---|---|---|---|---|---|
| SPR-13 | 1.306 | 625 | 2 | 89.3 | 5.14 | 9.97 | 74.122 |
| SPR-14 | 1.291 | 575 | 2 | 87.4 | 9.35 | 8.2 | 72.514 |
| SPR-14 | 1.321 | 625 | 2 | 87.6 | 7.22 | 10.51 | 71.412 |
| SPR-14 | 0.502 | 625 | 2 | 92.7 | 3.39 | 4.56 | 82.163 |
| SPR-14 | 1.304 | 625 | 2 | 85.3 | 9.75 | 11.19 | 67.746 |
| SPR-14 | 2.015 | 625 | 2 | 82.9 | 10.7 | 15.3 | 62.880 |
| SPR-14 | 0.612 | 625 | 2 | 92.1 | 3.93 | 12.8 | 78.141 |
| SPR-14 | 2.063 | 625 | 2 | 85.8 | 8.06 | 34.2 | 62.357 |
| SPR-15 | 1.298 | 625 | 2 | 83 | 11.4 | 2.59 | 68.255 |
| SPR-16 | 1.327 | 625 | 2 | 86.7 | 9.76 | 2.6 | 73.863 |
| SPR-16 | 0.6 | 625 | 2 | 90 | 6.98 | 1.73 | 79.393 |
| SPR-16 | 1.97 | 625 | 2 | 79.4 | 13.9 | 1.64 | 63.678 |
| SPR-16 | 0.62 | 625 | 2 | 90.3 | 6.77 | 1.82 | 79.780 |
| SPR-16 | 2.039 | 625 | 2 | 80.4 | 15.3 | 3.72 | 64.446 |
| SPR-16 | 0.623 | 625 | 2 | 91.5 | 6.22 | 7.06 | 79.380 |
| SPR-16 | 2.089 | 625 | 2 | 81.6 | 17.2 | 20.79 | 60.538 |
| SPR-17 | 1.325 | 625 | 2 | 88.9 | 6.92 | 4.75 | 75.258 |
| SPR-18 | 1.318 | 625 | 2 | 87.3 | 9.09 | 3.44 | 73.391 |
| SPR-19 | 1.308 | 625 | 2 | 78 | 5.04 | -9.39 | 63.809 |
| SPR-20 | 1.332 | 625 | 2 | 80.5 | 6.25 | -8.92 | 68.187 |
| SPR-20 | 0.632 | 625 | 2 | 87.7 | 2.61 | -5.06 | 77.726 |
| SPR-20 | 1.353 | 625 | 2 | 79 | 5.44 | -9.99 | 65.901 |
| SPR-20 | 0.632 | 625 | 2 | 69 | 8.35 | -14.9 | 53.661 |
| SPR-20 | 0.622 | 625 | 2 | 88.1 | 1.98 | -5.62 | 78.812 |
| SPR-20 | 2.058 | 625 | 2 | 68 | 6.29 | -18 | 53.414 |
| SPR-14 | 1.291 | 575 | 2 | 87.4 | 9.35 | 8.2 | 72.514 |
| SPR-14 | 1.321 | 625 | 2 | 87.6 | 7.22 | 10.51 | 71.412 |
| SPR-14 | 0.502 | 625 | 2 | 92.7 | 3.39 | 4.56 | 82.163 |
| SPR-14 | 1.304 | 625 | 2 | 85.3 | 9.75 | 11.19 | 67.746 |
| SPR-14 | 2.015 | 625 | 2 | 82.9 | 10.7 | 15.3 | 62.880 |
| SPR-14 | 0.612 | 625 | 2 | 92.1 | 3.93 | 12.8 | 78.141 |
| SPR-14 | 2.063 | 625 | 2 | 85.8 | 8.06 | 34.2 | 62.357 |
| SPR-14 | 1.291 | 575 | 2 | 87.4 | 9.35 | 8.2 | 72.514 |
| SPR-14 | 1.321 | 625 | 2 | 87.6 | 7.22 | 10.51 | 71.412 |
| SPR-14 | 0.502 | 625 | 2 | 92.7 | 3.39 | 4.56 | 82.163 |
| SPR-14 | 1.304 | 625 | 2 | 85.3 | 9.75 | 11.19 | 67.746 |
| SPR-14 | 2.015 | 625 | 2 | 82.9 | 10.7 | 15.3 | 62.880 |
| SPR-14 | 0.612 | 625 | 2 | 92.1 | 3.93 | 12.8 | 78.141 |
| SPR-14 | 2.063 | 625 | 2 | 85.8 | 8.06 | 34.2 | 62.357 |

(continued)

| Example | Thickness (mm) | Temp (°C) | Time (Hr.) | L* | a* | b* | Average transmittance (380 nm - 750 nm) |
|---|---|---|---|---|---|---|---|
| SPR-16 | 1.327 | 625 | 2 | 86.7 | 9.76 | 2.6 | 73.863 |
| SPR-16 | 0.6 | 625 | 2 | 90 | 6.98 | 1.73 | 79.393 |
| SPR-16 | 1.97 | 625 | 2 | 79.4 | 13.9 | 1.64 | 63.678 |
| SPR-16 | 0.62 | 625 | 2 | 90.3 | 6.77 | 1.82 | 79.780 |
| SPR-16 | 2.039 | 625 | 2 | 80.4 | 15.3 | 3.72 | 64.446 |
| SPR-16 | 0.623 | 625 | 2 | 91.5 | 6.22 | 7.06 | 79.380 |
| SPR-16 | 2.089 | 625 | 2 | 81.6 | 17.2 | 20.79 | 60.538 |
| SPR-20 | 1.332 | 625 | 2 | 80.5 | 6.25 | -8.92 | 68.187 |
| SPR-20 | 0.632 | 625 | 2 | 87.7 | 2.61 | -5.06 | 77.726 |
| SPR-20 | 1.353 | 625 | 2 | 79 | 5.44 | -9.99 | 65.901 |
| SPR-20 | 0.632 | 625 | 2 | 69 | 8.35 | -14.9 | 53.661 |
| SPR-20 | 0.622 | 625 | 2 | 88.1 | 1.98 | -5.62 | 78.812 |
| SPR-20 | 2.058 | 625 | 2 | 68 | 6.29 | -18 | 53.414 |
| SPR-16 | 1.327 | 625 | 2 | 86.7 | 9.76 | 2.6 | 73.863 |
| SPR-16 | 0.6 | 625 | 2 | 90 | 6.98 | 1.73 | 79.393 |
| SPR-16 | 1.97 | 625 | 2 | 79.4 | 13.9 | 1.64 | 63.678 |
| SPR-16 | 0.62 | 625 | 2 | 90.3 | 6.77 | 1.82 | 79.780 |
| SPR-16 | 2.039 | 625 | 2 | 80.4 | 15.3 | 3.72 | 64.446 |
| SPR-16 | 0.623 | 625 | 2 | 91.5 | 6.22 | 7.06 | 79.380 |
| SPR-16 | 2.089 | 625 | 2 | 81.6 | 17.2 | 20.79 | 60.538 |
| SPR-20 | 1.332 | 625 | 2 | 80.5 | 6.25 | -8.92 | 68.187 |
| SPR-20 | 0.632 | 625 | 2 | 87.7 | 2.61 | -5.06 | 77.726 |
| SPR-20 | 1.353 | 625 | 2 | 79 | 5.44 | -9.99 | 65.901 |
| SPR-20 | 0.632 | 625 | 2 | 69 | 8.35 | -14.9 | 53.661 |
| SPR-20 | 0.622 | 625 | 2 | 88.1 | 1.98 | -5.62 | 78.812 |
| SPR-20 | 2.058 | 625 | 2 | 68 | 6.29 | -18 | 53.414 |
| SPR-21 | 1.381 | 620 | 8 | 84.2 | -3.45 | -7.17 | 70.463 |
| SPR-22 | 3.069 | 640 | 8 | 72.6 | 16.9 | 68.63 | 40.945 |
| SPR-22 | 3.085 | 660 | 8 | 71.9 | 17.5 | 66.16 | 40.588 |
| SPR-22 | 3.1 | 680 | 8 | 71 | 17.9 | 65.27 | 39.780 |
| SPR-22 | 3.15 | 700 | 8 | 72.3 | 17.5 | 64.89 | 41.003 |
| SPR-22 | 3.4 | 620 | 2 | 72 | 18.4 | 67.51 | 40.834 |
| SPR-22 | 3.07 | 640 | 2 | 71 | 18.5 | 66.03 | 40.098 |

Tables 30A-30NN show example glass compositions (in terms of mol%) containing transition metal oxides and/or rare earth oxides as colorants. In the following tables Examples ORA-98 to ORA-100, ORA-104 to ORA-106, ORA-114, ORA-128, ORA-132, ORA-137 to ORA-145, ORA-163, ORA-164, ORA-178, ORA-179, ORA-232, ORA-233, ORA-247 to ORA-271, ORA-274 to ORA-279, ORA-282, ORA-283 and ORA-342 to ORA-245 do not fall within the scope of the claims and are provided for reference purposes only.

Table 30A

| Ex. (mol%) | ORA-1 | ORA-2 | ORA-3 | ORA-4 | ORA-5 | ORA-6 | ORA-6 | ORA-7 | ORA-8 |
|---|---|---|---|---|---|---|---|---|---|
| $SiO_2$ | 60.93 | 61.53 | 58.99 | 57.22 | 57.78 | 58.75 | 58.75 | 59.03 | 58.53 |
| $Al_2O_3$ | 16.20 | 15.91 | 16.99 | 18.71 | 17.54 | 16.67 | 16.67 | 16.52 | 16.50 |
| $B_2O_3$ | 5.66 | 5.59 | 6.15 | 5.68 | 5.96 | 5.92 | 5.92 | 5.86 | 5.58 |
| $P_2O_5$ | 0.00 | 0.00 | 0.00 | 0.00 | 0.00 | 0.00 | 0.00 | 0.00 | 0.00 |
| $Li_2O$ | 10.49 | 10.61 | 11.02 | 10.75 | 10.92 | 11.78 | 11.78 | 11.65 | 11.55 |
| $Na_2O$ | 1.67 | 1.68 | 1.74 | 1.71 | 1.68 | 6.26 | 6.26 | 6.22 | 6.17 |
| $K_2O$ | 0.30 | 0.30 | 0.30 | 0.29 | 0.29 | 0.48 | 0.48 | 0.48 | 0.47 |
| $MgO$ | 3.78 | 3.65 | 3.98 | 4.67 | 4.31 | 0.02 | 0.02 | 0.02 | 0.02 |
| $CaO$ | 0.52 | 0.50 | 0.55 | 0.61 | 0.57 | 0.01 | 0.01 | 0.01 | 0.01 |
| $ZnO$ | 0.00 | 0.00 | 0.00 | 0.00 | 0.00 | 0.00 | 0.00 | 0.01 | 0.00 |
| $TiO_2$ | 0.01 | 0.01 | 0.01 | 0.01 | 0.01 | 0.01 | 0.01 | 0.01 | 0.01 |
| $ZrO_2$ | 0.00 | 0.00 | 0.00 | 0.00 | 0.00 | 0.00 | 0.00 | 0.00 | 0.00 |
| $WO_3$ | 0.00 | 0.00 | 0.00 | 0.00 | 0.00 | 0.00 | 0.00 | 0.00 | 0.00 |
| $SnO_2$ | 0.00 | 0.00 | 0.00 | 0.00 | 0.00 | 0.00 | 0.00 | 0.00 | 0.00 |
| $Fe_2O_3$ | 0.005 | 0.005 | 0.005 | 0.006 | 0.005 | 0.004 | 0.004 | 0.004 | 0.004 |
| $CeO_2$ | 0.000 | 0.000 | 0.000 | 0.000 | 0.000 | 0.000 | 0.000 | 0.000 | 0.000 |
| $NiO$ | 0.127 | 0.042 | 0.153 | 0.243 | 0.206 | 0.000 | 0.000 | 0.177 | 0.000 |
| $Co_3O_4$ | 0.055 | 0.068 | 0.025 | 0.049 | 0.001 | 0.000 | 0.000 | 0.001 | 0.001 |
| $Cr_2O_3$ | 0.000 | 0.000 | 0.000 | 0.000 | 0.000 | 0.098 | 0.098 | 0.000 | 0.000 |
| $CuO$ | 0.247 | 0.104 | 0.088 | 0.034 | 0.724 | 0.000 | 0.000 | 0.000 | 1.151 |
| $HfO_2$ | 0.000 | 0.000 | 0.000 | 0.000 | 0.000 | 0.000 | 0.000 | 0.000 | 0.000 |
| $MnO_2$ | 0.000 | 0.000 | 0.000 | 0.000 | 0.000 | 0.000 | 0.000 | 0.000 | 0.000 |
| $As_2O_3$ | 0.001 | 0.000 | 0.001 | 0.001 | 0.001 | 0.001 | 0.001 | 0.001 | 0.001 |
| $Sb_2O_3$ | 0.000 | 0.000 | 0.000 | 0.000 | 0.000 | 0.000 | 0.000 | 0.000 | 0.000 |
| $V_2O_5$ | 0.000 | 0.000 | 0.000 | 0.000 | 0.000 | 0.000 | 0.000 | 0.000 | 0.000 |
| $SO_3$ | 0.000 | 0.000 | 0.000 | 0.002 | 0.002 | 0.000 | 0.000 | 0.002 | 0.000 |
| $Cl$ | 0.007 | 0.007 | 0.009 | 0.007 | 0.007 | 0.011 | 0.011 | 0.011 | 0.011 |
| $F$ | 0.000 | 0.000 | 0.000 | 0.000 | 0.000 | 0.000 | 0.000 | 0.000 | 0.000 |
| $Nd_2O_3$ | 0.000 | 0.000 | 0.000 | 0.000 | 0.000 | 0.000 | 0.000 | 0.000 | 0.000 |
| $Er_2O_3$ | 0.000 | 0.000 | 0.000 | 0.000 | 0.000 | 0.000 | 0.000 | 0.000 | 0.000 |

Table 30B

| Ex. (mol%) | ORA-9 | ORA-10 | ORA-11 | ORA-11 | ORA-12 | ORA-14 | ORA-15 | ORA-16 |
|---|---|---|---|---|---|---|---|---|
| $SiO_2$ | 58.95 | 60.10 | 57.65 | 57.65 | 56.77 | 58.04 | 59.63 | 57.80 |
| $Al_2O_3$ | 16.55 | 15.85 | 16.16 | 16.16 | 16.65 | 17.65 | 16.71 | 17.65 |
| $B_2O_3$ | 5.97 | 5.74 | 5.95 | 5.95 | 5.90 | 6.20 | 6.16 | 5.87 |
| $P_2O_5$ | 0.00 | 0.00 | 0.00 | 0.00 | 0.00 | 0.00 | 0.00 | 0.00 |
| $Li_2O$ | 11.70 | 9.81 | 11.61 | 11.61 | 9.84 | 11.04 | 10.94 | 10.85 |
| $Na_2O$ | 6.22 | 4.23 | 6.10 | 6.10 | 4.24 | 1.68 | 1.67 | 1.69 |

(continued)

| Ex. (mol%) | ORA-9 | ORA-10 | ORA-11 | ORA-11 | ORA-12 | ORA-14 | ORA-15 | ORA-16 |
|---|---|---|---|---|---|---|---|---|
| $K_2O$ | 0.48 | 0.47 | 0.47 | 0.47 | 0.48 | 0.29 | 0.29 | 0.29 |
| MgO | 0.02 | 2.69 | 0.02 | 0.02 | 2.98 | 4.34 | 3.95 | 4.35 |
| CaO | 0.01 | 0.02 | 0.01 | 0.01 | 0.02 | 0.57 | 0.54 | 0.58 |
| ZnO | 0.02 | 0.96 | 0.00 | 0.00 | 1.04 | 0.00 | 0.00 | 0.00 |
| $TiO_2$ | 0.01 | 0.01 | 1.91 | 1.91 | 1.95 | 0.01 | 0.01 | 0.01 |
| $ZrO_2$ | 0.00 | 0.00 | 0.00 | 0.00 | 0.00 | 0.00 | 0.00 | 0.00 |
| $WO_3$ | 0.00 | 0.00 | 0.00 | 0.00 | 0.00 | 0.00 | 0.00 | 0.00 |
| $SnO_2$ | 0.00 | 0.00 | 0.00 | 0.00 | 0.00 | 0.00 | 0.00 | 0.00 |
| $Fe_2O_3$ | 0.004 | 0.005 | 0.004 | 0.004 | 0.004 | 0.006 | 0.005 | 0.005 |
| $CeO_2$ | 0.000 | 0.000 | 0.100 | 0.100 | 0.102 | 0.000 | 0.000 | 0.000 |
| NiO | 0.000 | 0.000 | 0.000 | 0.000 | 0.000 | 0.000 | 0.058 | 0.048 |
| $Co_3O_4$ | 0.046 | 0.001 | 0.001 | 0.001 | 0.001 | 0.001 | 0.011 | 0.013 |
| $Cr_2O_3$ | 0.000 | 0.098 | 0.000 | 0.000 | 0.000 | 0.000 | 0.000 | 0.000 |
| CuO | 0.000 | 0.010 | 0.000 | 0.000 | 0.000 | 0.155 | 0.020 | 0.845 |
| $HfO_2$ | 0.000 | 0.000 | 0.000 | 0.000 | 0.000 | 0.000 | 0.000 | 0.000 |
| $MnO_2$ | 0.000 | 0.000 | 0.000 | 0.000 | 0.000 | 0.000 | 0.000 | 0.000 |
| $As_2O_3$ | 0.001 | 0.001 | 0.001 | 0.001 | 0.000 | 0.001 | 0.001 | 0.000 |
| $Sb_2O_3$ | 0.000 | 0.000 | 0.000 | 0.000 | 0.000 | 0.000 | 0.000 | 0.000 |
| $V_2O_5$ | 0.000 | 0.000 | 0.000 | 0.000 | 0.000 | 0.000 | 0.000 | 0.000 |
| $SO_3$ | 0.000 | 0.000 | 0.000 | 0.000 | 0.015 | 0.009 | 0.002 | 0.000 |
| Cl | 0.011 | 0.007 | 0.011 | 0.011 | 0.011 | 0.007 | 0.007 | 0.007 |
| F | 0.000 | 0.000 | 0.000 | 0.000 | 0.000 | 0.000 | 0.000 | 0.000 |
| $Nd_2O_3$ | 0.000 | 0.000 | 0.000 | 0.000 | 0.000 | 0.000 | 0.000 | 0.000 |
| $Er_2O_3$ | 0.000 | 0.000 | 0.000 | 0.000 | 0.000 | 0.000 | 0.000 | 0.000 |

Table 30C

| Ex. (mol%) | ORA-17 | ORA-18 | ORA-21 | ORA-22 | ORA-23 | ORA-24 | ORA-25 |
|---|---|---|---|---|---|---|---|
| $SiO_2$ | 56.37 | 58.62 | 58.27 | 58.49 | 58.94 | 58.49 | 57.45 |
| $Al_2O_3$ | 18.99 | 17.25 | 16.34 | 16.49 | 16.40 | 16.55 | 18.22 |
| $B_2O_3$ | 6.02 | 5.97 | 5.92 | 6.01 | 5.98 | 6.04 | 5.91 |
| $P_2O_5$ | 0.00 | 0.00 | 0.00 | 0.00 | 0.00 | 0.00 | 0.00 |
| $Li_2O$ | 11.02 | 10.73 | 9.89 | 9.97 | 9.93 | 9.93 | 10.77 |
| $Na_2O$ | 1.69 | 1.68 | 4.25 | 4.26 | 4.26 | 4.30 | 1.69 |
| $K_2O$ | 0.28 | 0.29 | 0.48 | 0.48 | 0.49 | 0.49 | 0.29 |
| MgO | 4.81 | 4.17 | 2.91 | 2.95 | 2.90 | 2.93 | 4.45 |
| CaO | 0.61 | 0.59 | 0.01 | 0.01 | 0.01 | 0.02 | 0.60 |
| ZnO | 0.00 | 0.00 | 1.00 | 1.01 | 1.00 | 1.05 | 0.00 |
| $TiO_2$ | 0.01 | 0.01 | 0.01 | 0.01 | 0.01 | 0.01 | 0.01 |
| $ZrO_2$ | 0.00 | 0.00 | 0.00 | 0.00 | 0.00 | 0.00 | 0.00 |

(continued)

| Ex. (mol%) | ORA-17 | ORA-18 | ORA-21 | ORA-22 | ORA-23 | ORA-24 | ORA-25 |
|---|---|---|---|---|---|---|---|
| $WO_3$ | 0.00 | 0.00 | 0.00 | 0.00 | 0.00 | 0.00 | 0.00 |
| $SnO_2$ | 0.00 | 0.00 | 0.00 | 0.00 | 0.00 | 0.00 | 0.00 |
| $Fe_2O_3$ | 0.006 | 0.005 | 0.004 | 0.005 | 0.005 | 0.005 | 0.006 |
| $CeO_2$ | 0.000 | 0.000 | 0.000 | 0.000 | 0.000 | 0.000 | 0.000 |
| NiO | 0.141 | 0.108 | 0.000 | 0.023 | 0.012 | 0.089 | 0.053 |
| $Co_3O_4$ | 0.029 | 0.001 | 0.001 | 0.002 | 0.002 | 0.048 | 0.013 |
| $Cr_2O_3$ | 0.000 | 0.000 | 0.068 | 0.038 | 0.002 | 0.008 | 0.000 |
| CuO | 0.006 | 0.576 | 0.829 | 0.233 | 0.037 | 0.044 | 0.525 |
| $HfO_2$ | 0.000 | 0.000 | 0.000 | 0.000 | 0.000 | 0.000 | 0.000 |
| $MnO_2$ | 0.000 | 0.000 | 0.000 | 0.000 | 0.000 | 0.000 | 0.000 |
| $As_2O_3$ | 0.001 | 0.001 | 0.000 | 0.000 | 0.000 | 0.000 | 0.000 |
| $Sb_2O_3$ | 0.000 | 0.000 | 0.000 | 0.000 | 0.000 | 0.000 | 0.000 |
| $V_2O_5$ | 0.000 | 0.000 | 0.000 | 0.000 | 0.000 | 0.000 | 0.000 |
| $SO_3$ | 0.000 | 0.000 | 0.001 | 0.006 | 0.003 | 0.000 | 0.000 |
| Cl | 0.007 | 0.009 | 0.011 | 0.011 | 0.011 | 0.009 | 0.005 |
| F | 0.000 | 0.000 | 0.000 | 0.000 | 0.000 | 0.000 | 0.000 |
| $Nd_2O_3$ | 0.000 | 0.000 | 0.000 | 0.000 | 0.000 | 0.000 | 0.000 |
| $Er_2O_3$ | 0.000 | 0.000 | 0.000 | 0.000 | 0.000 | 0.000 | 0.000 |

Table 30D

| Ex. (mol%) | ORA-26 | ORA-27 | ORA-28 | ORA-29 | ORA-30 | ORA-31 | ORA-32 | ORA-33 | ORA-34 |
|---|---|---|---|---|---|---|---|---|---|
| $SiO_2$ | 57.72 | 57.57 | 57.20 | 56.72 | 56.18 | 59.18 | 58.40 | 58.81 | 58.08 |
| $Al_2O_3$ | 17.62 | 17.48 | 17.51 | 17.36 | 17.14 | 16.63 | 16.20 | 16.54 | 16.54 |
| $B_2O_3$ | 6.01 | 5.97 | 5.91 | 5.90 | 5.81 | 5.62 | 5.70 | 5.76 | 6.07 |
| $P_2O_5$ | 0.00 | 0.00 | 0.00 | 0.00 | 0.00 | 0.00 | 0.00 | 0.00 | 0.00 |
| $Li_2O$ | 10.85 | 10.80 | 10.79 | 10.68 | 10.55 | 11.79 | 11.60 | 11.86 | 11.87 |
| $Na_2O$ | 1.67 | 1.67 | 1.67 | 1.68 | 1.65 | 6.18 | 6.09 | 6.17 | 6.20 |
| $K_2O$ | 0.29 | 0.29 | 0.29 | 0.28 | 0.28 | 0.46 | 0.47 | 0.47 | 0.48 |
| MgO | 4.25 | 4.22 | 4.23 | 4.19 | 4.15 | 0.02 | 0.02 | 0.02 | 0.02 |
| CaO | 0.58 | 0.58 | 0.58 | 0.58 | 0.56 | 0.01 | 0.01 | 0.01 | 0.01 |
| ZnO | 0.00 | 0.00 | 0.00 | 0.00 | 0.00 | 0.00 | 0.00 | 0.00 | 0.00 |
| $TiO_2$ | 0.01 | 0.01 | 0.01 | 0.01 | 0.01 | 0.01 | 0.00 | 0.01 | 0.01 |
| $ZrO_2$ | 0.00 | 0.00 | 0.00 | 0.00 | 0.00 | 0.00 | 0.00 | 0.00 | 0.00 |
| $WO_3$ | 0.00 | 0.00 | 0.00 | 0.00 | 0.00 | 0.00 | 0.00 | 0.00 | 0.00 |
| $SnO_2$ | 0.00 | 0.00 | 0.00 | 0.00 | 0.00 | 0.00 | 0.00 | 0.00 | 0.00 |
| $Fe_2O_3$ | 0.006 | 0.006 | 0.006 | 0.006 | 0.006 | 0.004 | 0.003 | 0.004 | 0.004 |
| $CeO_2$ | 0.000 | 0.000 | 0.000 | 0.000 | 0.000 | 0.000 | 0.000 | 0.000 | 0.000 |
| NiO | 0.057 | 0.057 | 0.053 | 0.052 | 0.052 | 0.077 | 0.039 | 0.127 | 0.071 |
| $Co_3O_4$ | 0.012 | 0.012 | 0.012 | 0.011 | 0.012 | 0.001 | 0.001 | 0.032 | 0.002 |

(continued)

| Ex. (mol%) | ORA-26 | ORA-27 | ORA-28 | ORA-29 | ORA-30 | ORA-31 | ORA-32 | ORA-33 | ORA-34 |
|---|---|---|---|---|---|---|---|---|---|
| $Cr_2O_3$ | 0.000 | 0.000 | 0.000 | 0.000 | 0.000 | 0.009 | 0.101 | 0.000 | 0.051 |
| CuO | 0.905 | 1.330 | 1.735 | 2.536 | 3.586 | 0.002 | 1.350 | 0.176 | 0.563 |
| $HfO_2$ | 0.000 | 0.000 | 0.000 | 0.000 | 0.000 | 0.000 | 0.000 | 0.000 | 0.000 |
| $MnO_2$ | 0.000 | 0.000 | 0.000 | 0.000 | 0.000 | 0.005 | 0.004 | 0.006 | 0.004 |
| $As_2O_3$ | 0.000 | 0.000 | 0.000 | 0.000 | 0.000 | 0.000 | 0.000 | 0.000 | 0.000 |
| $Sb_2O_3$ | 0.000 | 0.000 | 0.000 | 0.000 | 0.000 | 0.000 | 0.000 | 0.000 | 0.000 |
| $V_2O_5$ | 0.000 | 0.000 | 0.000 | 0.000 | 0.000 | 0.000 | 0.000 | 0.000 | 0.000 |
| $SO_3$ | 0.005 | 0.004 | 0.006 | 0.000 | 0.000 | 0.001 | 0.011 | 0.000 | 0.000 |
| Cl | 0.005 | 0.005 | 0.004 | 0.005 | 0.004 | 0.009 | 0.009 | 0.013 | 0.015 |
| F | 0.000 | 0.000 | 0.000 | 0.000 | 0.000 | 0.000 | 0.000 | 0.000 | 0.000 |
| $Nd_2O_3$ | 0.000 | 0.000 | 0.000 | 0.000 | 0.000 | 0.000 | 0.000 | 0.000 | 0.000 |
| $Er_2O_3$ | 0.000 | 0.000 | 0.000 | 0.000 | 0.000 | 0.000 | 0.000 | 0.000 | 0.000 |

Table 30E

| Ex. (mol%) | ORA-35 | ORA-36 | ORA-37 | ORA-38 | ORA-39 | ORA-40 | ORA-41 | ORA-42 | ORA-43 |
|---|---|---|---|---|---|---|---|---|---|
| $SiO_2$ | 59.17 | 58.32 | 58.74 | 57.99 | 57.84 | 58.16 | 58.35 | 58.45 | 58.41 |
| $Al_2O_3$ | 16.57 | 16.10 | 16.54 | 16.56 | 17.76 | 17.85 | 16.48 | 16.52 | 16.48 |
| $B_2O_3$ | 5.67 | 5.69 | 5.75 | 6.03 | 6.08 | 6.00 | 6.00 | 6.09 | 6.04 |
| $P_2O_5$ | 0.00 | 0.00 | 0.00 | 0.00 | 0.00 | 0.00 | 0.00 | 0.00 | 0.00 |
| $Li_2O$ | 11.86 | 11.64 | 11.91 | 11.97 | 11.03 | 10.89 | 10.06 | 10.12 | 10.07 |
| $Na_2O$ | 6.16 | 6.07 | 6.13 | 6.22 | 1.69 | 1.69 | 4.28 | 4.26 | 4.25 |
| $K_2O$ | 0.45 | 0.46 | 0.46 | 0.48 | 0.29 | 0.29 | 0.48 | 0.49 | 0.48 |
| MgO | 0.02 | 0.02 | 0.02 | 0.02 | 4.35 | 4.37 | 2.94 | 2.94 | 2.93 |
| CaO | 0.01 | 0.01 | 0.01 | 0.01 | 0.58 | 0.58 | 0.02 | 0.01 | 0.02 |
| ZnO | 0.00 | 0.00 | 0.00 | 0.00 | 0.00 | 0.00 | 1.01 | 1.01 | 1.01 |
| $TiO_2$ | 0.01 | 0.00 | 0.01 | 0.01 | 0.01 | 0.01 | 0.01 | 0.01 | 0.01 |
| $ZrO_2$ | 0.00 | 0.00 | 0.00 | 0.00 | 0.00 | 0.00 | 0.00 | 0.00 | 0.00 |
| $WO_3$ | 0.00 | 0.00 | 0.00 | 0.00 | 0.00 | 0.00 | 0.00 | 0.00 | 0.00 |
| $SnO_2$ | 0.00 | 0.00 | 0.00 | 0.00 | 0.00 | 0.00 | 0.00 | 0.00 | 0.00 |
| $Fe_2O_3$ | 0.004 | 0.003 | 0.004 | 0.004 | 0.005 | 0.005 | 0.004 | 0.004 | 0.004 |
| $CeO_2$ | 0.000 | 0.000 | 0.000 | 0.000 | 0.000 | 0.000 | 0.000 | 0.000 | 0.000 |
| NiO | 0.000 | 0.000 | 0.242 | 0.093 | 0.252 | 0.051 | 0.021 | 0.000 | 0.082 |
| $Co_3O_4$ | 0.002 | 0.038 | 0.068 | 0.072 | 0.053 | 0.001 | 0.002 | 0.002 | 0.048 |
| $Cr_2O_3$ | 0.002 | 0.051 | 0.000 | 0.012 | 0.001 | 0.001 | 0.036 | 0.001 | 0.006 |
| CuO | 0.086 | 1.582 | 0.092 | 0.515 | 0.022 | 0.066 | 0.278 | 0.091 | 0.137 |
| $HfO_2$ | 0.000 | 0.000 | 0.000 | 0.000 | 0.000 | 0.000 | 0.000 | 0.000 | 0.000 |
| $MnO_2$ | 0.006 | 0.005 | 0.004 | 0.007 | 0.006 | 0.005 | 0.004 | 0.005 | 0.004 |
| $As_2O_3$ | 0.000 | 0.000 | 0.000 | 0.000 | 0.000 | 0.000 | 0.000 | 0.000 | 0.000 |
| $Sb_2O_3$ | 0.000 | 0.000 | 0.000 | 0.000 | 0.000 | 0.000 | 0.000 | 0.000 | 0.000 |

(continued)

| Ex. (mol%) | ORA-35 | ORA-36 | ORA-37 | ORA-38 | ORA-39 | ORA-40 | ORA-41 | ORA-42 | ORA-43 |
|---|---|---|---|---|---|---|---|---|---|
| $V_2O_5$ | 0.000 | 0.000 | 0.000 | 0.000 | 0.000 | 0.000 | 0.000 | 0.000 | 0.000 |
| $SO_3$ | 0.000 | 0.000 | 0.003 | 0.000 | 0.010 | 0.012 | 0.002 | 0.005 | 0.014 |
| Cl | 0.009 | 0.007 | 0.013 | 0.015 | 0.009 | 0.009 | 0.013 | 0.013 | 0.013 |
| F | 0.000 | 0.000 | 0.000 | 0.000 | 0.000 | 0.000 | 0.000 | 0.000 | 0.000 |
| $Nd_2O_3$ | 0.000 | 0.000 | 0.000 | 0.000 | 0.000 | 0.000 | 0.000 | 0.000 | 0.000 |
| $Er_2O_3$ | 0.000 | 0.000 | 0.000 | 0.000 | 0.000 | 0.000 | 0.000 | 0.000 | 0.000 |

Table 30F

| Ex. (mol%) | ORA-44 | ORA-45 | ORA-46 | ORA-47 | ORA-48 | ORA-49 | ORA-50 | ORA-51 | ORA-52 |
|---|---|---|---|---|---|---|---|---|---|
| $SiO_2$ | 58.30 | 58.71 | 58.54 | 58.67 | 58.47 | 58.47 | 58.61 | 58.63 | 57.36 |
| $Al_2O_3$ | 16.45 | 16.46 | 16.41 | 16.53 | 16.48 | 16.43 | 16.48 | 16.55 | 17.09 |
| $B_2O_3$ | 6.08 | 5.98 | 5.96 | 5.99 | 6.05 | 6.03 | 6.04 | 6.10 | 6.18 |
| $P_2O_5$ | 0.00 | 0.00 | 0.00 | 0.00 | 0.00 | 0.00 | 0.00 | 0.00 | 0.00 |
| $Li_2O$ | 10.10 | 10.05 | 10.53 | 10.51 | 10.50 | 10.52 | 10.53 | 9.94 | 10.16 |
| $Na_2O$ | 4.26 | 4.24 | 4.71 | 4.75 | 4.76 | 4.74 | 4.76 | 4.29 | 4.32 |
| $K_2O$ | 0.48 | 0.48 | 0.48 | 0.49 | 0.49 | 0.48 | 0.49 | 0.29 | 0.49 |
| MgO | 2.91 | 2.93 | 0.96 | 0.97 | 0.97 | 0.98 | 0.97 | 2.93 | 3.12 |
| CaO | 0.02 | 0.02 | 0.98 | 0.98 | 0.99 | 0.99 | 0.99 | 0.02 | 0.02 |
| ZnO | 1.00 | 1.01 | 0.99 | 1.02 | 1.01 | 1.01 | 1.01 | 1.02 | 1.08 |
| $TiO_2$ | 0.01 | 0.01 | 0.01 | 0.01 | 0.01 | 0.01 | 0.01 | 0.01 | 0.01 |
| $ZrO_2$ | 0.00 | 0.00 | 0.00 | 0.00 | 0.00 | 0.00 | 0.00 | 0.00 | 0.00 |
| $WO_3$ | 0.00 | 0.00 | 0.00 | 0.00 | 0.00 | 0.00 | 0.00 | 0.00 | 0.00 |
| $SnO_2$ | 0.00 | 0.00 | 0.00 | 0.00 | 0.00 | 0.00 | 0.00 | 0.00 | 0.00 |
| $Fe_2O_3$ | 0.004 | 0.004 | 0.005 | 0.005 | 0.005 | 0.005 | 0.005 | 0.004 | 0.004 |
| $CeO_2$ | 0.000 | 0.000 | 0.000 | 0.000 | 0.000 | 0.000 | 0.000 | 0.000 | 0.000 |
| NiO | 0.250 | 0.053 | 0.019 | 0.000 | 0.085 | 0.250 | 0.053 | 0.086 | 0.025 |
| $Co_3O_4$ | 0.053 | 0.001 | 0.002 | 0.002 | 0.048 | 0.053 | 0.001 | 0.049 | 0.010 |
| $Cr_2O_3$ | 0.001 | 0.000 | 0.039 | 0.001 | 0.005 | 0.000 | 0.000 | 0.005 | 0.001 |
| CuO | 0.058 | 0.036 | 0.339 | 0.054 | 0.111 | 0.010 | 0.036 | 0.060 | 0.103 |
| $HfO_2$ | 0.000 | 0.000 | 0.000 | 0.000 | 0.000 | 0.000 | 0.000 | 0.000 | 0.000 |
| $MnO_2$ | 0.006 | 0.005 | 0.005 | 0.004 | 0.006 | 0.005 | 0.004 | 0.003 | 0.000 |
| $As_2O_3$ | 0.000 | 0.001 | 0.001 | 0.001 | 0.001 | 0.001 | 0.001 | 0.000 | 0.000 |
| $Sb_2O_3$ | 0.000 | 0.000 | 0.000 | 0.000 | 0.000 | 0.000 | 0.000 | 0.000 | 0.000 |
| $V_2O_5$ | 0.000 | 0.000 | 0.000 | 0.000 | 0.000 | 0.000 | 0.000 | 0.000 | 0.000 |
| $SO_3$ | 0.001 | 0.002 | 0.006 | 0.002 | 0.007 | 0.000 | 0.009 | 0.000 | 0.005 |
| Cl | 0.013 | 0.011 | 0.011 | 0.015 | 0.013 | 0.013 | 0.013 | 0.013 | 0.013 |
| F | 0.000 | 0.000 | 0.000 | 0.000 | 0.000 | 0.000 | 0.000 | 0.000 | 0.000 |
| $Nd_2O_3$ | 0.000 | 0.000 | 0.000 | 0.000 | 0.000 | 0.000 | 0.000 | 0.000 | 0.000 |
| $Er_2O_3$ | 0.000 | 0.000 | 0.000 | 0.000 | 0.000 | 0.000 | 0.000 | 0.000 | 0.000 |

Table 30G

| Ex. (mol%) | ORA-53 | ORA-54 | ORA-56 | ORA-57 | ORA-58 | ORA-59 | ORA-60 | ORA-61 | ORA-62 |
|---|---|---|---|---|---|---|---|---|---|
| $SiO_2$ | 57.87 | 58.57 | 58.46 | 58.81 | 57.89 | 59.54 | 59.30 | 54.94 | 61.12 |
| $Al_2O_3$ | 17.10 | 16.44 | 16.41 | 16.50 | 16.88 | 16.00 | 16.52 | 18.22 | 15.01 |
| $B_2O_3$ | 5.76 | 5.80 | 5.84 | 5.78 | 5.98 | 6.02 | 5.63 | 6.53 | 5.46 |
| $P_2O_5$ | 0.00 | 0.00 | 0.00 | 0.00 | 0.00 | 0.00 | 0.00 | 0.00 | 0.00 |
| $Li_2O$ | 9.89 | 9.90 | 9.84 | 9.82 | 10.00 | 10.04 | 9.71 | 10.84 | 9.12 |
| $Na_2O$ | 4.33 | 4.22 | 4.21 | 4.22 | 4.30 | 4.23 | 4.27 | 4.68 | 3.84 |
| $K_2O$ | 0.49 | 0.47 | 0.47 | 0.47 | 0.49 | 0.29 | 0.29 | 0.31 | 0.26 |
| $MgO$ | 3.08 | 2.90 | 2.91 | 2.93 | 3.05 | 2.75 | 2.86 | 3.21 | 2.66 |
| $CaO$ | 0.02 | 0.01 | 0.01 | 0.01 | 0.01 | 0.01 | 0.01 | 0.01 | 0.01 |
| $ZnO$ | 1.06 | 0.99 | 0.99 | 1.03 | 1.06 | 0.95 | 1.00 | 1.10 | 0.90 |
| $TiO_2$ | 0.01 | 0.01 | 0.01 | 0.01 | 0.01 | 0.01 | 0.01 | 0.01 | 0.01 |
| $ZrO_2$ | 0.00 | 0.00 | 0.00 | 0.00 | 0.00 | 0.00 | 0.00 | 0.00 | 0.00 |
| $WO_3$ | 0.00 | 0.00 | 0.00 | 0.00 | 0.00 | 0.00 | 0.00 | 0.00 | 0.00 |
| $SnO_2$ | 0.00 | 0.00 | 0.00 | 0.00 | 0.00 | 0.00 | 0.00 | 0.00 | 0.00 |
| $Fe_2O_3$ | 0.004 | 0.004 | 0.004 | 0.004 | 0.004 | 0.004 | 0.004 | 0.004 | 0.004 |
| $CeO_2$ | 0.000 | 0.000 | 0.000 | 0.000 | 0.000 | 0.000 | 0.000 | 0.000 | 0.000 |
| $NiO$ | 0.084 | 0.048 | 0.049 | 0.037 | 0.097 | 0.023 | 0.090 | 0.049 | 0.050 |
| $Co_3O_4$ | 0.048 | 0.002 | 0.035 | 0.016 | 0.053 | 0.010 | 0.046 | 0.002 | 0.032 |
| $Cr_2O_3$ | 0.001 | 0.001 | 0.001 | 0.001 | 0.001 | 0.000 | 0.000 | 0.000 | 0.000 |
| $CuO$ | 0.241 | 0.633 | 0.735 | 0.336 | 0.172 | 0.114 | 0.245 | 0.084 | 1.500 |
| $HfO_2$ | 0.000 | 0.000 | 0.000 | 0.000 | 0.000 | 0.000 | 0.000 | 0.000 | 0.000 |
| $MnO_2$ | 0.000 | 0.000 | 0.000 | 0.000 | 0.000 | 0.000 | 0.000 | 0.000 | 0.000 |
| $As_2O_3$ | 0.000 | 0.000 | 0.000 | 0.000 | 0.000 | 0.000 | 0.000 | 0.000 | 0.000 |
| $Sb_2O_3$ | 0.000 | 0.000 | 0.000 | 0.000 | 0.000 | 0.000 | 0.000 | 0.000 | 0.000 |
| $V_2O_5$ | 0.000 | 0.000 | 0.000 | 0.000 | 0.000 | 0.000 | 0.000 | 0.000 | 0.000 |
| $SO_3$ | 0.000 | 0.000 | 0.003 | 0.007 | 0.000 | 0.002 | 0.005 | 0.000 | 0.002 |
| $Cl$ | 0.013 | 0.007 | 0.009 | 0.013 | 0.013 | 0.011 | 0.011 | 0.011 | 0.011 |
| $F$ | 0.000 | 0.000 | 0.000 | 0.000 | 0.000 | 0.000 | 0.000 | 0.000 | 0.000 |
| $Nd_2O_3$ | 0.000 | 0.000 | 0.000 | 0.000 | 0.000 | 0.000 | 0.000 | 0.000 | 0.000 |
| $Er_2O_3$ | 0.000 | 0.000 | 0.000 | 0.000 | 0.000 | 0.000 | 0.000 | 0.000 | 0.000 |

Table 30H

| Ex. (mol%) | ORA-63 | ORA-64 | ORA-65 | ORA-66 | ORA-67 | ORA-68 | ORA-69 | ORA-70 | ORA-71 |
|---|---|---|---|---|---|---|---|---|---|
| $SiO_2$ | 56.53 | 55.78 | 58.58 | 58.56 | 57.21 | 57.93 | 58.24 | 57.46 | 58.16 |
| $Al_2O_3$ | 17.59 | 17.97 | 16.59 | 16.88 | 16.96 | 17.01 | 16.43 | 16.92 | 16.96 |
| $B_2O_3$ | 6.17 | 6.34 | 5.92 | 5.97 | 6.16 | 5.96 | 6.05 | 6.19 | 5.86 |
| $P_2O_5$ | 0.00 | 0.00 | 0.00 | 0.00 | 0.00 | 0.00 | 0.00 | 0.00 | 0.00 |
| $Li_2O$ | 10.10 | 10.32 | 9.82 | 9.88 | 9.97 | 9.92 | 9.84 | 10.02 | 9.82 |
| $Na_2O$ | 4.35 | 4.34 | 4.27 | 4.29 | 4.30 | 4.31 | 4.24 | 4.32 | 4.35 |

(continued)

| Ex. (mol%) | ORA-63 | ORA-64 | ORA-65 | ORA-66 | ORA-67 | ORA-68 | ORA-69 | ORA-70 | ORA-71 |
|---|---|---|---|---|---|---|---|---|---|
| $K_2O$ | 0.29 | 0.29 | 0.48 | 0.29 | 0.29 | 0.29 | 0.29 | 0.29 | 0.30 |
| MgO | 3.25 | 3.42 | 2.94 | 2.98 | 3.04 | 3.03 | 2.93 | 3.02 | 3.02 |
| CaO | 0.02 | 0.02 | 0.02 | 0.02 | 0.02 | 0.02 | 0.02 | 0.02 | 0.02 |
| ZnO | 1.07 | 1.11 | 1.02 | 1.03 | 1.05 | 1.06 | 1.02 | 1.04 | 1.05 |
| $TiO_2$ | 0.01 | 0.01 | 0.01 | 0.01 | 0.01 | 0.01 | 0.01 | 0.01 | 0.01 |
| $ZrO_2$ | 0.00 | 0.00 | 0.00 | 0.00 | 0.00 | 0.00 | 0.00 | 0.00 | 0.00 |
| $WO_3$ | 0.00 | 0.00 | 0.00 | 0.00 | 0.00 | 0.00 | 0.00 | 0.00 | 0.00 |
| $SnO_2$ | 0.00 | 0.00 | 0.00 | 0.00 | 0.00 | 0.00 | 0.00 | 0.00 | 0.00 |
| $Fe_2O_3$ | 0.004 | 0.005 | 0.005 | 0.004 | 0.005 | 0.004 | 0.004 | 0.004 | 0.004 |
| $CeO_2$ | 0.000 | 0.000 | 0.000 | 0.000 | 0.000 | 0.000 | 0.000 | 0.000 | 0.000 |
| NiO | 0.037 | 0.112 | 0.034 | 0.063 | 0.476 | 0.000 | 0.063 | 0.057 | 0.232 |
| $Co_3O_4$ | 0.017 | 0.057 | 0.002 | 0.002 | 0.018 | 0.005 | 0.033 | 0.039 | 0.057 |
| $Cr_2O_3$ | 0.000 | 0.000 | 0.030 | 0.000 | 0.000 | 0.000 | 0.000 | 0.000 | 0.000 |
| CuO | 0.548 | 0.232 | 0.260 | 0.008 | 0.487 | 0.444 | 0.824 | 0.595 | 0.145 |
| $HfO_2$ | 0.000 | 0.000 | 0.000 | 0.000 | 0.000 | 0.000 | 0.000 | 0.000 | 0.000 |
| $MnO_2$ | 0.000 | 0.000 | 0.003 | 0.001 | 0.000 | 0.002 | 0.001 | 0.003 | 0.002 |
| $As_2O_3$ | 0.000 | 0.000 | 0.001 | 0.000 | 0.000 | 0.000 | 0.000 | 0.000 | 0.000 |
| $Sb_2O_3$ | 0.000 | 0.000 | 0.000 | 0.000 | 0.000 | 0.000 | 0.000 | 0.000 | 0.000 |
| $V_2O_5$ | 0.000 | 0.000 | 0.000 | 0.000 | 0.000 | 0.000 | 0.000 | 0.000 | 0.000 |
| $SO_3$ | 0.006 | 0.000 | 0.012 | 0.000 | 0.006 | 0.000 | 0.000 | 0.000 | 0.005 |
| Cl | 0.013 | 0.013 | 0.011 | 0.011 | 0.011 | 0.009 | 0.009 | 0.011 | 0.013 |
| F | 0.000 | 0.000 | 0.000 | 0.000 | 0.000 | 0.000 | 0.000 | 0.000 | 0.000 |
| $Nd_2O_3$ | 0.000 | 0.000 | 0.000 | 0.000 | 0.000 | 0.000 | 0.000 | 0.000 | 0.000 |
| $Er_2O_3$ | 0.000 | 0.000 | 0.000 | 0.000 | 0.000 | 0.000 | 0.000 | 0.000 | 0.000 |

Table 30I

| Ex. (mol%) | ORA-72 | ORA-73 | ORA-74 | ORA-75 | ORA-76 | ORA-77 | ORA-78 | ORA-79 | ORA-80 |
|---|---|---|---|---|---|---|---|---|---|
| $SiO_2$ | 57.12 | 59.37 | 58.01 | 55.88 | 59.19 | 55.91 | 57.08 | 59.16 | 59.23 |
| $Al_2O_3$ | 17.20 | 16.56 | 16.75 | 17.76 | 16.28 | 17.42 | 17.50 | 16.52 | 16.54 |
| $B_2O_3$ | 6.36 | 5.79 | 6.24 | 6.48 | 5.92 | 5.76 | 6.14 | 5.82 | 5.86 |
| $P_2O_5$ | 0.00 | 0.00 | 0.00 | 0.00 | 0.00 | 0.00 | 0.00 | 0.00 | 0.00 |
| $Li_2O$ | 10.08 | 9.75 | 10.06 | 10.29 | 9.77 | 9.68 | 9.98 | 11.85 | 11.83 |
| $Na_2O$ | 4.35 | 4.27 | 4.31 | 4.36 | 4.24 | 4.26 | 4.37 | 6.18 | 6.21 |
| $K_2O$ | 0.29 | 0.29 | 0.29 | 0.29 | 0.29 | 0.29 | 0.29 | 0.19 | 0.20 |
| MgO | 3.11 | 2.90 | 2.90 | 3.39 | 2.79 | 3.37 | 3.20 | 0.02 | 0.02 |
| CaO | 0.02 | 0.02 | 0.02 | 0.02 | 0.02 | 0.02 | 0.02 | 0.01 | 0.01 |
| ZnO | 1.06 | 1.02 | 1.02 | 1.17 | 1.00 | 1.25 | 1.13 | 0.00 | 0.00 |
| $TiO_2$ | 0.01 | 0.01 | 0.01 | 0.01 | 0.49 | 2.04 | 0.01 | 0.01 | 0.01 |
| $ZrO_2$ | 0.00 | 0.00 | 0.00 | 0.00 | 0.00 | 0.00 | 0.00 | 0.00 | 0.00 |

(continued)

| Ex. (mol%) | ORA-72 | ORA-73 | ORA-74 | ORA-75 | ORA-76 | ORA-77 | ORA-78 | ORA-79 | ORA-80 |
|---|---|---|---|---|---|---|---|---|---|
| $WO_3$ | 0.00 | 0.00 | 0.00 | 0.00 | 0.00 | 0.00 | 0.00 | 0.00 | 0.00 |
| $SnO_2$ | 0.00 | 0.00 | 0.00 | 0.00 | 0.00 | 0.00 | 0.00 | 0.00 | 0.00 |
| $Fe_2O_3$ | 0.005 | 0.004 | 0.004 | 0.005 | 0.004 | 0.005 | 0.004 | 0.004 | 0.004 |
| $CeO_2$ | 0.000 | 0.000 | 0.000 | 0.000 | 0.000 | 0.000 | 0.000 | 0.000 | 0.000 |
| NiO | 0.106 | 0.015 | 0.291 | 0.200 | 0.000 | 0.000 | 0.000 | 0.083 | 0.000 |
| $Co_3O_4$ | 0.047 | 0.001 | 0.057 | 0.050 | 0.001 | 0.001 | 0.054 | 0.048 | 0.001 |
| $Cr_2O_3$ | 0.000 | 0.000 | 0.000 | 0.000 | 0.000 | 0.000 | 0.000 | 0.005 | 0.000 |
| CuO | 0.238 | 0.000 | 0.013 | 0.077 | 0.000 | 0.000 | 0.215 | 0.093 | 0.061 |
| $HfO_2$ | 0.000 | 0.000 | 0.000 | 0.000 | 0.000 | 0.000 | 0.000 | 0.000 | 0.000 |
| $MnO_2$ | 0.002 | 0.000 | 0.004 | 0.002 | 0.000 | 0.001 | 0.001 | 0.003 | 0.005 |
| $As_2O_3$ | 0.000 | 0.000 | 0.000 | 0.000 | 0.000 | 0.000 | 0.000 | 0.000 | 0.000 |
| $Sb_2O_3$ | 0.000 | 0.000 | 0.000 | 0.000 | 0.000 | 0.000 | 0.000 | 0.000 | 0.000 |
| $V_2O_5$ | 0.000 | 0.000 | 0.000 | 0.000 | 0.000 | 0.000 | 0.000 | 0.000 | 0.000 |
| $SO_3$ | 0.000 | 0.000 | 0.000 | 0.000 | 0.000 | 0.000 | 0.003 | 0.000 | 0.005 |
| Cl | 0.011 | 0.009 | 0.013 | 0.011 | 0.009 | 0.009 | 0.011 | 0.011 | 0.015 |
| F | 0.000 | 0.000 | 0.000 | 0.000 | 0.000 | 0.000 | 0.000 | 0.000 | 0.000 |
| $Nd_2O_3$ | 0.000 | 0.000 | 0.000 | 0.000 | 0.000 | 0.000 | 0.000 | 0.000 | 0.000 |
| $Er_2O_3$ | 0.000 | 0.000 | 0.000 | 0.000 | 0.000 | 0.000 | 0.000 | 0.000 | 0.000 |

Table 30J

| Ex. (mol%) | ORA-81 | ORA-82 | ORA-83 | ORA-84 | ORA-85 | ORA-86 | ORA-87 | ORA-88 | ORA-89 |
|---|---|---|---|---|---|---|---|---|---|
| $SiO_2$ | 59.07 | 59.29 | 59.35 | 59.18 | 59.52 | 59.10 | 58.23 | 58.92 | 58.45 |
| $Al_2O_3$ | 16.48 | 16.51 | 16.56 | 16.41 | 16.38 | 16.53 | 16.16 | 16.40 | 16.34 |
| $B_2O_3$ | 5.81 | 5.83 | 5.82 | 6.00 | 5.84 | 5.96 | 5.74 | 6.02 | 6.02 |
| $P_2O_5$ | 0.00 | 0.00 | 0.00 | 0.00 | 0.00 | 0.00 | 0.00 | 0.00 | 0.00 |
| $Li_2O$ | 11.88 | 11.80 | 11.84 | 11.95 | 11.82 | 11.88 | 11.68 | 11.83 | 11.82 |
| $Na_2O$ | 6.19 | 6.18 | 6.19 | 6.18 | 6.17 | 6.19 | 6.05 | 6.20 | 6.19 |
| $K_2O$ | 0.19 | 0.19 | 0.19 | 0.19 | 0.19 | 0.19 | 0.19 | 0.19 | 0.19 |
| MgO | 0.02 | 0.02 | 0.02 | 0.02 | 0.02 | 0.02 | 0.02 | 0.02 | 0.02 |
| CaO | 0.01 | 0.01 | 0.01 | 0.01 | 0.01 | 0.01 | 0.01 | 0.01 | 0.01 |
| ZnO | 0.00 | 0.00 | 0.00 | 0.00 | 0.00 | 0.00 | 0.00 | 0.00 | 0.00 |
| $TiO_2$ | 0.01 | 0.01 | 0.01 | 0.01 | 0.01 | 0.01 | 1.91 | 0.01 | 0.01 |
| $ZrO_2$ | 0.00 | 0.00 | 0.00 | 0.00 | 0.00 | 0.00 | 0.00 | 0.00 | 0.00 |
| $WO_3$ | 0.00 | 0.00 | 0.00 | 0.00 | 0.00 | 0.00 | 0.00 | 0.00 | 0.00 |
| $SnO_2$ | 0.00 | 0.00 | 0.00 | 0.00 | 0.00 | 0.00 | 0.00 | 0.00 | 0.00 |
| $Fe_2O_3$ | 0.004 | 0.004 | 0.004 | 0.036 | 0.025 | 0.003 | 0.004 | 0.004 | 0.058 |
| $CeO_2$ | 0.000 | 0.000 | 0.001 | 0.001 | 0.003 | 0.099 | 0.002 | 0.000 | 0.000 |
| NiO | 0.249 | 0.026 | 0.000 | 0.000 | 0.000 | 0.000 | 0.000 | 0.000 | 0.057 |
| $Co_3O_4$ | 0.053 | 0.010 | 0.001 | 0.001 | 0.001 | 0.001 | 0.001 | 0.015 | 0.035 |

(continued)

| Ex. (mol%) | ORA-81 | ORA-82 | ORA-83 | ORA-84 | ORA-85 | ORA-86 | ORA-87 | ORA-88 | ORA-89 |
|---|---|---|---|---|---|---|---|---|---|
| $Cr_2O_3$ | 0.000 | 0.000 | 0.000 | 0.000 | 0.000 | 0.000 | 0.000 | 0.000 | 0.000 |
| CuO | 0.009 | 0.106 | 0.000 | 0.000 | 0.000 | 0.000 | 0.000 | 0.370 | 0.791 |
| $HfO_2$ | 0.000 | 0.000 | 0.000 | 0.000 | 0.000 | 0.000 | 0.000 | 0.000 | 0.000 |
| $MnO_2$ | 0.004 | 0.005 | 0.001 | 0.000 | 0.001 | 0.000 | 0.001 | 0.001 | 0.004 |
| $As_2O_3$ | 0.000 | 0.000 | 0.000 | 0.000 | 0.000 | 0.000 | 0.000 | 0.001 | 0.001 |
| $Sb_2O_3$ | 0.000 | 0.000 | 0.000 | 0.000 | 0.000 | 0.000 | 0.000 | 0.000 | 0.000 |
| $V_2O_5$ | 0.000 | 0.000 | 0.000 | 0.000 | 0.000 | 0.000 | 0.000 | 0.000 | 0.000 |
| $SO_3$ | 0.000 | 0.000 | 0.000 | 0.000 | 0.000 | 0.000 | 0.000 | 0.000 | 0.000 |
| Cl | 0.011 | 0.011 | 0.007 | 0.009 | 0.007 | 0.011 | 0.007 | 0.011 | 0.013 |
| F | 0.000 | 0.000 | 0.000 | 0.000 | 0.000 | 0.000 | 0.000 | 0.000 | 0.000 |
| $Nd_2O_3$ | 0.000 | 0.000 | 0.000 | 0.000 | 0.000 | 0.000 | 0.000 | 0.000 | 0.000 |
| $Er_2O_3$ | 0.000 | 0.000 | 0.000 | 0.000 | 0.000 | 0.000 | 0.000 | 0.000 | 0.000 |

Table 30K

| Ex. (mol%) | ORA-90 | ORA-91 | ORA-92 | ORA-93 | ORA-94 | ORA-95 | ORA-96 | ORA-97 | ORA-98 |
|---|---|---|---|---|---|---|---|---|---|
| $SiO_2$ | 58.93 | 58.59 | 58.63 | 58.78 | 58.92 | 58.98 | 58.92 | 59.17 | 58.67 |
| $Al_2O_3$ | 16.35 | 16.35 | 16.56 | 16.41 | 16.34 | 16.42 | 16.52 | 16.45 | 16.52 |
| $B_2O_3$ | 5.98 | 6.07 | 6.13 | 6.10 | 5.99 | 6.04 | 6.01 | 5.97 | 5.92 |
| $P_2O_5$ | 0.00 | 0.00 | 0.00 | 0.00 | 0.00 | 0.00 | 0.00 | 0.00 | 0.00 |
| $Li_2O$ | 11.84 | 11.80 | 11.87 | 11.82 | 11.77 | 11.87 | 11.87 | 11.88 | 11.85 |
| $Na_2O$ | 6.20 | 6.21 | 6.24 | 6.21 | 6.18 | 6.22 | 6.24 | 6.21 | 6.24 |
| $K_2O$ | 0.20 | 0.20 | 0.20 | 0.20 | 0.19 | 0.20 | 0.19 | 0.19 | 0.19 |
| MgO | 0.02 | 0.02 | 0.02 | 0.02 | 0.02 | 0.02 | 0.02 | 0.02 | 0.01 |
| CaO | 0.00 | 0.01 | 0.00 | 0.01 | 0.00 | 0.00 | 0.00 | 0.00 | 0.02 |
| ZnO | 0.00 | 0.00 | 0.00 | 0.00 | 0.00 | 0.00 | 0.00 | 0.00 | 0.04 |
| $TiO_2$ | 0.01 | 0.01 | 0.01 | 0.01 | 0.01 | 0.01 | 0.01 | 0.01 | 0.01 |
| $ZrO_2$ | 0.00 | 0.00 | 0.00 | 0.00 | 0.00 | 0.00 | 0.00 | 0.00 | 0.00 |
| $WO_3$ | 0.00 | 0.00 | 0.00 | 0.00 | 0.00 | 0.00 | 0.00 | 0.00 | 0.00 |
| $SnO_2$ | 0.00 | 0.00 | 0.00 | 0.00 | 0.00 | 0.00 | 0.00 | 0.00 | 0.00 |
| $Fe_2O_3$ | 0.003 | 0.003 | 0.003 | 0.003 | 0.003 | 0.003 | 0.003 | 0.003 | 0.005 |
| $CeO_2$ | 0.000 | 0.000 | 0.000 | 0.000 | 0.000 | 0.000 | 0.000 | 0.000 | 0.000 |
| NiO | 0.000 | 0.061 | 0.006 | 0.013 | 0.014 | 0.011 | 0.014 | 0.018 | 0.000 |
| $Co_3O_4$ | 0.031 | 0.034 | 0.035 | 0.035 | 0.034 | 0.002 | 0.001 | 0.000 | 0.000 |
| $Cr_2O_3$ | 0.016 | 0.000 | 0.048 | 0.029 | 0.015 | 0.055 | 0.037 | 0.047 | 0.000 |
| CuO | 0.411 | 0.628 | 0.229 | 0.364 | 0.504 | 0.147 | 0.142 | 0.015 | 0.000 |
| $HfO_2$ | 0.000 | 0.000 | 0.000 | 0.000 | 0.000 | 0.000 | 0.000 | 0.000 | 0.000 |
| $MnO_2$ | 0.007 | 0.004 | 0.004 | 0.004 | 0.003 | 0.004 | 0.004 | 0.005 | 0.000 |
| $As_2O_3$ | 0.001 | 0.001 | 0.001 | 0.001 | 0.001 | 0.001 | 0.001 | 0.001 | 0.000 |
| $Sb_2O_3$ | 0.000 | 0.000 | 0.000 | 0.000 | 0.000 | 0.000 | 0.000 | 0.000 | 0.000 |

(continued)

| Ex. (mol%) | ORA-90 | ORA-91 | ORA-92 | ORA-93 | ORA-94 | ORA-95 | ORA-96 | ORA-97 | ORA-98 |
|---|---|---|---|---|---|---|---|---|---|
| $V_2O_5$ | 0.000 | 0.000 | 0.000 | 0.000 | 0.000 | 0.000 | 0.000 | 0.000 | 0.000 |
| $SO_3$ | 0.001 | 0.000 | 0.000 | 0.000 | 0.005 | 0.002 | 0.000 | 0.006 | 0.000 |
| Cl | 0.011 | 0.013 | 0.013 | 0.015 | 0.011 | 0.013 | 0.013 | 0.013 | 0.015 |
| F | 0.000 | 0.000 | 0.000 | 0.000 | 0.000 | 0.000 | 0.000 | 0.000 | 0.000 |
| $Nd_2O_3$ | 0.000 | 0.000 | 0.000 | 0.000 | 0.000 | 0.000 | 0.000 | 0.000 | 0.517 |
| $Er_2O_3$ | 0.000 | 0.000 | 0.000 | 0.000 | 0.000 | 0.000 | 0.000 | 0.000 | 0.000 |

Table 30L

| Ex. (mol%) | ORA-99 | OR-A-100 | OR-A-101 | OR-A-102 | OR-A-103 | OR-A-104 | OR-A-105 | OR-A-106 | OR-A-107 |
|---|---|---|---|---|---|---|---|---|---|
| $SiO_2$ | 58.51 | 57.81 | 58.00 | 57.88 | 57.74 | 57.52 | 57.60 | 57.57 | 58.73 |
| $Al_2O_3$ | 16.39 | 16.21 | 16.25 | 16.11 | 16.08 | 16.33 | 16.37 | 16.07 | 16.47 |
| $B_2O_3$ | 5.84 | 5.81 | 5.60 | 5.69 | 5.76 | 5.83 | 5.74 | 5.99 | 6.09 |
| $P_2O_5$ | 0.00 | 0.00 | 0.00 | 0.00 | 0.00 | 0.00 | 0.00 | 0.00 | 0.00 |
| $Li_2O$ | 11.76 | 11.72 | 11.62 | 11.74 | 11.79 | 11.78 | 11.76 | 10.97 | 11.98 |
| $Na_2O$ | 6.21 | 6.11 | 6.08 | 6.05 | 6.04 | 5.19 | 4.27 | 4.23 | 6.24 |
| $K_2O$ | 0.19 | 0.19 | 0.18 | 0.19 | 0.18 | 0.19 | 0.19 | 0.19 | 0.19 |
| MgO | 0.00 | 0.00 | 0.00 | 0.00 | 0.00 | 0.00 | 0.93 | 1.85 | 0.02 |
| CaO | 0.02 | 0.02 | 0.02 | 0.02 | 0.02 | 0.02 | 0.02 | 0.02 | 0.01 |
| ZnO | 0.01 | 0.00 | 0.00 | 0.00 | 0.00 | 1.01 | 1.03 | 1.00 | 0.00 |
| $TiO_2$ | 0.01 | 0.01 | 0.01 | 0.01 | 0.01 | 0.01 | 0.01 | 0.01 | 0.01 |
| $ZrO_2$ | 0.00 | 0.00 | 0.00 | 0.00 | 0.00 | 0.00 | 0.00 | 0.00 | 0.00 |
| $WO_3$ | 0.00 | 0.00 | 0.00 | 0.00 | 0.00 | 0.00 | 0.00 | 0.00 | 0.00 |
| $SnO_2$ | 0.00 | 0.00 | 0.00 | 0.00 | 0.00 | 0.00 | 0.00 | 0.00 | 0.00 |
| $Fe_2O_3$ | 0.006 | 0.009 | 0.009 | 0.009 | 0.009 | 0.009 | 0.009 | 0.009 | 0.004 |
| $CeO_2$ | 0.000 | 0.000 | 0.000 | 0.000 | 0.000 | 0.000 | 0.000 | 0.000 | 0.000 |
| NiO | 0.000 | 0.000 | 0.112 | 0.214 | 0.306 | 0.000 | 0.000 | 0.000 | 0.015 |
| $Co_3O_4$ | 0.000 | 0.000 | 0.000 | 0.000 | 0.000 | 0.000 | 0.000 | 0.000 | 0.003 |
| $Cr_2O_3$ | 0.000 | 0.000 | 0.000 | 0.000 | 0.000 | 0.000 | 0.000 | 0.000 | 0.028 |
| CuO | 0.000 | 0.000 | 0.000 | 0.000 | 0.000 | 0.000 | 0.000 | 0.000 | 0.200 |
| $HfO_2$ | 0.000 | 0.000 | 0.000 | 0.000 | 0.000 | 0.000 | 0.000 | 0.000 | 0.000 |
| $MnO_2$ | 0.000 | 0.000 | 0.000 | 0.000 | 0.000 | 0.000 | 0.000 | 0.000 | 0.001 |
| $As_2O_3$ | 0.000 | 0.000 | 0.000 | 0.000 | 0.000 | 0.000 | 0.000 | 0.000 | 0.000 |
| $Sb_2O_3$ | 0.000 | 0.000 | 0.000 | 0.000 | 0.000 | 0.000 | 0.000 | 0.000 | 0.000 |
| $V_2O_5$ | 0.000 | 0.000 | 0.000 | 0.000 | 0.000 | 0.000 | 0.000 | 0.000 | 0.000 |
| $SO_3$ | 0.000 | 0.003 | 0.000 | 0.005 | 0.008 | 0.000 | 0.000 | 0.001 | 0.000 |
| Cl | 0.017 | 0.018 | 0.014 | 0.016 | 0.014 | 0.016 | 0.016 | 0.016 | 0.013 |
| F | 0.000 | 0.000 | 0.000 | 0.000 | 0.000 | 0.000 | 0.000 | 0.000 | 0.000 |
| $Nd_2O_3$ | 1.042 | 2.094 | 2.105 | 2.077 | 2.055 | 2.101 | 2.069 | 2.087 | 0.000 |

(continued)

| Ex. (mol%) | ORA-99 | OR-A-100 | OR-A-101 | OR-A-102 | OR-A-103 | OR-A-104 | OR-A-105 | OR-A-106 | OR-A-107 |
|---|---|---|---|---|---|---|---|---|---|
| $Er_2O_3$ | 0.000 | 0.000 | 0.000 | 0.000 | 0.000 | 0.000 | 0.000 | 0.000 | 0.000 |

Table 30M

| Ex. (mol%) | OR-A-108 | OR-A-109 | OR-A-110 | OR-A-111 | OR-A-112 | OR-A-113 | OR-A-114 | OR-A-115 | OR-A-116 |
|---|---|---|---|---|---|---|---|---|---|
| $SiO_2$ | 59.04 | 58.88 | 59.31 | 59.45 | 60.14 | 60.08 | 60.58 | 59.80 | 59.18 |
| $Al_2O_3$ | 16.49 | 16.45 | 16.59 | 16.60 | 16.68 | 16.98 | 16.85 | 17.22 | 15.95 |
| $B_2O_3$ | 5.75 | 5.91 | 6.10 | 5.88 | 6.10 | 6.18 | 6.08 | 6.24 | 5.89 |
| $P_2O_5$ | 0.03 | 0.02 | 0.02 | 0.02 | 0.02 | 0.02 | 0.04 | 0.00 | 0.00 |
| $Li_2O$ | 11.98 | 12.01 | 12.09 | 12.08 | 12.25 | 12.27 | 12.27 | 12.29 | 12.01 |
| $Na_2O$ | 6.18 | 5.68 | 5.27 | 4.78 | 4.34 | 3.87 | 3.86 | 3.89 | 6.27 |
| $K_2O$ | 0.18 | 0.19 | 0.19 | 0.19 | 0.19 | 0.19 | 0.20 | 0.19 | 0.20 |
| $MgO$ | 0.02 | 0.02 | 0.02 | 0.02 | 0.03 | 0.02 | 0.02 | 0.02 | 0.02 |
| $CaO$ | 0.03 | 0.02 | 0.02 | 0.02 | 0.02 | 0.02 | 0.03 | 0.01 | 0.01 |
| $ZnO$ | 0.00 | 0.00 | 0.00 | 0.00 | 0.00 | 0.00 | 0.00 | 0.00 | 0.00 |
| $TiO_2$ | 0.00 | 0.01 | 0.00 | 0.01 | 0.00 | 0.01 | 0.00 | 0.01 | 0.01 |
| $ZrO_2$ | 0.00 | 0.51 | 0.00 | 0.51 | 0.00 | 0.00 | 0.00 | 0.00 | 0.00 |
| $WO_3$ | 0.00 | 0.00 | 0.00 | 0.00 | 0.00 | 0.00 | 0.00 | 0.00 | 0.00 |
| $SnO_2$ | 0.00 | 0.00 | 0.00 | 0.00 | 0.00 | 0.00 | 0.00 | 0.00 | 0.00 |
| $Fe_2O_3$ | 0.027 | 0.016 | 0.016 | 0.016 | 0.016 | 0.016 | 0.028 | 0.004 | 0.004 |
| $CeO_2$ | 0.000 | 0.000 | 0.000 | 0.000 | 0.000 | 0.000 | 0.000 | 0.000 | 0.000 |
| $NiO$ | 0.018 | 0.017 | 0.019 | 0.014 | 0.016 | 0.017 | 0.000 | 0.018 | 0.001 |
| $Co_3O_4$ | 0.003 | 0.000 | 0.000 | 0.000 | 0.000 | 0.000 | 0.000 | 0.000 | 0.000 |
| $Cr_2O_3$ | 0.028 | 0.029 | 0.030 | 0.031 | 0.029 | 0.030 | 0.000 | 0.030 | 0.001 |
| $CuO$ | 0.181 | 0.219 | 0.294 | 0.343 | 0.160 | 0.284 | 0.000 | 0.271 | 0.002 |
| $HfO_2$ | 0.000 | 0.006 | 0.000 | 0.006 | 0.000 | 0.000 | 0.000 | 0.000 | 0.000 |
| $MnO_2$ | 0.024 | 0.015 | 0.012 | 0.012 | 0.016 | 0.013 | 0.022 | 0.001 | 0.001 |
| $As_2O_3$ | 0.000 | 0.000 | 0.000 | 0.000 | 0.000 | 0.000 | 0.000 | 0.000 | 0.001 |
| $Sb_2O_3$ | 0.000 | 0.000 | 0.000 | 0.000 | 0.000 | 0.000 | 0.000 | 0.000 | 0.000 |
| $V_2O_5$ | 0.000 | 0.000 | 0.000 | 0.000 | 0.000 | 0.000 | 0.000 | 0.000 | 0.000 |
| $SO_3$ | 0.000 | 0.001 | 0.004 | 0.000 | 0.000 | 0.000 | 0.004 | 0.000 | 0.002 |
| $Cl$ | 0.011 | 0.013 | 0.011 | 0.011 | 0.009 | 0.009 | 0.009 | 0.007 | 0.009 |
| $F$ | 0.000 | 0.000 | 0.000 | 0.000 | 0.000 | 0.000 | 0.000 | 0.000 | 0.000 |
| $Nd_2O_3$ | 0.000 | 0.000 | 0.000 | 0.000 | 0.000 | 0.000 | 0.000 | 0.000 | 0.000 |
| $Er_2O_3$ | 0.000 | 0.000 | 0.000 | 0.000 | 0.000 | 0.000 | 0.000 | 0.000 | 0.451 |

Table 30N

| Ex. (mol%) | OR-A-117 | OR-A-118 | OR-A-119 | OR-A-120 | OR-A-121 | OR-A-122 | OR-A-123 | OR-A-124 | OR-A-125 |
|---|---|---|---|---|---|---|---|---|---|
| $SiO_2$ | 58.83 | 59.12 | 58.95 | 58.94 | 59.09 | 58.96 | 59.27 | 58.89 | 59.84 |
| $Al_2O_3$ | 14.57 | 15.93 | 15.90 | 15.16 | 15.91 | 17.23 | 17.31 | 17.36 | 17.03 |
| $B_2O_3$ | 5.97 | 5.83 | 6.03 | 5.96 | 5.95 | 6.10 | 6.00 | 6.03 | 6.00 |
| $P_2O_5$ | 0.00 | 0.00 | 0.00 | 0.00 | 0.00 | 0.00 | 0.00 | 0.00 | 0.00 |
| $Li_2O$ | 12.20 | 12.10 | 12.16 | 12.16 | 12.02 | 10.39 | 10.34 | 11.33 | 11.12 |
| $Na_2O$ | 6.31 | 6.23 | 6.22 | 6.28 | 6.27 | 2.80 | 2.79 | 2.82 | 2.81 |
| $K_2O$ | 0.20 | 0.19 | 0.20 | 0.20 | 0.20 | 0.10 | 0.10 | 0.10 | 0.10 |
| MgO | 0.02 | 0.02 | 0.02 | 0.02 | 0.02 | 0.99 | 0.99 | 1.00 | 0.98 |
| CaO | 0.01 | 0.01 | 0.01 | 0.01 | 0.01 | 2.03 | 2.04 | 1.02 | 0.99 |
| ZnO | 0.00 | 0.00 | 0.00 | 0.00 | 0.00 | 1.04 | 1.06 | 1.06 | 1.02 |
| $TiO_2$ | 0.01 | 0.01 | 0.01 | 0.01 | 0.01 | 0.01 | 0.01 | 0.01 | 0.01 |
| $ZrO_2$ | 0.00 | 0.00 | 0.00 | 0.00 | 0.00 | 0.00 | 0.00 | 0.00 | 0.00 |
| $WO_3$ | 0.00 | 0.00 | 0.00 | 0.00 | 0.00 | 0.00 | 0.00 | 0.00 | 0.00 |
| $SnO_2$ | 0.00 | 0.00 | 0.00 | 0.00 | 0.00 | 0.00 | 0.00 | 0.00 | 0.00 |
| $Fe_2O_3$ | 0.004 | 0.004 | 0.004 | 0.004 | 0.004 | 0.005 | 0.005 | 0.004 | 0.005 |
| $CeO_2$ | 0.000 | 0.000 | 0.000 | 0.000 | 0.000 | 0.000 | 0.000 | 0.000 | 0.000 |
| NiO | 0.010 | 0.086 | 0.040 | 0.053 | 0.003 | 0.000 | 0.000 | 0.000 | 0.000 |
| $Co_3O_4$ | 0.000 | 0.009 | 0.002 | 0.000 | 0.012 | 0.037 | 0.048 | 0.038 | 0.047 |
| $Cr_2O_3$ | 0.003 | 0.001 | 0.001 | 0.002 | 0.001 | 0.049 | 0.000 | 0.052 | 0.000 |
| CuO | 0.015 | 0.002 | 0.001 | 0.009 | 0.025 | 0.253 | 0.024 | 0.271 | 0.037 |
| $HfO_2$ | 0.000 | 0.000 | 0.000 | 0.000 | 0.000 | 0.000 | 0.000 | 0.000 | 0.000 |
| $MnO_2$ | 0.000 | 0.000 | 0.002 | 0.000 | 0.002 | 0.004 | 0.005 | 0.007 | 0.004 |
| $As_2O_3$ | 0.002 | 0.001 | 0.001 | 0.001 | 0.001 | 0.001 | 0.001 | 0.001 | 0.001 |
| $Sb_2O_3$ | 0.000 | 0.000 | 0.000 | 0.000 | 0.000 | 0.000 | 0.000 | 0.000 | 0.000 |
| $V_2O_5$ | 0.000 | 0.000 | 0.000 | 0.000 | 0.000 | 0.000 | 0.000 | 0.000 | 0.000 |
| $SO_3$ | 0.000 | 0.007 | 0.000 | 0.000 | 0.011 | 0.000 | 0.000 | 0.000 | 0.004 |
| Cl | 0.016 | 0.009 | 0.013 | 0.014 | 0.013 | 0.011 | 0.009 | 0.011 | 0.009 |
| F | 0.000 | 0.000 | 0.000 | 0.000 | 0.000 | 0.000 | 0.000 | 0.000 | 0.000 |
| $Nd_2O_3$ | 0.000 | 0.000 | 0.000 | 0.000 | 0.000 | 0.000 | 0.000 | 0.000 | 0.000 |
| $Er_2O_3$ | 1.850 | 0.447 | 0.453 | 1.168 | 0.460 | 0.000 | 0.000 | 0.000 | 0.000 |

Table 30O

| Ex. (mol%) | OR-A-126 | OR-A-127 | OR-A-128 | OR-A-129 | OR-A-130 | OR-A-131 | OR-A-132 | OR-A-133 | OR-A-134 |
|---|---|---|---|---|---|---|---|---|---|
| $SiO_2$ | 58.98 | 58.50 | 58.20 | 58.36 | 58.82 | 58.06 | 58.50 | 58.41 | 58.97 |
| $Al_2O_3$ | 16.66 | 17.08 | 16.22 | 16.36 | 16.60 | 16.27 | 16.29 | 16.43 | 16.39 |
| $B_2O_3$ | 6.03 | 6.12 | 5.98 | 6.00 | 5.85 | 5.92 | 5.96 | 6.08 | 5.91 |
| $P_2O_5$ | 0.00 | 0.00 | 0.00 | 0.00 | 0.00 | 0.00 | 0.00 | 0.00 | 0.00 |
| $Li_2O$ | 11.18 | 11.27 | 12.14 | 12.00 | 12.03 | 12.10 | 12.08 | 12.33 | 12.05 |

(continued)

| Ex. (mol%) | OR-A-126 | OR-A-127 | OR-A-128 | OR-A-129 | OR-A-130 | OR-A-131 | OR-A-132 | OR-A-133 | OR-A-134 |
|---|---|---|---|---|---|---|---|---|---|
| $Na_2O$ | 2.79 | 2.80 | 6.09 | 6.11 | 6.18 | 6.09 | 6.14 | 6.17 | 6.15 |
| $K_2O$ | 0.10 | 0.10 | 0.19 | 0.20 | 0.19 | 0.19 | 0.20 | 0.20 | 0.19 |
| $MgO$ | 0.95 | 0.97 | 0.01 | 0.02 | 0.01 | 0.01 | 0.02 | 0.01 | 0.01 |
| $CaO$ | 1.94 | 2.00 | 0.01 | 0.01 | 0.01 | 0.01 | 0.01 | 0.01 | 0.01 |
| $ZnO$ | 1.01 | 1.03 | 0.00 | 0.00 | 0.00 | 0.00 | 0.00 | 0.00 | 0.00 |
| $TiO_2$ | 0.01 | 0.01 | 0.95 | 0.01 | 0.01 | 0.96 | 0.01 | 0.01 | 0.01 |
| $ZrO_2$ | 0.00 | 0.00 | 0.00 | 0.00 | 0.00 | 0.00 | 0.00 | 0.00 | 0.00 |
| $WO_3$ | 0.00 | 0.00 | 0.00 | 0.00 | 0.00 | 0.00 | 0.00 | 0.00 | 0.00 |
| $SnO_2$ | 0.00 | 0.00 | 0.00 | 0.00 | 0.00 | 0.00 | 0.00 | 0.00 | 0.00 |
| $Fe_2O_3$ | 0.005 | 0.005 | 0.002 | 0.048 | 0.004 | 0.001 | 0.051 | 0.004 | 0.004 |
| $CeO_2$ | 0.000 | 0.000 | 0.200 | 0.002 | 0.000 | 0.400 | 0.000 | 0.002 | 0.004 |
| $NiO$ | 0.000 | 0.000 | 0.000 | 0.000 | 0.037 | 0.000 | 0.000 | 0.000 | 0.000 |
| $Co_3O_4$ | 0.035 | 0.047 | 0.000 | 0.001 | 0.000 | 0.001 | 0.000 | 0.000 | 0.002 |
| $Cr_2O_3$ | 0.049 | 0.000 | 0.000 | 0.000 | 0.000 | 0.000 | 0.000 | 0.000 | 0.000 |
| $CuO$ | 0.246 | 0.042 | 0.000 | 0.182 | 0.232 | 0.000 | 0.000 | 0.044 | 0.279 |
| $HfO_2$ | 0.000 | 0.000 | 0.000 | 0.000 | 0.000 | 0.000 | 0.000 | 0.000 | 0.000 |
| $MnO_2$ | 0.001 | 0.007 | 0.000 | 0.687 | 0.000 | 0.000 | 0.737 | 0.000 | 0.001 |
| $As_2O_3$ | 0.001 | 0.001 | 0.000 | 0.001 | 0.000 | 0.001 | 0.001 | 0.001 | 0.000 |
| $Sb_2O_3$ | 0.000 | 0.000 | 0.000 | 0.000 | 0.000 | 0.000 | 0.000 | 0.000 | 0.000 |
| $V_2O_5$ | 0.000 | 0.000 | 0.000 | 0.000 | 0.000 | 0.000 | 0.000 | 0.299 | 0.000 |
| $SO_3$ | 0.007 | 0.000 | 0.000 | 0.000 | 0.010 | 0.000 | 0.001 | 0.000 | 0.000 |
| $Cl$ | 0.009 | 0.011 | 0.007 | 0.009 | 0.009 | 0.009 | 0.009 | 0.011 | 0.009 |
| $F$ | 0.000 | 0.000 | 0.000 | 0.000 | 0.000 | 0.000 | 0.000 | 0.000 | 0.000 |
| $Nd_2O_3$ | 0.000 | 0.000 | 0.000 | 0.000 | 0.000 | 0.000 | 0.000 | 0.000 | 0.000 |
| $Er_2O_3$ | 0.000 | 0.000 | 0.000 | 0.000 | 0.000 | 0.000 | 0.000 | 0.000 | 0.000 |

Table 30P

| Ex. (mol%) | OR-A-135 | OR-A-136 | OR-A-137 | OR-A-138 | OR-A-139 | OR-A-140 | OR-A-141 | OR-A-142 | OR-A-143 |
|---|---|---|---|---|---|---|---|---|---|
| $SiO_2$ | 58.37 | 58.70 | 57.48 | 58.61 | 56.91 | 57.48 | 58.88 | 58.26 | 58.47 |
| $Al_2O_3$ | 16.51 | 16.37 | 16.31 | 16.26 | 16.71 | 16.60 | 16.55 | 16.75 | 16.46 |
| $B_2O_3$ | 6.14 | 6.07 | 5.90 | 5.88 | 5.94 | 5.97 | 5.98 | 6.09 | 5.98 |
| $P_2O_5$ | 0.00 | 0.00 | 0.00 | 0.00 | 0.00 | 0.00 | 0.00 | 0.00 | 0.00 |
| $Li_2O$ | 12.18 | 12.14 | 11.91 | 11.83 | 11.83 | 11.87 | 11.96 | 12.09 | 11.59 |
| $Na_2O$ | 6.19 | 6.20 | 6.08 | 6.11 | 6.16 | 6.17 | 6.19 | 6.25 | 6.18 |
| $K_2O$ | 0.19 | 0.20 | 0.20 | 0.19 | 0.20 | 0.22 | 0.19 | 0.20 | 0.19 |
| $MgO$ | 0.02 | 0.01 | 0.02 | 0.01 | 0.01 | 0.02 | 0.02 | 0.02 | 0.01 |
| $CaO$ | 0.01 | 0.01 | 0.01 | 0.00 | 0.01 | 0.01 | 0.01 | 0.01 | 0.01 |
| $ZnO$ | 0.00 | 0.00 | 0.00 | 0.00 | 0.00 | 0.00 | 0.00 | 0.00 | 0.00 |

(continued)

| Ex. (mol%) | OR-A-135 | OR-A-136 | OR-A-137 | OR-A-138 | OR-A-139 | OR-A-140 | OR-A-141 | OR-A-142 | OR-A-143 |
|---|---|---|---|---|---|---|---|---|---|
| $TiO_2$ | 0.01 | 0.01 | 1.98 | 0.99 | 2.00 | 0.01 | 0.01 | 0.01 | 0.98 |
| $ZrO_2$ | 0.00 | 0.00 | 0.00 | 0.00 | 0.00 | 0.00 | 0.00 | 0.00 | 0.00 |
| $WO_3$ | 0.00 | 0.00 | 0.00 | 0.00 | 0.00 | 0.00 | 0.00 | 0.00 | 0.00 |
| $SnO_2$ | 0.00 | 0.00 | 0.00 | 0.00 | 0.00 | 0.00 | 0.00 | 0.00 | 0.00 |
| $Fe_2O_3$ | 0.004 | 0.004 | 0.003 | 0.003 | 0.002 | 0.107 | 0.099 | 0.101 | 0.003 |
| $CeO_2$ | 0.000 | 0.002 | 0.101 | 0.103 | 0.214 | 0.000 | 0.103 | 0.212 | 0.106 |
| $NiO$ | 0.000 | 0.000 | 0.000 | 0.000 | 0.000 | 0.000 | 0.000 | 0.000 | 0.000 |
| $Co_3O_4$ | 0.006 | 0.004 | 0.000 | 0.000 | 0.000 | 0.000 | 0.000 | 0.000 | 0.000 |
| $Cr_2O_3$ | 0.000 | 0.000 | 0.000 | 0.000 | 0.000 | 0.000 | 0.000 | 0.000 | 0.000 |
| $CuO$ | 0.359 | 0.269 | 0.000 | 0.000 | 0.000 | 0.000 | 0.000 | 0.000 | 0.000 |
| $HfO_2$ | 0.000 | 0.000 | 0.000 | 0.000 | 0.000 | 0.000 | 0.000 | 0.000 | 0.000 |
| $MnO_2$ | 0.000 | 0.000 | 0.001 | 0.000 | 0.001 | 1.514 | 0.003 | 0.000 | 0.000 |
| $As_2O_3$ | 0.001 | 0.001 | 0.000 | 0.000 | 0.000 | 0.000 | 0.000 | 0.000 | 0.001 |
| $Sb_2O_3$ | 0.000 | 0.000 | 0.000 | 0.000 | 0.000 | 0.000 | 0.000 | 0.000 | 0.000 |
| $V_2O_5$ | 0.000 | 0.000 | 0.000 | 0.000 | 0.000 | 0.000 | 0.000 | 0.000 | 0.000 |
| $SO_3$ | 0.000 | 0.000 | 0.012 | 0.000 | 0.000 | 0.008 | 0.000 | 0.005 | 0.000 |
| $Cl$ | 0.013 | 0.011 | 0.013 | 0.009 | 0.013 | 0.013 | 0.011 | 0.015 | 0.011 |
| $F$ | 0.000 | 0.000 | 0.000 | 0.000 | 0.000 | 0.000 | 0.000 | 0.000 | 0.000 |
| $Nd_2O_3$ | 0.000 | 0.000 | 0.000 | 0.000 | 0.000 | 0.000 | 0.000 | 0.000 | 0.000 |
| $Er_2O_3$ | 0.000 | 0.000 | 0.000 | 0.000 | 0.000 | 0.000 | 0.000 | 0.000 | 0.000 |

Table 30Q

| Ex. (mol%) | OR-A-144 | OR-A-145 | OR-A-146 | OR-A-147 | OR-A-148 | OR-A-149 | OR-A-150 | OR-A-151 | OR-A-152 |
|---|---|---|---|---|---|---|---|---|---|
| $SiO_2$ | 58.78 | 58.63 | 59.36 | 59.68 | 60.20 | 60.62 | 61.26 | 61.65 | 59.16 |
| $Al_2O_3$ | 16.19 | 16.39 | 16.55 | 16.53 | 16.44 | 16.49 | 16.37 | 16.41 | 16.55 |
| $B_2O_3$ | 5.92 | 5.87 | 5.78 | 5.78 | 5.85 | 5.88 | 5.89 | 5.93 | 5.92 |
| $P_2O_5$ | 0.00 | 0.00 | 0.00 | 0.00 | 0.00 | 0.00 | 0.00 | 0.00 | 0.00 |
| $Li_2O$ | 11.60 | 11.58 | 11.67 | 11.82 | 11.81 | 11.82 | 11.78 | 11.80 | 11.85 |
| $Na_2O$ | 6.11 | 6.15 | 6.20 | 5.69 | 5.22 | 4.74 | 4.25 | 3.77 | 6.17 |
| $K_2O$ | 0.19 | 0.19 | 0.19 | 0.19 | 0.19 | 0.19 | 0.19 | 0.19 | 0.19 |
| $MgO$ | 0.01 | 0.01 | 0.01 | 0.02 | 0.02 | 0.01 | 0.02 | 0.02 | 0.02 |
| $CaO$ | 0.01 | 0.01 | 0.01 | 0.01 | 0.01 | 0.01 | 0.01 | 0.01 | 0.01 |
| $ZnO$ | 0.00 | 0.00 | 0.00 | 0.00 | 0.00 | 0.00 | 0.00 | 0.00 | 0.00 |
| $TiO_2$ | 0.97 | 0.98 | 0.01 | 0.01 | 0.01 | 0.01 | 0.01 | 0.01 | 0.01 |
| $ZrO_2$ | 0.00 | 0.00 | 0.00 | 0.00 | 0.00 | 0.00 | 0.00 | 0.00 | 0.00 |
| $WO_3$ | 0.00 | 0.00 | 0.00 | 0.00 | 0.00 | 0.00 | 0.00 | 0.00 | 0.00 |
| $SnO_2$ | 0.00 | 0.00 | 0.00 | 0.00 | 0.00 | 0.00 | 0.00 | 0.00 | 0.00 |
| $Fe_2O_3$ | 0.002 | 0.003 | 0.004 | 0.004 | 0.004 | 0.004 | 0.004 | 0.004 | 0.004 |

(continued)

| Ex. (mol%) | OR-A-144 | OR-A-145 | OR-A-146 | OR-A-147 | OR-A-148 | OR-A-149 | OR-A-150 | OR-A-151 | OR-A-152 |
|---|---|---|---|---|---|---|---|---|---|
| CeO$_2$ | 0.199 | 0.161 | 0.000 | 0.000 | 0.000 | 0.000 | 0.000 | 0.000 | 0.000 |
| NiO | 0.000 | 0.000 | 0.019 | 0.020 | 0.018 | 0.020 | 0.020 | 0.020 | 0.105 |
| Co$_3$O$_4$ | 0.000 | 0.000 | 0.000 | 0.000 | 0.000 | 0.000 | 0.000 | 0.000 | 0.000 |
| Cr$_2$O$_3$ | 0.000 | 0.000 | 0.028 | 0.034 | 0.030 | 0.030 | 0.028 | 0.029 | 0.000 |
| CuO | 0.000 | 0.000 | 0.158 | 0.196 | 0.192 | 0.154 | 0.163 | 0.157 | 0.000 |
| HfO$_2$ | 0.000 | 0.000 | 0.000 | 0.000 | 0.000 | 0.000 | 0.000 | 0.000 | 0.000 |
| MnO$_2$ | 0.000 | 0.000 | 0.000 | 0.000 | 0.000 | 0.000 | 0.001 | 0.000 | 0.001 |
| As$_2$O$_3$ | 0.001 | 0.001 | 0.000 | 0.000 | 0.000 | 0.000 | 0.000 | 0.000 | 0.000 |
| Sb$_2$O$_3$ | 0.000 | 0.000 | 0.000 | 0.000 | 0.000 | 0.000 | 0.000 | 0.000 | 0.000 |
| V$_2$O$_5$ | 0.000 | 0.000 | 0.000 | 0.000 | 0.000 | 0.000 | 0.000 | 0.000 | 0.000 |
| SO$_3$ | 0.000 | 0.006 | 0.000 | 0.000 | 0.000 | 0.000 | 0.000 | 0.000 | 0.000 |
| Cl | 0.011 | 0.011 | 0.009 | 0.009 | 0.009 | 0.009 | 0.007 | 0.007 | 0.009 |
| F | 0.000 | 0.000 | 0.000 | 0.000 | 0.000 | 0.000 | 0.000 | 0.000 | 0.000 |
| Nd$_2$O$_3$ | 0.000 | 0.000 | 0.000 | 0.000 | 0.000 | 0.000 | 0.000 | 0.000 | 0.000 |
| Er$_2$O$_3$ | 0.000 | 0.000 | 0.000 | 0.000 | 0.000 | 0.000 | 0.000 | 0.000 | 0.000 |

Table 30R

| Ex. (mol%) | OR-A-153 | OR-A-154 | OR-A-155 | OR-A-156 | OR-A-157 | OR-A-158 | OR-A-159 | OR-A-160 | OR-A-161 |
|---|---|---|---|---|---|---|---|---|---|
| SiO$_2$ | 59.09 | 59.33 | 58.93 | 59.20 | 59.10 | 58.51 | 59.65 | 58.74 | 58.81 |
| Al$_2$O$_3$ | 16.57 | 16.52 | 16.51 | 16.48 | 16.68 | 16.44 | 16.41 | 16.72 | 16.49 |
| B$_2$O$_3$ | 5.93 | 5.85 | 6.02 | 5.92 | 5.87 | 6.05 | 5.91 | 6.00 | 6.01 |
| P$_2$O$_5$ | 0.00 | 0.00 | 0.00 | 0.00 | 0.00 | 0.00 | 0.00 | 0.00 | 0.00 |
| Li$_2$O | 11.95 | 11.83 | 12.04 | 11.94 | 11.67 | 11.97 | 11.68 | 11.98 | 11.85 |
| Na$_2$O | 6.17 | 6.19 | 6.20 | 6.16 | 6.20 | 6.18 | 6.10 | 6.28 | 6.20 |
| K$_2$O | 0.19 | 0.19 | 0.20 | 0.19 | 0.19 | 0.19 | 0.19 | 0.20 | 0.19 |
| MgO | 0.02 | 0.02 | 0.02 | 0.01 | 0.01 | 0.02 | 0.01 | 0.02 | 0.01 |
| CaO | 0.01 | 0.01 | 0.01 | 0.01 | 0.01 | 0.01 | 0.01 | 0.01 | 0.01 |
| ZnO | 0.00 | 0.00 | 0.00 | 0.00 | 0.00 | 0.00 | 0.00 | 0.00 | 0.00 |
| TiO$_2$ | 0.01 | 0.01 | 0.01 | 0.01 | 0.01 | 0.01 | 0.01 | 0.01 | 0.01 |
| ZrO$_2$ | 0.00 | 0.00 | 0.00 | 0.00 | 0.00 | 0.00 | 0.00 | 0.00 | 0.00 |
| WO$_3$ | 0.00 | 0.00 | 0.00 | 0.00 | 0.00 | 0.00 | 0.00 | 0.00 | 0.00 |
| SnO$_2$ | 0.00 | 0.00 | 0.00 | 0.00 | 0.00 | 0.00 | 0.00 | 0.00 | 0.00 |
| Fe$_2$O$_3$ | 0.004 | 0.004 | 0.004 | 0.004 | 0.004 | 0.004 | 0.004 | 0.004 | 0.004 |
| CeO$_2$ | 0.000 | 0.000 | 0.000 | 0.000 | 0.000 | 0.000 | 0.000 | 0.000 | 0.000 |
| NiO | 0.058 | 0.033 | 0.000 | 0.000 | 0.000 | 0.000 | 0.000 | 0.000 | 0.000 |
| Co$_3$O$_4$ | 0.001 | 0.000 | 0.004 | 0.019 | 0.000 | 0.000 | 0.000 | 0.000 | 0.000 |
| Cr$_2$O$_3$ | 0.000 | 0.000 | 0.000 | 0.000 | 0.000 | 0.000 | 0.014 | 0.030 | 0.000 |
| CuO | 0.000 | 0.010 | 0.058 | 0.046 | 0.244 | 0.617 | 0.000 | 0.000 | 0.402 |

(continued)

| Ex. (mol%) | OR-A-153 | OR-A-154 | OR-A-155 | OR-A-156 | OR-A-157 | OR-A-158 | OR-A-159 | OR-A-160 | OR-A-161 |
|---|---|---|---|---|---|---|---|---|---|
| $HfO_2$ | 0.000 | 0.000 | 0.000 | 0.000 | 0.000 | 0.000 | 0.000 | 0.000 | 0.000 |
| $MnO_2$ | 0.000 | 0.000 | 0.000 | 0.001 | 0.000 | 0.000 | 0.000 | 0.000 | 0.000 |
| $As_2O_3$ | 0.000 | 0.000 | 0.000 | 0.000 | 0.000 | 0.000 | 0.000 | 0.000 | 0.000 |
| $Sb_2O_3$ | 0.000 | 0.000 | 0.000 | 0.000 | 0.000 | 0.000 | 0.000 | 0.000 | 0.000 |
| $V_2O_5$ | 0.000 | 0.000 | 0.000 | 0.000 | 0.000 | 0.000 | 0.000 | 0.000 | 0.000 |
| $SO_3$ | 0.000 | 0.000 | 0.000 | 0.000 | 0.006 | 0.000 | 0.000 | 0.007 | 0.000 |
| Cl | 0.009 | 0.009 | 0.011 | 0.009 | 0.009 | 0.011 | 0.007 | 0.013 | 0.011 |
| F | 0.000 | 0.000 | 0.000 | 0.000 | 0.000 | 0.000 | 0.000 | 0.000 | 0.000 |
| $Nd_2O_3$ | 0.000 | 0.000 | 0.000 | 0.000 | 0.000 | 0.000 | 0.000 | 0.000 | 0.000 |
| $Er_2O_3$ | 0.000 | 0.000 | 0.000 | 0.000 | 0.000 | 0.000 | 0.000 | 0.000 | 0.000 |

Table 30S

| Ex. (mol%) | OR-A-162 | OR-A-163 | OR-A-164 | OR-A-165 | OR-A-166 | OR-A-167 | OR-A-168 | OR-A-169 | OR-A-170 |
|---|---|---|---|---|---|---|---|---|---|
| $SiO_2$ | 58.68 | 58.44 | 58.49 | 58.71 | 59.24 | 58.85 | 58.57 | 58.74 | 59.78 |
| $Al_2O_3$ | 16.47 | 16.41 | 16.39 | 16.49 | 16.63 | 16.54 | 16.54 | 16.51 | 16.48 |
| $B_2O_3$ | 6.01 | 5.89 | 5.79 | 6.02 | 5.72 | 5.96 | 6.07 | 6.02 | 5.96 |
| $P_2O_5$ | 0.00 | 0.00 | 0.00 | 0.00 | 0.00 | 0.00 | 0.00 | 0.00 | 0.00 |
| $Li_2O$ | 11.98 | 11.80 | 11.83 | 9.89 | 11.15 | 10.92 | 10.51 | 9.98 | 10.47 |
| $Na_2O$ | 6.21 | 6.11 | 6.12 | 4.28 | 5.77 | 5.24 | 4.77 | 4.28 | 4.78 |
| $K_2O$ | 0.20 | 0.21 | 0.21 | 0.20 | 0.19 | 0.20 | 0.20 | 0.20 | 0.20 |
| MgO | 0.02 | 0.02 | 0.02 | 0.04 | 0.02 | 0.03 | 0.04 | 0.05 | 0.03 |
| CaO | 0.01 | 0.01 | 0.01 | 4.00 | 1.00 | 2.00 | 3.01 | 3.99 | 1.99 |
| ZnO | 0.00 | 0.00 | 0.00 | 0.00 | 0.00 | 0.00 | 0.00 | 0.00 | 0.01 |
| $TiO_2$ | 0.01 | 0.01 | 0.01 | 0.01 | 0.01 | 0.01 | 0.01 | 0.01 | 0.01 |
| $ZrO_2$ | 0.00 | 0.00 | 0.00 | 0.00 | 0.00 | 0.00 | 0.00 | 0.00 | 0.00 |
| $WO_3$ | 0.00 | 0.00 | 0.00 | 0.00 | 0.00 | 0.00 | 0.00 | 0.00 | 0.00 |
| $SnO_2$ | 0.00 | 0.00 | 0.00 | 0.00 | 0.00 | 0.00 | 0.00 | 0.00 | 0.00 |
| $Fe_2O_3$ | 0.004 | 0.072 | 0.071 | 0.004 | 0.004 | 0.004 | 0.004 | 0.005 | 0.004 |
| $CeO_2$ | 0.000 | 0.001 | 0.000 | 0.000 | 0.000 | 0.000 | 0.000 | 0.000 | 0.000 |
| NiO | 0.000 | 0.000 | 0.000 | 0.000 | 0.014 | 0.015 | 0.015 | 0.016 | 0.015 |
| $Co_3O_4$ | 0.000 | 0.000 | 0.000 | 0.003 | 0.002 | 0.002 | 0.002 | 0.002 | 0.002 |
| $Cr_2O_3$ | 0.000 | 0.000 | 0.000 | 0.000 | 0.026 | 0.027 | 0.027 | 0.027 | 0.026 |
| CuO | 0.410 | 0.000 | 0.000 | 0.338 | 0.224 | 0.195 | 0.213 | 0.185 | 0.231 |
| $HfO_2$ | 0.000 | 0.000 | 0.000 | 0.000 | 0.000 | 0.000 | 0.000 | 0.000 | 0.000 |
| $MnO_2$ | 0.000 | 1.030 | 1.031 | 0.001 | 0.000 | 0.000 | 0.000 | 0.001 | 0.000 |
| $As_2O_3$ | 0.000 | 0.000 | 0.000 | 0.001 | 0.000 | 0.000 | 0.000 | 0.000 | 0.000 |
| $Sb_2O_3$ | 0.000 | 0.000 | 0.000 | 0.000 | 0.000 | 0.000 | 0.000 | 0.000 | 0.000 |
| $V_2O_5$ | 0.000 | 0.000 | 0.000 | 0.000 | 0.000 | 0.000 | 0.000 | 0.000 | 0.000 |

(continued)

| Ex. (mol%) | OR-A-162 | OR-A-163 | OR-A-164 | OR-A-165 | OR-A-166 | OR-A-167 | OR-A-168 | OR-A-169 | OR-A-170 |
|---|---|---|---|---|---|---|---|---|---|
| $SO_3$ | 0.000 | 0.000 | 0.002 | 0.000 | 0.000 | 0.000 | 0.000 | 0.000 | 0.006 |
| Cl | 0.011 | 0.009 | 0.013 | 0.009 | 0.007 | 0.009 | 0.009 | 0.009 | 0.007 |
| F | 0.000 | 0.000 | 0.000 | 0.000 | 0.000 | 0.000 | 0.000 | 0.000 | 0.000 |
| $Nd_2O_3$ | 0.000 | 0.000 | 0.000 | 0.000 | 0.000 | 0.000 | 0.000 | 0.000 | 0.000 |
| $Er_2O_3$ | 0.000 | 0.000 | 0.000 | 0.000 | 0.000 | 0.000 | 0.000 | 0.000 | 0.000 |

Table 30T

| Ex. (mol%) | OR-A-171 | OR-A-172 | OR-A-173 | OR-A-174 | OR-A-175 | OR-A-176 | OR-A-177 | OR-A-178 | OR-A-179 |
|---|---|---|---|---|---|---|---|---|---|
| $SiO_2$ | 60.35 | 59.09 | 59.09 | 59.24 | 58.84 | 58.90 | 59.35 | 58.51 | 58.20 |
| $Al_2O_3$ | 16.50 | 16.38 | 16.40 | 16.33 | 16.50 | 16.51 | 16.27 | 16.30 | 16.50 |
| $B_2O_3$ | 6.09 | 5.92 | 5.97 | 5.95 | 5.98 | 5.97 | 5.91 | 5.92 | 5.89 |
| $P_2O_5$ | 0.00 | 0.00 | 0.00 | 0.00 | 0.00 | 0.00 | 0.00 | 0.00 | 0.00 |
| $Li_2O$ | 10.25 | 9.97 | 9.90 | 9.91 | 10.02 | 9.95 | 9.92 | 9.72 | 9.77 |
| $Na_2O$ | 4.29 | 4.26 | 4.25 | 4.25 | 4.25 | 4.25 | 4.24 | 4.22 | 4.22 |
| $K_2O$ | 0.20 | 0.20 | 0.20 | 0.20 | 0.20 | 0.20 | 0.20 | 0.21 | 0.21 |
| MgO | 0.03 | 0.04 | 0.04 | 0.04 | 0.04 | 0.05 | 0.04 | 0.05 | 0.05 |
| CaO | 2.00 | 3.93 | 3.95 | 3.92 | 4.00 | 3.98 | 3.89 | 3.92 | 3.97 |
| ZnO | 0.00 | 0.00 | 0.00 | 0.00 | 0.00 | 0.00 | 0.00 | 0.00 | 0.00 |
| $TiO_2$ | 0.01 | 0.01 | 0.01 | 0.01 | 0.01 | 0.01 | 0.01 | 0.01 | 0.01 |
| $ZrO_2$ | 0.00 | 0.00 | 0.00 | 0.00 | 0.00 | 0.00 | 0.00 | 0.00 | 0.00 |
| $WO_3$ | 0.00 | 0.00 | 0.00 | 0.00 | 0.00 | 0.00 | 0.00 | 0.00 | 0.00 |
| $SnO_2$ | 0.00 | 0.00 | 0.00 | 0.00 | 0.00 | 0.00 | 0.00 | 0.00 | 0.00 |
| $Fe_2O_3$ | 0.004 | 0.004 | 0.004 | 0.004 | 0.004 | 0.004 | 0.004 | 0.074 | 0.075 |
| $CeO_2$ | 0.000 | 0.000 | 0.000 | 0.000 | 0.000 | 0.000 | 0.000 | 0.000 | 0.000 |
| NiO | 0.015 | 0.029 | 0.029 | 0.000 | 0.000 | 0.000 | 0.000 | 0.000 | 0.000 |
| $Co_3O_4$ | 0.002 | 0.009 | 0.009 | 0.006 | 0.006 | 0.006 | 0.006 | 0.000 | 0.000 |
| $Cr_2O_3$ | 0.027 | 0.000 | 0.000 | 0.000 | 0.000 | 0.000 | 0.000 | 0.000 | 0.000 |
| CuO | 0.219 | 0.132 | 0.129 | 0.132 | 0.130 | 0.160 | 0.155 | 0.000 | 0.000 |
| $HfO_2$ | 0.000 | 0.000 | 0.000 | 0.000 | 0.000 | 0.000 | 0.000 | 0.000 | 0.000 |
| $MnO_2$ | 0.000 | 0.001 | 0.001 | 0.000 | 0.000 | 0.000 | 0.000 | 1.056 | 1.081 |
| $As_2O_3$ | 0.000 | 0.000 | 0.000 | 0.000 | 0.000 | 0.000 | 0.000 | 0.000 | 0.000 |
| $Sb_2O_3$ | 0.000 | 0.000 | 0.000 | 0.000 | 0.000 | 0.000 | 0.000 | 0.000 | 0.000 |
| $V_2O_5$ | 0.000 | 0.000 | 0.000 | 0.000 | 0.000 | 0.000 | 0.000 | 0.000 | 0.000 |
| $SO_3$ | 0.000 | 0.000 | 0.000 | 0.000 | 0.004 | 0.000 | 0.000 | 0.000 | 0.006 |
| Cl | 0.007 | 0.009 | 0.009 | 0.011 | 0.009 | 0.011 | 0.009 | 0.009 | 0.011 |
| F | 0.000 | 0.000 | 0.000 | 0.000 | 0.000 | 0.000 | 0.000 | 0.000 | 0.000 |
| $Nd_2O_3$ | 0.000 | 0.000 | 0.000 | 0.000 | 0.000 | 0.000 | 0.000 | 0.000 | 0.000 |
| $Er_2O_3$ | 0.000 | 0.000 | 0.000 | 0.000 | 0.000 | 0.000 | 0.000 | 0.000 | 0.000 |

Table 30U

| Ex. (mol%) | OR-A-180 | OR-A-181 | OR-A-182 | OR-A-183 | OR-A-184 | OR-A-185 | OR-A-186 | OR-A-187 | OR-A-188 |
|---|---|---|---|---|---|---|---|---|---|
| $SiO_2$ | 58.69 | 58.89 | 58.60 | 58.69 | 57.79 | 57.28 | 57.43 | 57.09 | 57.38 |
| $Al_2O_3$ | 16.22 | 16.37 | 16.48 | 16.37 | 17.33 | 17.18 | 17.16 | 17.37 | 17.30 |
| $B_2O_3$ | 5.96 | 6.02 | 6.05 | 6.08 | 6.04 | 6.31 | 6.21 | 6.13 | 6.17 |
| $P_2O_5$ | 0.00 | 0.00 | 0.00 | 0.00 | 0.00 | 0.00 | 0.00 | 0.00 | 0.00 |
| $Li_2O$ | 10.10 | 10.06 | 10.15 | 10.20 | 9.91 | 10.07 | 9.97 | 10.08 | 10.17 |
| $Na_2O$ | 4.22 | 4.31 | 4.30 | 4.28 | 4.32 | 4.34 | 4.32 | 4.34 | 4.31 |
| $K_2O$ | 0.21 | 0.20 | 0.20 | 0.20 | 0.20 | 0.20 | 0.20 | 0.20 | 0.20 |
| MgO | 0.05 | 0.04 | 0.04 | 0.04 | 0.05 | 0.05 | 0.05 | 0.05 | 0.05 |
| CaO | 3.88 | 3.94 | 3.98 | 3.95 | 4.31 | 4.22 | 4.26 | 4.27 | 4.26 |
| ZnO | 0.00 | 0.00 | 0.00 | 0.00 | 0.00 | 0.00 | 0.00 | 0.00 | 0.00 |
| $TiO_2$ | 0.01 | 0.01 | 0.01 | 0.01 | 0.01 | 0.01 | 0.01 | 0.01 | 0.01 |
| $ZrO_2$ | 0.00 | 0.00 | 0.00 | 0.00 | 0.00 | 0.00 | 0.00 | 0.00 | 0.00 |
| $WO_3$ | 0.00 | 0.00 | 0.00 | 0.00 | 0.00 | 0.00 | 0.00 | 0.00 | 0.00 |
| $SnO_2$ | 0.57 | 0.00 | 0.00 | 0.00 | 0.00 | 0.00 | 0.00 | 0.00 | 0.00 |
| $Fe_2O_3$ | 0.075 | 0.004 | 0.004 | 0.004 | 0.005 | 0.004 | 0.004 | 0.004 | 0.004 |
| $CeO_2$ | 0.000 | 0.000 | 0.000 | 0.000 | 0.000 | 0.000 | 0.000 | 0.000 | 0.000 |
| NiO | 0.000 | 0.029 | 0.030 | 0.028 | 0.000 | 0.000 | 0.000 | 0.000 | 0.000 |
| $Co_3O_4$ | 0.001 | 0.009 | 0.009 | 0.009 | 0.000 | 0.000 | 0.000 | 0.000 | 0.000 |
| $Cr_2O_3$ | 0.000 | 0.000 | 0.000 | 0.000 | 0.015 | 0.015 | 0.010 | 0.010 | 0.005 |
| CuO | 0.001 | 0.113 | 0.120 | 0.119 | 0.001 | 0.321 | 0.370 | 0.420 | 0.135 |
| $HfO_2$ | 0.000 | 0.000 | 0.000 | 0.000 | 0.000 | 0.000 | 0.000 | 0.000 | 0.000 |
| $MnO_2$ | 0.000 | 0.000 | 0.000 | 0.000 | 0.000 | 0.001 | 0.002 | 0.002 | 0.001 |
| $As_2O_3$ | 0.000 | 0.000 | 0.000 | 0.000 | 0.000 | 0.000 | 0.000 | 0.000 | 0.000 |
| $Sb_2O_3$ | 0.000 | 0.000 | 0.000 | 0.000 | 0.000 | 0.000 | 0.000 | 0.000 | 0.000 |
| $V_2O_5$ | 0.000 | 0.000 | 0.000 | 0.000 | 0.000 | 0.000 | 0.000 | 0.000 | 0.000 |
| $SO_3$ | 0.000 | 0.000 | 0.008 | 0.000 | 0.000 | 0.000 | 0.000 | 0.000 | 0.006 |
| Cl | 0.011 | 0.013 | 0.015 | 0.013 | 0.011 | 0.009 | 0.009 | 0.011 | 0.011 |
| F | 0.000 | 0.000 | 0.000 | 0.000 | 0.000 | 0.000 | 0.000 | 0.000 | 0.000 |
| $Nd_2O_3$ | 0.000 | 0.000 | 0.000 | 0.000 | 0.000 | 0.000 | 0.000 | 0.000 | 0.000 |
| $Er_2O_3$ | 0.000 | 0.000 | 0.000 | 0.000 | 0.000 | 0.000 | 0.000 | 0.000 | 0.000 |

Table 30V

| Ex. (mol%) | OR-A-189 | OR-A-190 | OR-A-191 | OR-A-192 | OR-A-193 | OR-A-194 | OR-A-195 | OR-A-196 | OR-A-197 |
|---|---|---|---|---|---|---|---|---|---|
| $SiO_2$ | 58.03 | 58.38 | 58.51 | 57.61 | 59.47 | 59.58 | 59.21 | 59.10 | 61.08 |
| $Al_2O_3$ | 16.91 | 16.78 | 16.62 | 17.18 | 16.37 | 16.35 | 16.41 | 16.46 | 15.56 |
| $B_2O_3$ | 6.14 | 6.05 | 6.18 | 6.16 | 5.81 | 5.65 | 5.93 | 5.93 | 5.79 |
| $P_2O_5$ | 0.00 | 0.00 | 0.00 | 0.00 | 0.00 | 0.00 | 0.00 | 0.00 | 0.00 |
| $Li_2O$ | 10.13 | 10.06 | 10.08 | 10.16 | 9.22 | 8.75 | 9.38 | 8.95 | 9.29 |

(continued)

| Ex. (mol%) | OR-A-189 | OR-A-190 | OR-A-191 | OR-A-192 | OR-A-193 | OR-A-194 | OR-A-195 | OR-A-196 | OR-A-197 |
|---|---|---|---|---|---|---|---|---|---|
| $Na_2O$ | 4.30 | 4.28 | 4.28 | 4.35 | 3.76 | 3.28 | 3.77 | 3.27 | 3.79 |
| $K_2O$ | 0.20 | 0.20 | 0.20 | 0.20 | 0.19 | 0.20 | 0.20 | 0.20 | 0.20 |
| $MgO$ | 0.04 | 0.05 | 0.05 | 0.05 | 0.05 | 0.06 | 0.95 | 1.91 | 0.05 |
| $CaO$ | 4.11 | 4.07 | 3.99 | 4.19 | 4.89 | 5.91 | 3.94 | 3.95 | 4.01 |
| $ZnO$ | 0.00 | 0.00 | 0.00 | 0.00 | 0.00 | 0.00 | 0.00 | 0.00 | 0.00 |
| $TiO_2$ | 0.01 | 0.01 | 0.01 | 0.01 | 0.01 | 0.01 | 0.01 | 0.01 | 0.01 |
| $ZrO_2$ | 0.00 | 0.00 | 0.00 | 0.00 | 0.00 | 0.00 | 0.00 | 0.00 | 0.00 |
| $WO_3$ | 0.00 | 0.00 | 0.00 | 0.00 | 0.00 | 0.00 | 0.00 | 0.00 | 0.00 |
| $SnO_2$ | 0.00 | 0.00 | 0.00 | 0.00 | 0.00 | 0.00 | 0.00 | 0.00 | 0.00 |
| $Fe_2O_3$ | 0.004 | 0.004 | 0.004 | 0.004 | 0.004 | 0.005 | 0.004 | 0.005 | 0.005 |
| $CeO_2$ | 0.000 | 0.000 | 0.000 | 0.000 | 0.000 | 0.000 | 0.000 | 0.000 | 0.000 |
| $NiO$ | 0.000 | 0.004 | 0.000 | 0.000 | 0.016 | 0.015 | 0.016 | 0.017 | 0.016 |
| $Co_3O_4$ | 0.008 | 0.009 | 0.004 | 0.004 | 0.000 | 0.000 | 0.000 | 0.000 | 0.000 |
| $Cr_2O_3$ | 0.019 | 0.039 | 0.019 | 0.039 | 0.030 | 0.029 | 0.028 | 0.028 | 0.029 |
| $CuO$ | 0.090 | 0.053 | 0.045 | 0.028 | 0.162 | 0.164 | 0.157 | 0.162 | 0.160 |
| $HfO_2$ | 0.000 | 0.000 | 0.000 | 0.000 | 0.000 | 0.000 | 0.000 | 0.000 | 0.000 |
| $MnO_2$ | 0.000 | 0.007 | 0.002 | 0.001 | 0.004 | 0.003 | 0.004 | 0.001 | 0.004 |
| $As_2O_3$ | 0.000 | 0.000 | 0.000 | 0.000 | 0.000 | 0.000 | 0.000 | 0.000 | 0.000 |
| $Sb_2O_3$ | 0.000 | 0.000 | 0.000 | 0.000 | 0.000 | 0.000 | 0.000 | 0.000 | 0.000 |
| $V_2O_5$ | 0.000 | 0.000 | 0.000 | 0.000 | 0.000 | 0.000 | 0.000 | 0.000 | 0.000 |
| $SO_3$ | 0.002 | 0.000 | 0.000 | 0.000 | 0.000 | 0.000 | 0.001 | 0.000 | 0.000 |
| $Cl$ | 0.009 | 0.009 | 0.009 | 0.011 | 0.007 | 0.007 | 0.009 | 0.007 | 0.009 |
| $F$ | 0.000 | 0.000 | 0.000 | 0.000 | 0.000 | 0.000 | 0.000 | 0.000 | 0.000 |
| $Nd_2O_3$ | 0.000 | 0.000 | 0.000 | 0.000 | 0.000 | 0.000 | 0.000 | 0.000 | 0.000 |
| $Er_2O_3$ | 0.000 | 0.000 | 0.000 | 0.000 | 0.000 | 0.000 | 0.000 | 0.000 | 0.000 |

Table 30W

| Ex. (mol%) | OR-A-198 | OR-A-199 | OR-A-200 | OR-A-201 | OR-A-202 | OR-A-203 | OR-A-204 | OR-A-205 | OR-A-206 |
|---|---|---|---|---|---|---|---|---|---|
| $SiO_2$ | 61.52 | 59.08 | 59.30 | 59.66 | 58.87 | 61.10 | 61.75 | 58.14 | 58.87 |
| $Al_2O_3$ | 15.16 | 16.42 | 16.47 | 16.33 | 16.67 | 15.45 | 15.23 | 16.87 | 16.53 |
| $B_2O_3$ | 5.98 | 5.95 | 5.73 | 5.77 | 5.85 | 5.89 | 5.57 | 6.08 | 5.91 |
| $P_2O_5$ | 0.00 | 0.00 | 0.00 | 0.00 | 0.00 | 0.00 | 0.00 | 0.00 | 0.02 |
| $Li_2O$ | 8.24 | 9.44 | 8.83 | 9.31 | 8.94 | 9.43 | 8.33 | 9.92 | 9.92 |
| $Na_2O$ | 1.20 | 3.75 | 3.26 | 3.74 | 3.29 | 3.77 | 1.20 | 4.34 | 4.29 |
| $K_2O$ | 0.20 | 0.19 | 0.19 | 0.19 | 0.20 | 0.20 | 0.20 | 0.20 | 0.19 |
| $MgO$ | 0.07 | 0.05 | 0.06 | 0.93 | 1.94 | 0.05 | 0.07 | 0.05 | 0.05 |
| $CaO$ | 7.41 | 4.92 | 5.96 | 3.89 | 4.05 | 3.95 | 7.46 | 4.19 | 3.99 |
| $ZnO$ | 0.00 | 0.00 | 0.00 | 0.00 | 0.00 | 0.00 | 0.00 | 0.00 | 0.00 |

(continued)

| Ex. (mol%) | OR-A-198 | OR-A-199 | OR-A-200 | OR-A-201 | OR-A-202 | OR-A-203 | OR-A-204 | OR-A-205 | OR-A-206 |
|---|---|---|---|---|---|---|---|---|---|
| $TiO_2$ | 0.01 | 0.01 | 0.01 | 0.01 | 0.01 | 0.01 | 0.01 | 0.01 | 0.01 |
| $ZrO_2$ | 0.00 | 0.00 | 0.00 | 0.00 | 0.00 | 0.00 | 0.00 | 0.00 | 0.00 |
| $WO_3$ | 0.00 | 0.00 | 0.00 | 0.00 | 0.00 | 0.00 | 0.00 | 0.00 | 0.00 |
| $SnO_2$ | 0.00 | 0.00 | 0.00 | 0.00 | 0.00 | 0.00 | 0.00 | 0.00 | 0.00 |
| $Fe_2O_3$ | 0.005 | 0.005 | 0.005 | 0.004 | 0.005 | 0.005 | 0.005 | 0.004 | 0.025 |
| $CeO_2$ | 0.000 | 0.000 | 0.000 | 0.000 | 0.000 | 0.000 | 0.000 | 0.000 | 0.000 |
| NiO | 0.016 | 0.031 | 0.030 | 0.032 | 0.033 | 0.034 | 0.030 | 0.029 | 0.030 |
| $Co_3O_4$ | 0.000 | 0.008 | 0.008 | 0.008 | 0.008 | 0.008 | 0.008 | 0.009 | 0.009 |
| $Cr_2O_3$ | 0.028 | 0.000 | 0.000 | 0.000 | 0.000 | 0.000 | 0.000 | 0.000 | 0.000 |
| CuO | 0.160 | 0.122 | 0.132 | 0.116 | 0.124 | 0.117 | 0.128 | 0.146 | 0.124 |
| $HfO_2$ | 0.000 | 0.000 | 0.000 | 0.000 | 0.000 | 0.000 | 0.000 | 0.000 | 0.000 |
| $MnO_2$ | 0.000 | 0.004 | 0.000 | 0.004 | 0.000 | 0.002 | 0.002 | 0.000 | 0.020 |
| $As_2O_3$ | 0.000 | 0.000 | 0.000 | 0.000 | 0.000 | 0.000 | 0.000 | 0.000 | 0.000 |
| $Sb_2O_3$ | 0.000 | 0.000 | 0.000 | 0.000 | 0.000 | 0.000 | 0.000 | 0.000 | 0.000 |
| $V_2O_5$ | 0.000 | 0.000 | 0.000 | 0.000 | 0.000 | 0.000 | 0.000 | 0.000 | 0.000 |
| $SO_3$ | 0.000 | 0.005 | 0.000 | 0.000 | 0.000 | 0.000 | 0.005 | 0.000 | 0.000 |
| Cl | 0.007 | 0.009 | 0.007 | 0.007 | 0.009 | 0.009 | 0.005 | 0.000 | 0.000 |
| F | 0.000 | 0.000 | 0.000 | 0.000 | 0.000 | 0.000 | 0.000 | 0.000 | 0.000 |
| $Nd_2O_3$ | 0.000 | 0.000 | 0.000 | 0.000 | 0.000 | 0.000 | 0.000 | 0.000 | 0.000 |
| $Er_2O_3$ | 0.000 | 0.000 | 0.000 | 0.000 | 0.000 | 0.000 | 0.000 | 0.000 | 0.000 |

Table 30X

| Ex. (mol%) | OR-A-207 | OR-A-208 | OR-A-209 | OR-A-210 | OR-A-211 | OR-A-211 | OR-A-212 | OR-A-213 | OR-A-214 |
|---|---|---|---|---|---|---|---|---|---|
| $SiO_2$ | 58.64 | 58.03 | 58.01 | 59.08 | 59.03 | 59.03 | 58.05 | 59.09 | 62.20 |
| $Al_2O_3$ | 16.67 | 16.82 | 16.91 | 16.49 | 16.44 | 16.44 | 16.96 | 16.53 | 14.80 |
| $B_2O_3$ | 5.97 | 6.11 | 6.09 | 5.87 | 5.90 | 5.90 | 6.03 | 6.09 | 6.05 |
| $P_2O_5$ | 0.02 | 0.00 | 0.00 | 0.03 | 0.02 | 0.02 | 0.00 | 0.00 | 0.00 |
| $Li_2O$ | 9.82 | 10.05 | 10.04 | 9.96 | 9.94 | 9.94 | 9.97 | 11.78 | 8.89 |
| $Na_2O$ | 4.29 | 4.36 | 4.35 | 4.24 | 4.28 | 4.28 | 4.36 | 6.21 | 1.41 |
| $K_2O$ | 0.19 | 0.20 | 0.20 | 0.19 | 0.19 | 0.19 | 0.20 | 0.19 | 0.20 |
| MgO | 0.05 | 0.04 | 0.05 | 0.05 | 0.05 | 0.05 | 0.05 | 0.01 | 0.06 |
| CaO | 4.13 | 4.17 | 4.22 | 3.95 | 4.02 | 4.02 | 4.23 | 0.01 | 6.18 |
| ZnO | 0.00 | 0.00 | 0.00 | 0.00 | 0.00 | 0.00 | 0.00 | 0.00 | 0.00 |
| $TiO_2$ | 0.01 | 0.01 | 0.01 | 0.01 | 0.01 | 0.01 | 0.01 | 0.01 | 0.01 |
| $ZrO_2$ | 0.00 | 0.00 | 0.00 | 0.00 | 0.00 | 0.00 | 0.00 | 0.00 | 0.00 |
| $WO_3$ | 0.00 | 0.00 | 0.00 | 0.00 | 0.00 | 0.00 | 0.00 | 0.00 | 0.00 |
| $SnO_2$ | 0.00 | 0.00 | 0.00 | 0.00 | 0.00 | 0.00 | 0.00 | 0.00 | 0.00 |
| $Fe_2O_3$ | 0.020 | 0.020 | 0.005 | 0.025 | 0.019 | 0.019 | 0.020 | 0.004 | 0.005 |

(continued)

| Ex. (mol%) | OR-A-207 | OR-A-208 | OR-A-209 | OR-A-210 | OR-A-211 | OR-A-211 | OR-A-212 | OR-A-213 | OR-A-214 |
|---|---|---|---|---|---|---|---|---|---|
| $CeO_2$ | 0.000 | 0.000 | 0.000 | 0.000 | 0.000 | 0.000 | 0.000 | 0.000 | 0.000 |
| NiO | 0.034 | 0.030 | 0.018 | 0.018 | 0.017 | 0.017 | 0.017 | 0.019 | 0.016 |
| $Co_3O_4$ | 0.009 | 0.009 | 0.002 | 0.002 | 0.002 | 0.002 | 0.002 | 0.002 | 0.000 |
| $Cr_2O_3$ | 0.000 | 0.000 | 0.027 | 0.026 | 0.026 | 0.026 | 0.029 | 0.026 | 0.029 |
| CuO | 0.141 | 0.136 | 0.061 | 0.038 | 0.045 | 0.045 | 0.079 | 0.028 | 0.157 |
| $HfO_2$ | 0.000 | 0.000 | 0.000 | 0.000 | 0.000 | 0.000 | 0.000 | 0.000 | 0.000 |
| $MnO_2$ | 0.015 | 0.002 | 0.003 | 0.022 | 0.014 | 0.014 | 0.002 | 0.001 | 0.001 |
| $As_2O_3$ | 0.000 | 0.000 | 0.000 | 0.000 | 0.000 | 0.000 | 0.000 | 0.000 | 0.000 |
| $Sb_2O_3$ | 0.000 | 0.000 | 0.000 | 0.000 | 0.000 | 0.000 | 0.000 | 0.000 | 0.000 |
| $V_2O_5$ | 0.000 | 0.000 | 0.000 | 0.000 | 0.000 | 0.000 | 0.000 | 0.000 | 0.000 |
| $SO_3$ | 0.000 | 0.000 | 0.000 | 0.000 | 0.000 | 0.000 | 0.000 | 0.000 | 0.000 |
| Cl | 0.000 | 0.000 | 0.000 | 0.000 | 0.000 | 0.000 | 0.000 | 0.000 | 0.000 |
| F | 0.000 | 0.000 | 0.000 | 0.000 | 0.000 | 0.000 | 0.000 | 0.000 | 0.000 |
| $Nd_2O_3$ | 0.000 | 0.000 | 0.000 | 0.000 | 0.000 | 0.000 | 0.000 | 0.000 | 0.000 |
| $Er_2O_3$ | 0.000 | 0.000 | 0.000 | 0.000 | 0.000 | 0.000 | 0.000 | 0.000 | 0.000 |

Table 30Y

| Ex. (mol%) | OR-A-215 | OR-A-216 | OR-A-217 | OR-A-218 | OR-A-219 | OR-A-220 | OR-A-221 | OR-A-222 | OR-A-223 |
|---|---|---|---|---|---|---|---|---|---|
| $SiO_2$ | 61.74 | 62.49 | 62.52 | 62.48 | 62.06 | 60.17 | 60.04 | 60.22 | 61.06 |
| $Al_2O_3$ | 15.04 | 14.77 | 14.73 | 14.78 | 15.15 | 15.89 | 15.86 | 15.81 | 15.39 |
| $B_2O_3$ | 6.06 | 5.96 | 5.99 | 5.99 | 5.88 | 6.03 | 6.19 | 6.14 | 6.05 |
| $P_2O_5$ | 0.00 | 0.00 | 0.00 | 0.00 | 0.00 | 0.00 | 0.00 | 0.00 | 0.00 |
| $Li_2O$ | 9.03 | 8.90 | 8.91 | 8.96 | 8.90 | 8.81 | 8.93 | 8.96 | 8.94 |
| $Na_2O$ | 1.41 | 1.40 | 1.41 | 1.40 | 1.41 | 1.40 | 1.40 | 1.41 | 1.40 |
| $K_2O$ | 0.20 | 0.20 | 0.20 | 0.20 | 0.20 | 0.20 | 0.20 | 0.20 | 0.20 |
| MgO | 0.99 | 1.94 | 2.92 | 3.90 | 5.06 | 0.07 | 1.00 | 1.98 | 2.88 |
| CaO | 5.25 | 4.10 | 3.08 | 2.06 | 1.07 | 7.19 | 6.12 | 5.02 | 3.84 |
| ZnO | 0.00 | 0.00 | 0.00 | 0.00 | 0.00 | 0.00 | 0.00 | 0.00 | 0.00 |
| $TiO_2$ | 0.01 | 0.01 | 0.01 | 0.01 | 0.01 | 0.01 | 0.01 | 0.01 | 0.01 |
| $ZrO_2$ | 0.00 | 0.00 | 0.00 | 0.00 | 0.00 | 0.00 | 0.00 | 0.00 | 0.00 |
| $WO_3$ | 0.00 | 0.00 | 0.00 | 0.00 | 0.00 | 0.00 | 0.00 | 0.00 | 0.00 |
| $SnO_2$ | 0.00 | 0.00 | 0.00 | 0.00 | 0.00 | 0.00 | 0.00 | 0.00 | 0.00 |
| $Fe_2O_3$ | 0.005 | 0.005 | 0.005 | 0.005 | 0.005 | 0.006 | 0.005 | 0.005 | 0.005 |
| $CeO_2$ | 0.000 | 0.000 | 0.000 | 0.000 | 0.000 | 0.000 | 0.000 | 0.000 | 0.000 |
| NiO | 0.015 | 0.017 | 0.018 | 0.021 | 0.018 | 0.017 | 0.018 | 0.018 | 0.017 |
| $Co_3O_4$ | 0.000 | 0.000 | 0.000 | 0.000 | 0.000 | 0.000 | 0.000 | 0.000 | 0.000 |
| $Cr_2O_3$ | 0.030 | 0.028 | 0.029 | 0.028 | 0.029 | 0.029 | 0.029 | 0.029 | 0.027 |
| CuO | 0.221 | 0.181 | 0.172 | 0.181 | 0.197 | 0.193 | 0.196 | 0.199 | 0.191 |

(continued)

| Ex. (mol%) | OR-A-215 | OR-A-216 | OR-A-217 | OR-A-218 | OR-A-219 | OR-A-220 | OR-A-221 | OR-A-222 | OR-A-223 |
|---|---|---|---|---|---|---|---|---|---|
| $HfO_2$ | 0.000 | 0.000 | 0.000 | 0.000 | 0.000 | 0.000 | 0.000 | 0.000 | 0.000 |
| $MnO_2$ | 0.001 | 0.001 | 0.000 | 0.000 | 0.001 | 0.001 | 0.001 | 0.002 | 0.001 |
| $As_2O_3$ | 0.000 | 0.000 | 0.000 | 0.000 | 0.000 | 0.000 | 0.000 | 0.000 | 0.000 |
| $Sb_2O_3$ | 0.000 | 0.000 | 0.000 | 0.000 | 0.000 | 0.000 | 0.000 | 0.000 | 0.000 |
| $V_2O_5$ | 0.000 | 0.000 | 0.000 | 0.000 | 0.000 | 0.000 | 0.000 | 0.000 | 0.000 |
| $SO_3$ | 0.000 | 0.000 | 0.000 | 0.000 | 0.000 | 0.000 | 0.000 | 0.000 | 0.000 |
| Cl | 0.000 | 0.000 | 0.000 | 0.000 | 0.000 | 0.000 | 0.000 | 0.000 | 0.000 |
| F | 0.000 | 0.000 | 0.000 | 0.000 | 0.000 | 0.000 | 0.000 | 0.000 | 0.000 |
| $Nd_2O_3$ | 0.000 | 0.000 | 0.000 | 0.000 | 0.000 | 0.000 | 0.000 | 0.000 | 0.000 |
| $Er_2O_3$ | 0.000 | 0.000 | 0.000 | 0.000 | 0.000 | 0.000 | 0.000 | 0.000 | 0.000 |

Table 30Z

| Ex. (mol%) | OR-A-224 | OR-A-225 | OR-A-226 | OR-A-227 | OR-A-228 | OR-A-229 | OR-A-230 | OR-A-231 | OR-A-232 |
|---|---|---|---|---|---|---|---|---|---|
| $SiO_2$ | 60.16 | 60.87 | 58.66 | 59.73 | 61.24 | 61.20 | 61.14 | 59.00 | 59.98 |
| $Al_2O_3$ | 15.99 | 15.63 | 17.75 | 16.64 | 15.39 | 15.42 | 15.41 | 17.77 | 16.87 |
| $B_2O_3$ | 5.99 | 5.96 | 6.06 | 6.05 | 5.95 | 5.90 | 5.91 | 5.86 | 6.19 |
| $P_2O_5$ | 0.00 | 0.00 | 0.00 | 0.00 | 0.00 | 0.00 | 0.00 | 0.00 | 0.00 |
| $Li_2O$ | 8.89 | 8.88 | 10.62 | 10.31 | 9.93 | 9.95 | 9.96 | 10.51 | 9.96 |
| $Na_2O$ | 1.43 | 1.42 | 1.58 | 1.54 | 1.50 | 1.50 | 1.49 | 1.60 | 1.51 |
| $K_2O$ | 0.20 | 0.20 | 0.20 | 0.19 | 0.20 | 0.20 | 0.20 | 0.20 | 0.20 |
| MgO | 4.06 | 4.91 | 4.28 | 4.32 | 4.24 | 3.08 | 1.92 | 4.28 | 4.31 |
| CaO | 2.99 | 1.86 | 0.61 | 0.97 | 1.32 | 2.53 | 3.74 | 0.62 | 0.97 |
| ZnO | 0.00 | 0.00 | 0.00 | 0.00 | 0.00 | 0.00 | 0.00 | 0.00 | 0.00 |
| $TiO_2$ | 0.01 | 0.01 | 0.01 | 0.01 | 0.01 | 0.01 | 0.01 | 0.01 | 0.01 |
| $ZrO_2$ | 0.00 | 0.00 | 0.00 | 0.00 | 0.00 | 0.00 | 0.00 | 0.00 | 0.00 |
| $WO_3$ | 0.00 | 0.00 | 0.00 | 0.00 | 0.00 | 0.00 | 0.00 | 0.00 | 0.00 |
| $SnO_2$ | 0.00 | 0.00 | 0.00 | 0.00 | 0.00 | 0.00 | 0.00 | 0.00 | 0.00 |
| $Fe_2O_3$ | 0.005 | 0.005 | 0.004 | 0.004 | 0.005 | 0.004 | 0.005 | 0.004 | 0.004 |
| $CeO_2$ | 0.000 | 0.000 | 0.000 | 0.000 | 0.000 | 0.000 | 0.000 | 0.000 | 0.001 |
| NiO | 0.017 | 0.017 | 0.017 | 0.018 | 0.016 | 0.015 | 0.016 | 0.033 | 0.000 |
| $Co_3O_4$ | 0.000 | 0.000 | 0.000 | 0.000 | 0.000 | 0.000 | 0.000 | 0.009 | 0.000 |
| $Cr_2O_3$ | 0.029 | 0.028 | 0.028 | 0.027 | 0.028 | 0.027 | 0.027 | 0.000 | 0.000 |
| CuO | 0.230 | 0.212 | 0.187 | 0.175 | 0.175 | 0.176 | 0.169 | 0.123 | 0.000 |
| $HfO_2$ | 0.000 | 0.000 | 0.000 | 0.000 | 0.000 | 0.000 | 0.000 | 0.000 | 0.000 |
| $MnO_2$ | 0.003 | 0.000 | 0.001 | 0.001 | 0.001 | 0.001 | 0.001 | 0.001 | 0.000 |
| $As_2O_3$ | 0.000 | 0.000 | 0.000 | 0.000 | 0.000 | 0.000 | 0.000 | 0.000 | 0.000 |
| $Sb_2O_3$ | 0.000 | 0.000 | 0.000 | 0.000 | 0.000 | 0.000 | 0.000 | 0.000 | 0.000 |
| $V_2O_5$ | 0.000 | 0.000 | 0.000 | 0.000 | 0.000 | 0.000 | 0.000 | 0.000 | 0.000 |

(continued)

| Ex. (mol%) | OR-A-224 | OR-A-225 | OR-A-226 | OR-A-227 | OR-A-228 | OR-A-229 | OR-A-230 | OR-A-231 | OR-A-232 |
|---|---|---|---|---|---|---|---|---|---|
| $SO_3$ | 0.000 | 0.000 | 0.000 | 0.000 | 0.000 | 0.000 | 0.000 | 0.000 | 0.000 |
| Cl | 0.000 | 0.000 | 0.000 | 0.000 | 0.000 | 0.000 | 0.000 | 0.000 | 0.007 |
| F | 0.000 | 0.000 | 0.000 | 0.000 | 0.000 | 0.000 | 0.000 | 0.000 | 0.000 |
| $Nd_2O_3$ | 0.000 | 0.000 | 0.000 | 0.000 | 0.000 | 0.000 | 0.000 | 0.000 | 0.000 |
| $Er_2O_3$ | 0.000 | 0.000 | 0.000 | 0.000 | 0.000 | 0.000 | 0.000 | 0.000 | 0.000 |

Table 30AA

| Ex. (mol%) | OR-A-233 | OR-A-234 | OR-A-235 | OR-A-236 | OR-A-237 | OR-A-238 | OR-A-239 | OR-A-240 | OR-A-241 |
|---|---|---|---|---|---|---|---|---|---|
| $SiO_2$ | 61.48 | 60.82 | 61.59 | 60.38 | 59.54 | 58.78 | 58.67 | 58.87 | 58.93 |
| $Al_2O_3$ | 15.58 | 15.90 | 15.28 | 15.51 | 15.98 | 16.53 | 16.55 | 16.50 | 16.41 |
| $B_2O_3$ | 6.03 | 5.95 | 6.01 | 5.93 | 5.90 | 6.31 | 6.19 | 6.27 | 6.25 |
| $P_2O_5$ | 0.00 | 0.00 | 0.00 | 0.00 | 0.00 | 0.00 | 0.00 | 0.00 | 0.00 |
| $Li_2O$ | 9.69 | 9.52 | 9.28 | 8.65 | 8.69 | 9.66 | 9.62 | 9.59 | 9.69 |
| $Na_2O$ | 1.48 | 1.44 | 1.38 | 1.41 | 1.52 | 1.45 | 1.46 | 1.46 | 1.45 |
| $K_2O$ | 0.20 | 0.20 | 0.20 | 0.20 | 0.19 | 0.19 | 0.19 | 0.19 | 0.19 |
| MgO | 4.22 | 3.17 | 1.89 | 2.88 | 5.05 | 2.18 | 2.16 | 2.17 | 2.16 |
| CaO | 1.31 | 2.86 | 4.16 | 3.83 | 1.88 | 4.75 | 4.78 | 4.78 | 4.78 |
| ZnO | 0.00 | 0.00 | 0.00 | 0.00 | 0.00 | 0.00 | 0.00 | 0.00 | 0.00 |
| $TiO_2$ | 0.01 | 0.01 | 0.01 | 0.99 | 1.02 | 0.01 | 0.01 | 0.01 | 0.01 |
| $ZrO_2$ | 0.00 | 0.00 | 0.00 | 0.00 | 0.00 | 0.00 | 0.00 | 0.00 | 0.00 |
| $WO_3$ | 0.00 | 0.00 | 0.00 | 0.00 | 0.00 | 0.00 | 0.00 | 0.00 | 0.00 |
| $SnO_2$ | 0.00 | 0.00 | 0.00 | 0.00 | 0.00 | 0.00 | 0.00 | 0.00 | 0.00 |
| $Fe_2O_3$ | 0.004 | 0.004 | 0.004 | 0.003 | 0.003 | 0.005 | 0.005 | 0.006 | 0.005 |
| $CeO_2$ | 0.004 | 0.001 | 0.000 | 0.209 | 0.213 | 0.000 | 0.000 | 0.000 | 0.000 |
| NiO | 0.000 | 0.008 | 0.016 | 0.000 | 0.000 | 0.009 | 0.039 | 0.040 | 0.000 |
| $Co_3O_4$ | 0.000 | 0.000 | 0.000 | 0.000 | 0.000 | 0.001 | 0.004 | 0.004 | 0.004 |
| $Cr_2O_3$ | 0.000 | 0.013 | 0.026 | 0.001 | 0.001 | 0.014 | 0.036 | 0.024 | 0.035 |
| CuO | 0.000 | 0.098 | 0.164 | 0.001 | 0.000 | 0.106 | 0.281 | 0.101 | 0.091 |
| $HfO_2$ | 0.000 | 0.000 | 0.000 | 0.000 | 0.000 | 0.000 | 0.000 | 0.000 | 0.000 |
| $MnO_2$ | 0.000 | 0.000 | 0.000 | 0.000 | 0.000 | 0.000 | 0.000 | 0.001 | 0.003 |
| $As_2O_3$ | 0.000 | 0.000 | 0.000 | 0.000 | 0.000 | 0.000 | 0.000 | 0.000 | 0.000 |
| $Sb_2O_3$ | 0.000 | 0.000 | 0.000 | 0.000 | 0.000 | 0.000 | 0.000 | 0.000 | 0.000 |
| $V_2O_5$ | 0.000 | 0.000 | 0.000 | 0.000 | 0.000 | 0.000 | 0.000 | 0.000 | 0.000 |
| $SO_3$ | 0.000 | 0.000 | 0.000 | 0.000 | 0.000 | 0.000 | 0.000 | 0.000 | 0.000 |
| Cl | 0.005 | 0.007 | 0.005 | 0.009 | 0.007 | 0.000 | 0.000 | 0.000 | 0.000 |
| F | 0.000 | 0.000 | 0.000 | 0.000 | 0.000 | 0.000 | 0.000 | 0.000 | 0.000 |
| $Nd_2O_3$ | 0.000 | 0.000 | 0.000 | 0.000 | 0.000 | 0.000 | 0.000 | 0.000 | 0.000 |
| $Er_2O_3$ | 0.000 | 0.000 | 0.000 | 0.000 | 0.000 | 0.000 | 0.000 | 0.000 | 0.000 |

Table 30BB

| Ex.<br>(mol%) | OR-<br>A-242 | OR-<br>A-243 | OR-<br>A-244 | OR-<br>A-245 | OR-<br>A-246 | OR-<br>A-247 | OR-<br>A-248 | OR-<br>A-249 | OR-<br>A-250 |
|---|---|---|---|---|---|---|---|---|---|
| $SiO_2$ | 58.94 | 59.48 | 58.54 | 58.48 | 58.76 | 60.53 | 60.31 | 61.47 | 60.28 |
| $Al_2O_3$ | 16.76 | 16.21 | 16.48 | 16.62 | 16.48 | 15.05 | 15.08 | 14.54 | 15.16 |
| $B_2O_3$ | 5.90 | 6.16 | 6.32 | 6.27 | 6.24 | 5.91 | 6.02 | 5.92 | 5.81 |
| $P_2O_5$ | 0.00 | 0.00 | 0.00 | 0.00 | 0.00 | 0.00 | 0.00 | 0.00 | 0.00 |
| $Li_2O$ | 9.32 | 9.56 | 9.85 | 9.80 | 9.71 | 10.04 | 10.08 | 9.92 | 9.95 |
| $Na_2O$ | 1.47 | 1.47 | 1.45 | 1.45 | 1.45 | 1.84 | 1.86 | 1.83 | 1.86 |
| $K_2O$ | 0.19 | 0.20 | 0.19 | 0.19 | 0.19 | 0.20 | 0.20 | 0.19 | 0.20 |
| $MgO$ | 2.20 | 2.07 | 2.17 | 2.18 | 2.16 | 2.03 | 2.02 | 1.92 | 2.02 |
| $CaO$ | 4.89 | 4.69 | 4.73 | 4.76 | 4.74 | 2.09 | 2.11 | 1.99 | 2.13 |
| $ZnO$ | 0.00 | 0.00 | 0.00 | 0.00 | 0.00 | 1.07 | 1.07 | 1.01 | 1.10 |
| $TiO_2$ | 0.01 | 0.01 | 0.01 | 0.01 | 0.01 | 1.01 | 1.02 | 0.99 | 1.02 |
| $ZrO_2$ | 0.00 | 0.00 | 0.00 | 0.00 | 0.00 | 0.00 | 0.00 | 0.00 | 0.00 |
| $WO_3$ | 0.00 | 0.00 | 0.00 | 0.00 | 0.00 | 0.00 | 0.00 | 0.00 | 0.00 |
| $SnO_2$ | 0.00 | 0.00 | 0.00 | 0.00 | 0.00 | 0.00 | 0.00 | 0.00 | 0.00 |
| $Fe_2O_3$ | 0.005 | 0.005 | 0.005 | 0.005 | 0.005 | 0.003 | 0.004 | 0.004 | 0.002 |
| $CeO_2$ | 0.000 | 0.000 | 0.000 | 0.000 | 0.000 | 0.216 | 0.218 | 0.201 | 0.424 |
| $NiO$ | 0.000 | 0.036 | 0.022 | 0.021 | 0.019 | 0.000 | 0.000 | 0.000 | 0.000 |
| $Co_3O_4$ | 0.001 | 0.001 | 0.003 | 0.003 | 0.002 | 0.000 | 0.000 | 0.000 | 0.000 |
| $Cr_2O_3$ | 0.025 | 0.034 | 0.029 | 0.030 | 0.031 | 0.000 | 0.000 | 0.000 | 0.000 |
| $CuO$ | 0.279 | 0.101 | 0.212 | 0.193 | 0.187 | 0.000 | 0.000 | 0.000 | 0.000 |
| $HfO_2$ | 0.000 | 0.000 | 0.000 | 0.000 | 0.000 | 0.000 | 0.000 | 0.000 | 0.000 |
| $MnO_2$ | 0.004 | 0.001 | 0.000 | 0.000 | 0.001 | 0.000 | 0.000 | 0.000 | 0.000 |
| $As_2O_3$ | 0.000 | 0.000 | 0.000 | 0.000 | 0.000 | 0.000 | 0.000 | 0.000 | 0.000 |
| $Sb_2O_3$ | 0.000 | 0.000 | 0.000 | 0.000 | 0.000 | 0.000 | 0.000 | 0.000 | 0.000 |
| $V_2O_5$ | 0.000 | 0.000 | 0.000 | 0.000 | 0.000 | 0.000 | 0.000 | 0.000 | 0.000 |
| $SO_3$ | 0.000 | 0.000 | 0.000 | 0.000 | 0.000 | 0.000 | 0.000 | 0.000 | 0.014 |
| $Cl$ | 0.000 | 0.000 | 0.000 | 0.000 | 0.000 | 0.011 | 0.009 | 0.007 | 0.007 |
| $F$ | 0.000 | 0.000 | 0.000 | 0.000 | 0.000 | 0.000 | 0.000 | 0.000 | 0.000 |
| $Nd_2O_3$ | 0.000 | 0.000 | 0.000 | 0.000 | 0.000 | 0.000 | 0.000 | 0.000 | 0.000 |
| $Er_2O_3$ | 0.000 | 0.000 | 0.000 | 0.000 | 0.000 | 0.000 | 0.000 | 0.000 | 0.000 |

Table 30CC

| Ex.<br>(mol%) | OR-<br>A-251 | OR-<br>A-252 | OR-<br>A-253 | OR-<br>A-254 | OR-<br>A-255 | OR-<br>A-256 | OR-<br>A-257 | OR-<br>A-258 | OR-<br>A-259 |
|---|---|---|---|---|---|---|---|---|---|
| $SiO_2$ | 61.13 | 60.99 | 60.54 | 60.74 | 59.21 | 59.45 | 61.01 | 61.36 | 60.91 |
| $Al_2O_3$ | 14.65 | 14.71 | 15.08 | 14.92 | 15.59 | 15.65 | 14.78 | 15.14 | 14.73 |
| $B_2O_3$ | 5.90 | 5.86 | 5.89 | 5.89 | 6.10 | 6.05 | 5.95 | 5.25 | 5.98 |
| $P_2O_5$ | 0.00 | 0.05 | 0.00 | 0.00 | 0.00 | 0.00 | 0.00 | 0.00 | 0.00 |
| $Li_2O$ | 10.00 | 9.98 | 9.98 | 9.98 | 10.15 | 9.94 | 9.81 | 9.59 | 9.90 |

(continued)

| Ex. (mol%) | OR-A-251 | OR-A-252 | OR-A-253 | OR-A-254 | OR-A-255 | OR-A-256 | OR-A-257 | OR-A-258 | OR-A-259 |
|---|---|---|---|---|---|---|---|---|---|
| $Na_2O$ | 1.83 | 1.84 | 1.87 | 1.86 | 1.81 | 1.83 | 1.76 | 1.80 | 1.81 |
| $K_2O$ | 0.19 | 0.19 | 0.19 | 0.19 | 0.18 | 0.18 | 0.18 | 0.18 | 0.19 |
| MgO | 1.94 | 1.96 | 2.01 | 1.49 | 2.23 | 2.24 | 2.09 | 2.01 | 2.01 |
| CaO | 2.03 | 2.05 | 2.11 | 2.09 | 2.29 | 2.26 | 2.14 | 2.12 | 2.09 |
| ZnO | 1.02 | 1.03 | 1.07 | 1.59 | 1.19 | 1.11 | 1.07 | 1.07 | 1.05 |
| $TiO_2$ | 0.99 | 1.00 | 1.02 | 1.01 | 1.03 | 1.04 | 0.99 | 1.03 | 1.00 |
| $ZrO_2$ | 0.00 | 0.00 | 0.00 | 0.00 | 0.00 | 0.00 | 0.00 | 0.00 | 0.00 |
| $WO_3$ | 0.00 | 0.00 | 0.00 | 0.00 | 0.00 | 0.00 | 0.00 | 0.00 | 0.00 |
| $SnO_2$ | 0.10 | 0.10 | 0.00 | 0.00 | 0.00 | 0.00 | 0.00 | 0.00 | 0.10 |
| $Fe_2O_3$ | 0.004 | 0.004 | 0.004 | 0.003 | 0.004 | 0.004 | 0.004 | 0.002 | 0.003 |
| $CeO_2$ | 0.206 | 0.208 | 0.214 | 0.208 | 0.219 | 0.218 | 0.209 | 0.427 | 0.210 |
| NiO | 0.000 | 0.000 | 0.000 | 0.000 | 0.000 | 0.000 | 0.000 | 0.000 | 0.000 |
| $Co_3O_4$ | 0.000 | 0.000 | 0.000 | 0.000 | 0.000 | 0.000 | 0.000 | 0.000 | 0.000 |
| $Cr_2O_3$ | 0.000 | 0.000 | 0.000 | 0.000 | 0.000 | 0.000 | 0.000 | 0.000 | 0.000 |
| CuO | 0.000 | 0.000 | 0.000 | 0.000 | 0.000 | 0.000 | 0.000 | 0.000 | 0.000 |
| $HfO_2$ | 0.000 | 0.000 | 0.000 | 0.000 | 0.000 | 0.000 | 0.000 | 0.000 | 0.000 |
| $MnO_2$ | 0.000 | 0.000 | 0.000 | 0.000 | 0.000 | 0.000 | 0.000 | 0.000 | 0.000 |
| $As_2O_3$ | 0.000 | 0.000 | 0.000 | 0.000 | 0.000 | 0.000 | 0.000 | 0.000 | 0.000 |
| $Sb_2O_3$ | 0.000 | 0.000 | 0.021 | 0.000 | 0.000 | 0.000 | 0.000 | 0.000 | 0.000 |
| $V_2O_5$ | 0.000 | 0.000 | 0.000 | 0.000 | 0.000 | 0.000 | 0.000 | 0.000 | 0.000 |
| $SO_3$ | 0.000 | 0.009 | 0.000 | 0.000 | 0.000 | 0.007 | 0.000 | 0.000 | 0.002 |
| Cl | 0.007 | 0.009 | 0.007 | 0.007 | 0.007 | 0.005 | 0.005 | 0.007 | 0.007 |
| F | 0.000 | 0.000 | 0.000 | 0.000 | 0.000 | 0.000 | 0.000 | 0.000 | 0.000 |
| $Nd_2O_3$ | 0.000 | 0.000 | 0.000 | 0.000 | 0.000 | 0.000 | 0.000 | 0.000 | 0.000 |
| $Er_2O_3$ | 0.000 | 0.000 | 0.000 | 0.000 | 0.000 | 0.000 | 0.000 | 0.000 | 0.000 |

Table 30DD

| Ex. (mol%) | OR-A-260 | OR-A-261 | OR-A-262 | OR-A-263 | OR-A-264 | OR-A-265 | OR-A-266 | OR-A-267 | OR-A-268 |
|---|---|---|---|---|---|---|---|---|---|
| $SiO_2$ | 60.80 | 59.47 | 60.46 | 64.70 | 64.67 | 64.27 | 64.56 | 64.76 | 64.07 |
| $Al_2O_3$ | 14.64 | 15.69 | 15.29 | 12.99 | 13.00 | 12.89 | 13.02 | 12.96 | 12.95 |
| $B_2O_3$ | 5.98 | 6.03 | 5.99 | 5.83 | 5.81 | 5.72 | 5.83 | 5.74 | 5.64 |
| $P_2O_5$ | 0.05 | 0.00 | 0.00 | 0.00 | 0.00 | 0.00 | 0.00 | 0.00 | 0.00 |
| $Li_2O$ | 9.99 | 9.95 | 9.67 | 11.98 | 12.02 | 11.71 | 12.07 | 10.02 | 9.96 |
| $Na_2O$ | 1.74 | 1.80 | 1.82 | 2.81 | 2.80 | 2.73 | 2.82 | 1.84 | 1.82 |
| $K_2O$ | 0.17 | 0.18 | 0.18 | 0.19 | 0.20 | 0.19 | 0.20 | 0.20 | 0.20 |
| MgO | 2.05 | 2.21 | 1.56 | 0.01 | 0.01 | 0.01 | 0.01 | 0.03 | 0.03 |
| CaO | 2.13 | 2.23 | 2.16 | 0.01 | 0.01 | 0.01 | 0.01 | 2.93 | 2.98 |
| ZnO | 1.13 | 1.15 | 1.62 | 0.00 | 0.00 | 0.00 | 0.00 | 0.00 | 0.00 |

(continued)

| Ex. (mol%) | OR-A-260 | OR-A-261 | OR-A-262 | OR-A-263 | OR-A-264 | OR-A-265 | OR-A-266 | OR-A-267 | OR-A-268 |
|---|---|---|---|---|---|---|---|---|---|
| $TiO_2$ | 0.99 | 1.04 | 1.03 | 0.98 | 0.98 | 0.97 | 0.98 | 0.98 | 0.98 |
| $ZrO_2$ | 0.00 | 0.00 | 0.00 | 0.00 | 0.00 | 0.00 | 0.00 | 0.00 | 0.00 |
| $WO_3$ | 0.00 | 0.00 | 0.00 | 0.00 | 0.00 | 0.00 | 0.00 | 0.00 | 0.00 |
| $SnO_2$ | 0.10 | 0.00 | 0.00 | 0.05 | 0.05 | 0.04 | 0.05 | 0.05 | 0.05 |
| $Fe_2O_3$ | 0.003 | 0.004 | 0.003 | 0.002 | 0.002 | 0.002 | 0.002 | 0.003 | 0.003 |
| $CeO_2$ | 0.212 | 0.223 | 0.219 | 0.201 | 0.205 | 0.200 | 0.207 | 0.200 | 0.203 |
| NiO | 0.000 | 0.000 | 0.000 | 0.000 | 0.000 | 0.000 | 0.000 | 0.000 | 0.000 |
| $Co_3O_4$ | 0.000 | 0.000 | 0.000 | 0.000 | 0.000 | 0.000 | 0.000 | 0.000 | 0.000 |
| $Cr_2O_3$ | 0.000 | 0.000 | 0.000 | 0.000 | 0.000 | 0.000 | 0.000 | 0.000 | 0.000 |
| CuO | 0.000 | 0.000 | 0.000 | 0.000 | 0.000 | 0.000 | 0.000 | 0.000 | 0.000 |
| $HfO_2$ | 0.000 | 0.000 | 0.000 | 0.000 | 0.000 | 0.000 | 0.000 | 0.000 | 0.000 |
| $MnO_2$ | 0.000 | 0.000 | 0.000 | 0.000 | 0.000 | 0.000 | 0.000 | 0.000 | 0.000 |
| $As_2O_3$ | 0.000 | 0.000 | 0.000 | 0.000 | 0.000 | 0.000 | 0.000 | 0.000 | 0.000 |
| $Sb_2O_3$ | 0.000 | 0.021 | 0.000 | 0.000 | 0.000 | 0.000 | 0.000 | 0.000 | 0.000 |
| $V_2O_5$ | 0.000 | 0.000 | 0.000 | 0.000 | 0.000 | 0.000 | 0.000 | 0.000 | 0.000 |
| $SO_3$ | 0.000 | 0.000 | 0.000 | 0.000 | 0.000 | 0.000 | 0.000 | 0.000 | 0.003 |
| Cl | 0.007 | 0.007 | 0.005 | 0.012 | 0.014 | 1.019 | 0.016 | 0.011 | 0.012 |
| F | 0.000 | 0.000 | 0.000 | 0.231 | 0.231 | 0.230 | 0.231 | 0.266 | 1.093 |
| $Nd_2O_3$ | 0.000 | 0.000 | 0.000 | 0.000 | 0.000 | 0.000 | 0.000 | 0.000 | 0.000 |
| $Er_2O_3$ | 0.000 | 0.000 | 0.000 | 0.000 | 0.000 | 0.000 | 0.000 | 0.000 | 0.000 |

Table 30EE

| Ex. (mol%) | OR-A-269 | OR-A-270 | OR-A-271 | OR-A-272 | OR-A-273 | OR-A-274 | OR-A-275 | OR-A-276 | OR-A-277 |
|---|---|---|---|---|---|---|---|---|---|
| $SiO_2$ | 63.99 | 63.75 | 63.77 | 61.32 | 60.98 | 63.28 | 62.41 | 63.31 | 62.35 |
| $Al_2O_3$ | 12.94 | 12.77 | 12.78 | 15.29 | 15.41 | 14.67 | 14.80 | 14.64 | 15.09 |
| $B_2O_3$ | 5.78 | 5.72 | 5.55 | 5.84 | 6.08 | 5.87 | 5.93 | 5.67 | 5.93 |
| $P_2O_5$ | 0.00 | 0.00 | 0.00 | 0.00 | 0.00 | 0.00 | 0.00 | 0.00 | 0.00 |
| $Li_2O$ | 9.95 | 9.65 | 9.67 | 9.35 | 9.57 | 8.88 | 8.87 | 8.78 | 8.95 |
| $Na_2O$ | 1.82 | 1.78 | 1.78 | 1.47 | 1.42 | 1.35 | 1.36 | 1.36 | 1.36 |
| $K_2O$ | 0.20 | 0.19 | 0.19 | 0.20 | 0.20 | 0.00 | 0.00 | 0.00 | 0.00 |
| MgO | 0.03 | 0.03 | 0.03 | 1.99 | 1.96 | 2.78 | 2.80 | 2.75 | 2.89 |
| CaO | 2.96 | 2.92 | 2.93 | 4.23 | 4.22 | 1.91 | 1.94 | 1.91 | 2.00 |
| ZnO | 0.00 | 0.00 | 0.00 | 0.00 | 0.00 | 0.95 | 0.98 | 0.97 | 1.01 |
| $TiO_2$ | 0.98 | 0.97 | 0.96 | 0.05 | 0.01 | 0.01 | 0.59 | 0.29 | 0.01 |
| $ZrO_2$ | 0.00 | 0.00 | 0.00 | 0.00 | 0.00 | 0.00 | 0.00 | 0.00 | 0.00 |
| $WO_3$ | 0.00 | 0.00 | 0.00 | 0.00 | 0.00 | 0.00 | 0.00 | 0.00 | 0.00 |
| $SnO_2$ | 0.05 | 0.04 | 0.04 | 0.00 | 0.00 | 0.00 | 0.00 | 0.00 | 0.10 |
| $Fe_2O_3$ | 0.003 | 0.003 | 0.003 | 0.005 | 0.005 | 0.002 | 0.002 | 0.002 | 0.002 |

(continued)

| Ex. (mol%) | OR-A-269 | OR-A-270 | OR-A-271 | OR-A-272 | OR-A-273 | OR-A-274 | OR-A-275 | OR-A-276 | OR-A-277 |
|---|---|---|---|---|---|---|---|---|---|
| $CeO_2$ | 0.206 | 0.195 | 0.198 | 0.000 | 0.000 | 0.299 | 0.303 | 0.305 | 0.308 |
| NiO | 0.000 | 0.000 | 0.000 | 0.000 | 0.022 | 0.000 | 0.000 | 0.000 | 0.000 |
| $Co_3O_4$ | 0.000 | 0.000 | 0.000 | 0.002 | 0.009 | 0.000 | 0.000 | 0.000 | 0.000 |
| $Cr_2O_3$ | 0.000 | 0.000 | 0.000 | 0.000 | 0.000 | 0.000 | 0.000 | 0.000 | 0.000 |
| CuO | 0.000 | 0.000 | 0.000 | 0.264 | 0.113 | 0.000 | 0.000 | 0.000 | 0.000 |
| $HfO_2$ | 0.000 | 0.000 | 0.000 | 0.000 | 0.000 | 0.000 | 0.000 | 0.000 | 0.000 |
| $MnO_2$ | 0.000 | 0.000 | 0.000 | 0.001 | 0.000 | 0.000 | 0.000 | 0.000 | 0.000 |
| $As_2O_3$ | 0.000 | 0.000 | 0.000 | 0.000 | 0.000 | 0.000 | 0.000 | 0.000 | 0.000 |
| $Sb_2O_3$ | 0.000 | 0.000 | 0.000 | 0.000 | 0.000 | 0.000 | 0.000 | 0.000 | 0.000 |
| $V_2O_5$ | 0.000 | 0.000 | 0.000 | 0.000 | 0.000 | 0.000 | 0.000 | 0.000 | 0.000 |
| $SO_3$ | 0.000 | 0.000 | 0.000 | 0.000 | 0.000 | 0.000 | 0.001 | 0.000 | 0.000 |
| Cl | 0.011 | 1.011 | 1.064 | 0.000 | 0.009 | 0.004 | 0.004 | 0.005 | 0.005 |
| F | 1.094 | 0.989 | 1.022 | 0.000 | 0.000 | 0.000 | 0.000 | 0.000 | 0.000 |
| $Nd_2O_3$ | 0.000 | 0.000 | 0.000 | 0.000 | 0.000 | 0.000 | 0.000 | 0.000 | 0.000 |
| $Er_2O_3$ | 0.000 | 0.000 | 0.000 | 0.000 | 0.000 | 0.000 | 0.000 | 0.000 | 0.000 |

Table 30FF

| Ex. (mol%) | ORA-278 | ORA-279 | ORA-280 | ORA-281 | ORA-282 | ORA-283 | ORA-285 | ORA-286 |
|---|---|---|---|---|---|---|---|---|
| $SiO_2$ | 61.95 | 63.09 | 58.67 | 60.98 | 61.10 | 60.60 | 58.94 | 60.54 |
| $Al_2O_3$ | 15.17 | 15.05 | 17.01 | 17.21 | 14.87 | 14.93 | 14.50 | 15.63 |
| $B_2O_3$ | 5.83 | 5.88 | 5.55 | 4.81 | 5.95 | 5.82 | 5.75 | 6.08 |
| $P_2O_5$ | 0.51 | 0.50 | 0.00 | 0.00 | 0.00 | 0.00 | 0.00 | 0.00 |
| $Li_2O$ | 8.90 | 8.97 | 8.83 | 8.11 | 9.96 | 10.04 | 13.39 | 9.65 |
| $Na_2O$ | 1.36 | 1.36 | 1.41 | 1.45 | 1.86 | 1.86 | 1.39 | 1.47 |
| $K_2O$ | 0.00 | 0.00 | 0.19 | 0.20 | 0.20 | 0.19 | 0.19 | 0.20 |
| MgO | 2.92 | 2.87 | 2.22 | 2.19 | 1.98 | 1.99 | 1.79 | 1.96 |
| CaO | 2.00 | 0.96 | 4.90 | 4.90 | 2.06 | 2.07 | 3.99 | 4.38 |
| ZnO | 1.02 | 1.00 | 0.00 | 0.00 | 0.00 | 1.04 | 0.00 | 0.00 |
| $TiO_2$ | 0.01 | 0.01 | 1.08 | 0.01 | 1.01 | 1.02 | 0.01 | 0.01 |
| $ZrO_2$ | 0.00 | 0.00 | 0.00 | 0.00 | 0.00 | 0.00 | 0.00 | 0.00 |
| $WO_3$ | 0.00 | 0.00 | 0.00 | 0.00 | 0.00 | 0.00 | 0.00 | 0.00 |
| $SnO_2$ | 0.00 | 0.00 | 0.00 | 0.00 | 0.57 | 0.00 | 0.00 | 0.00 |
| $Fe_2O_3$ | 0.003 | 0.002 | 0.005 | 0.005 | 0.002 | 0.002 | 0.005 | 0.005 |
| $CeO_2$ | 0.316 | 0.309 | 0.116 | 0.122 | 0.416 | 0.425 | 0.000 | 0.000 |
| NiO | 0.000 | 0.000 | 0.000 | 0.000 | 0.000 | 0.000 | 0.003 | 0.005 |
| $Co_3O_4$ | 0.000 | 0.000 | 0.000 | 0.000 | 0.000 | 0.000 | 0.001 | 0.001 |
| $Cr_2O_3$ | 0.000 | 0.000 | 0.001 | 0.001 | 0.000 | 0.000 | 0.000 | 0.000 |
| CuO | 0.000 | 0.000 | 0.000 | 0.000 | 0.000 | 0.000 | 0.045 | 0.071 |
| $HfO_2$ | 0.000 | 0.000 | 0.000 | 0.000 | 0.000 | 0.000 | 0.000 | 0.000 |

(continued)

| Ex. (mol%) | ORA-278 | ORA-279 | ORA-280 | ORA-281 | ORA-282 | ORA-283 | ORA-285 | ORA-286 |
|---|---|---|---|---|---|---|---|---|
| $MnO_2$ | 0.000 | 0.000 | 0.000 | 0.000 | 0.000 | 0.000 | 0.000 | 0.001 |
| $As_2O_3$ | 0.000 | 0.000 | 0.000 | 0.000 | 0.000 | 0.000 | 0.000 | 0.000 |
| $Sb_2O_3$ | 0.000 | 0.000 | 0.000 | 0.000 | 0.000 | 0.000 | 0.000 | 0.000 |
| $V_2O_5$ | 0.000 | 0.000 | 0.000 | 0.000 | 0.000 | 0.000 | 0.000 | 0.000 |
| $SO_3$ | 0.000 | 0.002 | 0.000 | 0.000 | 0.022 | 0.000 | 0.000 | 0.000 |
| Cl | 0.005 | 0.004 | 0.007 | 0.007 | 0.005 | 0.007 | 0.000 | 0.000 |
| F | 0.000 | 0.000 | 0.000 | 0.000 | 0.000 | 0.000 | 0.000 | 0.000 |
| $Nd_2O_3$ | 0.000 | 0.000 | 0.000 | 0.000 | 0.000 | 0.000 | 0.000 | 0.000 |
| $Er_2O_3$ | 0.000 | 0.000 | 0.000 | 0.000 | 0.000 | 0.000 | 0.000 | 0.000 |

Table 30GG

| Ex. (mol%) | OR-A-287 | OR-A-288 | OR-A-289 | **ORA**-290 | OR-A-291 | **ORA**-292 | **ORA**-293 | OR-A-294 | OR-A-295 |
|---|---|---|---|---|---|---|---|---|---|
| $SiO_2$ | 60.42 | 61.34 | 59.26 | 59.32 | 59.30 | 59.57 | 59.31 | 59.28 | 58.55 |
| $Al_2O_3$ | 15.76 | 15.32 | 16.06 | 16.19 | 16.14 | 16.03 | 16.28 | 16.36 | 16.45 |
| $B_2O_3$ | 6.15 | 5.94 | 6.27 | 6.18 | 6.25 | 6.16 | 6.03 | 6.10 | 6.20 |
| $P_2O_5$ | 0.00 | 0.00 | 0.00 | 0.00 | 0.00 | 0.00 | 0.00 | 0.00 | 0.00 |
| $Li_2O$ | 9.52 | 9.39 | 9.69 | 9.52 | 9.61 | 9.59 | 9.45 | 9.36 | 9.72 |
| $Na_2O$ | 1.46 | 1.46 | 1.48 | 1.47 | 1.47 | 1.47 | 1.49 | 1.48 | 1.46 |
| $K_2O$ | 0.20 | 0.20 | 0.19 | 0.19 | 0.19 | 0.19 | 0.19 | 0.19 | 0.19 |
| MgO | 1.99 | 1.93 | 2.17 | 2.21 | 2.18 | 2.15 | 2.25 | 2.26 | 2.34 |
| CaO | 4.43 | 4.25 | 4.63 | 4.67 | 4.60 | 4.59 | 4.73 | 4.74 | 4.80 |
| ZnO | 0.00 | 0.00 | 0.00 | 0.00 | 0.00 | 0.00 | 0.00 | 0.00 | 0.00 |
| $TiO_2$ | 0.01 | 0.01 | 0.01 | 0.01 | 0.01 | 0.01 | 0.01 | 0.01 | 0.01 |
| $ZrO_2$ | 0.00 | 0.00 | 0.00 | 0.00 | 0.00 | 0.00 | 0.00 | 0.00 | 0.00 |
| $WO_3$ | 0.00 | 0.00 | 0.00 | 0.00 | 0.00 | 0.00 | 0.00 | 0.00 | 0.00 |
| $SnO_2$ | 0.00 | 0.00 | 0.00 | 0.00 | 0.00 | 0.00 | 0.00 | 0.00 | 0.00 |
| $Fe_2O_3$ | 0.006 | 0.005 | 0.006 | 0.006 | 0.006 | 0.006 | 0.006 | 0.006 | 0.006 |
| $CeO_2$ | 0.000 | 0.000 | 0.000 | 0.000 | 0.000 | 0.000 | 0.000 | 0.000 | 0.000 |
| NiO | 0.006 | 0.023 | 0.018 | 0.018 | 0.018 | 0.017 | 0.017 | 0.018 | 0.021 |
| $Co_3O_4$ | 0.001 | 0.009 | 0.002 | 0.002 | 0.002 | 0.002 | 0.002 | 0.002 | 0.002 |
| $Cr_2O_3$ | 0.000 | 0.000 | 0.030 | 0.030 | 0.031 | 0.029 | 0.029 | 0.026 | 0.028 |
| CuO | 0.053 | 0.116 | 0.179 | 0.185 | 0.190 | 0.188 | 0.193 | 0.188 | 0.219 |
| $HfO_2$ | 0.000 | 0.000 | 0.000 | 0.000 | 0.000 | 0.000 | 0.000 | 0.000 | 0.000 |
| $MnO_2$ | 0.001 | 0.001 | 0.002 | 0.001 | 0.000 | 0.001 | 0.003 | 0.000 | 0.001 |
| $As_2O_3$ | 0.000 | 0.000 | 0.000 | 0.000 | 0.000 | 0.000 | 0.000 | 0.000 | 0.000 |
| $Sb_2O_3$ | 0.000 | 0.000 | 0.000 | 0.000 | 0.000 | 0.000 | 0.000 | 0.000 | 0.000 |
| $V_2O_5$ | 0.000 | 0.000 | 0.000 | 0.000 | 0.000 | 0.000 | 0.000 | 0.000 | 0.000 |
| $SO_3$ | 0.000 | 0.000 | 0.000 | 0.000 | 0.000 | 0.000 | 0.000 | 0.000 | 0.000 |
| Cl | 0.000 | 0.000 | 0.000 | 0.000 | 0.000 | 0.000 | 0.000 | 0.000 | 0.000 |

(continued)

| Ex. (mol%) | OR-A-287 | OR-A-288 | OR-A-289 | **ORA**-290 | OR-A-291 | **ORA**-292 | **ORA**-293 | OR-A-294 | OR-A-295 |
|---|---|---|---|---|---|---|---|---|---|
| F | 0.000 | 0.000 | 0.000 | 0.000 | 0.000 | 0.000 | 0.000 | 0.000 | 0.000 |
| $Nd_2O_3$ | 0.000 | 0.000 | 0.000 | 0.000 | 0.000 | 0.000 | 0.000 | 0.000 | 0.000 |
| $Er_2O_3$ | 0.000 | 0.000 | 0.000 | 0.000 | 0.000 | 0.000 | 0.000 | 0.000 | 0.000 |

Table 30HH

| Ex. (mol%) | OR-A-296 | OR-A-297 | OR-A-298 | OR-A-299 | OR-A-300 | OR-A-301 | OR-A-302 | OR-A-303 | OR-A-304 |
|---|---|---|---|---|---|---|---|---|---|
| $SiO_2$ | 59.81 | 60.62 | 59.28 | 59.05 | 59.84 | 60.24 | 60.81 | 61.20 | 61.86 |
| $Al_2O_3$ | 15.83 | 15.58 | 16.34 | 16.45 | 15.99 | 15.84 | 14.91 | 14.79 | 14.33 |
| $B_2O_3$ | 6.23 | 6.09 | 5.99 | 6.02 | 6.09 | 6.04 | 6.13 | 6.11 | 6.06 |
| $P_2O_5$ | 0.00 | 0.00 | 0.00 | 0.00 | 0.00 | 0.00 | 0.00 | 0.00 | 0.00 |
| $Li_2O$ | 9.63 | 9.44 | 11.71 | 11.72 | 9.46 | 10.42 | 10.64 | 12.51 | 10.59 |
| $Na_2O$ | 1.50 | 1.55 | 6.22 | 6.25 | 1.59 | 2.57 | 2.57 | 2.59 | 4.49 |
| $K_2O$ | 0.20 | 0.19 | 0.19 | 0.20 | 0.20 | 0.20 | 0.19 | 0.20 | 0.20 |
| MgO | 2.07 | 1.99 | 0.02 | 0.02 | 2.11 | 0.05 | 0.05 | 0.03 | 0.03 |
| CaO | 4.48 | 4.26 | 0.01 | 0.01 | 4.40 | 4.33 | 4.39 | 2.28 | 2.17 |
| ZnO | 0.00 | 0.00 | 0.00 | 0.00 | 0.00 | 0.00 | 0.00 | 0.00 | 0.00 |
| $TiO_2$ | 0.01 | 0.01 | 0.01 | 0.01 | 0.01 | 0.01 | 0.01 | 0.01 | 0.01 |
| $ZrO_2$ | 0.00 | 0.00 | 0.00 | 0.00 | 0.00 | 0.00 | 0.00 | 0.00 | 0.00 |
| $WO_3$ | 0.00 | 0.00 | 0.00 | 0.00 | 0.00 | 0.00 | 0.00 | 0.00 | 0.00 |
| $SnO_2$ | 0.00 | 0.00 | 0.00 | 0.00 | 0.00 | 0.00 | 0.00 | 0.00 | 0.00 |
| $Fe_2O_3$ | 0.006 | 0.007 | 0.003 | 0.003 | 0.005 | 0.004 | 0.004 | 0.004 | 0.004 |
| $CeO_2$ | 0.000 | 0.000 | 0.000 | 0.000 | 0.000 | 0.000 | 0.000 | 0.000 | 0.000 |
| NiO | 0.016 | 0.008 | 0.011 | 0.008 | 0.009 | 0.009 | 0.011 | 0.008 | 0.010 |
| $Co_3O_4$ | 0.002 | 0.003 | 0.000 | 0.001 | 0.002 | 0.001 | 0.002 | 0.001 | 0.001 |
| $Cr_2O_3$ | 0.029 | 0.027 | 0.024 | 0.027 | 0.028 | 0.028 | 0.029 | 0.028 | 0.027 |
| CuO | 0.189 | 0.222 | 0.173 | 0.219 | 0.243 | 0.239 | 0.249 | 0.235 | 0.219 |
| $HfO_2$ | 0.000 | 0.000 | 0.000 | 0.000 | 0.000 | 0.000 | 0.000 | 0.000 | 0.000 |
| $MnO_2$ | 0.003 | 0.001 | 0.004 | 0.000 | 0.003 | 0.004 | 0.001 | 0.000 | 0.000 |
| $As_2O_3$ | 0.000 | 0.000 | 0.000 | 0.000 | 0.000 | 0.000 | 0.000 | 0.000 | 0.000 |
| $Sb_2O_3$ | 0.000 | 0.000 | 0.000 | 0.000 | 0.000 | 0.000 | 0.000 | 0.000 | 0.000 |
| $V_2O_5$ | 0.000 | 0.000 | 0.000 | 0.000 | 0.000 | 0.000 | 0.000 | 0.000 | 0.000 |
| $SO_3$ | 0.000 | 0.000 | 0.000 | 0.000 | 0.010 | 0.000 | 0.000 | 0.000 | 0.002 |
| Cl | 0.000 | 0.000 | 0.011 | 0.011 | 0.009 | 0.013 | 0.011 | 0.009 | 0.011 |
| F | 0.000 | 0.000 | 0.000 | 0.000 | 0.000 | 0.000 | 0.000 | 0.000 | 0.000 |
| $Nd_2O_3$ | 0.000 | 0.000 | 0.000 | 0.000 | 0.000 | 0.000 | 0.000 | 0.000 | 0.000 |
| $Er_2O_3$ | 0.000 | 0.000 | 0.000 | 0.000 | 0.000 | 0.000 | 0.000 | 0.000 | 0.000 |

Table 30II

| Ex. (mol%) | OR-A-305 | OR-A-306 | OR-A-307 | OR-A-308 | OR-A-309 | OR-A-310 | OR-A-311 | OR-A-312 | OR-A-313 |
|---|---|---|---|---|---|---|---|---|---|
| $SiO_2$ | 61.95 | 61.15 | 60.57 | 61.14 | 61.00 | 60.47 | 60.78 | 60.81 | 61.72 |
| $Al_2O_3$ | 14.34 | 14.82 | 14.66 | 14.53 | 14.33 | 14.61 | 14.55 | 14.61 | 14.54 |
| $B_2O_3$ | 6.01 | 6.02 | 6.06 | 5.91 | 6.04 | 6.02 | 6.01 | 5.97 | 5.97 |
| $P_2O_5$ | 0.00 | 0.00 | 0.00 | 0.00 | 0.00 | 0.00 | 0.00 | 0.00 | 0.00 |
| $Li_2O$ | 10.57 | 10.62 | 11.00 | 12.82 | 11.15 | 11.14 | 11.10 | 11.03 | 11.15 |
| $Na_2O$ | 2.53 | 2.57 | 2.88 | 2.88 | 4.80 | 2.91 | 2.88 | 2.87 | 2.84 |
| $K_2O$ | 1.17 | 0.20 | 0.19 | 0.19 | 0.19 | 1.18 | 0.20 | 0.48 | 0.19 |
| $MgO$ | 0.04 | 2.07 | 0.05 | 0.03 | 0.03 | 0.04 | 1.98 | 1.69 | 1.06 |
| $CaO$ | 3.12 | 2.27 | 4.33 | 2.24 | 2.17 | 3.30 | 2.23 | 2.26 | 2.25 |
| $ZnO$ | 0.00 | 0.00 | 0.00 | 0.00 | 0.00 | 0.00 | 0.00 | 0.00 | 0.00 |
| $TiO_2$ | 0.01 | 0.01 | 0.01 | 0.01 | 0.01 | 0.01 | 0.01 | 0.01 | 0.01 |
| $ZrO_2$ | 0.00 | 0.00 | 0.00 | 0.00 | 0.00 | 0.00 | 0.00 | 0.00 | 0.00 |
| $WO_3$ | 0.00 | 0.00 | 0.00 | 0.00 | 0.00 | 0.00 | 0.00 | 0.00 | 0.00 |
| $SnO_2$ | 0.00 | 0.00 | 0.00 | 0.00 | 0.00 | 0.00 | 0.00 | 0.00 | 0.00 |
| $Fe_2O_3$ | 0.004 | 0.004 | 0.004 | 0.004 | 0.004 | 0.004 | 0.004 | 0.004 | 0.004 |
| $CeO_2$ | 0.000 | 0.000 | 0.000 | 0.000 | 0.000 | 0.000 | 0.000 | 0.000 | 0.000 |
| $NiO$ | 0.008 | 0.008 | 0.009 | 0.008 | 0.008 | 0.009 | 0.008 | 0.008 | 0.007 |
| $Co_3O_4$ | 0.001 | 0.002 | 0.001 | 0.002 | 0.001 | 0.001 | 0.002 | 0.001 | 0.002 |
| $Cr_2O_3$ | 0.027 | 0.028 | 0.028 | 0.027 | 0.026 | 0.027 | 0.027 | 0.027 | 0.027 |
| $CuO$ | 0.219 | 0.238 | 0.209 | 0.208 | 0.222 | 0.260 | 0.212 | 0.212 | 0.219 |
| $HfO_2$ | 0.000 | 0.000 | 0.000 | 0.000 | 0.000 | 0.000 | 0.000 | 0.000 | 0.000 |
| $MnO_2$ | 0.003 | 0.001 | 0.000 | 0.000 | 0.000 | 0.000 | 0.000 | 0.000 | 0.000 |
| $As_2O_3$ | 0.000 | 0.000 | 0.000 | 0.000 | 0.000 | 0.000 | 0.000 | 0.000 | 0.000 |
| $Sb_2O_3$ | 0.000 | 0.000 | 0.000 | 0.000 | 0.000 | 0.000 | 0.000 | 0.000 | 0.000 |
| $V_2O_5$ | 0.000 | 0.000 | 0.000 | 0.000 | 0.000 | 0.000 | 0.000 | 0.000 | 0.000 |
| $SO_3$ | 0.000 | 0.000 | 0.000 | 0.000 | 0.011 | 0.000 | 0.000 | 0.000 | 0.000 |
| $Cl$ | 0.011 | 0.007 | 0.009 | 0.011 | 0.009 | 0.013 | 0.007 | 0.009 | 0.009 |
| $F$ | 0.000 | 0.000 | 0.000 | 0.000 | 0.000 | 0.000 | 0.000 | 0.000 | 0.000 |
| $Nd_2O_3$ | 0.000 | 0.000 | 0.000 | 0.000 | 0.000 | 0.000 | 0.000 | 0.000 | 0.000 |
| $Er_2O_3$ | 0.000 | 0.000 | 0.000 | 0.000 | 0.000 | 0.000 | 0.000 | 0.000 | 0.000 |

Table 30JJ

| Ex. (mol%) | OR-A-314 | OR-A-315 | OR-A-316 | OR-A-317 | OR-A-318 | OR-A-319 | OR-A-320 | OR-A-321 | OR-A-322 |
|---|---|---|---|---|---|---|---|---|---|
| $SiO_2$ | 61.88 | 61.90 | 59.24 | 58.96 | 58.61 | 59.56 | 58.58 | 58.78 | 58.94 |
| $Al_2O_3$ | 14.54 | 14.59 | 16.01 | 16.03 | 16.22 | 16.07 | 16.18 | 16.41 | 16.13 |
| $B_2O_3$ | 6.00 | 5.90 | 6.00 | 6.26 | 6.25 | 5.89 | 6.25 | 5.95 | 6.12 |
| $P_2O_5$ | 0.00 | 0.00 | 0.00 | 0.00 | 0.00 | 0.00 | 0.00 | 0.00 | 0.00 |
| $Li_2O$ | 11.95 | 11.43 | 10.10 | 10.11 | 10.07 | 9.74 | 10.08 | 9.86 | 10.05 |

(continued)

| Ex. (mol%) | OR-A-314 | OR-A-315 | OR-A-316 | OR-A-317 | OR-A-318 | OR-A-319 | OR-A-320 | OR-A-321 | OR-A-322 |
|---|---|---|---|---|---|---|---|---|---|
| $Na_2O$ | 2.87 | 3.34 | 1.47 | 1.47 | 1.47 | 1.48 | 1.47 | 1.47 | 1.49 |
| $K_2O$ | 0.19 | 0.19 | 0.19 | 0.19 | 0.19 | 0.20 | 0.19 | 0.19 | 0.19 |
| MgO | 0.03 | 0.03 | 2.15 | 2.15 | 2.24 | 2.16 | 2.31 | 2.30 | 2.22 |
| CaO | 2.25 | 2.28 | 4.55 | 4.57 | 4.67 | 4.62 | 4.67 | 4.78 | 4.62 |
| ZnO | 0.00 | 0.00 | 0.00 | 0.00 | 0.00 | 0.00 | 0.00 | 0.00 | 0.00 |
| $TiO_2$ | 0.01 | 0.01 | 0.01 | 0.01 | 0.01 | 0.01 | 0.01 | 0.01 | 0.01 |
| $ZrO_2$ | 0.00 | 0.00 | 0.00 | 0.00 | 0.00 | 0.00 | 0.00 | 0.00 | 0.00 |
| $WO_3$ | 0.00 | 0.00 | 0.00 | 0.00 | 0.00 | 0.00 | 0.00 | 0.00 | 0.00 |
| $SnO_2$ | 0.00 | 0.00 | 0.00 | 0.00 | 0.00 | 0.00 | 0.00 | 0.00 | 0.00 |
| $Fe_2O_3$ | 0.004 | 0.004 | 0.006 | 0.006 | 0.006 | 0.006 | 0.006 | 0.006 | 0.006 |
| $CeO_2$ | 0.000 | 0.000 | 0.000 | 0.000 | 0.000 | 0.000 | 0.000 | 0.000 | 0.000 |
| NiO | 0.010 | 0.009 | 0.020 | 0.020 | 0.019 | 0.017 | 0.020 | 0.016 | 0.018 |
| $Co_3O_4$ | 0.001 | 0.001 | 0.002 | 0.002 | 0.002 | 0.002 | 0.002 | 0.002 | 0.002 |
| $Cr_2O_3$ | 0.027 | 0.028 | 0.030 | 0.029 | 0.031 | 0.029 | 0.030 | 0.023 | 0.029 |
| CuO | 0.203 | 0.262 | 0.214 | 0.187 | 0.197 | 0.203 | 0.191 | 0.193 | 0.183 |
| $HfO_2$ | 0.000 | 0.000 | 0.000 | 0.000 | 0.000 | 0.000 | 0.000 | 0.000 | 0.000 |
| $MnO_2$ | 0.000 | 0.000 | 0.000 | 0.003 | 0.001 | 0.002 | 0.002 | 0.002 | 0.001 |
| $As_2O_3$ | 0.000 | 0.000 | 0.000 | 0.000 | 0.000 | 0.000 | 0.000 | 0.000 | 0.000 |
| $Sb_2O_3$ | 0.000 | 0.000 | 0.000 | 0.000 | 0.000 | 0.000 | 0.000 | 0.000 | 0.000 |
| $V_2O_5$ | 0.000 | 0.000 | 0.000 | 0.000 | 0.000 | 0.000 | 0.000 | 0.000 | 0.000 |
| $SO_3$ | 0.010 | 0.000 | 0.000 | 0.000 | 0.000 | 0.000 | 0.000 | 0.000 | 0.000 |
| Cl | 0.009 | 0.009 | 0.000 | 0.000 | 0.000 | 0.000 | 0.000 | 0.000 | 0.000 |
| F | 0.000 | 0.000 | 0.000 | 0.000 | 0.000 | 0.000 | 0.000 | 0.000 | 0.000 |
| $Nd_2O_3$ | 0.000 | 0.000 | 0.000 | 0.000 | 0.000 | 0.000 | 0.000 | 0.000 | 0.000 |
| $Er_2O_3$ | 0.000 | 0.000 | 0.000 | 0.000 | 0.000 | 0.000 | 0.000 | 0.000 | 0.000 |

Table 30KK

| Ex. (mol%) | OR-A-323 | OR-A-324 | OR-A-325 | OR-A-326 | OR-A-327 | OR-A-328 | OR-A-329 | OR-A-330 | OR-A-331 |
|---|---|---|---|---|---|---|---|---|---|
| $SiO_2$ | 60.45 | 60.59 | 60.02 | 60.41 | 59.73 | 60.46 | 60.17 | 60.03 | 61.68 |
| $Al_2O_3$ | 15.53 | 15.42 | 15.80 | 15.59 | 16.01 | 15.63 | 15.79 | 15.79 | 15.01 |
| $B_2O_3$ | 5.89 | 5.98 | 6.00 | 6.00 | 6.01 | 6.00 | 6.00 | 5.99 | 5.96 |
| $P_2O_5$ | 0.00 | 0.00 | 0.00 | 0.00 | 0.00 | 0.00 | 0.00 | 0.00 | 0.00 |
| $Li_2O$ | 9.95 | 9.47 | 9.51 | 9.51 | 9.52 | 9.50 | 9.51 | 9.49 | 9.44 |
| $Na_2O$ | 1.45 | 1.41 | 1.30 | 1.42 | 1.40 | 1.40 | 1.26 | 1.40 | 1.38 |
| $K_2O$ | 0.19 | 0.18 | 0.18 | 0.19 | 0.19 | 0.19 | 0.18 | 0.19 | 0.19 |
| MgO | 1.98 | 2.14 | 2.22 | 2.12 | 2.22 | 2.07 | 2.19 | 2.18 | 1.95 |
| CaO | 4.28 | 4.57 | 4.71 | 4.52 | 4.67 | 4.52 | 4.65 | 4.67 | 4.16 |
| ZnO | 0.00 | 0.00 | 0.00 | 0.00 | 0.00 | 0.00 | 0.00 | 0.00 | 0.00 |

(continued)

| Ex. (mol%) | OR-A-323 | OR-A-324 | OR-A-325 | OR-A-326 | OR-A-327 | OR-A-328 | OR-A-329 | OR-A-330 | OR-A-331 |
|---|---|---|---|---|---|---|---|---|---|
| $TiO_2$ | 0.01 | 0.01 | 0.01 | 0.01 | 0.01 | 0.01 | 0.01 | 0.01 | 0.01 |
| $ZrO_2$ | 0.00 | 0.00 | 0.00 | 0.00 | 0.00 | 0.00 | 0.00 | 0.00 | 0.00 |
| $WO_3$ | 0.00 | 0.00 | 0.00 | 0.00 | 0.00 | 0.00 | 0.00 | 0.00 | 0.00 |
| $SnO_2$ | 0.00 | 0.00 | 0.00 | 0.00 | 0.00 | 0.00 | 0.00 | 0.00 | 0.00 |
| $Fe_2O_3$ | 0.006 | 0.006 | 0.006 | 0.006 | 0.006 | 0.006 | 0.006 | 0.006 | 0.005 |
| $CeO_2$ | 0.000 | 0.000 | 0.000 | 0.000 | 0.000 | 0.000 | 0.000 | 0.000 | 0.000 |
| NiO | 0.018 | 0.018 | 0.018 | 0.017 | 0.019 | 0.012 | 0.019 | 0.015 | 0.017 |
| $Co_3O_4$ | 0.002 | 0.002 | 0.002 | 0.002 | 0.002 | 0.002 | 0.002 | 0.002 | 0.002 |
| $Cr_2O_3$ | 0.028 | 0.030 | 0.031 | 0.030 | 0.030 | 0.029 | 0.029 | 0.029 | 0.028 |
| CuO | 0.209 | 0.180 | 0.185 | 0.181 | 0.187 | 0.182 | 0.185 | 0.185 | 0.173 |
| $HfO_2$ | 0.000 | 0.000 | 0.000 | 0.000 | 0.000 | 0.000 | 0.000 | 0.000 | 0.000 |
| $MnO_2$ | 0.002 | 0.002 | 0.003 | 0.001 | 0.001 | 0.001 | 0.000 | 0.001 | 0.001 |
| $As_2O_3$ | 0.000 | 0.000 | 0.000 | 0.000 | 0.000 | 0.000 | 0.000 | 0.000 | 0.000 |
| $Sb_2O_3$ | 0.000 | 0.000 | 0.000 | 0.000 | 0.000 | 0.000 | 0.000 | 0.000 | 0.000 |
| $V_2O_5$ | 0.000 | 0.000 | 0.000 | 0.000 | 0.000 | 0.000 | 0.000 | 0.000 | 0.000 |
| $SO_3$ | 0.000 | 0.000 | 0.000 | 0.000 | 0.000 | 0.000 | 0.000 | 0.000 | 0.000 |
| Cl | 0.000 | 0.000 | 0.000 | 0.000 | 0.000 | 0.000 | 0.000 | 0.000 | 0.000 |
| F | 0.000 | 0.000 | 0.000 | 0.000 | 0.000 | 0.000 | 0.000 | 0.000 | 0.000 |
| $Nd_2O_3$ | 0.000 | 0.000 | 0.000 | 0.000 | 0.000 | 0.000 | 0.000 | 0.000 | 0.000 |
| $Er_2O_3$ | 0.000 | 0.000 | 0.000 | 0.000 | 0.000 | 0.000 | 0.000 | 0.000 | 0.000 |

Table 30LL

| Ex. (mol%) | OR-A-332 | OR-A-333 | OR-A-334 | OR-A-335 | OR-A-336 | OR-A-337 | OR-A-338 | OR-A-339 | OR-A-340 |
|---|---|---|---|---|---|---|---|---|---|
| $SiO_2$ | 61.47 | 61.47 | 61.51 | 61.27 | 61.46 | 61.87 | 61.25 | 61.30 | 61.64 |
| $Al_2O_3$ | 15.03 | 15.11 | 15.06 | 15.13 | 15.05 | 14.90 | 15.13 | 15.02 | 14.94 |
| $B_2O_3$ | 5.96 | 5.99 | 5.97 | 5.97 | 5.98 | 5.92 | 6.04 | 5.90 | 5.84 |
| $P_2O_5$ | 0.00 | 0.00 | 0.00 | 0.00 | 0.00 | 0.00 | 0.00 | 0.00 | 0.00 |
| $Li_2O$ | 12.21 | 12.11 | 12.06 | 12.22 | 12.23 | 12.02 | 12.17 | 12.35 | 12.33 |
| $Na_2O$ | 3.92 | 3.95 | 3.94 | 3.95 | 3.92 | 3.93 | 3.95 | 3.93 | 3.90 |
| $K_2O$ | 0.39 | 0.39 | 0.39 | 0.39 | 0.39 | 0.40 | 0.39 | 0.39 | 0.39 |
| MgO | 0.02 | 0.02 | 0.02 | 0.02 | 0.02 | 0.02 | 0.02 | 0.02 | 0.02 |
| CaO | 0.77 | 0.77 | 0.77 | 0.77 | 0.77 | 0.75 | 0.77 | 0.77 | 0.75 |
| ZnO | 0.00 | 0.00 | 0.00 | 0.00 | 0.00 | 0.00 | 0.00 | 0.00 | 0.00 |
| $TiO_2$ | 0.01 | 0.01 | 0.01 | 0.01 | 0.01 | 0.01 | 0.01 | 0.01 | 0.01 |
| $ZrO_2$ | 0.00 | 0.00 | 0.00 | 0.00 | 0.00 | 0.00 | 0.00 | 0.00 | 0.00 |
| $WO_3$ | 0.00 | 0.00 | 0.00 | 0.00 | 0.00 | 0.00 | 0.00 | 0.00 | 0.00 |
| $SnO_2$ | 0.00 | 0.00 | 0.00 | 0.00 | 0.00 | 0.00 | 0.00 | 0.00 | 0.00 |
| $Fe_2O_3$ | 0.004 | 0.004 | 0.004 | 0.004 | 0.004 | 0.004 | 0.004 | 0.004 | 0.004 |

(continued)

| Ex. (mol%) | OR-A-332 | OR-A-333 | OR-A-334 | OR-A-335 | OR-A-336 | OR-A-337 | OR-A-338 | OR-A-339 | OR-A-340 |
|---|---|---|---|---|---|---|---|---|---|
| $CeO_2$ | 0.000 | 0.000 | 0.000 | 0.000 | 0.000 | 0.000 | 0.000 | 0.000 | 0.000 |
| NiO | 0.014 | 0.007 | 0.005 | 0.005 | 0.004 | 0.019 | 0.021 | 0.024 | 0.023 |
| $Co_3O_4$ | 0.002 | 0.001 | 0.001 | 0.002 | 0.002 | 0.001 | 0.001 | 0.002 | 0.002 |
| $Cr_2O_3$ | 0.025 | 0.023 | 0.029 | 0.024 | 0.027 | 0.023 | 0.030 | 0.023 | 0.028 |
| CuO | 0.181 | 0.154 | 0.234 | 0.232 | 0.137 | 0.134 | 0.209 | 0.251 | 0.136 |
| $HfO_2$ | 0.000 | 0.000 | 0.000 | 0.000 | 0.000 | 0.000 | 0.000 | 0.000 | 0.000 |
| $MnO_2$ | 0.000 | 0.000 | 0.002 | 0.000 | 0.000 | 0.000 | 0.001 | 0.000 | 0.000 |
| $As_2O_3$ | 0.000 | 0.000 | 0.000 | 0.000 | 0.000 | 0.000 | 0.000 | 0.000 | 0.000 |
| $Sb_2O_3$ | 0.000 | 0.000 | 0.000 | 0.000 | 0.000 | 0.000 | 0.000 | 0.000 | 0.000 |
| $V_2O_5$ | 0.000 | 0.000 | 0.000 | 0.000 | 0.000 | 0.000 | 0.000 | 0.000 | 0.000 |
| $SO_3$ | 0.000 | 0.000 | 0.000 | 0.000 | 0.000 | 0.000 | 0.000 | 0.000 | 0.000 |
| Cl | 0.000 | 0.000 | 0.000 | 0.000 | 0.000 | 0.000 | 0.000 | 0.000 | 0.000 |
| F | 0.000 | 0.000 | 0.000 | 0.000 | 0.000 | 0.000 | 0.000 | 0.000 | 0.000 |
| $Nd_2O_3$ | 0.000 | 0.000 | 0.000 | 0.000 | 0.000 | 0.000 | 0.000 | 0.000 | 0.000 |
| $Er_2O_3$ | 0.000 | 0.000 | 0.000 | 0.000 | 0.000 | 0.000 | 0.000 | 0.000 | 0.000 |

Table 30MM

| Ex. (mol%) | OR-A-341 | OR-A-342 | OR-A-343 | OR-A-344 | OR-A-345 | OR-A-346 | OR-A-347 | OR-A-348 | OR-A-349 |
|---|---|---|---|---|---|---|---|---|---|
| $SiO_2$ | 61.24 | 58.93 | 58.82 | 58.94 | 58.90 | 61.76 | 62.65 | 63.64 | 64.54 |
| $Al_2O_3$ | 15.06 | 16.47 | 16.44 | 16.45 | 16.45 | 15.01 | 15.08 | 14.99 | 15.05 |
| $B_2O_3$ | 6.06 | 5.91 | 5.95 | 5.92 | 5.92 | 5.81 | 4.87 | 3.93 | 2.96 |
| $P_2O_5$ | 0.00 | 0.00 | 0.00 | 0.00 | 0.00 | 0.00 | 0.00 | 0.00 | 0.00 |
| $Li_2O$ | 12.33 | 10.13 | 10.23 | 12.25 | 12.30 | 12.33 | 12.32 | 12.36 | 12.30 |
| $Na_2O$ | 3.92 | 4.26 | 4.26 | 6.19 | 6.19 | 3.78 | 3.78 | 3.79 | 3.82 |
| $K_2O$ | 0.39 | 0.29 | 0.29 | 0.20 | 0.20 | 0.39 | 0.38 | 0.39 | 0.39 |
| MgO | 0.02 | 2.98 | 2.97 | 0.02 | 0.02 | 0.03 | 0.03 | 0.03 | 0.04 |
| CaO | 0.76 | 0.03 | 0.03 | 0.01 | 0.01 | 0.61 | 0.62 | 0.62 | 0.64 |
| ZnO | 0.00 | 0.99 | 0.99 | 0.00 | 0.00 | 0.00 | 0.00 | 0.00 | 0.00 |
| $TiO_2$ | 0.01 | 0.01 | 0.01 | 0.01 | 0.01 | 0.01 | 0.01 | 0.01 | 0.01 |
| $ZrO_2$ | 0.00 | 0.00 | 0.00 | 0.00 | 0.00 | 0.00 | 0.00 | 0.00 | 0.00 |
| $WO_3$ | 0.00 | 0.00 | 0.00 | 0.00 | 0.00 | 0.00 | 0.00 | 0.00 | 0.00 |
| $SnO_2$ | 0.00 | 0.00 | 0.00 | 0.00 | 0.00 | 0.00 | 0.00 | 0.00 | 0.00 |
| $Fe_2O_3$ | 0.004 | 0.004 | 0.004 | 0.003 | 0.003 | 0.004 | 0.004 | 0.004 | 0.004 |
| $CeO_2$ | 0.000 | 0.000 | 0.000 | 0.000 | 0.000 | 0.000 | 0.000 | 0.000 | 0.000 |
| NiO | 0.018 | 0.000 | 0.000 | 0.000 | 0.000 | 0.019 | 0.022 | 0.022 | 0.021 |
| $Co_3O_4$ | 0.002 | 0.000 | 0.000 | 0.000 | 0.000 | 0.002 | 0.002 | 0.002 | 0.002 |
| $Cr_2O_3$ | 0.025 | 0.000 | 0.000 | 0.000 | 0.000 | 0.021 | 0.021 | 0.022 | 0.022 |
| CuO | 0.145 | 0.000 | 0.000 | 0.000 | 0.000 | 0.206 | 0.199 | 0.184 | 0.203 |

(continued)

| Ex. (mol%) | OR-A-341 | OR-A-342 | OR-A-343 | OR-A-344 | OR-A-345 | OR-A-346 | OR-A-347 | OR-A-348 | OR-A-349 |
|---|---|---|---|---|---|---|---|---|---|
| $HfO_2$ | 0.000 | 0.000 | 0.000 | 0.000 | 0.000 | 0.000 | 0.000 | 0.000 | 0.000 |
| $MnO_2$ | 0.004 | 0.000 | 0.000 | 0.000 | 0.000 | 0.000 | 0.000 | 0.000 | 0.000 |
| $As_2O_3$ | 0.000 | 0.000 | 0.000 | 0.000 | 0.000 | 0.000 | 0.000 | 0.000 | 0.000 |
| $Sb_2O_3$ | 0.000 | 0.000 | 0.000 | 0.000 | 0.000 | 0.000 | 0.000 | 0.000 | 0.000 |
| $V_2O_5$ | 0.000 | 0.000 | 0.000 | 0.000 | 0.000 | 0.000 | 0.000 | 0.000 | 0.000 |
| $SO_3$ | 0.000 | 0.000 | 0.000 | 0.000 | 0.000 | 0.021 | 0.000 | 0.002 | 0.000 |
| Cl | 0.000 | 0.011 | 0.011 | 0.014 | 0.014 | 0.007 | 0.007 | 0.007 | 0.011 |
| F | 0.000 | 0.000 | 0.000 | 0.000 | 0.000 | 0.000 | 0.000 | 0.000 | 0.000 |
| $Nd_2O_3$ | 0.000 | 0.000 | 0.000 | 0.000 | 0.000 | 0.000 | 0.000 | 0.000 | 0.000 |
| $Er_2O_3$ | 0.000 | 0.000 | 0.000 | 0.000 | 0.000 | 0.000 | 0.000 | 0.000 | 0.000 |

Table 30NN

| Ex. (mol%) | ORA-350 | ORA-351 | ORA-352 | ORA-353 | ORA-354 |
|---|---|---|---|---|---|
| $SiO_2$ | 65.24 | 66.43 | 61.57 | 61.66 | 61.64 |
| $Al_2O_3$ | 15.13 | 15.10 | 15.07 | 15.16 | 15.12 |
| $B_2O_3$ | 2.02 | 1.03 | 5.87 | 5.82 | 5.81 |
| $P_2O_5$ | 0.00 | 0.00 | 0.00 | 0.00 | 0.00 |
| $Li_2O$ | 12.43 | 12.27 | 12.38 | 12.29 | 12.38 |
| $Na_2O$ | 3.81 | 3.82 | 3.82 | 3.79 | 3.78 |
| $K_2O$ | 0.41 | 0.40 | 0.39 | 0.39 | 0.38 |
| MgO | 0.04 | 0.03 | 0.03 | 0.03 | 0.03 |
| CaO | 0.64 | 0.64 | 0.63 | 0.65 | 0.67 |
| ZnO | 0.00 | 0.00 | 0.00 | 0.00 | 0.00 |
| $TiO_2$ | 0.01 | 0.01 | 0.01 | 0.01 | 0.01 |
| $ZrO_2$ | 0.00 | 0.00 | 0.00 | 0.00 | 0.00 |
| $WO_3$ | 0.00 | 0.00 | 0.00 | 0.00 | 0.00 |
| $SnO_2$ | 0.00 | 0.00 | 0.00 | 0.00 | 0.00 |
| $Fe_2O_3$ | 0.004 | 0.004 | 0.004 | 0.004 | 0.004 |
| $CeO_2$ | 0.000 | 0.000 | 0.000 | 0.000 | 0.000 |
| NiO | 0.020 | 0.022 | 0.023 | 0.023 | 0.022 |
| $Co_3O_4$ | 0.002 | 0.002 | 0.002 | 0.002 | 0.001 |
| $Cr_2O_3$ | 0.022 | 0.022 | 0.021 | 0.022 | 0.021 |
| CuO | 0.219 | 0.212 | 0.174 | 0.137 | 0.123 |
| $HfO_2$ | 0.000 | 0.000 | 0.000 | 0.000 | 0.000 |
| $MnO_2$ | 0.001 | 0.000 | 0.004 | 0.000 | 0.001 |
| $As_2O_3$ | 0.000 | 0.000 | 0.000 | 0.000 | 0.000 |
| $Sb_2O_3$ | 0.000 | 0.000 | 0.000 | 0.000 | 0.000 |
| $V_2O_5$ | 0.000 | 0.000 | 0.000 | 0.000 | 0.000 |
| $SO_3$ | 0.004 | 0.000 | 0.000 | 0.007 | 0.000 |

(continued)

| Ex. (mol%) | ORA-350 | ORA-351 | ORA-352 | ORA-353 | ORA-354 |
|---|---|---|---|---|---|
| Cl | 0.011 | 0.011 | 0.009 | 0.007 | 0.007 |
| F | 0.000 | 0.000 | 0.000 | 0.000 | 0.000 |
| $Nd_2O_3$ | 0.000 | 0.000 | 0.000 | 0.000 | 0.000 |
| $Er_2O_3$ | 0.000 | 0.000 | 0.000 | 0.000 | 0.000 |

Referring now to Table 31, colored glass articles in the form of glass coupons were produced from the glass compositions of Tables 30A-30NN. The glass coupons had the indicated thicknesses. The CIELAB L*, a*, and b* coordinates of each colored glass article were determined. The average transmittance (%) for each sample over the wavelength range from 380 nm to 750 nm was also determined. The results are reported in Table 31.

Table 31

| Example | L* | a* | b* | Thickness (mm) | Average transmittance (380 nm - 750 nm) |
|---|---|---|---|---|---|
| ORA-1 | 54.3 | -2.25 | -23.3 | 1.496 | 38.08 |
| ORA-2 | 53.5 | 5.59 | -47.3 | 1.504 | 45.89 |
| ORA-3 | 73.5 | -1.65 | 3.45 | 1.518 | 56.14 |
| ORA-4 | 58.6 | -2.44 | -0.74 | 1.355 | 42.35 |
| ORA-5 | 81.6 | -6.19 | 26.71 | 1.503 | 48.95 |
| ORA-6 | 80.9 | -10.9 | 60.97 | 1.551 | 44.81 |
| ORA-6 | 82.2 | -11.5 | 61.28 | 1.52 | 46.21 |
| ORA-7 | 84 | 2.38 | 24.44 | 1.51 | 67.97 |
| ORA-8 | 86 | -9.09 | -0.48 | 1.499 | 56.39 |
| ORA-8 | 85.7 | -9.4 | -0.84 | 1.502 | 55.96 |
| ORA-8 | 85.7 | -9.37 | -0.86 | 1.5 | 55.85 |
| ORA-9 | 60.3 | 2.68 | -46.7 | 1.5 | 52.41 |
| ORA-10 | 81.4 | -12.9 | 44.23 | 1.496 | 45.38 |
| ORA-11 | 96.2 | -1.07 | 6.85 | 1.534 | 82.97 |
| ORA-11 | 96.1 | -1.08 | 7 | 1.53 | 82.78 |
| ORA-12 | 96.6 | -0.46 | 2.3 | 1.34 | 87.06 |
| ORA-14 | 96.3 | -0.49 | 0.14 | 1.516 | 89.66 |
| ORA-15 | 85.6 | -1.05 | 2.82 | 1.504 | 72.58 |
| ORA-16 | 80 | -7.58 | -2.04 | 1.51 | 52.17 |
| ORA-17 | 74.4 | -1.63 | 2.16 | 1.509 | 58.32 |
| ORA-18 | 88.8 | -3.39 | 17.58 | 1.505 | 66.53 |
| ORA-21 | 77.1 | -17.9 | 8.2 | 1.453 | 39.68 |
| ORA-22 | 87 | -8.47 | 5.42 | 1.33 | 64.68 |
| ORA-23 | 95.3 | -0.43 | 0.29 | 1.34 | 88.58 |
| ORA-23 | 95.3 | -0.43 | 0.43 | 1.34 | 88.58 |
| ORA-24 | 65.9 | -2.01 | -18.5 | 1.33 | 51.58 |
| ORA-25 | 81.5 | -5.99 | -3.18 | 1.535 | 58.24 |
| ORA-26 | 77.9 | -9.15 | -1.49 | 1.537 | 47.20 |
| ORA-27 | 73.6 | -11.9 | 1.72 | 1.526 | 37.11 |

(continued)

| Example | L* | a* | b* | Thickness (mm) | Average transmittance (380 nm - 750 nm) |
|---------|------|-------|-------|----------------|------------------------------------------|
| ORA-28 | 68.3 | -14.4 | 6.15 | 1.538 | 27.56 |
| ORA-29 | 55.7 | -17.4 | 17.39 | 1.554 | 13.76 |
| ORA-30 | 41.5 | -16.8 | 27.15 | 1.553 | 5.89 |
| ORA-31 | 89.8 | -0.72 | 16.26 | 1.4 | 72.68 |
| ORA-32 | 26.9 | -12 | 15.29 | 1.32 | 3.08 |
| ORA-33 | 65.6 | -2.29 | -12.4 | 1.31 | 50.51 |
| ORA-34 | 79.1 | -13.5 | 10.74 | 1.31 | 46.61 |
| ORA-35 | 95 | -1.05 | -1.88 | 1.32 | 87.51 |
| ORA-36 | 46.4 | -17.7 | -13.5 | 1.3 | 13.49 |
| ORA-37 | 42.9 | -1.87 | -22.3 | 1.34 | 33.01 |
| ORA-38 | 43.4 | -0.37 | -42 | 1.33 | 28.23 |
| ORA-39 | 60.9 | -2.38 | 0.5 | 1.32 | 44.34 |
| ORA-40 | 94.3 | -0.51 | 8.43 | 1.34 | 84.53 |
| ORA-41 | 87.1 | -8.58 | 5.19 | 1.32 | 64.68 |
| ORA-42 | 95.2 | -0.73 | -0.52 | 1.31 | 88.13 |
| ORA-43 | 65.5 | -2.16 | -19.2 | 1.35 | 50.85 |
| ORA-44 | 59.3 | -2.83 | -0.51 | 1.34 | 42.93 |
| ORA-45 | 94.5 | -0.38 | 9.12 | 1.31 | 85.15 |
| ORA-46 | 86.6 | -9.29 | 5.62 | 1.31 | 62.94 |
| ORA-47 | 95.4 | -0.61 | -0.79 | 1.34 | 88.84 |
| ORA-48 | 65.2 | -2.41 | -20.2 | 1.29 | 50.75 |
| ORA-49 | 57.6 | -3.12 | -2.32 | 1.34 | 41.79 |
| ORA-50 | 94.3 | -0.35 | 9.09 | 1.33 | 84.83 |
| ORA-51 | 66.3 | -1.99 | -18.3 | 1.32 | 51.94 |
| ORA-52 | 90 | -1.31 | -2.91 | 1.31 | 79.81 |
| ORA-52 | 89.2 | -1.62 | -3.62 | 1.29 | 78.10 |
| ORA-53 | 66.3 | -1.99 | -19.6 | 1.33 | 51.11 |
| ORA-53 | 66.6 | -2.1 | -19.5 | 1.33 | 51.36 |
| ORA-54 | 88.8 | -6.42 | 4.63 | 1.33 | 65.58 |
| ORA-54 | 88.8 | -6.54 | 4.6 | 1.35 | 65.42 |
| ORA-56 | 68.8 | -6.69 | -18.2 | 1.32 | 43.78 |
| ORA-56 | 69.6 | -6.37 | -17.8 | 1.29 | 45.12 |
| ORA-57 | 83 | -4 | -7.77 | 1.29 | 65.47 |
| ORA-57 | 83.6 | -3.74 | -7.38 | 1.29 | 66.76 |
| ORA-58 | 64.6 | -2.21 | -20.4 | 1.29 | 49.14 |
| ORA-58 | 64.1 | -2.17 | -20.6 | 1.29 | 48.62 |
| ORA-59 | 89 | -1.7 | -3.4 | 1.3 | 77.55 |
| ORA-60 | 67 | -1.93 | -18.2 | 1.29 | 51.74 |
| ORA-61 | 93.4 | -0.84 | 7.53 | 1.34 | 83.00 |

(continued)

| Example | L* | a* | b* | Thickness (mm) | Average transmittance (380 nm - 750 nm) |
|---------|-----|-------|-------|----------------|------------------------------------------|
| ORA-62 | 63.5 | -11.9 | -9.2 | 1.31 | 28.70 |
| ORA-63 | 83.1 | -3.99 | -6.93 | 1.27 | 65.15 |
| ORA-64 | 62.7 | -2.12 | -21.6 | 1.31 | 46.93 |
| ORA-65 | 87.2 | -8.3 | 5.82 | 1.33 | 65.10 |
| ORA-66 | 93.7 | -0.3 | 9.8 | 1.36 | 83.86 |
| ORA-67 | 74.4 | -2.49 | 32.99 | 1.14 | 46.62 |
| ORA-68 | 90.5 | -4.5 | -5.85 | 1.34 | 74.29 |
| ORA-69 | 68.8 | -7.32 | -15.8 | 1.33 | 42.51 |
| ORA-70 | 68 | -4.44 | -20.9 | 1.35 | 47.23 |
| ORA-71 | 57 | -2.73 | -5.3 | 1.37 | 41.30 |
| ORA-72 | 63.6 | -2.73 | -18.7 | 1.42 | 46.95 |
| ORA-73 | 96.1 | -0.12 | 3.25 | 1.35 | 89.72 |
| ORA-74 | 55.7 | -2.73 | 0.04 | 1.36 | 39.84 |
| ORA-75 | 62.8 | -2.25 | -5.79 | 1.36 | 47.14 |
| ORA-76 | 96.8 | -0.02 | 0.27 | 1.35 | 91.59 |
| ORA-77 | 95.9 | 0.01 | 0.7 | 1.33 | 88.60 |
| ORA-78 | 65.4 | 0.92 | -37.5 | 1.36 | 53.47 |
| ORA-79 | 76.6 | -2.14 | -16.2 | 0.621 | 63.69 |
| ORA-79 | 76.6 | -2.14 | -16.2 | 0.621 | 63.69 |
| ORA-79 | 76.6 | -2.14 | -16.2 | 0.621 | 63.69 |
| ORA-80 | 96.7 | -0.25 | -0.13 | 0.62 | 91.23 |
| ORA-80 | 96.7 | -0.25 | -0.13 | 0.62 | 91.23 |
| ORA-80 | 96.7 | -0.25 | -0.13 | 0.62 | 91.23 |
| ORA-81 | 71.2 | -2.05 | -7.46 | 0.643 | 56.43 |
| ORA-81 | 71.2 | -2.05 | -7.46 | 0.643 | 56.43 |
| ORA-81 | 71.2 | -2.05 | -7.46 | 0.643 | 56.43 |
| ORA-82 | 86.6 | -1.81 | -6.31 | 1.33 | 74.45 |
| ORA-83 | 96.9 | -0.02 | 0.12 | 1.24 | 92.02 |
| ORA-84 | 96.7 | -0.11 | 0.25 | 1.3 | 91.05 |
| ORA-85 | 96.8 | -0.07 | 0.21 | 1.32 | 91.52 |
| ORA-86 | 96.9 | -0.03 | 0.21 | 1.28 | 91.43 |
| ORA-87 | 96.7 | -0.02 | 0.47 | 1.25 | 91.39 |
| ORA-88 | 79.3 | -4.44 | -11.8 | 1.26 | 60.21 |
| ORA-89 | 60.4 | -8.61 | -17.1 | 1.34 | 31.09 |
| ORA-90 | 67.8 | -6.25 | -30.3 | 1.34 | 46.93 |
| ORA-91 | 62.4 | -6.04 | -26.3 | 1.35 | 38.76 |
| ORA-92 | 63 | -10.3 | -24.5 | 1.35 | 38.11 |
| ORA-93 | 64.1 | -8.04 | -28.3 | 1.33 | 41.34 |
| ORA-94 | 65.3 | -6.48 | -29.5 | 1.33 | 43.18 |

(continued)

| Example | L* | a* | b* | Thickness (mm) | Average transmittance (380 nm - 750 nm) |
|---|---|---|---|---|---|
| ORA-95 | 84.5 | -12.4 | 12.15 | 1.29 | 52.71 |
| ORA-96 | 83 | -13.6 | 13.11 | 1.35 | 49.38 |
| ORA-97 | 90.1 | -8.32 | 29.93 | 1.3 | 61.02 |
| ORA-98 | 91 | -2.23 | -8.98 | 1.23 | 85.94 |
| ORA-99 | 87.2 | -2.88 | -14.4 | 1.26 | 81.26 |
| ORA-100 | 82.2 | -2.53 | -20.6 | 1.27 | 74.80 |
| ORA-101 | 79.7 | -3.97 | -10.2 | 1.29 | 68.13 |
| ORA-102 | 78 | -4.64 | -0.58 | 1.3 | 62.62 |
| ORA-103 | 76.4 | -5.2 | 6.85 | 1.28 | 58.13 |
| ORA-104 | 81.8 | -2.5 | -21.2 | 1.31 | 74.47 |
| ORA-105 | 81.5 | -2.5 | -21.7 | 1.31 | 74.29 |
| ORA-106 | 81.6 | -2.62 | -21.8 | 1.25 | 74.67 |
| ORA-107 | 88.2 | -6.98 | 0.45 | 1.2 | 69.06 |
| ORA-108 | 88.5 | -6.04 | 2.77 | 1.22 | 69.99 |
| ORA-109 | 90.6 | -5.74 | 6.05 | 1.2 | 71.88 |
| ORA-110 | 90.6 | -5.52 | 7.3 | 1.2 | 72.19 |
| ORA-111 | 90.3 | -5.35 | 9.22 | 1.28 | 70.83 |
| ORA-112 | 90.5 | -5.31 | 8.41 | 1.28 | 70.71 |
| ORA-113 | 90.8 | -4.31 | 9.47 | 1.28 | 72.44 |
| ORA-114 | 96.8 | -0.06 | 0.39 | 1.27 | 91.19 |
| ORA-115 | 90 | -5.24 | 7.76 | 1.29 | 70.45 |
| ORA-116 | 95.8 | 3.04 | -0.87 | 1.348 | 88.26 |
| ORA-117 | 93.7 | 7.94 | -1.71 | 1.349 | 81.56 |
| ORA-118 | 91.7 | 3.05 | 10.6 | 1.35 | 79.00 |
| ORA-119 | 93.9 | 3 | 4.49 | 1.35 | 83.88 |
| ORA-120 | 93.4 | 5.72 | 3.16 | 1.336 | 81.16 |
| ORA-121 | 87.6 | 2.01 | -11.4 | 1.348 | 77.16 |
| ORA-122 | 68.3 | -2.07 | -0.58 | 1.348 | 51.93 |
| ORA-123 | 69.5 | -8.73 | -13 | 1.341 | 45.19 |
| ORA-124 | 68.1 | -1.99 | -0.92 | 1.348 | 51.96 |
| ORA-125 | 70.4 | -8.27 | -13.1 | 1.315 | 46.55 |
| ORA-126 | 68 | -9.3 | -15.1 | 1.32 | 43.43 |
| ORA-127 | 65.6 | -2.31 | -3.05 | 1.346 | 49.46 |
| ORA-128 | 95.1 | -0.8 | 8.89 | 1.307 | 79.31 |
| ORA-129 | 95.2 | -0.91 | 5.02 | 1.324 | 83.78 |
| ORA-130 | 93.2 | -1.14 | 3.86 | 1.327 | 81.89 |
| ORA-131 | 78.2 | 4.27 | 62.38 | 1.258 | 45.39 |
| ORA-132 | 96.1 | -0.4 | 3.04 | 1.297 | 87.72 |
| ORA-133 | 95 | -1.08 | 5.27 | 1.299 | 79.59 |

(continued)

| Example | L* | a* | b* | Thickness (mm) | Average transmittance (380 nm - 750 nm) |
|---|---|---|---|---|---|
| ORA-134 | 92.2 | -3.32 | -5.34 | 1.252 | 79.12 |
| ORA-135 | 88.4 | -4.18 | -9.77 | 1.345 | 72.86 |
| ORA-136 | 91.1 | -3.29 | -7 | 1.282 | 78.05 |
| ORA-137 | 91.9 | -1.07 | 25.91 | 1.287 | 68.35 |
| ORA-138 | 96.7 | -0.26 | 1.46 | 1.336 | 88.98 |
| ORA-139 | 88.5 | -0.11 | 48.07 | 1.334 | 59.06 |
| ORA-140 | 94.5 | -1.1 | 11.46 | 1.279 | 79.19 |
| ORA-141 | 96.1 | -0.18 | 1.02 | 1.332 | 88.70 |
| ORA-142 | 96.2 | -0.17 | 1.49 | 1.337 | 88.52 |
| ORA-143 | 96.7 | -0.28 | 1.5 | 1.318 | 88.86 |
| ORA-144 | 96.1 | -0.73 | 5.28 | 1.307 | 83.38 |
| ORA-145 | 96.6 | -0.44 | 2.41 | 1.336 | 87.24 |
| ORA-146 | 88.8 | -7.87 | 4.43 | 1.413 | 67.88 |
| ORA-147 | 87.6 | -8.98 | 6.75 | 1.431 | 64.56 |
| ORA-148 | 89 | -7.38 | 6.6 | 1.403 | 67.49 |
| ORA-149 | 88.9 | -7.22 | 8.14 | 1.423 | 66.30 |
| ORA-150 | 89.2 | -6.44 | 8.75 | 1.407 | 67.20 |
| ORA-151 | 89.4 | -5.91 | 9.7 | 1.416 | 67.40 |
| ORA-152 | 90.4 | 0.96 | 13.31 | 1.293 | 78.86 |
| ORA-153 | 92.9 | 0.53 | 8.35 | 1.3 | 83.61 |
| ORA-154 | 94.5 | 0.2 | 4.69 | 1.319 | 86.92 |
| ORA-155 | 93.3 | -0.72 | -4.48 | 1.307 | 86.34 |
| ORA-156 | 81.8 | -1.41 | -19 | 1.305 | 71.94 |
| ORA-157 | 95.4 | -1.73 | -1.38 | 1.29 | 86.14 |
| ORA-157 | 95.4 | -1.74 | -1.39 | 1.29 | 86.24 |
| ORA-158 | 91.5 | -5.47 | -3.07 | 1.291 | 72.48 |
| ORA-158 | 91.6 | -5.45 | -3.08 | 1.297 | 72.65 |
| ORA-159 | 95.2 | -2.99 | 9.81 | 1.297 | 79.31 |
| ORA-160 | 93.6 | -6.18 | 23.4 | 1.313 | 69.68 |
| ORA-161 | 92.6 | -4.67 | -3.67 | 1.337 | 76.40 |
| ORA-162 | 92.8 | -4.35 | -3.35 | 1.323 | 77.22 |
| ORA-163 | 95.4 | -0.71 | 6.06 | 1.373 | 84.14 |
| ORA-164 | 95.2 | -0.7 | 6.73 | 1.364 | 83.63 |
| ORA-165 | 94.5 | -1.61 | -2.24 | 0.591 | 85.07 |
| ORA-165 | 94.5 | -1.61 | -2.24 | 0.591 | 85.07 |
| ORA-166 | 88.8 | -6.46 | 1.89 | 1.379 | 70.52 |
| ORA-167 | 88.7 | -6.58 | 1.85 | 1.377 | 70.18 |
| ORA-168 | 88.5 | -6.82 | 1.68 | 1.372 | 69.73 |
| ORA-169 | 93.2 | -2.95 | 1.1 | 0.594 | 81.55 |

(continued)

| Example | L* | a* | b* | Thickness (mm) | Average transmittance (380 nm - 750 nm) |
|---|---|---|---|---|---|
| ORA-169 | 88.8 | -6.58 | 2 | 1.346 | 70.28 |
| ORA-169 | 93.2 | -2.95 | 1.1 | 0.594 | 81.55 |
| ORA-169 | 88.8 | -6.58 | 2 | 1.346 | 70.28 |
| ORA-170 | 89.1 | -5.87 | 4.95 | 1.318 | 69.39 |
| ORA-171 | 89 | -6.19 | 3.17 | 1.31 | 70.18 |
| ORA-172 | 87.1 | -1.71 | -5.56 | 1.351 | 75.02 |
| ORA-173 | 86.9 | -1.8 | -5.68 | 1.336 | 74.68 |
| ORA-174 | 91 | -1.63 | -7.21 | 1.333 | 81.25 |
| ORA-175 | 90.9 | -1.63 | -7.29 | 1.334 | 81.23 |
| ORA-176 | 90.8 | -1.78 | -7.35 | 1.334 | 80.73 |
| ORA-177 | 90.8 | -1.79 | -7.47 | 1.341 | 80.64 |
| ORA-178 | 95.4 | -0.71 | 6 | 1.345 | 83.71 |
| ORA-179 | 95.3 | -0.71 | 6.32 | 1.305 | 83.46 |
| ORA-180 | 87.5 | -1.64 | -5.58 | 1.297 | 75.73 |
| ORA-181 | 87.2 | -1.67 | -5.61 | 1.344 | 75.35 |
| ORA-182 | 87.3 | -1.66 | -5.44 | 1.319 | 75.35 |
| ORA-183 | 95.3 | -0.74 | 5.85 | 1.32 | 83.75 |
| ORA-184 | 95 | -3.11 | 9.96 | 1.329 | 78.73 |
| ORA-185 | 92.2 | -5.34 | -0.33 | 1.316 | 76.11 |
| ORA-186 | 92.9 | -4.43 | -0.54 | 1.314 | 78.05 |
| ORA-187 | 91.3 | -6.12 | -2 | 1.322 | 72.83 |
| ORA-188 | 95.8 | -1.22 | 0.53 | 1.326 | 88.30 |
| ORA-189 | 86.7 | -3.8 | -7.01 | 1.309 | 73.91 |
| ORA-190 | 83.9 | -7.84 | 0.86 | 1.293 | 60.45 |
| ORA-191 | 90 | -3.89 | -1.84 | 1.313 | 76.65 |
| ORA-192 | 88.2 | -8.1 | 16.38 | 1.31 | 61.57 |
| ORA-193 | 89.3 | -7.44 | 4.68 | 1.354 | 69.18 |
| ORA-194 | 89.9 | -6.8 | 4.48 | 1.363 | 70.85 |
| ORA-195 | 90.1 | -6.59 | 4.83 | 1.362 | 71.57 |
| ORA-196 | 90 | -6.64 | 4.98 | 1.365 | 71.16 |
| ORA-197 | 90 | -6.81 | 4.19 | 1.382 | 71.46 |
| ORA-198 | 90.5 | -5.77 | 5.27 | 1.361 | 72.91 |
| ORA-199 | 86.9 | -1.7 | -5.41 | 1.364 | 74.70 |
| ORA-200 | 87 | -1.74 | -5.51 | 1.364 | 74.67 |
| ORA-201 | 87.3 | -1.89 | -4.41 | 1.376 | 74.90 |
| ORA-202 | 87.8 | -1.81 | -3.85 | 1.358 | 75.67 |
| ORA-203 | 86.9 | -1.61 | -4.9 | 1.389 | 74.89 |
| ORA-204 | 87.2 | -1.62 | -5.07 | 1.355 | 75.24 |
| ORA-205 | 87.4 | -1.7 | -5.65 | 1.314 | 75.59 |

(continued)

| Example | L* | a* | b* | Thickness (mm) | Average transmittance (380 nm - 750 nm) |
|---|---|---|---|---|---|
| ORA-205 | 87.3 | -1.67 | -5.68 | 1.315 | 75.37 |
| ORA-206 | 87.9 | -1.23 | -3.69 | 1.302 | 76.36 |
| ORA-206 | 88 | -1.25 | -3.65 | 1.301 | 76.58 |
| ORA-207 | 87.5 | -1.37 | -3.75 | 1.309 | 75.65 |
| ORA-207 | 87.4 | -1.36 | -3.78 | 1.308 | 75.41 |
| ORA-208 | 87.6 | -1.45 | -4.46 | 1.312 | 75.88 |
| ORA-208 | 87.5 | -1.43 | -4.48 | 1.314 | 75.62 |
| ORA-209 | 90.4 | -4.83 | 6.02 | 1.3 | 72.97 |
| ORA-209 | 90.5 | -4.84 | 6.06 | 1.302 | 73.14 |
| ORA-210 | 91 | -3.76 | 5.05 | 1.315 | 77.53 |
| ORA-210 | 90.9 | -3.74 | 5.02 | 1.317 | 77.31 |
| ORA-211 | 90.6 | -4.15 | 5.26 | 1.346 | 75.81 |
| ORA-211 | 90.5 | -4.12 | 5.23 | 1.347 | 75.68 |
| ORA-212 | 90.1 | -4.9 | 4.65 | 1.308 | 74.40 |
| ORA-212 | 90.2 | -4.89 | 4.68 | 1.314 | 74.67 |
| ORA-213 | 90.6 | -5.49 | 13.08 | 1.323 | 68.09 |
| ORA-213 | 90.7 | -5.51 | 13.1 | 1.326 | 68.27 |
| ORA-214 | 92.8 | -3.85 | 3.17 | 0.845 | 79.23 |
| ORA-215 | 92.7 | -3.99 | 3.32 | 0.847 | 78.78 |
| ORA-216 | 92.8 | -3.83 | 3.41 | 0.845 | 79.16 |
| ORA-217 | 90.4 | -6 | 5.4 | 1.341 | 72.46 |
| ORA-218 | 90.8 | -5.49 | 5.48 | 1.323 | 73.73 |
| ORA-219 | 90.7 | -5.64 | 5.2 | 1.322 | 73.41 |
| ORA-220 | 90.3 | -6.17 | 4.9 | 1.368 | 71.92 |
| ORA-221 | 90.3 | -6.16 | 5.17 | 1.359 | 72.03 |
| ORA-222 | 93.9 | -2.73 | 2.55 | 0.59 | 82.65 |
| ORA-222 | 90.3 | -6.15 | 5.5 | 1.362 | 72.03 |
| ORA-223 | 90.1 | -6.28 | 5.36 | 1.383 | 71.59 |
| ORA-224 | 90.5 | -5.94 | 5.3 | 1.385 | 72.56 |
| ORA-225 | 90.6 | -5.8 | 5.38 | 1.384 | 72.92 |
| ORA-226 | 90.7 | -5.24 | 5.85 | 1.339 | 73.19 |
| ORA-227 | 91 | -5.02 | 5.84 | 1.342 | 74.24 |
| ORA-228 | 90.8 | -5.53 | 5.47 | 1.337 | 73.77 |
| ORA-229 | 90.9 | -5.58 | 5.08 | 1.332 | 73.87 |
| ORA-230 | 94 | -2.69 | 2.43 | 0.6 | 82.99 |
| ORA-230 | 90.8 | -5.65 | 5.25 | 1.337 | 73.64 |
| ORA-231 | 89.7 | -1.37 | -2 | 1.329 | 78.60 |
| ORA-232 | 96.8 | -0.02 | 0.21 | 1.322 | 91.63 |
| ORA-233 | 96.8 | -0.03 | 0.23 | 1.318 | 91.77 |

(continued)

| Example | L* | a* | b* | Thickness (mm) | Average transmittance (380 nm - 750 nm) |
|---------|-----|-------|------|----------------|------------------------------------------|
| ORA-234 | 93.8 | -2.97 | 2.61 | 1.327 | 82.14 |
| ORA-235 | 90.6 | -5.94 | 5.03 | 1.321 | 72.83 |
| ORA-236 | 96.6 | -0.33 | 1.63 | 1.322 | 87.69 |
| ORA-237 | 96.6 | -0.32 | 1.56 | 1.332 | 87.82 |
| ORA-238 | 93 | -3.03 | 1.62 | 1.291 | 81.13 |
| ORA-238 | 93 | -3.03 | 1.62 | 1.291 | 81.13 |
| ORA-239 | 85.7 | -8.09 | 5.15 | 1.326 | 62.69 |
| ORA-240 | 88.7 | -4.59 | 5.53 | 1.332 | 72.22 |
| ORA-241 | 89.1 | -6.01 | 1.55 | 1.314 | 72.28 |
| ORA-242 | 90.4 | -6.46 | 0.69 | 1.321 | 72.03 |
| ORA-243 | 89.2 | -5.77 | 8.31 | 1.315 | 70.97 |
| ORA-244 | 89 | -6.09 | 3.66 | 1.292 | 70.53 |
| ORA-245 | 88.8 | -6.28 | 4.01 | 1.287 | 70.10 |
| ORA-246 | 88.8 | -6.35 | 3.73 | 1.29 | 70.14 |
| ORA-247 | 96.6 | -0.38 | 1.95 | 1.349 | 87.28 |
| ORA-248 | 96.6 | -0.38 | 2 | 1.333 | 87.22 |
| ORA-249 | 96.7 | -0.28 | 1.45 | 1.343 | 88.96 |
| ORA-250 | 96.3 | -0.83 | 4.74 | 1.349 | 82.83 |
| ORA-251 | 96.6 | -0.27 | 1.67 | 1.339 | 89.17 |
| ORA-252 | 96.6 | -0.31 | 1.88 | 1.371 | 88.85 |
| ORA-253 | 96.6 | -0.29 | 1.56 | 1.381 | 88.86 |
| ORA-254 | 96.6 | -0.41 | 2.15 | 1.369 | 86.92 |
| ORA-255 | 96.6 | -0.42 | 2.15 | 1.354 | 86.72 |
| ORA-256 | 96.6 | -0.41 | 2.11 | 1.375 | 86.92 |
| ORA-257 | 96.6 | -0.32 | 2.01 | 1.414 | 88.77 |
| ORA-258 | 96.3 | -0.87 | 4.96 | 1.411 | 82.51 |
| ORA-259 | 96.6 | -0.32 | 1.91 | 1.401 | 88.78 |
| ORA-260 | 96.6 | -0.31 | 1.83 | 1.404 | 88.95 |
| ORA-261 | 96.7 | -0.27 | 1.44 | 1.315 | 89.03 |
| ORA-262 | 96.6 | -0.41 | 2.11 | 1.332 | 86.94 |
| ORA-263 | 96.7 | -0.34 | 1.83 | 1.263 | 88.74 |
| ORA-264 | 96.8 | -0.36 | 1.89 | 1.324 | 88.80 |
| ORA-265 | 96.8 | -0.34 | 1.81 | 1.272 | 88.97 |
| ORA-266 | 96.8 | -0.33 | 1.75 | 1.261 | 88.99 |
| ORA-267 | 96.8 | -0.26 | 1.43 | 1.263 | 89.53 |
| ORA-268 | 96.8 | -0.28 | 1.51 | 1.304 | 89.42 |
| ORA-269 | 96.8 | -0.28 | 1.56 | 1.321 | 89.37 |
| ORA-270 | 96.8 | -0.23 | 1.4 | 1.327 | 89.74 |
| ORA-271 | 96.8 | -0.21 | 1.32 | 1.28 | 89.88 |

(continued)

| Example | L* | a* | b* | Thickness (mm) | Average transmittance (380 nm - 750 nm) |
|---|---|---|---|---|---|
| ORA-272 | 92.8 | -3.11 | -4.14 | 1.369 | 79.89 |
| ORA-273 | 89.3 | -1.59 | -4.49 | 1.23 | 78.30 |
| ORA-274 | 96.6 | -0.2 | 1.2 | 1.289 | 88.42 |
| ORA-275 | 96.6 | -0.31 | 1.69 | 1.299 | 87.36 |
| ORA-276 | 96.6 | -0.26 | 1.45 | 1.315 | 87.84 |
| ORA-277 | 96.7 | -0.01 | 0.21 | 1.298 | 91.71 |
| ORA-278 | 96.7 | -0.19 | 1.11 | 1.303 | 88.71 |
| ORA-279 | 96.7 | -0.19 | 1.05 | 1.243 | 88.99 |
| ORA-280 | 96.5 | -0.19 | 1.08 | 1.367 | 88.79 |
| ORA-281 | 96.6 | -0.02 | 0.34 | 1.365 | 90.95 |
| ORA-282 | 96.1 | -0.91 | 5.37 | 1.335 | 82.02 |
| ORA-283 | 96.2 | -0.87 | 5.01 | 1.362 | 82.65 |
| ORA-285 | 95.4 | -0.54 | -0.7 | 1.3 | 88.76 |
| ORA-286 | 95.4 | -0.53 | -0.43 | 1.213 | 88.69 |
| ORA-287 | 95.5 | -0.46 | -0.44 | 1.247 | 88.87 |
| ORA-288 | 88.2 | -1.61 | -5.12 | 1.358 | 76.98 |
| ORA-289 | 88.8 | -6.53 | 3.4 | 1.303 | 69.77 |
| ORA-290 | 88.6 | -6.67 | 3.46 | 1.347 | 69.42 |
| ORA-291 | 88.6 | -6.64 | 3.63 | 1.337 | 69.49 |
| ORA-292 | 88.9 | -6.44 | 3.1 | 1.315 | 70.14 |
| ORA-293 | 89.1 | -6.33 | 3.54 | 1.317 | 70.63 |
| ORA-294 | 90.1 | -5.12 | 2.87 | 1.283 | 73.82 |
| ORA-295 | 88.7 | -6.52 | 3.65 | 1.295 | 69.94 |
| ORA-296 | 89.1 | -6.18 | 2.93 | 1.284 | 70.87 |
| ORA-297 | 89.3 | -5.84 | 2.18 | 1.276 | 71.76 |
| ORA-298 | 85.5 | -9.77 | 1.11 | 1.983 | 62.28 |
| ORA-299 | 83.3 | -11.3 | -2.01 | 1.942 | 58.42 |
| ORA-300 | 84.4 | -10.1 | 1.39 | 1.985 | 59.90 |
| ORA-301 | 83.9 | -10.7 | 0.11 | 1.976 | 59.06 |
| ORA-302 | 84.1 | -10.3 | -0.85 | 1.99 | 60.61 |
| ORA-303 | 83.9 | -10.9 | -2.46 | 1.974 | 60.24 |
| ORA-304 | 83.6 | -11.1 | -2.68 | 2.024 | 59.85 |
| ORA-305 | 83.4 | -11.3 | -2.58 | 2.013 | 59.25 |
| ORA-306 | 83.9 | -11 | -0.94 | 2.023 | 59.74 |
| ORA-307 | 83.9 | -10.6 | -2.28 | 2.021 | 60.85 |
| ORA-308 | 83.9 | -10.8 | -3.2 | 2.019 | 60.99 |
| ORA-309 | 83.4 | -11.3 | -4.16 | 2.014 | 59.89 |
| ORA-3 10 | 82.9 | -11.9 | -4.29 | 2.008 | 58.39 |
| ORA-311 | 84.1 | -10.8 | -1.86 | 2.022 | 60.79 |

(continued)

| Example | L* | a* | b* | Thickness (mm) | Average transmittance (380 nm - 750 nm) |
|---|---|---|---|---|---|
| ORA-312 | 84.4 | -10.5 | -1.75 | 2.011 | 61.54 |
| ORA-313 | 84.1 | -10.8 | -1.53 | 2.022 | 60.38 |
| ORA-314 | 84.1 | -10.6 | -1.84 | 2.014 | 60.78 |
| ORA-315 | 84 | -10.5 | -1.42 | 2.024 | 60.65 |
| ORA-316 | 88.4 | -6.82 | 3.86 | 1.36 | 68.96 |
| ORA-317 | 88.5 | -6.69 | 3.82 | 1.351 | 69.77 |
| ORA-318 | 88.7 | -6.56 | 4.04 | 1.338 | 69.78 |
| ORA-319 | 88.8 | -6.52 | 3.2 | 1.351 | 69.96 |
| ORA-320 | 88.6 | -6.59 | 3.6 | 1.35 | 69.49 |
| ORA-321 | 90 | -5.2 | 2.89 | 1.341 | 73.54 |
| ORA-322 | 88.7 | -6.57 | 3.72 | 1.342 | 69.95 |
| ORA-323 | 88.7 | -6.5 | 3.67 | 1.347 | 69.93 |
| ORA-324 | 84.9 | -9.6 | 5.11 | 2.025 | 61.02 |
| ORA-325 | 84.7 | -9.71 | 5.35 | 2.05 | 60.45 |
| ORA-326 | 84.9 | -9.54 | 5.42 | 2.044 | 60.89 |
| ORA-327 | 84.9 | -9.44 | 5.75 | 2.041 | 60.80 |
| ORA-328 | 85.7 | -9.03 | 4.42 | 2.067 | 62.94 |
| ORA-329 | 85.1 | -9.12 | 5.7 | 2.062 | 61.55 |
| ORA-330 | 85.3 | -9.36 | 4.7 | 2.068 | 61.81 |
| ORA-331 | 85.1 | -9.15 | 5.71 | 2.064 | 61.50 |
| ORA-332 | 93.7 | -2.75 | 0.62 | 0.552 | 82.99 |
| ORA-333 | 94.5 | -2.19 | 0.53 | 0.546 | 85.24 |
| ORA-334 | 93.9 | -3.05 | 0.33 | 0.534 | 82.84 |
| ORA-335 | 93.7 | -2.77 | -0.43 | 0.53 | 83.12 |
| ORA-336 | 94 | -2.49 | 0.13 | 0.534 | 84.29 |
| ORA-337 | 94.1 | -2.33 | 1.16 | 0.545 | 84.11 |
| ORA-338 | 93.4 | -3.17 | 1.18 | 0.544 | 81.64 |
| ORA-339 | 93.2 | -2.76 | 0.74 | 0.54 | 81.94 |
| ORA-340 | 93.3 | -2.73 | 1.3 | 0.549 | 82.49 |
| ORA-341 | 84.8 | -9.28 | 1.57 | 2.083 | 62.39 |
| ORA-341 | 96.8 | -0.01 | 0.19 | 1.331 | 91.81 |
| ORA-343 | 96.8 | -0.02 | 0.2 | 1.332 | 91.81 |
| ORA-344 | 96.9 | -0.01 | 0.18 | 1.329 | 92.01 |
| ORA-345 | 96.9 | 0 | 0.18 | 1.331 | 92.03 |
| ORA-346 | 93.6 | -2.4 | 0.58 | 0.515 | 83.13 |
| ORA-347 | 93.3 | -2.39 | 0.5 | 0.506 | 82.66 |
| ORA-348 | 93.8 | -2.11 | 0.77 | 0.477 | 83.67 |
| ORA-349 | 93.8 | -2.08 | 0.73 | 0.476 | 83.61 |
| ORA-350 | 93.8 | -2.14 | 0.72 | 0.471 | 83.22 |

(continued)

| Example | L* | a* | b* | Thickness (mm) | Average transmittance (380 nm - 750 nm) |
|---|---|---|---|---|---|
| ORA-351 | 93.6 | -2.09 | 1.01 | 0.479 | 82.66 |
| ORA-352 | 93.8 | -2.19 | 0.91 | 0.499 | 83.75 |
| ORA-353 | 94.3 | -1.78 | 1.01 | 0.433 | 85.13 |
| ORA-354 | 94.4 | -1.79 | 0.92 | 0.444 | 85.42 |

**Claims**

1. A colored glass article comprising:

    greater than or equal to 50 mol% and less than or equal to 80 mol% $SiO_2$;
    greater than or equal to 7 mol% and less than or equal to 20 mol% $Al_2O_3$;
    greater than or equal to 1 mol% and less than or equal to 35 mol% $R_2O$, wherein $R_2O$ comprises at least one of $Li_2O$, $Na_2O$, and $K_2O$;
    greater than $1 \times 10^{-6}$ mol% and less than or equal to 10 mol% of a colorant, wherein the colorant comprises at least one of $Cr_2O_3$, $CuO$, $NiO$, and $Co_3O_4$; and
    greater than or equal to 12 mol% and less than or equal to 24 mol% of $Al_2O_3$ + MgO + CaO + ZnO, wherein the colored glass article comprises:

    a transmittance color coordinate in CIELAB color space comprising an L* value greater than or equal to 55 and less than or equal to 96.5 as measured under F2 illumination and a 10° standard observer angle;
    a compressive stress profile with a depth of compression greater than or equal to 0.15t where t is a thickness of the colored glass article, a surface compressive stress greater than or equal to 200 MPa, and a central tension greater than or equal to 60 MPa;
    a dielectric constant from 5.6 to 6.4 over a frequency range from 10 GHz to 60 GHz; and
    the thickness t is greater than or equal to 0.4 mm and less than or equal to 5 mm.

2. The colored glass article of claim 1, wherein the thickness t is greater than or equal to 0.5 mm and less than or equal to 5 mm.

3. The colored glass article of claim 1 or claim 2, having a fracture toughness $K_{IC}$ greater than or equal to 0.7 MPa·m$^{1/2}$ as measured on a non-ion exchanged sample having the same composition and microstructure as the centre of the coloured glass article.

4. The colored glass article of claim 1 or claim 2, comprising an average transmittance of greater than or equal to 10% and less than or equal to 92% over a wavelength range of 380 nm to 750 nm.

5. The colored glass article of any of claims 1, 2 and 4, further comprising at least one crystalline phase.

6. The colored glass article of any of claims 1, 2, 4 and 5, comprising a crystallinity of less than 10 wt%.

7. The colored glass article of any of claims 1, 2 and 4 to 6, wherein the depth of compression is less than or equal to 0.3t.

8. The colored glass article of any of claims 1, 2 and 4 to 7, wherein the surface compressive stress is greater than or equal to 400 MPa.

9. The colored glass article of any of claims 1, 2 and 4 to 8, wherein the central tension is greater than or equal to 70 MPa.

10. An electronic device comprising a housing, the housing comprising a colored glass article as recited in any of claims 1 to 9.

**Patentansprüche**

1.  Gefärbter Glasartikel, umfassend:

    mehr als oder gleich 50 Mol-% und weniger als oder gleich 80 Mol-% $SiO_2$;
    mehr als oder gleich 7 Mol-% und weniger als oder gleich 20 Mol-% $Al_2O_3$;
    mehr als oder gleich 1 Mol-% und weniger als oder gleich 35 Mol-% $R_2O$, wobei $R_2O$ mindestens eines von $Li_2O$, $Na_2O$ und $K_2O$ umfasst;
    mehr als $1 \times 10^{-6}$ Mol-% und weniger als oder gleich 10 Mol-% eines Färbemittels, wobei das Färbemittel mindestens eines von $Cr_2O_3$, $CuO$, $NiO$ und $Co_3O_4$ umfasst; und
    mehr als oder gleich 12 Mol-% und weniger als oder gleich 24 Mol-% $Al_2O_3$ + MgO + CaO + ZnO, wobei der gefärbte Glasartikel Folgendes umfasst:

    eine Lichtdurchlässigkeitsfarbkoordinate im CIELAB-Farbraum, umfassend einen L\*-Wert von mehr als oder gleich 55 und weniger als oder gleich 96,5, wie bei F2-Beleuchtung und einem 10°-Standardbeobachterwinkel gemessen;
    ein Druckspannungsprofil mit einer Drucktiefe von mehr als oder gleich 0,15t, wobei t eine Dicke des gefärbten Glasartikels ist, eine Oberflächendruckspannung von mehr als oder gleich 200 MPa und eine zentrale Spannung von mehr als oder gleich 60 MPa;
    eine Dielektrizitätskonstante von 5,6 bis 6,4 über einen Frequenzbereich von 10 GHz bis 60 GHz; und
    die Dicke t mehr als oder gleich 0,4 mm und weniger als oder gleich 5 mm beträgt.

2.  Gefärbter Glasartikel nach Anspruch 1, wobei die Dicke t mehr als oder gleich 0,5 mm und weniger als oder gleich 5 mm beträgt.

3.  Gefärbter Glasartikel nach Anspruch 1 oder Anspruch 2, mit einer Bruchzähigkeit $K_{IC}$ von mehr als oder gleich 0,7 $MPa \cdot m^{1/2}$, wie an einer nicht ionenausgetauschten Probe mit der gleichen Zusammensetzung und Mikrostruktur wie das Zentrum des gefärbten Glasartikels gemessen.

4.  Gefärbter Glasartikel nach Anspruch 1 oder Anspruch 2, umfassend eine durchschnittliche Lichtdurchlässigkeit von mehr als oder gleich 10 % und weniger als oder gleich 92 % über einen Wellenlängenbereich von 380 nm bis 750 nm.

5.  Gefärbter Glasartikel nach einem der Ansprüche 1, 2 und 4, ferner umfassend mindestens eine kristalline Phase.

6.  Gefärbter Glasartikel nach einem der Ansprüche 1, 2, 4 und 5, umfassend eine Kristallinität von weniger als 10 Gew.-%.

7.  Gefärbter Glasartikel nach einem der Ansprüche 1, 2 und 4 bis 6, wobei die Kompressionstiefe weniger als oder gleich 0,3 t beträgt.

8.  Gefärbter Glasartikel nach einem der Ansprüche 1, 2 und 4 bis 7, wobei die Oberflächendruckspannung mehr als oder gleich 400 MPa beträgt.

9.  Gefärbter Glasartikel nach einem der Ansprüche 1, 2 und 4 bis 8, wobei die zentrale Spannung mehr als oder gleich 70 MPa beträgt.

10. Elektronische Vorrichtung, umfassend ein Gehäuse, das Gehäuse umfassend einen farbigen Glasartikel nach einem der Ansprüche 1 bis 9.

**Revendications**

1.  Article en verre coloré comprenant :

    une quantité supérieure ou égale à 50 % en moles et inférieure ou égale à 80 % en moles de $SiO_2$;
    une quantité supérieure ou égale à 7 % en moles et inférieure ou égale à 20 % en moles de $Al_2O_3$;
    une quantité supérieure ou égale à 1 % en moles et inférieure ou égale à 35 % en moles de $R_2O$, dans lequel $R_2O$ comprend au moins un élément parmi $Li_2O$, $Na_2O$ et $K_2O$;

une quantité supérieure à $1 \times 10^{-6}$ % en moles et inférieure ou égale à 10 % en moles d'un colorant, dans lequel le colorant comprend au moins un élément parmi $Cr_2O_3$, $CuO$, $NiO$ et $Co_3O_4$; et

une quantité supérieure ou égale à 12 % en moles et inférieure ou égale à 24 % en moles de $Al_2O_3$ + $MgO$ + $CaO$ + $ZnO$, dans lequel l'article en verre coloré comprend :

une coordonnée de couleur de transmittance dans l'espace colorimétrique CIELAB comprenant une valeur L* supérieure ou égale à 55 et inférieure ou égale à 96,5 telle que mesurée sous un éclairage F2 et un angle d'observation standard de 10° ;

un profil de contrainte de compression avec une profondeur de compression supérieure ou égale à 0,15 t où t est une épaisseur de l'article en verre coloré, une contrainte de compression de surface supérieure ou égale à 200 MPa et une tension centrale supérieure ou égale à 60 MPa ;

une constante diélectrique de 5,6 à 6,4 sur une plage de fréquences de 10 GHz à 60 GHz ; et

l'épaisseur t est supérieure ou égale à 0,4 mm et inférieure ou égale à 5 mm.

2. Article en verre coloré de la revendication 1, dans lequel l'épaisseur t est supérieure ou égale à 0,5 mm et inférieure ou égale à 5 mm.

3. Article en verre coloré de la revendication 1 ou de la revendication 2, présentant une ténacité $K_{IC}$ supérieure ou égale à 0,7 $MPa \cdot m^{1/2}$ telle que mesurée sur un échantillon n'ayant pas subi d'échange d'ions présentant la même composition et la même microstructure que le centre de l'article en verre coloré.

4. Article en verre coloré de la revendication 1 ou de la revendication 2, comprenant une transmittance moyenne supérieure ou égale à 10 % et inférieure ou égale à 92 % sur une plage de longueurs d'onde de 380 nm à 750 nm.

5. Article en verre coloré de l'une quelconque des revendications 1, 2 et 4, comprenant en outre au moins une phase cristalline.

6. Article en verre coloré de l'une quelconque des revendications 1, 2, 4 et 5, comprenant une cristallinité inférieure à 10 % en poids.

7. Article en verre coloré de l'une quelconque des revendications 1, 2 et 4 à 6, dans lequel la profondeur de compression est inférieure ou égale à 0,3 t.

8. Article en verre coloré de l'une quelconque des revendications 1, 2 et 4 à 7, dans lequel la contrainte de compression de surface est supérieure ou égale à 400 MPa.

9. Article en verre coloré de l'une quelconque des revendications 1, 2 et 4 à 8, dans lequel la tension centrale est supérieure ou égale à 70 MPa.

10. Dispositif électronique comprenant un boîtier, le boîtier comprenant un article en verre coloré selon l'une quelconque des revendications 1 à 9.

FIG. 1

FIG. 2

FIG. 3A

FIG. 3B

FIG. 3C

FIG. 4A

FIG. 4B

FIG. 4C

FIG. 5A

FIG. 5B

FIG. 5C

FIG. 6A

FIG. 6B

FIG. 6C

FIG. 7

FIG. 8

FIG. 9

FIG. 10

FIG. 11

FIG. 12

FIG. 13

FIG. 14

Cr203/Co304

FIG. 15

Cr203/Co304

FIG. 16

Cr203/Co304

FIG. 17

Cr203/CuO

FIG. 18

Cr203/CuO

FIG. 19

Cr203/CuO

FIG. 20

FIG. 21

FIG. 22

FIG. 23

Cr2O3/NiO/Co3O4

FIG. 24

Cr2O3/NiO/Co3O4

FIG. 25

Cr2O3/NiO/Co3O4

FIG. 26

Cr2O3/CuO/Co3O4

FIG. 27

Cr2O3/CuO/Co3O4

FIG. 28

Cr2O3/CuO/Co3O4

FIG. 29

FIG. 30

FIG. 31

FIG. 32

FIG. 33A

FIG. 33B

FIG. 33C

FIG. 34A

FIG. 34B

FIG. 34C

FIG. 35

EP 4 298 069 B1

FIG. 36

SAMPLE Ag-10

FIG. 37

FIG. 38

SAMPLE Ag-12

FIG. 39

FIG. 40A

FIG. 40B

FIG. 40C

FIG. 41

FIG. 42A

FIG. 42B

FIG. 42C

FIG. 43

FIG. 44A

FIG. 44B

FIG. 44C

FIG. 45

FIG. 46

EP 4 298 069 B1

FIG. 47

FIG. 48

FIG. 49

FIG. 50

1310

1320

h

1335

1330

FIG. 51

FIG. 52

FIG. 53

FIG. 54

FIG. 55

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20190177206 A1
- US 9701570 B2
- US 20200377404 A1
- US 9012343 B2
- US 20150166403 A1
- US 20150166400 A1

### Non-patent literature cited in the description

- **REDDY, K.P.R. et al.** Fracture Toughness Measurement of Glass and Ceramic Materials Using Chevron-Notched Specimens. *J. Am. Ceram. Soc.*, 1988, vol. 71 (6), 310-313
- **BUBSEY, R.T. et al.** Closed-Form Expressions for Crack-Mouth Displacement and Stress Intensity Factors for Chevron-Notched Short Bar and Short Rod Specimens Based on Experimental Compliance Measurements. *NASA Technical Memorandum*, October 1992, vol. 83796, 1-30
- **R.S. BERNS**. Billmeyer and Saltzman's Principles of Color Technology. John Wiley & Sons, 2000